(19) Europäisches Patentamt
European Patent Office
Office européen des brevets

(11) EP 2 835 052 A1

(12) **EUROPEAN PATENT APPLICATION**

(43) Date of publication:
**11.02.2015 Bulletin 2015/07**

(21) Application number: **14178699.6**

(22) Date of filing: **28.07.2014**

(51) Int Cl.:
*A01N 43/54* (2006.01)
*A01P 3/00* (2006.01)
*A01N 43/16* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **07.08.2013 EP 13179605**
**19.09.2013 EP 13185201**

(71) Applicant: **BASF SE**
**67056 Ludwigshafen (DE)**

(72) Inventors:
- **Grammenos, Wassilios**
**67071 Ludwigshafen (DE)**
- **Craig, Ian, Robert**
**67063 Ludwigshafen (DE)**
- **Boudet, Nadege**
**69493 Hirschberg (DE)**
- **Müller, Bernd**
**67227 Frankenthal (DE)**
- **Lauterwasser, Erica, May, Wilson**
**67157 Wachenheim (DE)**
- **Lohmann, Jan, Klaas**
**67245 Lambsheim (DE)**
- **Montag, Jurith**
**68167 Mannheim (DE)**
- **Grote, Thomas**
**67157 Wachenheim (DE)**
- **Haden, Egon**
**67346 Speyer (DE)**
- **Quintero Palomar, Maria, Angelica**
**68165 Mannheim (DE)**
- **Escribano Cuesta, Ana**
**68161 Mannheim (DE)**

(54) **Fungicidal mixtures comprising pyrimidine fungicides**

(57) The present invention relates to fungicidal mixtures, comprising at least one fungicidally active compound I and at least one pesticide II as defined in the description, and to compositions comprising these mixtures.

The invention furthermore relates to the use of the inventive mixtures for controlling phytopathogenic fungi and compositions comprising them. The invention furthermore also relates to compositions comprising the inventive mixtures and seed in an amount of from 1 g to 1000 g active components per 100 kg of seed. The invention furthermore also relates to methods for controlling phytopathogenic fungi, wherein the fungi or the materials, plants, the soil or seed to be protected from fungal attack are treated with an effective amount of a mixture according to the invention. The invention furthermore also relates to processes for preparing the compositions comprising the mixtures according to the invention.

EP 2 835 052 A1

## Description

The present invention relates to mixtures comprising as active components

1) at least one compound of formula I

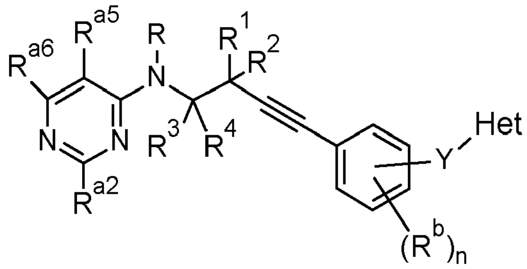

I

wherein:

$R^{a2}$, $R^{a5}$, $R^{a6}$ independently of each other are hydrogen, halogen, CN, $NO_2$, OH, SH, $C_1$-$C_4$-alkyl, $C_1$-$C_4$-haloalkyl, $C_1$-$C_4$-alkoxy, $C_1$-$C_4$-haloalkoxy, $C_1$-$C_4$-alkylthio, $C_1$-$C_4$-haloalkylthio, $C_1$-$C_4$-alkylsulfinyl, $C_1$-$C_4$-haloalkylsulfinyl, $C_1$-$C_4$-alkylsulfonyl, $C_1$-$C_4$-haloalkylsulfonyl, $C_1$-$C_4$-alkoxy-$C_1$-$C_4$-alkyl, $C_1$-$C_4$-alkoxy-$C_1$-$C_4$-alkoxy, $C_2$-$C_4$-alkenyl, $C_2$-$C_4$-alkynyl, $C_2$-$C_4$-haloalkenyl, $C_2$-$C_4$-haloalkynyl, $C_3$-$C_8$-cycloalkyl, $C_3$-$C_8$-cycloalkyloxy, $C_3$-$C_8$-cycloalkyl-$C_1$-$C_4$-alkyl, $NR^AR^B$, C(=O)R', C(=NOR")R'" or-C(=NH)-O-R"'; wherein

$R^A$, $R^B$ independently of one another are hydrogen, $C_1$-$C_4$-alkyl, $C_2$-$C_4$-alkenyl, $C_2$-$C_4$-alkynyl, phenyl, benzyl, $C_3$-$C_8$-cycloalkyl, $C_3$-$C_8$-cycloalkenyl or -(C=O)-R';

R' is hydrogen, OH, $NH_2$, $C_1$-$C_4$-alkyl, $C_1$-$C_4$-haloalkyl, $C_2$-$C_4$-alkenyl, $C_2$-$C_4$-alkynyl, $C_1$-$C_4$-alkoxy, $C_1$-$C_4$-haloalkoxy, $C_1$-$C_4$-alkylamino or di($C_1$-$C_4$-alkyl)amino;

R" is hydrogen, $C_1$-$C_4$-alkyl, $C_1$-$C_4$-haloalkyl, $C_2$-$C_4$-alkenyl, $C_2$-$C_4$-alkynyl or $C_1$-$C_4$-alkoxy-$C_1$-$C_4$-alkyl;

R'" is hydrogen or $C_1$-$C_4$-alkyl; or

$R^{a5}$, $R^{a6}$ together with two ring member carbon atoms to which they are attached, form a fused 5-, 6- or 7-membered saturated, partially unsaturated or aromatic carbocycle or heterocycle, wherein the ring member atoms of the fused heterocycle include besides carbon atoms 1, 2, 3 or 4 heteroatoms selected from N, O and S, and wherein the fused carbocycle or heterocycle is unsubstituted or carries 1, 2, 3 or 4 identical or different radicals selected from halogen, CN, $C_1$-$C_4$-alkyl, $C_1$-$C_4$-alkoxy, $C_1$-$C_4$-haloalkyl and $C_1$-$C_4$-haloalkoxy;

R is hydrogen, $C_1$-$C_4$-alkyl, $C_1$-$C_4$-haloalkyl, $C_1$-$C_4$-alkoxy, $C_1$-$C_4$-haloalkoxy, $C_1$-$C_4$-alkoxy-$C_1$-$C_4$-alkyl, $C_1$-$C_4$-haloalkoxy-$C_1$-$C_4$-alkyl, $C_2$-$C_4$-alkenyl, $C_2$-$C_4$-haloalkenyl, $C_2$-$C_4$-alkynyl, $C_2$-$C_4$-haloalkynyl, CN, $CH_2CN$, $NR^AR^B$ or $CH_2$-O-C(=O)R';

$R^1$, $R^2$ independently of each other are hydrogen, halogen, CN, OH, $C_1$-$C_4$-alkyl, $C_1$-$C_4$-haloalkyl, $C_1$-$C_4$-alkoxy, $C_1$-$C_4$-haloalkoxy, $C_1$-$C_4$-alkoxy-$C_1$-$C_4$-alkyl, $C_1$-$C_4$-halo-alkoxy-$C_1$-$C_4$-alkyl, $C_2$-$C_4$-alkenyl, $C_2$-$C_4$-haloalkenyl, $C_2$-$C_4$-alkynyl, $C_2$-$C_4$-haloalkynyl, $C_3$-$C_8$-cycloalkyl, $C_3$-$C_8$-cycloalkyl-$C_1$-$C_4$-alkyl, $C_3$-$C_8$-cycloalkyloxy, $NR^AR^B$, C(=O)R', C(=NOR")R"', -C(=NH)-O-R"' or benzyl wherein the phenyl moiety of benzyl is unsubstituted or carries 1, 2 , 3, 4, or 5 substituents selected from CN, halogen, $C_1$-$C_4$-alkyl, $C_1$-$C_4$-haloalkyl, $C_1$-$C_4$-alkoxy, $C_1$-$C_4$-haloalkoxy, ($C_1$-$C_4$-alkoxy)carbonyl and di($C_1$-$C_4$-alkyl)aminocarbonyl;
or two radicals $R^1$ and $R^2$ that are bound to the same carbon atom form together with said carbon atom a saturated or partially unsaturated 3-, 4-, 5-, 6-, or 7-membered carbocycle or a saturated or partially unsaturated 3-, 4-, 5-, 6-, or 7-membered heterocycle, wherein the ring member atoms of the abovementioned heterocycle include beside carbon atoms 1, 2, 3 or 4 heteroatoms selected

from the group of N, O and S, and wherein the abovementioned cycle is unsubstituted or carries 1, 2, 3 or 4 substituents selected from halogen, CN, OH, SH, $C_1$-$C_4$-alkyl, $C_1$-$C_4$-alkoxy or $C_1$-$C_4$-alkylthio; and one or two $CH_2$ groups of the abovementioned cycles may respectively be replaced by one or two C(=O) or C(=S) groups;

Y is a direct bond or a divalent group selected from -O-, -S-, -S(=O)-, -S(=O)$_2$-, -CR$^{Y1}$R$^{Y2}$-, -N(R$^{YN}$)-, wherein

$R^{YN}$ is hydrogen, halogen, CN, nitro, OH, $C_1$-$C_4$-alkyl, $C_1$-$C_4$-halogenalkyl, $C_1$-$C_4$-alkoxy and $C_1$-$C_4$-halogenalkoxy;

$R^{Y1}$, $R^{Y2}$ are independently selected from hydrogen, halogen, CN, nitro, OH, $C_1$-$C_4$-alkyl, $C_1$-$C_4$-halogenalkyl, $C_1$-$C_4$-alkoxy and $C_1$-$C_4$-halogenalkoxy;

$R^3$, $R^4$ independently of each other are hydrogen, CN, $C_1$-$C_4$-hydroxyalkyl, $C_1$-$C_4$-alkyl, $C_1$-$C_4$-haloalkyl, $C_1$-$C_4$-alkoxy, $C_1$-$C_4$-haloalkoxy, $C_1$-$C_4$-alkoxy-$C_1$-$C_4$-alkyl, $C_1$-$C_4$-haloalkoxy-$C_1$-$C_4$-alkyl, $C_2$-$C_4$-alkenyl, $C_2$-$C_4$-haloalkenyl, $C_2$-$C_4$-alkynyl, $C_2$-$C_4$-haloalkynyl, $C_3$-$C_8$-cycloalkyl, $C_3$-$C_8$-cycloalkyl-$C_1$-$C_4$-alkyl, $C_3$-$C_8$-cycloalkyloxy, NR$^A$R$^B$, C(=O)R', C(=NOR")R"',-C(=NH)-O-R"' or benzyl wherein the phenyl moiety of benzyl is unsubstituted or carries 1, 2 , 3, 4, or 5 substituents selected from CN, halogen, $C_1$-$C_4$-alkyl, $C_1$-$C_4$-haloalkyl, $C_1$-$C_4$-alkoxy, $C_1$-$C_4$-haloalkoxy, ($C_1$-$C_4$-alkoxy)carbonyl and di($C_1$-$C_4$-alkyl)aminocarbonyl; or
two radicals $R^3$ and $R^4$ that are bound to the same carbon atom form together with said carbon atom a saturated or partially unsaturated 3-, 4-, 5-, 6-, or 7-membered carbocycle or a saturated or partially unsaturated 3-, 4-, 5-, 6-, or 7-membered heterocycle, wherein the ring member atoms of the above mentioned heterocycle include beside carbon atoms 1, 2, 3 or 4 heteroatoms selected from N, O and S, and wherein the abovementioned cycle is unsubstituted or carries 1, 2, 3 or 4 substituents selected from halogen, CN, OH, SH, $C_1$-$C_4$-alkyl, $C_1$-$C_4$-alkoxy and $C_1$-$C_4$-alkylthio; and one or two $CH_2$ groups of the abovementioned cycles may be respectively replaced by one or two C(=O) or C(=S) groups;

n is 0, 1, 2, 3 or 4;

$R^b$ is halogen, CN, $NO_2$, $C_1$-$C_4$-alkyl, $C_1$-$C_4$-haloalkyl, $C_1$-$C_4$-alkoxy, $C_1$-$C_4$-haloalkoxy, $C_2$-$C_4$-alkenyl, $C_2$-$C_4$-haloalkenyl, $C_2$-$C_4$-alkynyl, $C_2$-$C_4$-haloalkynyl, NR$^A$R$^B$, C(=O)R', C(=NOR")R"' or -C(=NH)-O-R"',
it being possible for n = 2, 3 or 4 that $R^b$ are identical or different;

Het is a 5- or 6-membered heteroaryl, wherein the ring member atoms of the heteroaryl include besides carbon atoms 1, 2, 3 or 4 heteroatoms selected from N, O and S, and wherein the heteroaryl is unsubstituted or carries 1, 2, 3 or 4 identical or different groups $R^c$:

$R^c$ is halogen, CN, $NO_2$, $NH_2$, $C_1$-$C_6$-alkyl, $C_1$-$C_6$-haloalkyl, $C_1$-$C_6$-alkoxy, $C_1$-$C_6$-haloalkoxy, $C_1$-$C_6$-alkylamino, di($C_1$-$C_6$-alkyl)amino, $C_1$-$C_6$-alkylthio, $C_1$-$C_6$-haloalkylthio, $C_1$-$C_6$-alkylsulfinyl, $C_1$-$C_6$-haloalkylsulfinyl, $C_1$-$C_6$-alkylsulfonyl, $C_1$-$C_6$-haloalkylsulfonyl, $C_1$-$C_6$-alkoxy-$C_1$-$C_4$-alkyl, $C_1$-$C_6$-haloalkoxy-$C_1$-$C_4$-alkyl, $C_2$-$C_6$-alkenyl, $C_2$-$C_6$-alkynyl, C(=O)R', C(=NOR")R"', $C_3$-$C_8$-cycloalkyl, $C_3$-$C_8$-cycloalkyl-$C_1$-$C_4$-alkyl, phenyl, phenoxy, phenoxy-$C_1$-$C_4$-alkyl or a 5- or 6-membered heteroaryl, wherein the ring member atoms of the heteroaryl include besides carbon atoms 1, 2, 3 or 4 heteroatoms selected from N, O and S, and wherein the aforementioned cyclic radicals are unsubstituted or carry 1, 2, 3 or 4 identical or different substituents Rd:

$R^d$ is halogen, CN, $C_1$-$C_4$-alkyl, $C_1$-$C_4$-haloalkyl, $C_1$-$C_4$-alkoxy or $C_1$-$C_4$-haloalkoxy; or two radicals $R^c$ that are bound to adjacent ring member atoms of the Het group form together with said ring member atoms a fused 5-, 6- or 7-membered saturated, partially unsaturated or aromatic carbocycle or heterocycle, wherein the ring member atoms of the fused heterocycle include besides carbon atoms 1, 2, 3 or 4 heteroatoms selected from N, O and S, and wherein the fused carbocycle or heterocycle is unsubstituted or carries 1, 2, 3 or 4 identical or different radicals groups Re:

$R^e$ is halogen, CN, $C_1$-$C_4$-alkyl, $C_1$-$C_4$-haloalkyl, $C_1$-$C_4$-alkoxy or $C_1$-$C_4$-haloalkoxy;

and the N-oxides and the agriculturally acceptable salts of the compounds of formula I;

and

2) at least one pesticide II selected from the groups A) to F):

A) Inhibitors of complex III at $Q_o$ site (e.g. strobilurins): mandestrobin (A.1.1), (Z,2E)-5-[1-(4-chlorophenyl)pyrazol-3-yl]oxy-2-methoxyimino-N,3-dimethyl-pent-3-enamide (A.1.2), (Z,2E)-5-[1-(2,4-difluorophenyl)pyrazol-3-yl]oxy-2-methoxyimino-N,3-dimethyl-pent-3-enamide (A.1.3), (Z,2E)-5-[1-(2,4-dichlorophenyl)pyrazol-3-yl]oxy-2-methoxyimino-N,3-dimethyl-pent-3-enamide (A.1.4), (Z,2E)-5-[1-(2-chloro-4-methyl-phenyl)pyrazol-3-yl]oxy-2-methoxyimino-N,3-dimethyl-pent-3-enamide (A.1.5), (Z,2E)-2-methoxyimino-N,3-dimethyl-5-[1-(p-tolyl)pyrazol-3-yl]oxy-pent-3-enamide (A.1.6), (Z,2E)-5-[1-(2-methyl-4-fluoro-phenyl)pyrazol-3-yl]oxy-2-methoxyimino-N,3-dimethyl-pent-3-enamide (A.1.7), (Z,2E)-2-methoxyimino-N,3-dimethyl-5-[1-[4-(trifluoromethyl)phenyl]pyrazol-3-yl]oxy-pent-3-enamide (A.1.8), (Z,2E)-5-[1-(3,4-dichlorophenyl)pyrazol-3-yl]oxy-2-methoxyimino-N,3-dimethyl-pent-3-enamide (A.1.9), (Z,2E)-5-[1-(3,4-dimethylphenyl)pyrazol-3-yl]oxy-2-methoxyimino-N,3-dimethyl-pent-3-enamide (A.1.10), (Z,2E)-5-[1-(4-fluoro-3-methyl-phenyl)pyrazol-3-yl]oxy-2-methoxyimino-N,3-dimethyl-pent-3-enamide (A.1.11), (Z,2E)-5-[1-(3-chloro-4-fluoro-phenyl)pyrazol-3-yl]oxy-2-methoxyimino-N,3-dimethyl-pent-3-enamide (A.1.12), (Z,2E)-5-[1-(3-fluoro-4-chloro-phenyl)pyrazol-3-yl]oxy-2-methoxyimino-N,3-dimethyl-pent-3-enamide (A.1.13), (Z,2E)-5-[1-(4-chloro-2-fluoro-phenyl)pyrazol-3-yl]oxy-2-methoxyimino-N,3-dimethyl-pent-3-enamide (A.1.14), (Z,2E)-5-[1-[4-(difluoromethoxy)phenyl]pyrazol-3-yl]oxy-2-methoxyimino-N,3-dimethyl-pent-3-enamide (A.1.15), (Z,2E)-5-[1-(3-cyclopropylphenyl)pyrazol-3-yl]oxy-2-methoxyimino-N,3-dimethyl-pent-3-enamide (A.1.16), (Z,2E)-5-[1-[4-chloro-3-(trifluoromethyl)phenyl]pyrazol-3-yl]oxy-2-methoxyimino-N,3-dimethyl-pent-3-enamide (A.1.17), (Z,2E)-2-methoxyimino-N,3-dimethyl-5-[1-(3,4,5-trifluorophenyl)pyrazol-3-yl]oxy-pent-3-enamide (A.1.18) and (Z,2E)-2-methoxyimino-N,3-dimethyl-5-[1-[4-(trifluoromethylsulfanyl)phenyl]pyrazol-3-yl]oxy-pent-3-enamide (A.1.19);

inhibitors of complex III at $Q_i$ site:; inhibitors of complex II (e. g. carboxamides): isofetamid (A.2.1), N-(7-fluoro-1,1,3-trimethyl-indan-4-yl)-1,3-dimethyl-pyrazole-4-carboxamide (A.2.2), N-[2-(2,4-dichlorophenyl)-2-methoxy-1-methyl-ethyl]-3-(difluoromethyl)-1-methylpyrazole-4-carboxamide (A.2.3);

B) C14 demethylase inhibitors (DMI fungicides): triazoles: 2-[2-chloro-4-(4-chlorophenoxy)phenyl]-1-(1,2,4-triazol-1-yl)pent-3-yn-2-ol (B.1.1), 1-[2-chloro-4-(4-chlorophenoxy)phenyl]-1-cyclopropyl-2-(1,2,4-triazol-1-yl)ethanol (B.1.2), 2-[4-(4-chlorophenoxy)-2-(trifluoromethyl)phenyl]-1-(1,2,4-triazol-1-yl)propan-2-ol (B.1.3), 1-[4-(4-chlorophenoxy)-2-(trifluoromethyl)phenyl]-1-cyclopropyl-2-(1,2,4-triazol-1-yl)ethanol (B.1.4), 2-[4-(4-chlorophenoxy)-2-(trifluoromethyl)phenyl]-3-methyl-1-(1,2,4-triazol-1-yl)butan-2-ol (B.1.5), 1-[2-[2-chloro-4-(4-chlorophenoxy)phenyl]-2-methoxy-pent-3-ynyl]-1,2,4-triazole (B.1.6), 2-[4-(4-chlorophenoxy)-2-(trifluoromethyl)phenyl]-1-(1,2,4-triazol-1-yl)butan-2-ol (B.1.7), 1-[2-[2-chloro-4-(4-chlorophenoxy)phenyl]-2-cyclopropyl-2-methoxy-ethyl]-1,2,4-triazole (B.1.8), 1-[2-[4-(4-chlorophenoxy)-2-(trifluoromethyl)phenyl]-2-methoxy-propyl]-1,2,4-triazole (B.1.9), 2-[2-chloro-4-(4-chlorophenoxy)phenyl]-3,3-dimethyl-1-(1,2,4-triazol-1-yl)butan-2-ol (B.1.10), 1-[2-[4-(4-chlorophenoxy)-2-(trifluoromethyl)phenyl]-2-cyclopropyl-2-methoxy-ethyl]-1,2,4-triazole (B.1.11), 1-[2-[2-chloro-4-(4-chlorophenoxy)phenyl]-2-methoxy-3,3-dimethyl-butyl]-1,2,4-triazole (B.1.12), 1-[2-[4-(4-chlorophenoxy)-2-(trifluoromethyl)phenyl]-2-methoxy-butyl]1,2,4-triazole (B.1.13), 2-[4-(4-chlorophenoxy)-2-(trifluoromethyl)phenyl]-1-(1,2,4-triazol-1-yl)pent-3-yn-2-ol (B.1.14), 1-[2-[4-(4-chlorophenoxy)-2-(trifluoromethyl)phenyl]-2-methoxy-pent-3-ynyl]-1,2,4-triazole (B.1.15), 2-[4-(4-chlorophenoxy)-2-(trifluoromethyl)phenyl]-1-(1,2,4-triazol-1-yl)but-3-yn-2-ol (B.1.16), 2-[2-chloro-4-(4-chlorophenoxy)phenyl]-1-(1,2,4-triazol-1-yl)propan-2-ol (B.1.17), 2-[2-chloro-4-(4-fluorophenoxy)phenyl]-1-(1,2,4-triazol-1-yl)propan-2-ol (B.1.18), 2-[2-chloro-4-(4-chlorophenoxy)phenyl]-3-methyl-1-(1,2,4-triazol-1-yl)butan-2-ol (B.1.19), 1-[2-[2-chloro-4-(4-chlorophenoxy)phenyl]-2-methoxy-propyl]-1,2,4-triazole (B.1.20), 1-[2-[2-chloro-4-(4-chlorophenoxy)phenyl]-2-methoxy-butyl]-1,2,4-riazole (B.1.21), 1-[2-[2-chloro-4-(4-chlorophenoxy)phenyl]-2-methoxy-pentyl]-1,2,4-triazole (B.1.22), 2-[2-chloro-4-(4-chlorophenoxy)phenyl]-1,1,1-trifluoro-3-(1,2,4-triazol-1-yl)propan-2-ol (B.1.23), 2-[2-chloro-4-(4-chlorophenoxy)phenyl]-3-fluoro-1-(1,2,4-triazol-1-yl)butan-2-ol hydrochloride (B.1.24), 2-[2-chloro-4-(4-chlorophenoxy)phenyl]-1-(1,2,4-triazol-1-yl)pent-4-yn-2-ol (B.1.25), 2-[2-chloro-4-(4-chlorophenoxy)phenyl]-1-methoxy-3-(1,2,4-triazol-1-yl)propan-2-ol (B.1.26), 2-[2-chloro-4-(4-fluorophenoxy)phenyl]-1-methoxy-3-(1,2,4-triazol-1-yl)propan-2-ol (B.1.27), 2-[4-(4-chlorophenoxy)-2-(trifluoromethyl)phenyl]-1-(1,2,4-triazol-1-yl)pentan-2-ol (B.1.28), and 2-[4-(4-fluorophenoxy)-2-(trifluoromethyl)phenyl]-1-(1,2,4-triazol-1-yl)propan-2-ol (B.1.29), 2-[2-chloro-4-(4-chlorophenoxy)phenyl]-1-(1,2,4-triazol-1-yl)butan-2-ol (B.1.30), 2-[2-chloro-4-(4-chlorophenoxy)phenyl]-1-(1,2,4-triazol-1-yl)pentan-2-ol (B.1.31);

E) Plant defence inducers: potassium bicarbonate (E.1.1) or sodium bicarbonate (E.1.2);

F) Unknown mode of action: ethyl (Z)-3-amino-2-cyano-3-phenyl-prop-2-enoate (F.1.1), tert-butyl N-[6-[[(Z)-[(1-methyltetrazol-5-yl)-phenyl-methylene]amino]oxymethyl]-2-pyridyl]carbamate (F.1.2), pentyl N-[6-[[(Z)-[(1-methyltetrazol-5-yl)-phenyl-methylene]amino]oxymethyl]-2-pyridyl]carbamate (F.1.3), 2-[2-[(7,8-difluoro-2-methyl-3-quinolyl)oxy]-6-fluoro-phenyl]propan-2-ol (F.1.4), 2-[2-fluoro-6-[(8-fluoro-2-methyl-3-quinolyl)oxy]phen-yl]propan-2-ol (F.1.5), 3-(5-fluoro-3,3,4,4-tetramethyl-3,4-dihydroiso-quinolin-1-yl)quinolone (F.1.6), 3-(4,4-difluoro-3,3-dimethyl-3,4-dihydroisoquinolin-1-yl)-quinoline (F.1.7), 3-(4,4,5-trifluoro-3,3-dimethyl-3,4-dihydroisoquinolin-1-yl)quinolone

(F.1.8);

The invention furthermore relates to the use of the inventive mixtures for controlling phytopathogenic fungi as detailled herein and compositions comprising them. The invention furthermore also relates to compositions comprising the inventive mixtures and seed in an amount of from 1 g to 1000 g active components per 100 kg of seed. The invention furthermore also relates to methods for controlling phytopathogenic fungi as detailled herein, wherein the fungi or the materials, plants, the soil or seed to be protected from fungal attack are treated with an effective amount of a mixture according to the invention. The invention furthermore also relates to processes for preparing the compositions comprising the mixtures according to the invention.

In particular, in compounds I the substituents have the following preferred meanings. There, the specific meanings of the respective substituents are in each case on their own but also in any combination with one another, particular embodiments of the components 1) of the present invention.

One embodiment of the invention relates to mixtures comprising compounds I wherein $R^{a2}$, $R^{a5}$ and $R^{a6}$ independently of each other are halogen, CN, $C_1$-$C_4$-alkyl, $C_1$-$C_4$-haloalkyl, $C_1$-$C_4$-alkoxy, $C_1$-$C_4$-haloalkoxy, $C_1$-$C_4$-alkoxy-$C_1$-$C_4$-alkyl, $C_1$-$C_4$-alkoxy-$C_1$-$C_4$-alkoxy and ($C_1$-$C_4$-alkoxy)carbonyl; and it being possible that one or two of $R^{a2}$, $R^{a5}$ or $R^{a6}$ can in addition be hydrogen.

In a further preferred embodiment the invention relates to mixtures comprising compounds I wherein $R^{a2}$, $R^{a5}$ and $R^{a6}$ independently of each other are preferably selected from the group consisting of Cl, F, $CH_3$, $CH_2CH_3$, $OCH_3$, $OCF_3$, $CH_2OCH_3$, CN, $OCH_2OCH_3$, $CF_3$, $CHFCH_3$, $COOCH_3$ and $COOCH_2CH_3$; and it being possible that one or two of $R^{a2}$, $R^{a5}$ or $R^{a6}$ can in addition be hydrogen.

In a further preferred embodiment the invention relates to mixtures comprising compounds I wherein $R^{a2}$ is hydrogen and $R^{a5}$ and $R^{a6}$ independently of each other are preferably selected from from Cl, F, $CH_3$, $CH_2CH_3$, $OCH_3$, $OCF_3$, $CH_2OCH_3$, CN, $OCH_2OCH_3$, $CF_3$, $CHFCH_3$, $COOCH_3$ and $COOCH_2CH_3$.; and it being possible that one of $R^{a5}$ or $R^{a6}$ can in addition be hydrogen.

In a further embodiment $R^{a2}$ is hydrogen and $R^{a5}$ and $R^{a6}$ independently of each other are selected from halogen, OH, CN, $C_1$-$C_4$-alkyl, $C_2$-$C_4$-alkenyl, $C_1$-$C_4$-haloalkyl, $C_1$-$C_4$-alkoxy and ($C_1$-$C_4$-alkoxy)carbonyl; and it being possible that one of $R^{a5}$ or $R^{a6}$ can in addition be hydrogen; or $R^{a5}$ and $R^{a6}$ together with two ring member carbon atoms to which they are attached, form a fused 5- or 6-membered saturated, partially unsaturated or aromatic carbocycle or heterocycle, wherein the ring member atoms of the fused heterocycle include besides carbon atoms 1, 2 or 3 heteroatoms selected from the group of N, O and S, and wherein the fused carbocycle or heterocycle is unsubstituted or carries 1, 2, 3 or 4 identical or different radicals selected from halogen, CN, $C_1$-$C_4$-alkyl, $C_1$-$C_4$-alkoxy, $C_1$-$C_4$-haloalkyl and $C_1$-$C_4$-haloalkoxy.

In still another embodiment $R^{a2}$ is hydrogen and $R^{a5}$ and $R^{a6}$ independently of each other are selected from halogen, OH, CN, $C_1$-$C_4$-alkyl, $C_2$-$C_4$-alkenyl, $C_1$-$C_4$-haloalkyl, $C_1$-$C_4$-alkoxy and ($C_1$-$C_4$-alkoxy)carbonyl; and it being possible that one of $R^{a5}$ or $R^{a6}$ can in addition be hydrogen; or $R^{a5}$ and $R^{a6}$ together with two ring member carbon atoms to which they are attached, form a fused 5- or 6-membered aromatic carbocycle or heterocycle, wherein the ring member atoms of the fused heterocycle include besides carbon atoms 1, 2 or 3 heteroatoms selected from the group of N, O and S, and wherein the fused carbocycle or heterocycle is unsubstituted or carries 1, 2, 3 or 4 identical or different radicals selected from halogen, CN, $C_1$-$C_4$-alkyl, $C_1$-$C_4$-alkoxy, $C_1$-$C_4$-haloalkyl and $C_1$-$C_4$-haloalkoxy.

In one aspect $R^{a2}$ is hydrogen.

In one embodiment $R^{a5}$ is hydrogen. In one embodiment $R^{a5}$ is Cl. In another embodiment $R^{a5}$ is F. In a further embodiment $R^{a5}$ is $CH_3$. In another embodiment $R^{a5}$ is $CH_2CH_3$. In still another embodiment $R^{a5}$ is $CH_2OCH_3$. In yet another embodiment $R^{a5}$ is $OCH_3$. In still a further embodiment $R^{a5}$ is $CO_2CH_3$. In one embodiment $R^{a5}$ is $CO_2CH_2CH_3$.

In one embodiment $R^{a6}$ is hydrogen. In one embodiment $R^{a6}$ is Cl. In another embodiment $R^{a6}$ is F. In still another embodiment $R^{a6}$ is $CH_3$. In another embodiment $R^{a6}$ is $CH_2CH_3$. In yet another embodiment $R^{a6}$ is $CH_2CH_3$. In a further embodiment $R^{a6}$ is $OCH_3$. In one embodiment $R^{a6}$ is $CO_2CH_3$. In another aspect $R^{a6}$ is $CO_2CH_2CH_3$. In yet another aspect $R^{a6}$ is $CHFCH_3$.

In a further preferred embodiment the invention relates to mixtures comprising compounds I wherein $R^1$ and $R^2$ are hydrogen.

Another embodiment of the invention relates to mixtures comprising compounds I wherein $R^3$ and $R^4$ independently of each other are hydrogen, $C_1$-$C_4$-alkyl, $C_1$-$C_4$-hydroxyalkyl, $C_1$-$C_4$-alkoxy-$C_1$-$C_4$-alkyl or ($C_1$-$C_4$-alkoxy)carbonyl; preferably $R^3$ is hydrogen and $R^4$ is ($C_1$-$C_4$-alkoxy)carbonyl. Another preferred embodiment of the invention relates to mixtures comprising compounds I, wherein the group $-CR^3R^4-$ is $-CH_2-$, $-CH(CH_3)$, $-C(CH_3)_2-$, -CHCN-, $-CH(C(=O)-OCH_3)$ or-$CH(C(=O)-OCH_2CH_3)$. Another preferred embodiment of the invention relates to mixtures comprising compounds I, wherein the group $-CR^3R^4-$ is-$CH(CH_3)$, $-C(CH_3)_2-$, -CHCN-, $-CH(C(=O)-OCH_3)$ or $-CH(C(=O)-OCH_2CH_3)$. More preferably the group $-CR^3R^4-$ is $-C(CH_3)_2-$ or $-CH(CH_3)-$; in particular the group $-CR^3R^4-$ is $-CH(CH_3)-$.

In a further embodiment the invention relates to mixtures comprising compounds I wherein Y is -O-. In still

another embodiment the group -Y- is -O- and the group -Y-Het is bound in para-position to the phenyl ring relative to the alkyne group. In yet another embodiment the group -Y- is -O- and the group -Y-Het is bound in meta-position to the phenyl ring relative to the alkyne group.

According to a further embodiment, the present invention relates to mixtures comprising compounds of the formula I wherein:

| | |
|---|---|
| $R^{a2}$ | is hydrogen, halogen, $C_1$-$C_4$-alkyl, $C_1$-$C_4$-haloalkyl, $C_1$-$C_4$-alkoxy or $C_1$-$C_4$-haloalkoxy; |
| $R^{a5}$, $R^{a6}$ | independently of each other are halogen, OH, CN, $C_1$-$C_4$-alkyl, $C_2$-$C_4$-alkenyl, $C_1$-$C_4$-haloalkyl, $C_1$-$C_4$-alkoxy-, $C_1$-$C_4$-alkoxy-$C_1$-$C_4$-alkyl, or ($C_1$-$C_4$-alkoxy)carbonyl; and it being possible that one of $R^{a5}$ or $R^{a6}$ can in addition be hydrogen; or |
| $R^{a5}$ and $R^{a6}$ | together with two ring member carbon atoms to which they are attached, form a fused 5- or 6-membered saturated, partially unsaturated or aromatic carbocycle or heterocycle, wherein the ring member atoms of the fused heterocycle include besides carbon atoms 1, 2 or 3 heteroatoms selected from the group of N, O and S, and wherein the fused carbocycle or heterocycle is unsubstituted or carries 1, 2, 3 or 4 identical or different radicals selected from the group consisting of halogen, CN, $C_1$-$C_4$-alkyl, $C_1$-$C_4$-alkoxy, $C_1$-$C_4$-haloalkyl and $C_1$-$C_4$-haloalkoxy; |
| R | is hydrogen, $C_1$-$C_4$-alkyl, $C_2$-$C_4$-alkenyl or $C_2$-$C_4$-alkynyl; |
| $R^3$ and $R^4$ | independently of each other are hydrogen, CN, $C_1$-$C_4$-hydroxyalkyl, $C_1$-$C_4$-alkyl, $C_2$-$C_4$-alkenyl, $C_2$-$C_4$-alkynyl, $C_3$-$C_8$-cycloalkyl, $C_1$-$C_4$-alkoxy-$C_1$-$C_4$-alkyl or ($C_1$-$C_4$-alkoxy)carbonyl; |
| Y | is -0-; |
| $R^1$, $R^2$ | are independently selected from hydrogen and $C_1$-$C_4$-alkyl; |
| n | is 0 or 1 ; |
| $R^b$ | is halogen or $C_1$-$C_4$-alkoxy; |
| Het | is a pyridinyl or pyrimidinyl ring; wherein the moiety -Y-Het is bound in para- or meta-position to the phenyl ring relative to the alkyne group; and wherein the pyridinyl or pyrimidinyl are unsubstituted or carry 1 or 2 groups $R^c$; wherein |
| $R^c$ | is halogen, $C_1$-$C_6$-alkyl, $C_1$-$C_6$-haloalkyl, $C_1$-$C_4$-alkoxy or ($C_1$-$C_4$-alkoxy)carbonyl; |

and the N-oxides and the agriculturally acceptable salts of the compounds of formula I.

According to another embodiment, the present invention relates to mixtures comprising compounds of the formula I wherein:

| | |
|---|---|
| $R^{a2}$ | is hydrogen; |
| $R^{a5}$, $R^{a6}$ | independently of each other are halogen, OH, CN, $C_1$-$C_4$-alkyl, $C_2$-$C_4$-alkenyl, $C_1$-$C_4$-haloalkyl, $C_1$-$C_4$-alkoxy, $C_1$-$C_4$-alkoxy-$C_1$-$C_4$-alkyl or ($C_1$-$C_4$-alkoxy)carbonyl; and it being possible that one of $R^{a5}$ or $R^{a6}$ can in addition be hydrogen; or |
| $R^{a5}$ and $R^{a6}$ | together with two ring member carbon atoms to which they are attached, form a fused 5- or 6-membered saturated, partially unsaturated or aromatic carbocycle or heterocycle, wherein the ring member atoms of the fused heterocycle include besides carbon atoms 1, 2 or 3 heteroatoms selected from the group of N, O and S, and wherein the fused carbocycle or heterocycle is unsubstituted or carries 1, 2, 3 or 4 identical or different radicals selected from the group consisting of halogen, CN, $C_1$-$C_4$-alkyl, $C_1$-$C_4$-alkoxy, $C_1$-$C_4$-haloalkyl and $C_1$-$C_4$-haloalkoxy; |
| R | is hydrogen, $C_1$-$C_4$-alkyl, $C_2$-$C_4$-alkenyl or $C_2$-$C_4$-alkynyl; |
| $R^3$ and $R^4$ | independently of each other are hydrogen, CN, $C_1$-$C_4$-hydroxyalkyl, $C_1$-$C_4$-alkyl, $C_2$-$C_4$-alkenyl, $C_2$-$C_4$-alkynyl, $C_3$-$C_8$-cycloalkyl, $C_1$-$C_4$-alkoxy-$C_1$-$C_4$-alkyl or ($C_1$-$C_4$-alkoxy)carbonyl; |
| Y | is -0-; |
| $R^1$, $R^2$ | are independently selected from hydrogen and $C_1$-$C_4$-alkyl; |
| n | is 0 or 1 ; |
| $R^b$ | is halogen or $C_1$-$C_4$-alkoxy; |
| Het | is a pyridinyl or pyrimidinyl ring; wherein the moiety -Y-Het is bound in para- or meta-position to the phenyl ring relative to the alkyne group; and wherein the pyridinyl or pyrimidinyl are unsubstituted or carry 1 or 2 groups $R^c$; wherein |
| $R^c$ | is halogen, $C_1$-$C_6$-alkyl, $C_1$-$C_6$-haloalkyl, $C_1$-$C_4$-alkoxy or ($C_1$-$C_4$-alkoxy)carbonyl; |

and the N-oxides and the agriculturally acceptable salts of the compounds of formula I.

According to a further embodiment, the present invention relates to compounds of the formula I wherein:

| | |
|---|---|
| $R^{a2}$ | is hydrogen; |

$R^{a5}$, $R^{a6}$ independently of each other are halogen, OH, CN, $C_1$-$C_4$-alkyl, $C_2$-$C_4$-alkenyl, $C_1$-$C_4$-haloalkyl, $C_1$-$C_4$-alkoxy, $C_1$-$C_4$-alkoxy-$C_1$-$C_4$-alkyl or ($C_1$-$C_4$-alkoxy)carbonyl; and it being possible that one of $R^{a5}$ or $R^{a6}$ can in addition be hydrogen;

R is hydrogen, $C_1$-$C_4$-alkyl, $C_2$-$C_4$-alkenyl or $C_2$-$C_4$-alkynyl;

$R^3$ and $R^4$ independently of each other are hydrogen, CN, $C_1$-$C_4$-alkyl or ($C_1$-$C_4$-alkoxy)carbonyl;

$R^1$, $R^2$ are independently selected from hydrogen and $C_1$-$C_4$-alkyl;

Y is -0-;

n is 0 or 1 ;

$R^b$ is halogen or $C_1$-$C_4$-alkoxy;

Het is a pyridinyl or pyrimidinyl ring; and wherein the moiety -Y-Het is bound in para-position to the phenyl ring relative to the alkyne group; and wherein the pyridinyl or pyrimidinyl are unsubstituted or carry 1 or 2 groups $R^c$; wherein

$R^c$ are independently selected from halogen, $C_1$-$C_6$-alkyl, $C_1$-$C_6$-haloalkyl, $C_1$-$C_4$-alkoxy and ($C_1$-$C_4$-alkoxy)carbonyl;

and the N-oxides and the agriculturally acceptable salts of the compounds of formula I.

According to a further embodiment, the present invention relates to compounds of the formula I wherein:

$R^{a2}$ is $CH_3$;

$R^{a5}$, $R^{a6}$ independently of each other are halogen, OH, CN, $C_1$-$C_4$-alkyl, $C_2$-$C_4$-alkenyl, $C_1$-$C_4$-haloalkyl, $C_1$-$C_4$-alkoxy, $C_1$-$C_4$-alkoxy-$C_1$-$C_4$-alkyl or ($C_1$-$C_4$-alkoxy)carbonyl; and it being possible that one of $R^{a5}$ or $R^{a6}$ can in addition be hydrogen;

R is hydrogen, $C_1$-$C_4$-alkyl, $C_2$-$C_4$-alkenyl or $C_2$-$C_4$-alkynyl;

$R^3$ and $R^4$ independently of each other are hydrogen, CN, $C_1$-$C_4$-alkyl or ($C_1$-$C_4$-alkoxy)carbonyl;

$R^1$, $R^2$ are independently selected from hydrogen and $C_1$-$C_4$-alkyl;

Y is -O-;

n is 0 or 1 ;

$R^b$ is halogen or $C_1$-$C_4$-alkoxy;

Het is a pyridinyl or pyrimidinyl ring; and wherein the moiety -Y-Het is bound in para-position to the phenyl ring relative to the alkyne group; and wherein the pyridinyl or pyrimidinyl are unsubstituted or carry 1 or 2 groups $R^c$; wherein

$R^c$ are independently selected from halogen, $C_1$-$C_6$-alkyl, $C_1$-$C_6$-haloalkyl, $C_1$-$C_4$-alkoxy and ($C_1$-$C_4$-alkoxy)carbonyl;

and the N-oxides and the agriculturally acceptable salts of the compounds of formula I.

With respect to their use, particular preference is given to the compounds I.A or I.B.

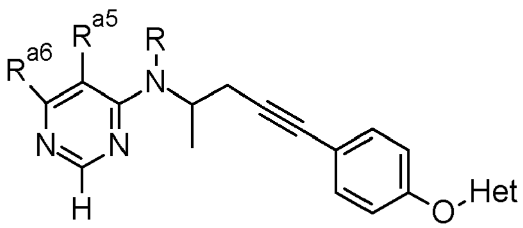

I.A

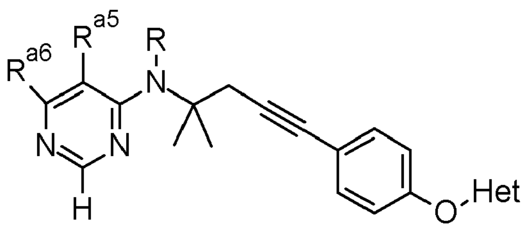

I.B

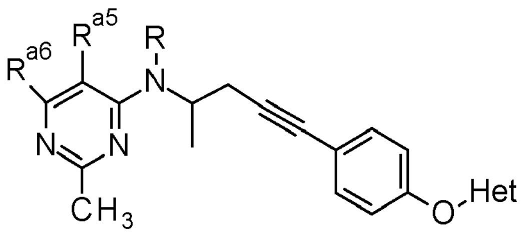

I.C

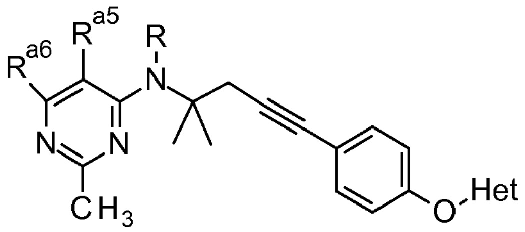

I.D

A skilled person will readily understand that the preferences given in connection with compounds of formula I also apply for formulae I.A, I.B, I.C or I.D as defined herein.

According to a further embodiment, the present invention relates to compounds of the formula I.A, I.B, I.C or I.D, wherein:

| | |
|---|---|
| $R^{a5}$, $R^{a6}$ | independently of each other are halogen, OH, CN, $C_1$-$C_4$-alkyl, $C_2$-$C_4$-alkenyl, $C_1$-$C_4$-haloalkyl, $C_1$-$C_4$-alkoxy, $C_1$-$C_4$-alkoxy-$C_1$-$C_4$-alkyl, or ($C_1$-$C_4$-alkoxy)carbonyl; and it being possible that one of $R^{a5}$ or $R^{a6}$ can in addition be hydrogen; or |
| $R^{a5}$ and $R^6$ | together with two ring member carbon atoms to which they are attached, form a fused 5- or 6-membered saturated, partially unsaturated or aromatic carbocycle or heterocycle, wherein the ring member atoms of the fused heterocycle include besides carbon atoms 1, 2 or 3 heteroatoms selected from N, O and S, and wherein the fused carbocycle or heterocycle is unsubstituted or carries 1, 2, 3 or 4 identical or different radicals selected from halogen, CN, $C_1$-$C_4$-alkyl, $C_1$-$C_4$-alkoxy, $C_1$-$C_4$-haloalkyl and $C_1$-$C_4$-haloalkoxy; |
| R | is hydrogen, $C_1$-$C_4$-alkyl, $C_2$-$C_4$-alkenyl or $C_2$-$C_4$-alkynyl; |
| Het | is a pyridinyl or pyrimidinyl ring; and wherein the pyridinyl or pyrimidinyl are unsubstituted or carry 1 or 2 groups $R^c$; wherein |
| $R^c$ | are independently selected from halogen, $C_1$-$C_6$-alkyl, $C_1$-$C_6$-haloalkyl, $C_1$-$C_4$-alkoxy and ($C_1$-$C_4$-alkoxy)carbonyl; |

and the N-oxides and the agriculturally acceptable salts of the compounds of formula I.A, I.B, I.C or I.D.

According to a further embodiment, the present invention relates to mixtures comprising compounds of the formula I as compiled and defined in Table 1 (compounds I-1 to I-107) wherein R, $R^1$ and $R^2$ in each case are hydrogen and Y is -O-.

Table I: Compounds I-1 to I-107 of formula I as defined herein and wherein R, $R^1$ and $R^2$ in each case are hydrogen and Y is -O-. Expressions Me and Et refer to groups $CH_3$ and $CH_2CH_3$ respectively.

| Ex. no | **Ra2** | **Ra5** | **Ra6** | **Het** | **Pos.* O-Het** | **$R^3$, $R^4$** | **$(Rb)_n$*** |
|---|---|---|---|---|---|---|---|
| I-1 | H | Cl | Cl | 4-(trifluoromethyl)pyridine-2-yl | para | H, H | n = 0 |
| I-2 | H | Cl | Me | 4-(trifluoromethyl)pyridine-2-yl | para | H, H | n = 0 |
| I-3 | H | Cl | Et | 4-(trifluoromethyl)pyridine-2-yl | para | H, H | n = 0 |
| I-4 | H | Cl | Me | 4-(trifluoromethyl)pyridine-2-yl | para | H, $CH_3$ | n = 0 |

(continued)

| Ex. no | Ra2 | Ra5 | Ra6 | Het | Pos.* O-Het | $R^3$, $R^4$ | $(Rb)_n$* |
|---|---|---|---|---|---|---|---|
| I-5 | H | Cl | Et | 4-(trifluoromethyl)pyridine-2-yl | para | H, $CH_3$ | n = 0 |
| I-6 | H | Cl | Cl | 4-(trifluoromethyl)pyridine-2-yl | para | H, $CH_3$ | n = 0 |
| I-7 | H | #5-CF=CCl-CH=CF-#6 | | 4-(trifluoromethyl)pyridine-2-yl | para | H, H | n = 0 |
| I-8 | H | #5-CF=CH-CH=CF-#6 | | 4-(trifluoromethyl)pyridine-2-yl | para | H, H | n = 0 |
| I-9 | H | #5-CF=CH-CH=CF-#6 | | 4-(trifluoromethyl)pyridine-2-yl | para | H, $CH_3$ | n = 0 |
| I-10 | H | #5-CF=CF-CH=CF-#6 | | 4-(trifluoromethyl)pyridine-2-yl | para | H, $CH_3$ | n = 0 |
| I-11 | H | Cl | $CHFCH_3$ | 4-(trifluoromethyl)pyridine-2-yl | para | H, H | n = 0 |
| I-12 | H | Cl | $CHFCH_3$ | 4-(trifluoromethyl)pyridine-2-yl | para | H, $CH_3$ | n = 0 |
| I-13 | H | #5-N($CH_3$)-N=CH-#6 | | 4-(trifluoromethyl)pyridine-2-yl | para | H, $CH_3$ | n = 0 |
| I-14 | H | #5-CH=CH-CH=CF-#6 | | 4-(trifluoromethyl)pyridine-2-yl | para | H, $CH_3$ | n = 0 |
| I-15 | H | #5-C($CH_3$)=CH-CH=CH-#6 | | 4-(trifluoromethyl)pyridine-2-yl | para | H, $CH_3$ | n = 0 |
| I-16 | H | Me | Cl | 4-(trifluoromethyl)pyridine-2-yl | para | H, $CH_3$ | n = 0 |
| I-17 | Me | Cl | Me | 4-(trifluoromethyl)pyridine-2-yl | para | H, $CH_3$ | n = 0 |
| I-18 | H | #5-N=CH-S-#6 | | 4-(trifluoromethyl)pyridine-2-yl | para | H, H | n = 0 |
| I-19 | H | #5-N=CH-S-#6 | | 4-(trifluoromethyl)pyridine-2-yl | para | H, $CH_3$ | n = 0 |
| I-20 | H | OMe | H | 4-(trifluoromethyl)pyridine-2-yl | para | H, $CH_3$ | n = 0 |
| I-21 | Me | Cl | Cl | 4-(trifluoromethyl)pyridine-2-yl | para | H, $CH_3$ | n = 0 |
| I-22 | H | Cl | COOMe | 4-(trifluoromethyl)pyridine-2-yl | para | H, $CH_3$ | n = 0 |
| I-23 | H | Cl | $CHFCH_3$ | 4-(trifluoromethyl)pyridine-2-yl | para | H, $CH_3$ | ortho-F; n = 1 |
| I-24 | H | Cl | Cl | 4-(trifluoromethyl)pyridine-2-yl | para | H, $CH_3$ | ortho-F; n = 1 |
| I-25 | H | Cl | $CHFCH_3$ | 4-(trifluoromethyl)pyridine-2-yl | para | H, H | ortho-F; n = 1 |
| I-26 | H | Cl | Cl | 4-(trifluoromethyl)pyridine-2-yl | para | H, H | ortho-F; n = 1 |

(continued)

| Ex. no | **Ra2** | **Ra5** | **Ra6** | **Het** | **Pos.* O-Het** | **$R^3$, $R^4$** | **$(Rb)_n$*** |
|---|---|---|---|---|---|---|---|
| I-27 | H | OMe | Cl | 4-(trifluoromethyl)pyridine-2-yl | para | H, $CH_3$ | n = 0 |
| I-28 | H | #5-N=CH-S-#6 | | 4-(trifluoromethyl)pyridine-2-yl | para | H, H | ortho-F; n = 1 |
| I-29 | H | #5-N($CH_2CH_3$)-N=CH-#6 | | 4-(trifluoromethyl)pyridine-2-yl | para | H, H | n = 0 |
| I-30 | H | F | Cl | 5-(trifluoromethyl)pyridine-3-yl | para | H, $CH_3$ | n = 0 |
| I-31 | Cl | Cl | Cl | 4-(trifluoromethyl)pyridine-2-yl | para | H, $CH_3$ | n = 0 |
| I-32 | H | COOEt | Et | 4-(trifluoromethyl)pyridine-2-yl | para | H, $CH_3$ | n = 0 |
| I-33 | H | #5-N=CH-CH=CH-#6 | | 4-(trifluoromethyl)pyridine-2-yl | para | H, H | n = 0 |
| I-34 | H | #5-N=CH-CH=CH-#6 | | 4-(trifluoromethyl)pyridine-2-yl | para | H, $CH_3$ | n = 0 |
| I-35 | H | OMe | COOMe | 4-(trifluoromethyl)pyridine-2-yl | para | H, $CH_3$ | n = 0 |
| I-36 | H | COOMe | Me | 4-(trifluoromethyl)pyridine-2-yl | para | H, $CH_3$ | n = 0 |
| I-37 | H | Br | Cl | 4-(trifluoromethyl)pyridine-2-yl | para | H, $CH_3$ | n = 0 |
| I-38 | OMe | F | H | 4-(trifluoromethyl)pyridine-2-yl | para | H, $CH_3$ | n = 0 |
| I-39 | H | Et | COOMe | 4-(trifluoromethyl)pyridine-2-yl | para | H, $CH_3$ | n = 0 |
| I-40 | H | Br | F | 4-(trifluoromethyl)pyridine-2-yl | para | H, $CH_3$ | n = 0 |
| I-41 | H | Br | OH | 4-(trifluoromethyl)pyridine-2-yl | para | H, $CH_3$ | n = 0 |
| I-42 | H | #5-CF=CH-CH=CF-#6 | | 6-(trifluoromethyl)pyridine-3-yl | para | H, $CH_3$ | n = 0 |
| I-43 | H | #5-CF=CH-CH=CF-#6 | | 2-(trifluoromethyl)pyridine-4-yl | para | H, $CH_3$ | n = 0 |
| I-44 | H | #5-CF=CH-CH=CF-#6 | | 5-(trifluoromethyl)pyridine-2-yl | para | H, $CH_3$ | n = 0 |
| I-45 | Me | Me | Cl | 4-(trifluoromethyl)pyridine-2-yl | para | H, $CH_3$ | n = 0 |
| I-46 | H | F | F | 4-(trifluoromethyl)pyridine-2-yl | para | H, $CH_3$ | n = 0 |
| I-47 | H | Cl | $CHFCH_3$ | 2-(trifluoromethyl)pyridine-4-yl | para | H, $CH_3$ | n = 0 |
| I-48 | H | Cl | $CHFCH_3$ | 5-(trifluoromethyl)pyridine-2-yl | para | H, $CH_3$ | n = 0 |

(continued)

| Ex. no | Ra2 | Ra5 | Ra6 | Het | Pos.* O-Het | $R^3$, $R^4$ | $(Rb)_n$* |
|---|---|---|---|---|---|---|---|
| I-49 | H | Cl | $CHFCH_3$ | 6-(trifluoromethyl)pyridine-3-yl | para | H, $CH_3$ | n = 0 |
| I-50 | H | Cl | $CHFCH_3$ | 3,5-dichloro-pyridin-2-yl | para | H, $CH_3$ | n = 0 |
| I-51 | H | Cl | Cl | 2-(trifluoromethyl)pyridine-4-yl | para | H, $CH_3$ | n = 0 |
| I-52 | H | Cl | Cl | 5-(trifluoromethyl)pyridine-2-yl | para | H, $CH_3$ | n = 0 |
| I-53 | H | Cl | Cl | 6-(trifluoromethyl)pyridine-3-yl | para | H, $CH_3$ | n = 0 |
| I-54 | H | Cl | Cl | 3,5-dichloro-pyridin-2-yl | para | H, $CH_3$ | n = 0 |
| I-55 | H | Me | Cl | 2-(trifluoromethyl)pyridine-4-yl | para | H, $CH_3$ | n = 0 |
| I-56 | H | Me | Cl | 5-(trifluoromethyl)pyridine-2-yl | para | H, $CH_3$ | n = 0 |
| I-57 | H | Me | Cl | 6-(trifluoromethyl)pyridine-3-yl | para | H, $CH_3$ | n = 0 |
| I-58 | H | OMe | Cl | 2-(trifluoromethyl)pyridine-4-yl | para | H, $CH_3$ | n = 0 |
| I-59 | H | OMe | Cl | 5-(trifluoromethyl)pyridine-2-yl | para | H, $CH_3$ | n = 0 |
| I-60 | H | OMe | Cl | 6-(trifluoromethyl)pyridine-3-yl | para | H, $CH_3$ | n = 0 |
| I-61 | H | OMe | Cl | 3,5-dichloro-pyridin-2-yl | para | H, $CH_3$ | n = 0 |
| I-62 | Cl | Cl | Me | 4-(trifluoromethyl)pyridine-2-yl | para | H, $CH_3$ | n = 0 |
| I-63 | OMe | Cl | Me | 4-(trifluoromethyl)pyridine-2-yl | para | H, $CH_3$ | n = 0 |
| I-64 | H | CN | Cl | 4-(trifluoromethyl)pyridine-2-yl | para | H, $CH_3$ | n = 0 |
| I-65 | H | Cl | $CHFCH_3$ | 5-chloro-pyridine-2-yl | para | H, $CH_3$ | n = 0 |
| I-66 | H | Me | Cl | 5-chloro-pyridine-2-yl | para | H, $CH_3$ | n = 0 |
| I-67 | H | OMe | Cl | 5-chloro-pyridine-2-yl | para | H, $CH_3$ | n = 0 |
| I-68 | Me | H | Cl | 4-(trifluoromethyl)pyridine-2-yl | para | H, $CH_3$ | n = 0 |
| I-69 | H | Et | Cl | 4-(trifluoromethyl)pyridine-2-yl | para | H, $CH_3$ | n = 0 |
| I-70 | H | OMe | $CH_2OCH_3$ | 4-(trifluoromethyl)pyridine-2-yl | para | H, $CH_3$ | n = 0 |

(continued)

| Ex. no | Ra2 | Ra5 | Ra6 | Het | Pos.* O-Het | $R^3$, $R^4$ | $(Rb)_n$* |
|---|---|---|---|---|---|---|---|
| I-71 | H | #5-CF=CH-CH=CF-#6 | | 5-chloro-pyridine-2-yl | para | H, $CH_3$ | n = 0 |
| I-72 | H | #5-N=N-S-#6 | | 4-(trifluoromethyl)pyridine-2-yl | para | H, $CH_3$ | n = 0 |
| I-73 | H | CN | Me | 4-(trifluoromethyl)pyridine-2-yl | para | H, $CH_3$ | n = 0 |
| I-74 | H | #5-CF=CH-CH=CF-#6 | | 3,5-dichloro-pyridin-2-yl | para | H, $CH_3$ | n = 0 |
| I-75 | H | Cl | Cl | 2-(trifluoromethyl)pyridine-4-yl | meta | H, $CH_3$ | n = 0 |
| I-76 | OMe | H | Cl | 4-(trifluoromethyl)pyridine-2-yl | para | H, $CH_3$ | n = 0 |
| I-77 | H | Cl | $CHFCH_3$ | 2-(trifluoromethyl)pyridine-4-yl | para | H, $CH_3$ | n = 0 |
| I-78 | H | Cl | Cl | 5-chloro-pyridine-2-yl | para | H, $CH_3$ | n = 0 |
| I-79 | H | $CH=CH_2$ | Cl | 4-(trifluoromethyl)pyridine-2-yl | para | H, $CH_3$ | n = 0 |
| I-80 | H | Me | Cl | 4-chloro-5-methyl-pyrimidine-6-yl | para | H, $CH_3$ | n = 0 |
| I-81 | H | OMe | Cl | 4-chloro-5-methoxy-pyrimidine-6-yl | para | H, $CH_3$ | n = 0 |
| I-82 | H | Me | COOMe | 4-carboxymethyl-5-methyl-pyrimidin-6-yl | para | H, $CH_3$ | n = 0 |
| I-83 | H | F | H | 4-(trifluoromethyl)pyridine-2-yl | para | H, $CH_3$ | n = 0 |
| I-84 | H | Et | Cl | 4-chloro-5-ethyl-pyrimidine-6-yl | para | H, H | n = 0 |
| I-85 | H | Cl | Cl | 4,5-dichloro-pyrimidine-6-yl | para | H, H | n = 0 |
| I-86 | H | #5-N=CH-CH=CH-#6 | | 4-chloro-pyrimidine-6-yl | para | H, $CH_3$ | n = 0 |
| I-87 | H | OMe | $CH_2OCH_3$ | 4-(trifluoromethyl)pyridine-2-yl | para | H, H | n = 0 |
| I-88 | H | #5-N=CH-S-#6 | | 4-chloro-pyrimidine-6-yl | para | H, $CH_3$ | n = 0 |
| I-89 | H | Cl | $CHFCH_3$ | 4-chloro-pyrimidine-6-yl | para | H, $CH_3$ | n = 0 |
| I-90 | H | Me | Cl | 4-chloro-pyrimidine-6-yl | para | H, $CH_3$ | n = 0 |
| I-91 | H | OMe | Cl | 4-chloro-pyrimidine-6-yl | para | H, $CH_3$ | n = 0 |
| I-92 | H | NHMe | Cl | 4-(trifluoromethyl)pyridine-2-yl | para | H, $CH_3$ | n = 0 |

(continued)

| Ex. no | Ra2 | Ra5 | Ra6 | Het | Pos.* O-Het | $R^3$, $R^4$ | $(Rb)_n$* |
|---|---|---|---|---|---|---|---|
| I-93 | H | NHEt | Cl | 4-(trifluoromethyl)pyridine-2-yl | para | H, $CH_3$ | n = 0 |
| I-94 | H | #5-N=CH-CH=N-#6 | | 4-(trifluoromethyl)pyridine-2-yl | para | H, H | n = 0 |
| I-95 | H | #5-N=CH-CH=N-#6 | | 4-(trifluoromethyl)pyridine-2-yl | para | H, $CH_3$ | n = 0 |
| I-96 | H | H | CN | 4-(trifluoromethyl)pyridine-2-yl | para | H, $CH_3$ | n = 0 |
| I-97 | H | Cl | $CHFCH_3$ | 2-chloro-pyrimidine-4-yl | para | H, $CH_3$ | n = 0 |
| I-98 | H | Me | Cl | 2-chloro-pyrimidine-4-yl | para | H, $CH_3$ | n = 0 |
| I-99 | H | OMe | Cl | 2-chloro-pyrimidine-4-yl | para | H, $CH_3$ | n = 0 |
| I-100 | H | $NMe_2$ | Cl | 4-(trifluoromethyl)pyridine-2-yl | para | H, $CH_3$ | n = 0 |
| I-101 | H | Cl | Et | 4-chloro-pyrimidine-6-yl | para | H, $CH_3$ | n = 0 |
| I-102 | H | OMe | $CH_2OCH_3$ | 5-(trifluoromethyl)pyridine-2-yl | para | H, $CH_3$ | n = 0 |
| I-103 | H | Cl | Et | 5-(trifluoromethyl)pyridine-2-yl | para | H, $CH_3$ | n = 0 |
| I-104 | H | Me | Cl | 5-(trifluoromethyl)pyridine-2-yl | para | H, $CH_3$ | n = 0 |
| I-105 | H | Cl | Me | 5-chloro-pyridine-2-yl | para | H, $CH_3$ | n = 0 |
| I-106 | H | OMe | $CH_2OCH_3$ | 5-chloro-pyridine-2-yl | para | H, $CH_3$ | n = 0 |
| I-107 | H | Cl | Et | 5-chloro-pyridine-2-yl | para | H, $CH_3$ | n = 0 |

* The position of $R^b$ or the group -O-Het on the phenyl ring is defined relative to the alkyne-moiety bound to the phenyl ring as being in ortho, meta or para position; n = 0 indicates that no substituent $R^b$ is present on the phenyl ring. m.p. = melting point (°C); in cases where $R^{a5}$ and $R^{a6}$ together with two ring member carbon atoms of the pyrimidine ring constitute a fused ring system #5 and #6 indicate the point of attachment to the pyrimidine ring, each respectively corresponding to the positions of either substituent $R^{a5}$ or $R^{a6}$.

According to one embodiment, the mixtures comprise compounds I and at least one pesticide II in a synergistically effective amount.

Compounds I and their preparation and their use as fungicidally active compounds have been described in the unpublished International application PCT/EP2013/054966.

Practical agricultural experience has shown that the repeated and exclusive application of an individual active compound in the control of harmful fungi leads in many cases to a rapid selection of those fungus strains which have developed natural or adapted resistance against the active compound in question. Effective control of these fungi with the active compound in question is then no longer possible.

To reduce the risk of the selection of resistant fungus strains, mixtures of different active compounds are nowadays conventionally employed for controlling harmful fungi. By combining active compounds having different mechanisms of action, it is possible to ensure successful control over a relatively long period of time.

It is an object of the present invention to provide, with a view to effective resistance management and effective control of phytopathogenic harmful fungi, at application rates which are as low as possible, compositions which, at a reduced total amount of active compounds applied, have improved activity against the harmful fungi (synergistic mixtures) and a broadened activty spectrum, in particular for certain indications.

We have accordingly found that this object is achieved by the mixtures and compositions, defined herein, comprising at least one compound I (component 1)), at least one pesticide II (component 2)) and at least one pesticide III (component 3)).

Moreover, we have found that simultaneous, that is joint or separate, application of compounds I and a pesticide II or successive application of compounds I and of a pesticide II allows better control of harmful fungi than is possible with the individual components alone (synergistic mixtures).

When applying compounds I and a pesticide II sequentially the time between both applications may vary e.g. between 2 hours to 7 days. Also a broader range is possible ranging from 0.25 hour to 30 days, preferably from 0.5 hour to 14 days, particularly from 1 hour to 7 days or from 1.5 hours to 5 days, even more preferred from 2 hours to 1 day. Compounds I and/or the pesticides II or pesticides III can be present in different crystal modifications, which may differ in biological activity.

In the definitions of the variables given above, collective terms are used which are generally representative for the substituents in question. The term "$C_n$-$C_m$" indicates the number of carbon atoms possible in each case in the substituent or substituent moiety in question.

The term "halogen" refers to fluorine, chlorine, bromine and iodine.

The term "$C_1$-$C_4$-alkyl" refers to a straight-chained or branched saturated hydrocarbon group having 1 to 4 carbon atoms, for example methyl, ethyl, propyl, 1-methylethyl, butyl, 1-methylpropyl, 2-methylpropyl, and 1,1-dimethylethyl. Likewise, the term "$C_1$-$C_6$-alkyl" refers to a straight-chained or branched saturated hydrocarbon group having 1 to 6 carbon atoms. The term "$C_1$-$C_4$-haloalkyl" refers to a straight-chained or branched alkyl group having 1 to 4 carbon atoms (as defined above), wherein some or all of the hydrogen atoms in these groups may be replaced by halogen atoms as mentioned above, for example chloromethyl, bromomethyl, dichloromethyl, trichloromethyl, fluoromethyl, difluoromethyl, trifluoromethyl, chlorofluoromethyl, dichlorofluoromethyl, chlorodifluoromethyl, 1-chloroethyl, 1-bromoethyl, 1-fluoroethyl, 2-fluoroethyl, 2,2-difluoroethyl, 2,2,2-trifluoroethyl, 2-chloro-2-fluoroethyl, 2-chloro-2,2-difluoroethyl, 2,2-dichloro-2-fluoroethyl, 2,2,2-trichloroethyl and pentafluoroethyl, 2-fluoropropyl, 3-fluoropropyl, 2,2-difluoropropyl, 2,3-difluoropropyl, 2-chloropropyl, 3-chloropropyl, 2,3-dichloropropyl, 2-bromopropyl, 3-bromopropyl, 3,3,3-trifluoropropyl, 3,3,3-trichloropropyl, $CH_2$-$C_2F_5$, $CF_2$-$C_2F_5$, $CF(CF_3)_2$, 1-(fluoromethyl)-2-fluoroethyl, 1-(chloromethyl)-2-chloroethyl, 1-(bromomethyl)-2-bromoethyl, 4-fluorobutyl, 4-chlorobutyl, 4-bromobutyl or nonafluorobutyl. Likewise, the term "$C_1$-$C_6$-haloalkyl" refers to a straight-chained or branched alkyl group having 1 to 6 carbon atoms.

The term "$C_1$-$C_4$-alkoxy" refers to a straight-chain or branched alkyl group having 1 to 4 carbon atoms (as defined above) which is bonded via an oxygen, at any position in the alkyl group, for example methoxy, ethoxy, n-propoxy, 1-methylethoxy, butoxy, 1-methyl¬propoxy, 2-methylpropoxy or 1,1-dimethylethoxy. Likewise, the term "$C_1$-$C_6$-alkoxy" refers to a straight-chain or branched alkyl group having 1 to 6 carbon atoms.

The term "$C_1$-$C_4$-hydroxyalkyl" refers to a straight-chained or branched alkyl group having 2 to 4 carbon atoms (as defined above), wherein one hydrogen atom in these groups may be replaced by one hydroxy group, for example hydroxymethyl, 2-hydroxyethyl, 3-hydroxy--propyl, 4-hydroxy-butyl.

The term "$C_1$-$C_4$-haloalkoxy" refers to a $C_1$-$C_4$-alkoxy group as defined above, wherein some or all of the hydrogen atoms may be replaced by halogen atoms as mentioned above, for example, $OCH_2F$, $OCHF_2$, $OCF_3$, $OCH_2Cl$, $OCHCl_2$, $OCCl_3$, chlorofluoromethoxy, dichlorofluoromethoxy, chlorodifluoromethoxy, 2-fluoroethoxy, 2-chloroethoxy, 2-bromoethoxy, 2-iodoethoxy, 2,2-difluoroethoxy, 2,2,2-trifluoroethoxy, 2-chloro-2-fluoroethoxy, 2-chloro-2,2-difluoroethoxy, 2,2-dichloro-2-fluoroethoxy, 2,2,2-trichloroethoxy, $OC_2F_5$, 2-fluoropropoxy, 3-fluoropropoxy, 2,2-difluoropropoxy, 2,3-difluoropropoxy, 2-chloropropoxy, 3-chloropropoxy, 2,3-dichloropropoxy, 2-bromopropoxy, 3-bromopropoxy, 3,3,3-trifluoropropoxy, 3,3,3-trichloropropoxy, $OCH_2$-$C_2F_5$, $OCF_2$-$C_2F_5$, 1-($CH_2F$)-2-fluoroethoxy, 1-($CH_2Cl$)-2-chloroethoxy, 1-($CH_2Br$)-2-bromo¬ethoxy, 4-fluorobutoxy, 4-chlorobutoxy, 4-bromobutoxy or nonafluorobutoxy. Likewise, the term "$C_1$-$C_6$-haloalkoxy" refers to a $C_1$-$C_6$-alkoxy group as defined above, wherein some or all of the hydrogen atoms may be replaced by halogen atoms as mentioned above.

The term "$C_1$-$C_4$-alkoxy-$C_1$-$C_4$-alkyl" refers to alkyl having 1 to 4 carbon atoms (as defined above), wherein one hydrogen atom of the alkyl radical is replaced by a $C_1$-$C_4$-alkoxy group (as defined above). Likewise, the term "$C_1$-$C_6$-alkoxy-$C_1$-$C_4$-alkyl" refers to alkyl having 1 to 4 carbon atoms (as defined above), wherein one hydrogen atom of the alkyl radical is replaced by a $C_1$-$C_6$-alkoxy group (as defined above).

The term "$C_1$-$C_4$-haloalkoxy-$C_1$-$C_4$-alkyl" refers to alkyl having 1 to 4 carbon atoms (as defined above), wherein one hydrogen atom of the alkyl radical is replaced by a $C_1$-$C_4$-haloalkoxy group (as defined above). Likewise, the term "$C_1$-$C_6$-haloalkoxy-$C_1$-$C_4$-alkyl" refers to alkyl having 1 to 4 carbon atoms (as defined above), wherein one hydrogen atom of the alkyl radical is replaced by a $C_1$-$C_6$-alkoxy group (as defined above).

The term "$C_1$-$C_4$-alkylthio" as used herein refers to straight-chain or branched alkyl groups having 1 to 4 carbon atoms (as defined above) bonded via a sulfur atom, at any position in the alkyl group, for example methylthio, ethylthio, propylthio, isopropylthio, and n butylthio. Likewise, the term "$C_1$-$C_6$-alkylthio" as used herein refers to straight-chain or branched alkyl groups having 1 to 6 carbon atoms (as defined above) bonded via a sulfur atom. Accordingly, the terms "$C_1$-$C_4$-haloalkylthio" and "$C_1$-$C_6$-haloalkylthio" as used herein refer to straight-chain or branched haloalkyl groups having 1 to 4 or 1 to 6 carbon atoms (as defined above) bonded through a sulfur atom, at any position in the haloalkyl group.

The terms "$C_1$-$C_4$-alkylsulfinyl" or "$C_1$-$C_6$-alkylsulfinyl" refer to straight-chain or branched alkyl groups having 1 to 4 or 1 to 6 carbon atoms (as defined above) bonded through a -S(=O)-moiety, at any position in the alkyl group, for example methylsulfinyl and ethylsulfinyl, and the like. Accordingly, the terms "$C_1$-$C_4$-haloalkylsulfinyl" and "$C_1$-$C_6$-haloalkylsulfinyl", respectively, refer to straight-chain or branched haloalkyl groups having 1 to 4 and 1 to 6 carbon atoms (as defined above), respectively, bonded through a -S(=O)- moiety, at any position in the haloalkyl group.

The terms "$C_1$-$C_4$-alkylsulfonyl" and "$C_1$-$C_6$-alkylsulfonyl", respectively, refer to straight-chain or branched alkyl groups having 1 to 4 and 1 to 6 carbon atoms (as defined above), respectively, bonded through a -$S(=O)_2$- moiety, at any position in the alkyl group, for example methylsulfonyl. Accordingly, the terms "$C_1$-$C_4$-haloalkylsulfonyl" and "$C_1$-$C_6$-haloalkylsulfonyl", respectively, refer to straight-chain or branched haloalkyl groups having 1 to 4 and 1 to 6 carbon atoms (as defined above), respectively, bonded through a - $S(=O)_2$- moiety, at any position in the haloalkyl group.

The term "$C_1$-$C_4$-alkylamino" refers to an amino radical carrying one $C_1$-$C_4$-alkyl group (as defined above) as substituent, for example methylamino, ethylamino, propylamino, 1-methylethylamino, butylamino, 1-methylpropylamino, 2-methylpropylamino, 1,1-di-methylethylamino and the like. Likewise, the term "$C_1$-$C_6$-alkylamino" refers to an amino radical carrying one $C_1$-$C_6$-alkyl group (as defined above) as substituent.

The term "di($C_1$-$C_4$-alkyl)amino" refers to an amino radical carrying two identical or different $C_1$-$C_4$-alkyl groups (as defined above) as substituents, for example dimethylamino, diethylamino, di-n-propylamino, diisopropylamino, N-ethyl-N-methylamino, N-(n-propyl)-N-methylamino, N-(isopropyl)-N methylamino, N-(n-butyl)-N-methylamino, N-(n-pentyl)-N-methylamino, N-(2-butyl)-N methylamino, N-(isobutyl)-N-methylamino, and the like. Likewise, the term "di($C_1$-$C_6$-alkyl)amino" refers to an amino radical carrying two identical or different $C_1$-$C_6$-alkyl groups (as defined above) as substituents.

The term "($C_1$-$C_4$-alkoxy)carbonyl" refers to a $C_1$-$C_4$-alkoxy radical (as defined above) which is attached via a carbonyl group and corresponds to a group such as, for example, $COOCH_3$ in case the alkoxy radical is methoxy.

The term "di($C_1$-$C_4$-alkyl)aminocarbonyl" refers to a di($C_1$-$C_4$)alkylamino radical as defined above which is attached via a carbonyl group.

The term "phenoxy" and refers to a phenyl radical which is attached via an oxygen atom. Likewise, the term "phenoxy-$C_1$-$C_4$-alkyl" and refers to a phenoxy radical which is attached via a $C_1$-$C_4$-alkyl group (as defined above).

The term "$C_2$-$C_4$-alkenyl" refers to a straight-chain or branched unsaturated hydrocarbon radical having 2 to 4 carbon atoms and a double bond in any position, such as ethenyl, 1-propenyl, 2-propenyl (allyl), 1-methylethenyl, 1-butenyl, 2-butenyl, 3-butenyl, 1-methyl-1-propenyl, 2-methyl-1-propenyl, 1-methyl-2-propenyl, 2-methyl-2-propenyl. Likewise, the term "$C_2$-$C_6$-alkenyl" refers to a straight-chain or branched unsaturated hydrocarbon radical having 2 to 6 carbon atoms and a double bond in any position.

The term "$C_2$-$C_4$-alkynyl" refers to a straight-chain or branched unsaturated hydrocarbon radical having 2 to 4 carbon atoms and containing at least one triple bond, such as ethynyl, 1-propynyl, 2-propynyl, 1-butynyl, 2-butynyl, 3-butynyl, 1-methyl-2-propynyl. Likewise, the term "$C_2$-$C_6$-alkynyl" refers to a straight-chain or branched unsaturated hydrocarbon radical having 2 to 6 carbon atoms and at least one triple bond.

The term "$C_3$-$C_8$-cycloalkyl" refers to monocyclic saturated hydrocarbon radicals having 3 to 8 carbon ring members, such as cyclopropyl ($C_3H_5$), cyclobutyl, cyclopentyl, cyclohexyl, cycloheptyl or cyclooctyl.

The term "$C_3$-$C_8$-cycloalkyl-$C_1$-$C_4$-alkyl" refers to a cycloalkyl radical having 3 to 8 carbon atoms (as defined above), which is bonded via a $C_1$-$C_4$-alkyl group (as defined above).

The term "$C_3$-$C_8$-cycloalkyloxy" refers to a cycloalkyl radical having 3 to 8 carbon atoms (as defined above), which is bonded via an oxygen.

The term "saturated or partially unsaturated 3-, 4- 5-, 6- or 7-membered carbocycle" is to be understood as meaning both saturated or partially unsaturated carbocycles having 3, 4, 5, 6 or 7 ring members. Examples include cyclopropyl, cyclopentyl, cyclopentenyl, cyclopen-tadienyl, cyclohexyl, cyclohexenyl, cyclohexadienyl, cycloheptyl, cycloheptenyl, cycloheptadienyl, and the like.

The term " saturated or partially unsaturated 3-, 4-, 5-, 6-, or 7-membered heterocycle, wherein the ring member atoms of the heterocycle include besides carbon atoms 1, 2, 3 or 4 heteroatoms selected from the group of N, O and S", is to be understood as meaning both saturated and partially unsaturated heterocycles, for example:

a 3- or 4-membered saturated heterocycle which contains 1 or 2 heteroatoms from the group consisting of N, O and S as ring members such as oxirane, aziridine, thiirane, oxetane, azetidine, thiethane, [1,2]dioxetane, [1,2]dithietane, [1,2]diazetidine; and

a 5- or 6-membered saturated or partially unsaturated heterocycle which contains 1, 2 or 3 heteroatoms from the group consisting of N, O and S as ring members such as 2-tetrahydro-furanyl, 3-tetrahydrofuranyl, 2-tetrahydrothienyl, 3-tetrahydrothienyl, 2-pyrrolidinyl, 3-pyrrolidinyl, 3-isoxazolidinyl, 4-isoxazolidinyl, 5-isoxazolidinyl, 3-isothiazolidinyl, 4-isothiazolidinyl, 5-isothiazolidinyl, 3-pyrazolidinyl, 4-pyrazolidinyl, 5-pyrazolidinyl, 2-oxazolidinyl, 4-oxazolidinyl, 5-oxazolidinyl, 2-thiazolidinyl, 4-thiazolidinyl, 5-thiazolidinyl, 2-imidazolidinyl, 4-imidazolidinyl, 1,2,4-oxadiazolidin-3-yl, 1,2,4-oxadiazolidin-5-yl, 1,2,4-thiadiazolidin-3-yl, 1,2,4-thiadiazolidin-5-yl, 1,2,4-triazolidin-3-yl, 1,3,4-oxadiazolidin-2-yl, 1,3,4-thiadiazolidin-2-yl, 1,3,4-triazolidin-2-yl, 2,3-dihydrofur-2-yl, 2,3-dihydrofur-3-yl, 2,4-dihydrofur-2-yl, 2,4-dihydrofur-3-yl, 2,3-dihydrothien-2-yl, 2,3-dihydrothien-3-yl, 2,4-dihydrothien-2-yl, 2,4-dihydrothien-3-yl, 2-pyrrolin-2-yl, 2-pyrrolin-3-yl, 3-pyrrolin-2-yl, 3-pyrrolin-3-yl, 2-isoxazolin-3-yl, 3-isoxazolin-3-yl, 4-isoxazolin-3-yl, 2-isoxazolin-4-yl, 3-isoxazolin-4-yl, 4-isoxazolin-4-yl, 2-isoxazolin-5-yl, 3-isoxazolin-5-yl, 4-isoxazolin-5-yl, 2-isothiazolin-3-yl, 3-isothiazolin-3-yl, 4-isothiazolin-3-yl, 2-isothiazolin-4-yl, 3-isothiazolin-4-yl, 4-isothiazolin-4-yl, 2-isothiazolin-5-yl, 3-isothiazolin-5-yl, 4-isothiazolin-5-yl, 2,3-dihydropyrazol-1-yl, 2,3-dihydropyrazol-2-yl, 2,3-dihydropyrazol-3-yl, 2,3-dihydropyrazol-4-yl, 2,3-dihydropyrazol-5-yl, 3,4-dihydropyrazol-1-yl, 3,4-dihydropyrazol-3-yl, 3,4-dihydropyrazol-4-yl, 3,4-dihydropyrazol-5-yl, 4,5-dihydropyrazol-1-yl, 4,5-dihydropyrazol-3-yl, 4,5-dihydropyrazol-4-yl, 4,5-dihydropyrazol-5-yl, 2,3-dihydrooxazol-2-yl, 2,3-dihydrooxazol-3-yl, 2,3-dihydrooxazol-4-yl, 2,3-dihydrooxazol-5-yl, 3,4-dihydrooxazol-2-yl, 3,4-dihydrooxazol-3-yl, 3,4-dihydrooxazol-4-yl, 3,4-dihydrooxazol-5-yl, 3,4-dihydrooxazol-2-yl, 3,4-dihydrooxazol-3-yl, 3,4-dihydrooxazol-4-yl, 2-piperidinyl, 3-piperidinyl, 4-piperidinyl, 1,3-dioxan-5-yl, 2-tetrahydropyranyl, 4-tetrahydropyranyl, 2-tetrahydrothienyl, 3-hexahydropyridazinyl, 4-hexa-hydropyridazinyl, 2-hexahydropyrimidinyl, 4-hexahydropyrimidinyl, 5-hexahydropyrimidinyl, 2-piperazinyl, 1,3,5-hexahydrotriazin-2-yl and 1,2,4-hexahydrotriazin-3-yl and also the corresponding -ylidene radicals; and

a 7-membered saturated or partially unsaturated heterocycle such as tetra- and hexahydroazepinyl, such as 2,3,4,5-tetrahydro[1H]azepin-1-,-2-,-3-,-4-,-5-,-6- or-7-yl, 3,4,5,6-tetrahydro[2H]azepin-2-,-3-,-4-,-5-,-6- or-7-yl, 2,3,4,7-tetrahydro[1H]azepin-1-,-2-,-3-,-4-,-5-,-6- or-7-yl, 2,3,6,7-tetrahydro[1H]azepin-1-,-2-,-3-,-4-,-5-,-6- or-7-yl, hexahydroazepin-1-,-2-,-3- or-4-yl, tetra- and hexahydrooxepinyl such as 2,3,4,5-tetrahydro[1H]oxepin-2-,-3-,-4-,-5-,-6- or-7-yl, 2,3,4,7-tetrahydro[1H]oxepin-2-,-3-,-4-,-5-,-6- or-7-yl, 2,3,6,7-tetrahydro[1H]oxepin-2-, -3-,-4-,-5-,-6- or-7-yl, hexahydroazepin-1-,-2-,-3- or-4-yl, tetra- and hexahydro-1,3-diazepinyl, tetra- and hexahydro-1,4-diazepinyl, tetra- and hexahydro-1,3-oxazepinyl, tetra-and hexahydro-1,4-oxazepinyl, tetra- and hexahydro-1,3-dioxepinyl, tetra- and hexahydro-1,4-dioxepinyl and the corresponding -ylidene radicals; and

The term "5-or 6--membered heteroaryl, wherein the ring member atoms of the heteroaryl include besides carbon atoms 1, 2, 3 or 4 heteroatoms selected from the group of N, O and S", refers to, for example,

a 5-membered heteroaryl such as pyrrol-1-yl, pyrrol-2-yl, pyrrol-3-yl, thien-2-yl, thien-3-yl, furan-2-yl, furan-3-yl, pyrazol-1-yl, pyrazol-3-yl, pyrazol-4-yl, pyrazol-5-yl, imidazol-1-yl, imidazol-2-yl, imidazol-4-yl, imidazol-5-yl, oxazol-2-yl, oxazol-4-yl, oxazol-5-yl, isoxazol-3-yl, isoxazol-4-yl, isoxazol-5-yl, thiazol-2-yl, thiazol-4-yl, thiazol-5-yl, isothiazol-3-yl, isothiazol-4-yl, isothiazol-5-yl, 1,2,4-triazolyl-1-yl, 1,2,4-triazol-3-yl 1,2,4-triazol-5-yl, 1,2,4-oxadiazol-3-yl, 1,2,4-oxadiazol-5-yl and 1,2,4-thiadiazol-3-yl, 1,2,4-thiadiazol-5-yl; or a 6-membered heteroaryl, such as pyridin-2-yl, pyridin-3-yl, pyridin-4-yl, pyridazin-3-yl, pyridazin-4-yl, pyrimidin-2-yl, pyrimidin-4-yl, pyrimidin-5-yl, pyrazin-2-yl and 1,3,5-triazin-2-yl and 1,2,4-triazin-3-yl.

The term "two radicals $R^c$ that are bound to adjacent ring member atoms form together with said ring member atoms a fused cycle" refers to a condensed bicyclic ring system, wherein 5- or 6-membered heteroaryl carries a fused-on 5-, 6- or 7-membered carbocyclic or heterocyclic ring it being possible that these rings are saturated or partially saturated or aromatic.

The term "one or two $CH_2$ groups of the abovementioned cycles may be respectively replaced by one or two C(=O) or C(=S) groups" refers to an exchange of carbon atoms from a saturated or partially unsaturated 3-, 4-, 5-, 6- or 7-membered carbocycle or a saturated or partially unsaturated 3-, 4-, 5-, 6- or 7-membered heterocycle, resulting in cycles such as cyclopropanone, cyclopentanone, cyclopropanethione, cyclopentanethione, 5-oxazolone, cyclohexane-1,4-dione, cyclohexane-1,4-dithione, cyclohex-2-ene-1,4-dione or cyclohex-2-ene-1,4-dithione.

Owing to the basic character of their nitrogen atoms, the component I, i.e in particular compounds I-1 to I-107 or any group of compounds I detailled above, is capable of forming salts or adducts with inorganic or organic acids or with metal ions, in particular salts with inorganic acids.

Agriculturally acceptable salts of the compounds I encompass especially the salts of those cations or the acid addition salts of those acids whose cations and anions, respectively, have no adverse effect on the fungicidal action of the compounds I. Suitable cations are thus in particular the ions of the alkali metals, preferably sodium and potassium, of the alkaline earth metals, preferably calcium, magnesium and barium, of the transition metals, preferably manganese, copper, zinc and iron, and also the ammonium ion which, if desired, may carry 1 to 4 $C_1$-$C_4$-alkyl substituents and/or one phenyl or benzyl substituent, preferably diisopropylammonium, tetramethylammonium, tetrabutylammonium, trimethylbenzylammonium, furthermore phosphonium ions, sulfonium ions, preferably tri($C_1$-$C_4$-alkyl)sulfonium, and sulfoxonium ions, preferably tri($C_1$-$C_4$-alkyl)sulfoxonium. Anions of useful acid addition salts are primarily chloride, bromide,

fluoride, hydrogensulfate, sulfate, dihydrogenphosphate, hydrogenphosphate, phosphate, nitrate, bicarbonate, carbonate, hexafluorosilicate, hexafluorophosphate, benzoate, and the anions of $C_1$-$C_4$-alkanoic acids, preferably formate, acetate, propionate and butyrate. They can be formed by reacting a compound I with an acid of the corresponding anion, preferably of hydrochloric acid, hydrobromic acid, sulfuric acid, phosphoric acid or nitric acid.

The scope of the present invention includes mixtures of the (R)- and (S)-isomers and the racemates of compounds I and/or pesticides II and, optionally, pesticides III having one or more chiral centers. As a result of hindered rotation of asymmetrically substituted groups, atrope isomers of compounds I and/or pesticides II and, optionally, pesticides III may be present. They also form part of the subject matter of the invention.

According to one embodiment the invention relates to two-component mixtures comprising a compound I as defined above, in particular selected from compounds I-1 to I-107 or any group of compounds I detailed above, and the pesticide II is selected from any group A) to F). According to a specific embodiment thereof, only two active compounds as defined are present in these mixtures (herein also called "binary mixture"). Accordingly the term "ternary mixture" relates to mixtures wherein only three active compounds are present. Said mixtures may, of course, contain any kind of additive or the like as detailled below in order to provide a composition or formulation suitable for use in agriculture.

According to one embodiment the invention relates to binary mixtures comprising a compound I as defined above, in particular selected from compounds I-1 to I-107 or any group of compounds I detailed above, and pesticide II is selected from group A), in particular pesticide II is selected from the group of inhibitors of complex III at $Q_o$ site, e.g. the strobilurins.

According to a further embodiment thereof, pesticide II is selected from the group of inhibitors of complex III at $Q_i$ site, e.g. carboxamides.

According to one embodiment the invention relates to binary mixtures comprising a compound I as defined above, in particular selected from compounds I-1 to I-107 or any group of compounds I detailed above, and pesticide II is selected from group B), the group of inhibitors of C14 demethylase inhibitors (DMI fungicides).

According to another embodiment the invention relates to binary mixtures comprising a compound I as defined above, in particular selected from compounds I-1 to I-107 or any group of compounds I detailed above, and pesticide II is selected from group E) (plant defense inducers).

According to a further embodiment the invention relates to binary mixtures comprising a compound I as defined above, in particular selected from compounds I-1 to I-107 or any group of compounds I detailed above, and pesticide II is selected from group F.

According to one embodiment the invention relates to binary mixtures A-1 to A-6741 listed in Table A, where a row of Table A corresponds in each case to a fungicidal mixture comprising one of the compounds of formula I (component 1 or Co.1) and the respective further active substance from the groups A) to F) (component 2 or Co.2) stated in the row in question. Preferably, the mixtures described in table A comprise the active substances in synergistically effective amounts.

Table A:

| Mixture | Co. 1 | Co. 2 |
|---|---|---|
| A-1 | I-1 | A.1.1 |
| A-2 | I-2 | A.1.1 |
| A-3 | I-3 | A.1.1 |
| A-4 | I-4 | A.1.1 |
| A-5 | I-5 | A.1.1 |
| A-6 | I-6 | A.1.1 |
| A-7 | I-7 | A.1.1 |
| A-8 | I-8 | A.1.1 |
| A-9 | I-9 | A.1.1 |
| A-10 | I-10 | A.1.1 |
| A-11 | I-11 | A.1.1 |
| A-12 | I-12 | A.1.1 |

| Mixture | Co. 1 | Co. 2 |
|---|---|---|
| A-13 | I-13 | A.1.1 |
| A-14 | I-14 | A.1.1 |
| A-15 | I-15 | A.1.1 |
| A-16 | I-16 | A.1.1 |
| A-17 | I-17 | A.1.1 |
| A-18 | I-18 | A.1.1 |
| A-19 | I-19 | A.1.1 |
| A-20 | I-20 | A.1.1 |
| A-21 | I-21 | A.1.1 |
| A-22 | I-22 | A.1.1 |
| A-23 | I-23 | A.1.1 |
| A-24 | I-24 | A.1.1 |

| Mixture | Co. 1 | Co. 2 |
|---|---|---|
| A-25 | I-25 | A.1.1 |
| A-26 | I-26 | A.1.1 |
| A-27 | I-27 | A.1.1 |
| A-28 | I-28 | A.1.1 |
| A-29 | I-29 | A.1.1 |
| A-30 | I-30 | A.1.1 |
| A-31 | I-31 | A.1.1 |
| A-32 | I-32 | A.1.1 |
| A-33 | I-33 | A.1.1 |
| A-34 | I-34 | A.1.1 |
| A-35 | I-35 | A.1.1 |
| A-36 | I-36 | A.1.1 |

| Mixture | Co. 1 | Co. 2 |
|---|---|---|
| A-37 | I-37 | A.1.1 |
| A-38 | I-38 | A.1.1 |
| A-39 | I-39 | A.1.1 |
| A-40 | I-40 | A.1.1 |
| A-41 | I-41 | A.1.1 |
| A-42 | I-42 | A.1.1 |
| A-43 | I-43 | A.1.1 |
| A-44 | I-44 | A.1.1 |
| A-45 | I-45 | A.1.1 |
| A-46 | I-46 | A.1.1 |
| A-47 | I-47 | A.1.1 |
| A-48 | I-48 | A.1.1 |
| A-49 | I-49 | A.1.1 |
| A-50 | I-50 | A.1.1 |
| A-51 | I-51 | A.1.1 |
| A-52 | I-52 | A.1.1 |
| A-53 | I-53 | A.1.1 |
| A-54 | I-54 | A.1.1 |
| A-55 | I-55 | A.1.1 |
| A-56 | I-56 | A.1.1 |
| A-57 | I-57 | A.1.1 |
| A-58 | I-58 | A.1.1 |
| A-59 | I-59 | A.1.1 |
| A-60 | I-60 | A.1.1 |
| A-61 | I-61 | A.1.1 |
| A-62 | I-62 | A.1.1 |
| A-63 | I-63 | A.1.1 |
| A-64 | I-64 | A.1.1 |
| A-65 | I-65 | A.1.1 |
| A-66 | I-66 | A.1.1 |
| A-67 | I-67 | A.1.1 |
| A-68 | I-68 | A.1.1 |
| A-69 | I-69 | A.1.1 |
| A-70 | I-70 | A.1.1 |
| A-71 | I-71 | A.1.1 |
| A-72 | I-72 | A.1.1 |
| A-73 | I-73 | A.1.1 |
| A-74 | I-74 | A.1.1 |
| A-75 | I-75 | A.1.1 |
| A-76 | I-76 | A.1.1 |
| A-77 | I-77 | A.1.1 |
| A-78 | I-78 | A.1.1 |
| A-79 | I-79 | A.1.1 |
| A-80 | I-80 | A.1.1 |
| A-81 | I-81 | A.1.1 |
| A-82 | I-82 | A.1.1 |
| A-83 | I-83 | A.1.1 |
| A-84 | I-84 | A.1.1 |
| A-85 | I-85 | A.1.1 |
| A-86 | I-86 | A.1.1 |
| A-87 | I-87 | A.1.1 |
| A-88 | I-88 | A.1.1 |
| A-89 | I-89 | A.1.1 |
| A-90 | I-90 | A.1.1 |
| A-91 | I-91 | A.1.1 |
| A-92 | I-92 | A.1.1 |
| A-93 | I-93 | A.1.1 |
| A-94 | I-94 | A.1.1 |
| A-95 | I-95 | A.1.1 |
| A-96 | I-96 | A.1.1 |
| A-97 | I-97 | A.1.1 |
| A-98 | I-98 | A.1.1 |
| A-99 | I-99 | A.1.1 |
| A-100 | I-100 | A.1.1 |
| A-101 | I-101 | A.1.1 |
| A-102 | I-102 | A.1.1 |
| A-103 | I-103 | A.1.1 |
| A-104 | I-104 | A.1.1 |
| A-105 | I-105 | A.1.1 |
| A-106 | I-106 | A.1.1 |
| A-107 | I-107 | A.1.1 |
| A-108 | I-1 | A.1.2 |
| A-109 | I-2 | A.1.2 |
| A-110 | I-3 | A.1.2 |
| A-111 | I-4 | A.1.2 |
| A-112 | I-5 | A.1.2 |
| A-113 | I-6 | A.1.2 |
| A-114 | I-7 | A.1.2 |
| A-115 | I-8 | A.1.2 |
| A-116 | I-9 | A.1.2 |
| A-117 | I-10 | A.1.2 |
| A-118 | I-11 | A.1.2 |
| A-119 | I-12 | A.1.2 |
| A-120 | I-13 | A.1.2 |
| A-121 | I-14 | A.1.2 |
| A-122 | I-15 | A.1.2 |
| A-123 | I-16 | A.1.2 |
| A-124 | I-17 | A.1.2 |
| A-125 | I-18 | A.1.2 |
| A-126 | I-19 | A.1.2 |
| A-127 | I-20 | A.1.2 |
| A-128 | I-21 | A.1.2 |
| A-129 | I-22 | A.1.2 |
| A-130 | I-23 | A.1.2 |
| A-131 | I-24 | A.1.2 |
| A-132 | I-25 | A.1.2 |
| A-133 | I-26 | A.1.2 |
| A-134 | I-27 | A.1.2 |
| A-135 | I-28 | A.1.2 |
| A-136 | I-29 | A.1.2 |
| A-137 | I-30 | A.1.2 |
| A-138 | I-31 | A.1.2 |
| A-139 | I-32 | A.1.2 |
| A-140 | I-33 | A.1.2 |
| A-141 | I-34 | A.1.2 |
| A-142 | I-35 | A.1.2 |
| A-143 | I-36 | A.1.2 |
| A-144 | I-37 | A.1.2 |
| A-145 | I-38 | A.1.2 |
| A-146 | I-39 | A.1.2 |
| A-147 | I-40 | A.1.2 |
| A-148 | I-41 | A.1.2 |
| A-149 | I-42 | A.1.2 |
| A-150 | I-43 | A.1.2 |
| A-151 | I-44 | A.1.2 |
| A-152 | I-45 | A.1.2 |
| A-153 | I-46 | A.1.2 |
| A-154 | I-47 | A.1.2 |
| A-155 | I-48 | A.1.2 |
| A-156 | I-49 | A.1.2 |
| A-157 | I-50 | A.1.2 |
| A-158 | I-51 | A.1.2 |
| A-159 | I-52 | A.1.2 |

| Mixture | Co. 1 | Co. 2 |
|---|---|---|
| A-160 | I-53 | A.1.2 |
| A-161 | I-54 | A.1.2 |
| A-162 | I-55 | A.1.2 |
| A-163 | I-56 | A.1.2 |
| A-164 | I-57 | A.1.2 |
| A-165 | I-58 | A.1.2 |
| A-166 | I-59 | A.1.2 |
| A-167 | I-60 | A.1.2 |
| A-168 | I-61 | A.1.2 |
| A-169 | I-62 | A.1.2 |
| A-170 | I-63 | A.1.2 |
| A-171 | I-64 | A.1.2 |
| A-172 | I-65 | A.1.2 |
| A-173 | I-66 | A.1.2 |
| A-174 | I-67 | A.1.2 |
| A-175 | I-68 | A.1.2 |
| A-176 | I-69 | A.1.2 |
| A-177 | I-70 | A.1.2 |
| A-178 | I-71 | A.1.2 |
| A-179 | I-72 | A.1.2 |
| A-180 | I-73 | A.1.2 |
| A-181 | I-74 | A.1.2 |
| A-182 | I-75 | A.1.2 |
| A-183 | I-76 | A.1.2 |
| A-184 | I-77 | A.1.2 |
| A-185 | I-78 | A.1.2 |
| A-186 | I-79 | A.1.2 |
| A-187 | I-80 | A.1.2 |
| A-188 | I-81 | A.1.2 |
| A-189 | I-82 | A.1.2 |
| A-190 | I-83 | A.1.2 |
| A-191 | I-84 | A.1.2 |
| A-192 | I-85 | A.1.2 |
| A-193 | I-86 | A.1.2 |
| A-194 | I-87 | A.1.2 |
| A-195 | I-88 | A.1.2 |
| A-196 | I-89 | A.1.2 |
| A-197 | I-90 | A.1.2 |
| A-198 | I-91 | A.1.2 |
| A-199 | I-92 | A.1.2 |
| A-200 | I-93 | A.1.2 |

| Mixture | Co. 1 | Co. 2 |
|---|---|---|
| A-201 | I-94 | A.1.2 |
| A-202 | I-95 | A.1.2 |
| A-203 | I-96 | A.1.2 |
| A-204 | I-97 | A.1.2 |
| A-205 | I-98 | A.1.2 |
| A-206 | I-99 | A.1.2 |
| A-207 | I-100 | A.1.2 |
| A-208 | I-101 | A.1.2 |
| A-209 | I-102 | A.1.2 |
| A-210 | I-103 | A.1.2 |
| A-211 | I-104 | A.1.2 |
| A-212 | I-105 | A.1.2 |
| A-213 | I-106 | A.1.2 |
| A-214 | I-107 | A.1.2 |
| A-215 | I-1 | A.1.3 |
| A-216 | I-2 | A.1.3 |
| A-217 | I-3 | A.1.3 |
| A-218 | I-4 | A.1.3 |
| A-219 | I-5 | A.1.3 |
| A-220 | I-6 | A.1.3 |
| A-221 | I-7 | A.1.3 |
| A-222 | I-8 | A.1.3 |
| A-223 | I-9 | A.1.3 |
| A-224 | I-10 | A.1.3 |
| A-225 | I-11 | A.1.3 |
| A-226 | I-12 | A.1.3 |
| A-227 | I-13 | A.1.3 |
| A-228 | I-14 | A.1.3 |
| A-229 | I-15 | A.1.3 |
| A-230 | I-16 | A.1.3 |
| A-231 | I-17 | A.1.3 |
| A-232 | I-18 | A.1.3 |
| A-233 | I-19 | A.1.3 |
| A-234 | I-20 | A.1.3 |
| A-235 | I-21 | A.1.3 |
| A-236 | I-22 | A.1.3 |
| A-237 | I-23 | A.1.3 |
| A-238 | I-24 | A.1.3 |
| A-239 | I-25 | A.1.3 |
| A-240 | I-26 | A.1.3 |
| A-241 | I-27 | A.1.3 |

| Mixture | Co. 1 | Co. 2 |
|---|---|---|
| A-242 | I-28 | A.1.3 |
| A-243 | I-29 | A.1.3 |
| A-244 | I-30 | A.1.3 |
| A-245 | I-31 | A.1.3 |
| A-246 | I-32 | A.1.3 |
| A-247 | I-33 | A.1.3 |
| A-248 | I-34 | A.1.3 |
| A-249 | I-35 | A.1.3 |
| A-250 | I-36 | A.1.3 |
| A-251 | I-37 | A.1.3 |
| A-252 | I-38 | A.1.3 |
| A-253 | I-39 | A.1.3 |
| A-254 | I-40 | A.1.3 |
| A-255 | I-41 | A.1.3 |
| A-256 | I-42 | A.1.3 |
| A-257 | I-43 | A.1.3 |
| A-258 | I-44 | A.1.3 |
| A-259 | I-45 | A.1.3 |
| A-260 | I-46 | A.1.3 |
| A-261 | I-47 | A.1.3 |
| A-262 | I-48 | A.1.3 |
| A-263 | I-49 | A.1.3 |
| A-264 | I-50 | A.1.3 |
| A-265 | I-51 | A.1.3 |
| A-266 | I-52 | A.1.3 |
| A-267 | I-53 | A.1.3 |
| A-268 | I-54 | A.1.3 |
| A-269 | I-55 | A.1.3 |
| A-270 | I-56 | A.1.3 |
| A-271 | I-57 | A.1.3 |
| A-272 | I-58 | A.1.3 |
| A-273 | I-59 | A.1.3 |
| A-274 | I-60 | A.1.3 |
| A-275 | I-61 | A.1.3 |
| A-276 | I-62 | A.1.3 |
| A-277 | I-63 | A.1.3 |
| A-278 | I-64 | A.1.3 |
| A-279 | I-65 | A.1.3 |
| A-280 | I-66 | A.1.3 |
| A-281 | I-67 | A.1.3 |
| A-282 | I-68 | A.1.3 |

| Mixture | Co. 1 | Co. 2 |
|---|---|---|
| A-283 | I-69 | A.1.3 |
| A-284 | I-70 | A.1.3 |
| A-285 | I-71 | A.1.3 |
| A-286 | I-72 | A.1.3 |
| A-287 | I-73 | A.1.3 |
| A-288 | I-74 | A.1.3 |
| A-289 | I-75 | A.1.3 |
| A-290 | I-76 | A.1.3 |
| A-291 | I-77 | A.1.3 |
| A-292 | I-78 | A.1.3 |
| A-293 | I-79 | A.1.3 |
| A-294 | I-80 | A.1.3 |
| A-295 | I-81 | A.1.3 |
| A-296 | I-82 | A.1.3 |
| A-297 | I-83 | A.1.3 |
| A-298 | I-84 | A.1.3 |
| A-299 | I-85 | A.1.3 |
| A-300 | I-86 | A.1.3 |
| A-301 | I-87 | A.1.3 |
| A-302 | I-88 | A.1.3 |
| A-303 | I-89 | A.1.3 |
| A-304 | I-90 | A.1.3 |
| A-305 | I-91 | A.1.3 |
| A-306 | I-92 | A.1.3 |
| A-307 | I-93 | A.1.3 |
| A-308 | I-94 | A.1.3 |
| A-309 | I-95 | A.1.3 |
| A-310 | I-96 | A.1.3 |
| A-311 | I-97 | A.1.3 |
| A-312 | I-98 | A.1.3 |
| A-313 | I-99 | A.1.3 |
| A-314 | I-100 | A.1.3 |
| A-315 | I-101 | A.1.3 |
| A-316 | I-102 | A.1.3 |
| A-317 | I-103 | A.1.3 |
| A-318 | I-104 | A.1.3 |
| A-319 | I-105 | A.1.3 |
| A-320 | I-106 | A.1.3 |
| A-321 | I-107 | A.1.3 |
| A-322 | I-1 | A.1.4 |
| A-323 | I-2 | A.1.4 |

| Mixture | Co. 1 | Co. 2 |
|---|---|---|
| A-324 | I-3 | A.1.4 |
| A-325 | I-4 | A.1.4 |
| A-326 | I-5 | A.1.4 |
| A-327 | I-6 | A.1.4 |
| A-328 | I-7 | A.1.4 |
| A-329 | I-8 | A.1.4 |
| A-330 | I-9 | A.1.4 |
| A-331 | I-10 | A.1.4 |
| A-332 | I-11 | A.1.4 |
| A-333 | I-12 | A.1.4 |
| A-334 | I-13 | A.1.4 |
| A-335 | I-14 | A.1.4 |
| A-336 | I-15 | A.1.4 |
| A-337 | I-16 | A.1.4 |
| A-338 | I-17 | A.1.4 |
| A-339 | I-18 | A.1.4 |
| A-340 | I-19 | A.1.4 |
| A-341 | I-20 | A.1.4 |
| A-342 | I-21 | A.1.4 |
| A-343 | I-22 | A.1.4 |
| A-344 | I-23 | A.1.4 |
| A-345 | I-24 | A.1.4 |
| A-346 | I-25 | A.1.4 |
| A-347 | I-26 | A.1.4 |
| A-348 | I-27 | A.1.4 |
| A-349 | I-28 | A.1.4 |
| A-350 | I-29 | A.1.4 |
| A-351 | I-30 | A.1.4 |
| A-352 | I-31 | A.1.4 |
| A-353 | I-32 | A.1.4 |
| A-354 | I-33 | A.1.4 |
| A-355 | I-34 | A.1.4 |
| A-356 | I-35 | A.1.4 |
| A-357 | I-36 | A.1.4 |
| A-358 | I-37 | A.1.4 |
| A-359 | I-38 | A.1.4 |
| A-360 | I-39 | A.1.4 |
| A-361 | I-40 | A.1.4 |
| A-362 | I-41 | A.1.4 |
| A-363 | I-42 | A.1.4 |
| A-364 | I-43 | A.1.4 |

| Mixture | Co. 1 | Co. 2 |
|---|---|---|
| A-365 | I-44 | A.1.4 |
| A-366 | I-45 | A.1.4 |
| A-367 | I-46 | A.1.4 |
| A-368 | I-47 | A.1.4 |
| A-369 | I-48 | A.1.4 |
| A-370 | I-49 | A.1.4 |
| A-371 | I-50 | A.1.4 |
| A-372 | I-51 | A.1.4 |
| A-373 | I-52 | A.1.4 |
| A-374 | I-53 | A.1.4 |
| A-375 | I-54 | A.1.4 |
| A-376 | I-55 | A.1.4 |
| A-377 | I-56 | A.1.4 |
| A-378 | I-57 | A.1.4 |
| A-379 | I-58 | A.1.4 |
| A-380 | I-59 | A.1.4 |
| A-381 | I-60 | A.1.4 |
| A-382 | I-61 | A.1.4 |
| A-383 | I-62 | A.1.4 |
| A-384 | I-63 | A.1.4 |
| A-385 | I-64 | A.1.4 |
| A-386 | I-65 | A.1.4 |
| A-387 | I-66 | A.1.4 |
| A-388 | I-67 | A.1.4 |
| A-389 | I-68 | A.1.4 |
| A-390 | I-69 | A.1.4 |
| A-391 | I-70 | A.1.4 |
| A-392 | I-71 | A.1.4 |
| A-393 | I-72 | A.1.4 |
| A-394 | I-73 | A.1.4 |
| A-395 | I-74 | A.1.4 |
| A-396 | I-75 | A.1.4 |
| A-397 | I-76 | A.1.4 |
| A-398 | I-77 | A.1.4 |
| A-399 | I-78 | A.1.4 |
| A-400 | I-79 | A.1.4 |
| A-401 | I-80 | A.1.4 |
| A-402 | I-81 | A.1.4 |
| A-403 | I-82 | A.1.4 |
| A-404 | I-83 | A.1.4 |
| A-405 | I-84 | A.1.4 |

| Mixture | Co. 1 | Co. 2 |
|---|---|---|
| A-406 | I-85 | A.1.4 |
| A-407 | I-86 | A.1.4 |
| A-408 | I-87 | A.1.4 |
| A-409 | I-88 | A.1.4 |
| A-410 | I-89 | A.1.4 |
| A-411 | I-90 | A.1.4 |
| A-412 | I-91 | A.1.4 |
| A-413 | I-92 | A.1.4 |
| A-414 | I-93 | A.1.4 |
| A-415 | I-94 | A.1.4 |
| A-416 | I-95 | A.1.4 |
| A-417 | I-96 | A.1.4 |
| A-418 | I-97 | A.1.4 |
| A-419 | I-98 | A.1.4 |
| A-420 | I-99 | A.1.4 |
| A-421 | I-100 | A.1.4 |
| A-422 | I-101 | A.1.4 |
| A-423 | I-102 | A.1.4 |
| A-424 | I-103 | A.1.4 |
| A-425 | I-104 | A.1.4 |
| A-426 | I-105 | A.1.4 |
| A-427 | I-106 | A.1.4 |
| A-428 | I-107 | A.1.4 |
| A-429 | I-1 | A.1.5 |
| A-430 | I-2 | A.1.5 |
| A-431 | I-3 | A.1.5 |
| A-432 | I-4 | A.1.5 |
| A-433 | I-5 | A.1.5 |
| A-434 | I-6 | A.1.5 |
| A-435 | I-7 | A.1.5 |
| A-436 | I-8 | A.1.5 |
| A-437 | I-9 | A.1.5 |
| A-438 | I-10 | A.1.5 |
| A-439 | I-11 | A.1.5 |
| A-440 | I-12 | A.1.5 |
| A-441 | I-13 | A.1.5 |
| A-442 | I-14 | A.1.5 |
| A-443 | I-15 | A.1.5 |
| A-444 | I-16 | A.1.5 |
| A-445 | I-17 | A.1.5 |
| A-446 | I-18 | A.1.5 |

| Mixture | Co. 1 | Co. 2 |
|---|---|---|
| A-447 | I-19 | A.1.5 |
| A-448 | I-20 | A.1.5 |
| A-449 | I-21 | A.1.5 |
| A-450 | I-22 | A.1.5 |
| A-451 | I-23 | A.1.5 |
| A-452 | I-24 | A.1.5 |
| A-453 | I-25 | A.1.5 |
| A-454 | I-26 | A.1.5 |
| A-455 | I-27 | A.1.5 |
| A-456 | I-28 | A.1.5 |
| A-457 | I-29 | A.1.5 |
| A-458 | I-30 | A.1.5 |
| A-459 | I-31 | A.1.5 |
| A-460 | I-32 | A.1.5 |
| A-461 | I-33 | A.1.5 |
| A-462 | I-34 | A.1.5 |
| A-463 | I-35 | A.1.5 |
| A-464 | I-36 | A.1.5 |
| A-465 | I-37 | A.1.5 |
| A-466 | I-38 | A.1.5 |
| A-467 | I-39 | A.1.5 |
| A-468 | I-40 | A.1.5 |
| A-469 | I-41 | A.1.5 |
| A-470 | I-42 | A.1.5 |
| A-471 | I-43 | A.1.5 |
| A-472 | I-44 | A.1.5 |
| A-473 | I-45 | A.1.5 |
| A-474 | I-46 | A.1.5 |
| A-475 | I-47 | A.1.5 |
| A-476 | I-48 | A.1.5 |
| A-477 | I-49 | A.1.5 |
| A-478 | I-50 | A.1.5 |
| A-479 | I-51 | A.1.5 |
| A-480 | I-52 | A.1.5 |
| A-481 | I-53 | A.1.5 |
| A-482 | I-54 | A.1.5 |
| A-483 | I-55 | A.1.5 |
| A-484 | I-56 | A.1.5 |
| A-485 | I-57 | A.1.5 |
| A-486 | I-58 | A.1.5 |
| A-487 | I-59 | A.1.5 |

| Mixture | Co. 1 | Co. 2 |
|---|---|---|
| A-488 | I-60 | A.1.5 |
| A-489 | I-61 | A.1.5 |
| A-490 | I-62 | A.1.5 |
| A-491 | I-63 | A.1.5 |
| A-492 | I-64 | A.1.5 |
| A-493 | I-65 | A.1.5 |
| A-494 | I-66 | A.1.5 |
| A-495 | I-67 | A.1.5 |
| A-496 | I-68 | A.1.5 |
| A-497 | I-69 | A.1.5 |
| A-498 | I-70 | A.1.5 |
| A-499 | I-71 | A.1.5 |
| A-500 | I-72 | A.1.5 |
| A-501 | I-73 | A.1.5 |
| A-502 | I-74 | A.1.5 |
| A-503 | I-75 | A.1.5 |
| A-504 | I-76 | A.1.5 |
| A-505 | I-77 | A.1.5 |
| A-506 | I-78 | A.1.5 |
| A-507 | I-79 | A.1.5 |
| A-508 | I-80 | A.1.5 |
| A-509 | I-81 | A.1.5 |
| A-510 | I-82 | A.1.5 |
| A-511 | I-83 | A.1.5 |
| A-512 | I-84 | A.1.5 |
| A-513 | I-85 | A.1.5 |
| A-514 | I-86 | A.1.5 |
| A-515 | I-87 | A.1.5 |
| A-516 | I-88 | A.1.5 |
| A-517 | I-89 | A.1.5 |
| A-518 | I-90 | A.1.5 |
| A-519 | I-91 | A.1.5 |
| A-520 | I-92 | A.1.5 |
| A-521 | I-93 | A.1.5 |
| A-522 | I-94 | A.1.5 |
| A-523 | I-95 | A.1.5 |
| A-524 | I-96 | A.1.5 |
| A-525 | I-97 | A.1.5 |
| A-526 | I-98 | A.1.5 |
| A-527 | I-99 | A.1.5 |
| A-528 | I-100 | A.1.5 |

| Mixture | Co. 1 | Co. 2 |
|---|---|---|
| A-529 | I-101 | A.1.5 |
| A-530 | I-102 | A.1.5 |
| A-531 | I-103 | A.1.5 |
| A-532 | I-104 | A.1.5 |
| A-533 | I-105 | A.1.5 |
| A-534 | I-106 | A.1.5 |
| A-535 | I-107 | A.1.5 |
| A-536 | I-1 | A.1.6 |
| A-537 | I-2 | A.1.6 |
| A-538 | I-3 | A.1.6 |
| A-539 | I-4 | A.1.6 |
| A-540 | I-5 | A.1.6 |
| A-541 | I-6 | A.1.6 |
| A-542 | I-7 | A.1.6 |
| A-543 | I-8 | A.1.6 |
| A-544 | I-9 | A.1.6 |
| A-545 | I-10 | A.1.6 |
| A-546 | I-11 | A.1.6 |
| A-547 | I-12 | A.1.6 |
| A-548 | I-13 | A.1.6 |
| A-549 | I-14 | A.1.6 |
| A-550 | I-15 | A.1.6 |
| A-551 | I-16 | A.1.6 |
| A-552 | I-17 | A.1.6 |
| A-553 | I-18 | A.1.6 |
| A-554 | I-19 | A.1.6 |
| A-555 | I-20 | A.1.6 |
| A-556 | I-21 | A.1.6 |
| A-557 | I-22 | A.1.6 |
| A-558 | I-23 | A.1.6 |
| A-559 | I-24 | A.1.6 |
| A-560 | I-25 | A.1.6 |
| A-561 | I-26 | A.1.6 |
| A-562 | I-27 | A.1.6 |
| A-563 | I-28 | A.1.6 |
| A-564 | I-29 | A.1.6 |
| A-565 | I-30 | A.1.6 |
| A-566 | I-31 | A.1.6 |
| A-567 | I-32 | A.1.6 |
| A-568 | I-33 | A.1.6 |
| A-569 | I-34 | A.1.6 |

| Mixture | Co. 1 | Co. 2 |
|---|---|---|
| A-570 | I-35 | A.1.6 |
| A-571 | I-36 | A.1.6 |
| A-572 | I-37 | A.1.6 |
| A-573 | I-38 | A.1.6 |
| A-574 | I-39 | A.1.6 |
| A-575 | I-40 | A.1.6 |
| A-576 | I-41 | A.1.6 |
| A-577 | I-42 | A.1.6 |
| A-578 | I-43 | A.1.6 |
| A-579 | I-44 | A.1.6 |
| A-580 | I-45 | A.1.6 |
| A-581 | I-46 | A.1.6 |
| A-582 | I-47 | A.1.6 |
| A-583 | I-48 | A.1.6 |
| A-584 | I-49 | A.1.6 |
| A-585 | I-50 | A.1.6 |
| A-586 | I-51 | A.1.6 |
| A-587 | I-52 | A.1.6 |
| A-588 | I-53 | A.1.6 |
| A-589 | I-54 | A.1.6 |
| A-590 | I-55 | A.1.6 |
| A-591 | I-56 | A.1.6 |
| A-592 | I-57 | A.1.6 |
| A-593 | I-58 | A.1.6 |
| A-594 | I-59 | A.1.6 |
| A-595 | I-60 | A.1.6 |
| A-596 | I-61 | A.1.6 |
| A-597 | I-62 | A.1.6 |
| A-598 | I-63 | A.1.6 |
| A-599 | I-64 | A.1.6 |
| A-600 | I-65 | A.1.6 |
| A-601 | I-66 | A.1.6 |
| A-602 | I-67 | A.1.6 |
| A-603 | I-68 | A.1.6 |
| A-604 | I-69 | A.1.6 |
| A-605 | I-70 | A.1.6 |
| A-606 | I-71 | A.1.6 |
| A-607 | I-72 | A.1.6 |
| A-608 | I-73 | A.1.6 |
| A-609 | I-74 | A.1.6 |
| A-610 | I-75 | A.1.6 |

| Mixture | Co. 1 | Co. 2 |
|---|---|---|
| A-611 | I-76 | A.1.6 |
| A-612 | I-77 | A.1.6 |
| A-613 | I-78 | A.1.6 |
| A-614 | I-79 | A.1.6 |
| A-615 | I-80 | A.1.6 |
| A-616 | I-81 | A.1.6 |
| A-617 | I-82 | A.1.6 |
| A-618 | I-83 | A.1.6 |
| A-619 | I-84 | A.1.6 |
| A-620 | I-85 | A.1.6 |
| A-621 | I-86 | A.1.6 |
| A-622 | I-87 | A.1.6 |
| A-623 | I-88 | A.1.6 |
| A-624 | I-89 | A.1.6 |
| A-625 | I-90 | A.1.6 |
| A-626 | I-91 | A.1.6 |
| A-627 | I-92 | A.1.6 |
| A-628 | I-93 | A.1.6 |
| A-629 | I-94 | A.1.6 |
| A-630 | I-95 | A.1.6 |
| A-631 | I-96 | A.1.6 |
| A-632 | I-97 | A.1.6 |
| A-633 | I-98 | A.1.6 |
| A-634 | I-99 | A.1.6 |
| A-635 | I-100 | A.1.6 |
| A-636 | I-101 | A.1.6 |
| A-637 | I-102 | A.1.6 |
| A-638 | I-103 | A.1.6 |
| A-639 | I-104 | A.1.6 |
| A-640 | I-105 | A.1.6 |
| A-641 | I-106 | A.1.6 |
| A-642 | I-107 | A.1.6 |
| A-643 | I-1 | A.1.7 |
| A-644 | I-2 | A.1.7 |
| A-645 | I-3 | A.1.7 |
| A-646 | I-4 | A.1.7 |
| A-647 | I-5 | A.1.7 |
| A-648 | I-6 | A.1.7 |
| A-649 | I-7 | A.1.7 |
| A-650 | I-8 | A.1.7 |
| A-651 | I-9 | A.1.7 |

| Mixture | Co. 1 | Co. 2 |
|---|---|---|
| A-652 | I-10 | A.1.7 |
| A-653 | I-11 | A.1.7 |
| A-654 | I-12 | A.1.7 |
| A-655 | I-13 | A.1.7 |
| A-656 | I-14 | A.1.7 |
| A-657 | I-15 | A.1.7 |
| A-658 | I-16 | A.1.7 |
| A-659 | I-17 | A.1.7 |
| A-660 | I-18 | A.1.7 |
| A-661 | I-19 | A.1.7 |
| A-662 | I-20 | A.1.7 |
| A-663 | I-21 | A.1.7 |
| A-664 | I-22 | A.1.7 |
| A-665 | I-23 | A.1.7 |
| A-666 | I-24 | A.1.7 |
| A-667 | I-25 | A.1.7 |
| A-668 | I-26 | A.1.7 |
| A-669 | I-27 | A.1.7 |
| A-670 | I-28 | A.1.7 |
| A-671 | I-29 | A.1.7 |
| A-672 | I-30 | A.1.7 |
| A-673 | I-31 | A.1.7 |
| A-674 | I-32 | A.1.7 |
| A-675 | I-33 | A.1.7 |
| A-676 | I-34 | A.1.7 |
| A-677 | I-35 | A.1.7 |
| A-678 | I-36 | A.1.7 |
| A-679 | I-37 | A.1.7 |
| A-680 | I-38 | A.1.7 |
| A-681 | I-39 | A.1.7 |
| A-682 | I-40 | A.1.7 |
| A-683 | I-41 | A.1.7 |
| A-684 | I-42 | A.1.7 |
| A-685 | I-43 | A.1.7 |
| A-686 | I-44 | A.1.7 |
| A-687 | I-45 | A.1.7 |
| A-688 | I-46 | A.1.7 |
| A-689 | I-47 | A.1.7 |
| A-690 | I-48 | A.1.7 |
| A-691 | I-49 | A.1.7 |
| A-692 | I-50 | A.1.7 |

| Mixture | Co. 1 | Co. 2 |
|---|---|---|
| A-693 | I-51 | A.1.7 |
| A-694 | I-52 | A.1.7 |
| A-695 | I-53 | A.1.7 |
| A-696 | I-54 | A.1.7 |
| A-697 | I-55 | A.1.7 |
| A-698 | I-56 | A.1.7 |
| A-699 | I-57 | A.1.7 |
| A-700 | I-58 | A.1.7 |
| A-701 | I-59 | A.1.7 |
| A-702 | I-60 | A.1.7 |
| A-703 | I-61 | A.1.7 |
| A-704 | I-62 | A.1.7 |
| A-705 | I-63 | A.1.7 |
| A-706 | I-64 | A.1.7 |
| A-707 | I-65 | A.1.7 |
| A-708 | I-66 | A.1.7 |
| A-709 | I-67 | A.1.7 |
| A-710 | I-68 | A.1.7 |
| A-711 | I-69 | A.1.7 |
| A-712 | I-70 | A.1.7 |
| A-713 | I-71 | A.1.7 |
| A-714 | I-72 | A.1.7 |
| A-715 | I-73 | A.1.7 |
| A-716 | I-74 | A.1.7 |
| A-717 | I-75 | A.1.7 |
| A-718 | I-76 | A.1.7 |
| A-719 | I-77 | A.1.7 |
| A-720 | I-78 | A.1.7 |
| A-721 | I-79 | A.1.7 |
| A-722 | I-80 | A.1.7 |
| A-723 | I-81 | A.1.7 |
| A-724 | I-82 | A.1.7 |
| A-725 | I-83 | A.1.7 |
| A-726 | I-84 | A.1.7 |
| A-727 | I-85 | A.1.7 |
| A-728 | I-86 | A.1.7 |
| A-729 | I-87 | A.1.7 |
| A-730 | I-88 | A.1.7 |
| A-731 | I-89 | A.1.7 |
| A-732 | I-90 | A.1.7 |
| A-733 | I-91 | A.1.7 |

| Mixture | Co. 1 | Co. 2 |
|---|---|---|
| A-734 | I-92 | A.1.7 |
| A-735 | I-93 | A.1.7 |
| A-736 | I-94 | A.1.7 |
| A-737 | I-95 | A.1.7 |
| A-738 | I-96 | A.1.7 |
| A-739 | I-97 | A.1.7 |
| A-740 | I-98 | A.1.7 |
| A-741 | I-99 | A.1.7 |
| A-742 | I-100 | A.1.7 |
| A-743 | I-101 | A.1.7 |
| A-744 | I-102 | A.1.7 |
| A-745 | I-103 | A.1.7 |
| A-746 | I-104 | A.1.7 |
| A-747 | I-105 | A.1.7 |
| A-748 | I-106 | A.1.7 |
| A-749 | I-107 | A.1.7 |
| A-750 | I-1 | A.1.8 |
| A-751 | I-2 | A.1.8 |
| A-752 | I-3 | A.1.8 |
| A-753 | I-4 | A.1.8 |
| A-754 | I-5 | A.1.8 |
| A-755 | I-6 | A.1.8 |
| A-756 | I-7 | A.1.8 |
| A-757 | I-8 | A.1.8 |
| A-758 | I-9 | A.1.8 |
| A-759 | I-10 | A.1.8 |
| A-760 | I-11 | A.1.8 |
| A-761 | I-12 | A.1.8 |
| A-762 | I-13 | A.1.8 |
| A-763 | I-14 | A.1.8 |
| A-764 | I-15 | A.1.8 |
| A-765 | I-16 | A.1.8 |
| A-766 | I-17 | A.1.8 |
| A-767 | I-18 | A.1.8 |
| A-768 | I-19 | A.1.8 |
| A-769 | I-20 | A.1.8 |
| A-770 | I-21 | A.1.8 |
| A-771 | I-22 | A.1.8 |
| A-772 | I-23 | A.1.8 |
| A-773 | I-24 | A.1.8 |
| A-774 | I-25 | A.1.8 |

| Mixture | Co. 1 | Co. 2 |
|---|---|---|
| A-775 | I-26 | A.1.8 |
| A-776 | I-27 | A.1.8 |
| A-777 | I-28 | A.1.8 |
| A-778 | I-29 | A.1.8 |
| A-779 | I-30 | A.1.8 |
| A-780 | I-31 | A.1.8 |
| A-781 | I-32 | A.1.8 |
| A-782 | I-33 | A.1.8 |
| A-783 | I-34 | A.1.8 |
| A-784 | I-35 | A.1.8 |
| A-785 | I-36 | A.1.8 |
| A-786 | I-37 | A.1.8 |
| A-787 | I-38 | A.1.8 |
| A-788 | I-39 | A.1.8 |
| A-789 | I-40 | A.1.8 |
| A-790 | I-41 | A.1.8 |
| A-791 | I-42 | A.1.8 |
| A-792 | I-43 | A.1.8 |
| A-793 | I-44 | A.1.8 |
| A-794 | I-45 | A.1.8 |
| A-795 | I-46 | A.1.8 |
| A-796 | I-47 | A.1.8 |
| A-797 | I-48 | A.1.8 |
| A-798 | I-49 | A.1.8 |
| A-799 | I-50 | A.1.8 |
| A-800 | I-51 | A.1.8 |
| A-801 | I-52 | A.1.8 |
| A-802 | I-53 | A.1.8 |
| A-803 | I-54 | A.1.8 |
| A-804 | I-55 | A.1.8 |
| A-805 | I-56 | A.1.8 |
| A-806 | I-57 | A.1.8 |
| A-807 | I-58 | A.1.8 |
| A-808 | I-59 | A.1.8 |
| A-809 | I-60 | A.1.8 |
| A-810 | I-61 | A.1.8 |
| A-811 | I-62 | A.1.8 |
| A-812 | I-63 | A.1.8 |
| A-813 | I-64 | A.1.8 |
| A-814 | I-65 | A.1.8 |
| A-815 | I-66 | A.1.8 |

| Mixture | Co. 1 | Co. 2 |
|---|---|---|
| A-816 | I-67 | A.1.8 |
| A-817 | I-68 | A.1.8 |
| A-818 | I-69 | A.1.8 |
| A-819 | I-70 | A.1.8 |
| A-820 | I-71 | A.1.8 |
| A-821 | I-72 | A.1.8 |
| A-822 | I-73 | A.1.8 |
| A-823 | I-74 | A.1.8 |
| A-824 | I-75 | A.1.8 |
| A-825 | I-76 | A.1.8 |
| A-826 | I-77 | A.1.8 |
| A-827 | I-78 | A.1.8 |
| A-828 | I-79 | A.1.8 |
| A-829 | I-80 | A.1.8 |
| A-830 | I-81 | A.1.8 |
| A-831 | I-82 | A.1.8 |
| A-832 | I-83 | A.1.8 |
| A-833 | I-84 | A.1.8 |
| A-834 | I-85 | A.1.8 |
| A-835 | I-86 | A.1.8 |
| A-836 | I-87 | A.1.8 |
| A-837 | I-88 | A.1.8 |
| A-838 | I-89 | A.1.8 |
| A-839 | I-90 | A.1.8 |
| A-840 | I-91 | A.1.8 |
| A-841 | I-92 | A.1.8 |
| A-842 | I-93 | A.1.8 |
| A-843 | I-94 | A.1.8 |
| A-844 | I-95 | A.1.8 |
| A-845 | I-96 | A.1.8 |
| A-846 | I-97 | A.1.8 |
| A-847 | I-98 | A.1.8 |
| A-848 | I-99 | A.1.8 |
| A-849 | I-100 | A.1.8 |
| A-850 | I-101 | A.1.8 |
| A-851 | I-102 | A.1.8 |
| A-852 | I-103 | A.1.8 |
| A-853 | I-104 | A.1.8 |
| A-854 | I-105 | A.1.8 |
| A-855 | I-106 | A.1.8 |
| A-856 | I-107 | A.1.8 |

| Mixture | Co. 1 | Co. 2 |
|---|---|---|
| A-857 | I-1 | A.1.9 |
| A-858 | I-2 | A.1.9 |
| A-859 | I-3 | A.1.9 |
| A-860 | I-4 | A.1.9 |
| A-861 | I-5 | A.1.9 |
| A-862 | I-6 | A.1.9 |
| A-863 | I-7 | A.1.9 |
| A-864 | I-8 | A.1.9 |
| A-865 | I-9 | A.1.9 |
| A-866 | I-10 | A.1.9 |
| A-867 | I-11 | A.1.9 |
| A-868 | I-12 | A.1.9 |
| A-869 | I-13 | A.1.9 |
| A-870 | I-14 | A.1.9 |
| A-871 | I-15 | A.1.9 |
| A-872 | I-16 | A.1.9 |
| A-873 | I-17 | A.1.9 |
| A-874 | I-18 | A.1.9 |
| A-875 | I-19 | A.1.9 |
| A-876 | I-20 | A.1.9 |
| A-877 | I-21 | A.1.9 |
| A-878 | I-22 | A.1.9 |
| A-879 | I-23 | A.1.9 |
| A-880 | I-24 | A.1.9 |
| A-881 | I-25 | A.1.9 |
| A-882 | I-26 | A.1.9 |
| A-883 | I-27 | A.1.9 |
| A-884 | I-28 | A.1.9 |
| A-885 | I-29 | A.1.9 |
| A-886 | I-30 | A.1.9 |
| A-887 | I-31 | A.1.9 |
| A-888 | I-32 | A.1.9 |
| A-889 | I-33 | A.1.9 |
| A-890 | I-34 | A.1.9 |
| A-891 | I-35 | A.1.9 |
| A-892 | I-36 | A.1.9 |
| A-893 | I-37 | A.1.9 |
| A-894 | I-38 | A.1.9 |
| A-895 | I-39 | A.1.9 |
| A-896 | I-40 | A.1.9 |
| A-897 | I-41 | A.1.9 |

| Mixture | Co. 1 | Co. 2 |
|---|---|---|
| A-898 | I-42 | A.1.9 |
| A-899 | I-43 | A.1.9 |
| A-900 | I-44 | A.1.9 |
| A-901 | I-45 | A.1.9 |
| A-902 | I-46 | A.1.9 |
| A-903 | I-47 | A.1.9 |
| A-904 | I-48 | A.1.9 |
| A-905 | I-49 | A.1.9 |
| A-906 | I-50 | A.1.9 |
| A-907 | I-51 | A.1.9 |
| A-908 | I-52 | A.1.9 |
| A-909 | I-53 | A.1.9 |
| A-910 | I-54 | A.1.9 |
| A-911 | I-55 | A.1.9 |
| A-912 | I-56 | A.1.9 |
| A-913 | I-57 | A.1.9 |
| A-914 | I-58 | A.1.9 |
| A-915 | I-59 | A.1.9 |
| A-916 | I-60 | A.1.9 |
| A-917 | I-61 | A.1.9 |
| A-918 | I-62 | A.1.9 |
| A-919 | I-63 | A.1.9 |
| A-920 | I-64 | A.1.9 |
| A-921 | I-65 | A.1.9 |
| A-922 | I-66 | A.1.9 |
| A-923 | I-67 | A.1.9 |
| A-924 | I-68 | A.1.9 |
| A-925 | I-69 | A.1.9 |
| A-926 | I-70 | A.1.9 |
| A-927 | I-71 | A.1.9 |
| A-928 | I-72 | A.1.9 |
| A-929 | I-73 | A.1.9 |
| A-930 | I-74 | A.1.9 |
| A-931 | I-75 | A.1.9 |
| A-932 | I-76 | A.1.9 |
| A-933 | I-77 | A.1.9 |
| A-934 | I-78 | A.1.9 |
| A-935 | I-79 | A.1.9 |
| A-936 | I-80 | A.1.9 |
| A-937 | I-81 | A.1.9 |
| A-938 | I-82 | A.1.9 |

| Mixture | Co. 1 | Co. 2 |
|---|---|---|
| A-939 | I-83 | A.1.9 |
| A-940 | I-84 | A.1.9 |
| A-941 | I-85 | A.1.9 |
| A-942 | I-86 | A.1.9 |
| A-943 | I-87 | A.1.9 |
| A-944 | I-88 | A.1.9 |
| A-945 | I-89 | A.1.9 |
| A-946 | I-90 | A.1.9 |
| A-947 | I-91 | A.1.9 |
| A-948 | I-92 | A.1.9 |
| A-949 | I-93 | A.1.9 |
| A-950 | I-94 | A.1.9 |
| A-951 | I-95 | A.1.9 |
| A-952 | I-96 | A.1.9 |
| A-953 | I-97 | A.1.9 |
| A-954 | I-98 | A.1.9 |
| A-955 | I-99 | A.1.9 |
| A-956 | I-100 | A.1.9 |
| A-957 | I-101 | A.1.9 |
| A-958 | I-102 | A.1.9 |
| A-959 | I-103 | A.1.9 |
| A-960 | I-104 | A.1.9 |
| A-961 | I-105 | A.1.9 |
| A-962 | I-106 | A.1.9 |
| A-963 | I-107 | A.1.9 |
| A-964 | I-1 | A.1.10 |
| A-965 | I-2 | A.1.10 |
| A-966 | I-3 | A.1.10 |
| A-967 | I-4 | A.1.10 |
| A-968 | I-5 | A.1.10 |
| A-969 | I-6 | A.1.10 |
| A-970 | I-7 | A.1.10 |
| A-971 | I-8 | A.1.10 |
| A-972 | I-9 | A.1.10 |
| A-973 | I-10 | A.1.10 |
| A-974 | I-11 | A.1.10 |
| A-975 | I-12 | A.1.10 |
| A-976 | I-13 | A.1.10 |
| A-977 | I-14 | A.1.10 |
| A-978 | I-15 | A.1.10 |
| A-979 | I-16 | A.1.10 |

| Mixture | Co. 1 | Co. 2 |
|---|---|---|
| A-980 | I-17 | A.1.10 |
| A-981 | I-18 | A.1.10 |
| A-982 | I-19 | A.1.10 |
| A-983 | I-20 | A.1.10 |
| A-984 | I-21 | A.1.10 |
| A-985 | I-22 | A.1.10 |
| A-986 | I-23 | A.1.10 |
| A-987 | I-24 | A.1.10 |
| A-988 | I-25 | A.1.10 |
| A-989 | I-26 | A.1.10 |
| A-990 | I-27 | A.1.10 |
| A-991 | I-28 | A.1.10 |
| A-992 | I-29 | A.1.10 |
| A-993 | I-30 | A.1.10 |
| A-994 | I-31 | A.1.10 |
| A-995 | I-32 | A.1.10 |
| A-996 | I-33 | A.1.10 |
| A-997 | I-34 | A.1.10 |
| A-998 | I-35 | A.1.10 |
| A-999 | I-36 | A.1.10 |
| A-1000 | I-37 | A.1.10 |
| A-1001 | I-38 | A.1.10 |
| A-1002 | I-39 | A.1.10 |
| A-1003 | I-40 | A.1.10 |
| A-1004 | I-41 | A.1.10 |
| A-1005 | I-42 | A.1.10 |
| A-1006 | I-43 | A.1.10 |
| A-1007 | I-44 | A.1.10 |
| A-1008 | I-45 | A.1.10 |
| A-1009 | I-46 | A.1.10 |
| A-1010 | I-47 | A.1.10 |
| A-1011 | I-48 | A.1.10 |
| A-1012 | I-49 | A.1.10 |
| A-1013 | I-50 | A.1.10 |
| A-1014 | I-51 | A.1.10 |
| A-1015 | I-52 | A.1.10 |
| A-1016 | I-53 | A.1.10 |
| A-1017 | I-54 | A.1.10 |
| A-1018 | I-55 | A.1.10 |
| A-1019 | I-56 | A.1.10 |
| A-1020 | I-57 | A.1.10 |

| Mixture | Co. 1 | Co. 2 |
|---|---|---|
| A-1021 | I-58 | A.1.10 |
| A-1022 | I-59 | A.1.10 |
| A-1023 | I-60 | A.1.10 |
| A-1024 | I-61 | A.1.10 |
| A-1025 | I-62 | A.1.10 |
| A-1026 | I-63 | A.1.10 |
| A-1027 | I-64 | A.1.10 |
| A-1028 | I-65 | A.1.10 |
| A-1029 | I-66 | A.1.10 |
| A-1030 | I-67 | A.1.10 |
| A-1031 | I-68 | A.1.10 |
| A-1032 | I-69 | A.1.10 |
| A-1033 | I-70 | A.1.10 |
| A-1034 | I-71 | A.1.10 |
| A-1035 | I-72 | A.1.10 |
| A-1036 | I-73 | A.1.10 |
| A-1037 | I-74 | A.1.10 |
| A-1038 | I-75 | A.1.10 |
| A-1039 | I-76 | A.1.10 |
| A-1040 | I-77 | A.1.10 |
| A-1041 | I-78 | A.1.10 |
| A-1042 | I-79 | A.1.10 |
| A-1043 | I-80 | A.1.10 |
| A-1044 | I-81 | A.1.10 |
| A-1045 | I-82 | A.1.10 |
| A-1046 | I-83 | A.1.10 |
| A-1047 | I-84 | A.1.10 |
| A-1048 | I-85 | A.1.10 |
| A-1049 | I-86 | A.1.10 |
| A-1050 | I-87 | A.1.10 |
| A-1051 | I-88 | A.1.10 |
| A-1052 | I-89 | A.1.10 |
| A-1053 | I-90 | A.1.10 |
| A-1054 | I-91 | A.1.10 |
| A-1055 | I-92 | A.1.10 |
| A-1056 | I-93 | A.1.10 |
| A-1057 | I-94 | A.1.10 |
| A-1058 | I-95 | A.1.10 |
| A-1059 | I-96 | A.1.10 |
| A-1060 | I-97 | A.1.10 |
| A-1061 | I-98 | A.1.10 |

| Mixture | Co. 1 | Co. 2 |
|---|---|---|
| A-1062 | I-99 | A.1.10 |
| A-1063 | I-100 | A.1.10 |
| A-1064 | I-101 | A.1.10 |
| A-1065 | I-102 | A.1.10 |
| A-1066 | I-103 | A.1.10 |
| A-1067 | I-104 | A.1.10 |
| A-1068 | I-105 | A.1.10 |
| A-1069 | I-106 | A.1.10 |
| A-1070 | I-107 | A.1.10 |
| A-1071 | I-1 | A.1.11 |
| A-1072 | I-2 | A.1.11 |
| A-1073 | I-3 | A.1.11 |
| A-1074 | I-4 | A.1.11 |
| A-1075 | I-5 | A.1.11 |
| A-1076 | I-6 | A.1.11 |
| A-1077 | I-7 | A.1.11 |
| A-1078 | I-8 | A.1.11 |
| A-1079 | I-9 | A.1.11 |
| A-1080 | I-10 | A.1.11 |
| A-1081 | I-11 | A.1.11 |
| A-1082 | I-12 | A.1.11 |
| A-1083 | I-13 | A.1.11 |
| A-1084 | I-14 | A.1.11 |
| A-1085 | I-15 | A.1.11 |
| A-1086 | I-16 | A.1.11 |
| A-1087 | I-17 | A.1.11 |
| A-1088 | I-18 | A.1.11 |
| A-1089 | I-19 | A.1.11 |
| A-1090 | I-20 | A.1.11 |
| A-1091 | I-21 | A.1.11 |
| A-1092 | I-22 | A.1.11 |
| A-1093 | I-23 | A.1.11 |
| A-1094 | I-24 | A.1.11 |
| A-1095 | I-25 | A.1.11 |
| A-1096 | I-26 | A.1.11 |
| A-1097 | I-27 | A.1.11 |
| A-1098 | I-28 | A.1.11 |
| A-1099 | I-29 | A.1.11 |
| A-1100 | I-30 | A.1.11 |
| A-1101 | I-31 | A.1.11 |
| A-1102 | I-32 | A.1.11 |

| Mixture | Co. 1 | Co. 2 |
|---|---|---|
| A-1103 | I-33 | A.1.11 |
| A-1104 | I-34 | A.1.11 |
| A-1105 | I-35 | A.1.11 |
| A-1106 | I-36 | A.1.11 |
| A-1107 | I-37 | A.1.11 |
| A-1108 | I-38 | A.1.11 |
| A-1109 | I-39 | A.1.11 |
| A-1110 | I-40 | A.1.11 |
| A-1111 | I-41 | A.1.11 |
| A-1112 | I-42 | A.1.11 |
| A-1113 | I-43 | A.1.11 |
| A-1114 | I-44 | A.1.11 |
| A-1115 | I-45 | A.1.11 |
| A-1116 | I-46 | A.1.11 |
| A-1117 | I-47 | A.1.11 |
| A-1118 | I-48 | A.1.11 |
| A-1119 | I-49 | A.1.11 |
| A-1120 | I-50 | A.1.11 |
| A-1121 | I-51 | A.1.11 |
| A-1122 | I-52 | A.1.11 |
| A-1123 | I-53 | A.1.11 |
| A-1124 | I-54 | A.1.11 |
| A-1125 | I-55 | A.1.11 |
| A-1126 | I-56 | A.1.11 |
| A-1127 | I-57 | A.1.11 |
| A-1128 | I-58 | A.1.11 |
| A-1129 | I-59 | A.1.11 |
| A-1130 | I-60 | A.1.11 |
| A-1131 | I-61 | A.1.11 |
| A-1132 | I-62 | A.1.11 |
| A-1133 | I-63 | A.1.11 |
| A-1134 | I-64 | A.1.11 |
| A-1135 | I-65 | A.1.11 |
| A-1136 | I-66 | A.1.11 |
| A-1137 | I-67 | A.1.11 |
| A-1138 | I-68 | A.1.11 |
| A-1139 | I-69 | A.1.11 |
| A-1140 | I-70 | A.1.11 |
| A-1141 | I-71 | A.1.11 |
| A-1142 | I-72 | A.1.11 |
| A-1143 | I-73 | A.1.11 |

| Mixture | Co. 1 | Co. 2 |
|---|---|---|
| A-1144 | I-74 | A.1.11 |
| A-1145 | I-75 | A.1.11 |
| A-1146 | I-76 | A.1.11 |
| A-1147 | I-77 | A.1.11 |
| A-1148 | I-78 | A.1.11 |
| A-1149 | I-79 | A.1.11 |
| A-1150 | I-80 | A.1.11 |
| A-1151 | I-81 | A.1.11 |
| A-1152 | I-82 | A.1.11 |
| A-1153 | I-83 | A.1.11 |
| A-1154 | I-84 | A.1.11 |
| A-1155 | I-85 | A.1.11 |
| A-1156 | I-86 | A.1.11 |
| A-1157 | I-87 | A.1.11 |
| A-1158 | I-88 | A.1.11 |
| A-1159 | I-89 | A.1.11 |
| A-1160 | I-90 | A.1.11 |
| A-1161 | I-91 | A.1.11 |
| A-1162 | I-92 | A.1.11 |
| A-1163 | I-93 | A.1.11 |
| A-1164 | I-94 | A.1.11 |
| A-1165 | I-95 | A.1.11 |
| A-1166 | I-96 | A.1.11 |
| A-1167 | I-97 | A.1.11 |
| A-1168 | I-98 | A.1.11 |
| A-1169 | I-99 | A.1.11 |
| A-1170 | I-100 | A.1.11 |
| A-1171 | I-101 | A.1.11 |
| A-1172 | I-102 | A.1.11 |
| A-1173 | I-103 | A.1.11 |
| A-1174 | I-104 | A.1.11 |
| A-1175 | I-105 | A.1.11 |
| A-1176 | I-106 | A.1.11 |
| A-1177 | I-107 | A.1.11 |
| A-1178 | I-1 | A.1.12 |
| A-1179 | I-2 | A.1.12 |
| A-1180 | I-3 | A.1.12 |
| A-1181 | I-4 | A.1.12 |
| A-1182 | I-5 | A.1.12 |
| A-1183 | I-6 | A.1.12 |
| A-1184 | I-7 | A.1.12 |

| Mixture | Co. 1 | Co. 2 |
|---|---|---|
| A-1185 | I-8 | A.1.12 |
| A-1186 | I-9 | A.1.12 |
| A-1187 | I-10 | A.1.12 |
| A-1188 | I-11 | A.1.12 |
| A-1189 | I-12 | A.1.12 |
| A-1190 | I-13 | A.1.12 |
| A-1191 | I-14 | A.1.12 |
| A-1192 | I-15 | A.1.12 |
| A-1193 | I-16 | A.1.12 |
| A-1194 | I-17 | A.1.12 |
| A-1195 | I-18 | A.1.12 |
| A-1196 | I-19 | A.1.12 |
| A-1197 | I-20 | A.1.12 |
| A-1198 | I-21 | A.1.12 |
| A-1199 | I-22 | A.1.12 |
| A-1200 | I-23 | A.1.12 |
| A-1201 | I-24 | A.1.12 |
| A-1202 | I-25 | A.1.12 |
| A-1203 | I-26 | A.1.12 |
| A-1204 | I-27 | A.1.12 |
| A-1205 | I-28 | A.1.12 |
| A-1206 | I-29 | A.1.12 |
| A-1207 | I-30 | A.1.12 |
| A-1208 | I-31 | A.1.12 |
| A-1209 | I-32 | A.1.12 |
| A-1210 | I-33 | A.1.12 |
| A-1211 | I-34 | A.1.12 |
| A-1212 | I-35 | A.1.12 |
| A-1213 | I-36 | A.1.12 |
| A-1214 | I-37 | A.1.12 |
| A-1215 | I-38 | A.1.12 |
| A-1216 | I-39 | A.1.12 |
| A-1217 | I-40 | A.1.12 |
| A-1218 | I-41 | A.1.12 |
| A-1219 | I-42 | A.1.12 |
| A-1220 | I-43 | A.1.12 |
| A-1221 | I-44 | A.1.12 |
| A-1222 | I-45 | A.1.12 |
| A-1223 | I-46 | A.1.12 |
| A-1224 | I-47 | A.1.12 |
| A-1225 | I-48 | A.1.12 |

| Mixture | Co. 1 | Co. 2 |
|---|---|---|
| A-1226 | I-49 | A.1.12 |
| A-1227 | I-50 | A.1.12 |
| A-1228 | I-51 | A.1.12 |
| A-1229 | I-52 | A.1.12 |
| A-1230 | I-53 | A.1.12 |
| A-1231 | I-54 | A.1.12 |
| A-1232 | I-55 | A.1.12 |
| A-1233 | I-56 | A.1.12 |
| A-1234 | I-57 | A.1.12 |
| A-1235 | I-58 | A.1.12 |
| A-1236 | I-59 | A.1.12 |
| A-1237 | I-60 | A.1.12 |
| A-1238 | I-61 | A.1.12 |
| A-1239 | I-62 | A.1.12 |
| A-1240 | I-63 | A.1.12 |
| A-1241 | I-64 | A.1.12 |
| A-1242 | I-65 | A.1.12 |
| A-1243 | I-66 | A.1.12 |
| A-1244 | I-67 | A.1.12 |
| A-1245 | I-68 | A.1.12 |
| A-1246 | I-69 | A.1.12 |
| A-1247 | I-70 | A.1.12 |
| A-1248 | I-71 | A.1.12 |
| A-1249 | I-72 | A.1.12 |
| A-1250 | I-73 | A.1.12 |
| A-1251 | I-74 | A.1.12 |
| A-1252 | I-75 | A.1.12 |
| A-1253 | I-76 | A.1.12 |
| A-1254 | I-77 | A.1.12 |
| A-1255 | I-78 | A.1.12 |
| A-1256 | I-79 | A.1.12 |
| A-1257 | I-80 | A.1.12 |
| A-1258 | I-81 | A.1.12 |
| A-1259 | I-82 | A.1.12 |
| A-1260 | I-83 | A.1.12 |
| A-1261 | I-84 | A.1.12 |
| A-1262 | I-85 | A.1.12 |
| A-1263 | I-86 | A.1.12 |
| A-1264 | I-87 | A.1.12 |
| A-1265 | I-88 | A.1.12 |
| A-1266 | I-89 | A.1.12 |

| Mixture | Co. 1 | Co. 2 |
|---|---|---|
| A-1267 | I-90 | A.1.12 |
| A-1268 | I-91 | A.1.12 |
| A-1269 | I-92 | A.1.12 |
| A-1270 | I-93 | A.1.12 |
| A-1271 | I-94 | A.1.12 |
| A-1272 | I-95 | A.1.12 |
| A-1273 | I-96 | A.1.12 |
| A-1274 | I-97 | A.1.12 |
| A-1275 | I-98 | A.1.12 |
| A-1276 | I-99 | A.1.12 |
| A-1277 | I-100 | A.1.12 |
| A-1278 | I-101 | A.1.12 |
| A-1279 | I-102 | A.1.12 |
| A-1280 | I-103 | A.1.12 |
| A-1281 | I-104 | A.1.12 |
| A-1282 | I-105 | A.1.12 |
| A-1283 | I-106 | A.1.12 |
| A-1284 | I-107 | A.1.12 |
| A-1285 | I-1 | A.1.13 |
| A-1286 | I-2 | A.1.13 |
| A-1287 | I-3 | A.1.13 |
| A-1288 | I-4 | A.1.13 |
| A-1289 | I-5 | A.1.13 |
| A-1290 | I-6 | A.1.13 |
| A-1291 | I-7 | A.1.13 |
| A-1292 | I-8 | A.1.13 |
| A-1293 | I-9 | A.1.13 |
| A-1294 | I-10 | A.1.13 |
| A-1295 | I-11 | A.1.13 |
| A-1296 | I-12 | A.1.13 |
| A-1297 | I-13 | A.1.13 |
| A-1298 | I-14 | A.1.13 |
| A-1299 | I-15 | A.1.13 |
| A-1300 | I-16 | A.1.13 |
| A-1301 | I-17 | A.1.13 |
| A-1302 | I-18 | A.1.13 |
| A-1303 | I-19 | A.1.13 |
| A-1304 | I-20 | A.1.13 |
| A-1305 | I-21 | A.1.13 |
| A-1306 | I-22 | A.1.13 |
| A-1307 | I-23 | A.1.13 |

| Mixture | Co. 1 | Co. 2 |
|---|---|---|
| A-1308 | I-24 | A.1.13 |
| A-1309 | I-25 | A.1.13 |
| A-1310 | I-26 | A.1.13 |
| A-1311 | I-27 | A.1.13 |
| A-1312 | I-28 | A.1.13 |
| A-1313 | I-29 | A.1.13 |
| A-1314 | I-30 | A.1.13 |
| A-1315 | I-31 | A.1.13 |
| A-1316 | I-32 | A.1.13 |
| A-1317 | I-33 | A.1.13 |
| A-1318 | I-34 | A.1.13 |
| A-1319 | I-35 | A.1.13 |
| A-1320 | I-36 | A.1.13 |
| A-1321 | I-37 | A.1.13 |
| A-1322 | I-38 | A.1.13 |
| A-1323 | I-39 | A.1.13 |
| A-1324 | I-40 | A.1.13 |
| A-1325 | I-41 | A.1.13 |
| A-1326 | I-42 | A.1.13 |
| A-1327 | I-43 | A.1.13 |
| A-1328 | I-44 | A.1.13 |
| A-1329 | I-45 | A.1.13 |
| A-1330 | I-46 | A.1.13 |
| A-1331 | I-47 | A.1.13 |
| A-1332 | I-48 | A.1.13 |
| A-1333 | I-49 | A.1.13 |
| A-1334 | I-50 | A.1.13 |
| A-1335 | I-51 | A.1.13 |
| A-1336 | I-52 | A.1.13 |
| A-1337 | I-53 | A.1.13 |
| A-1338 | I-54 | A.1.13 |
| A-1339 | I-55 | A.1.13 |
| A-1340 | I-56 | A.1.13 |
| A-1341 | I-57 | A.1.13 |
| A-1342 | I-58 | A.1.13 |
| A-1343 | I-59 | A.1.13 |
| A-1344 | I-60 | A.1.13 |
| A-1345 | I-61 | A.1.13 |
| A-1346 | I-62 | A.1.13 |
| A-1347 | I-63 | A.1.13 |
| A-1348 | I-64 | A.1.13 |

| Mixture | Co. 1 | Co. 2 |
|---|---|---|
| A-1349 | I-65 | A.1.13 |
| A-1350 | I-66 | A.1.13 |
| A-1351 | I-67 | A.1.13 |
| A-1352 | I-68 | A.1.13 |
| A-1353 | I-69 | A.1.13 |
| A-1354 | I-70 | A.1.13 |
| A-1355 | I-71 | A.1.13 |
| A-1356 | I-72 | A.1.13 |
| A-1357 | I-73 | A.1.13 |
| A-1358 | I-74 | A.1.13 |
| A-1359 | I-75 | A.1.13 |
| A-1360 | I-76 | A.1.13 |
| A-1361 | I-77 | A.1.13 |
| A-1362 | I-78 | A.1.13 |
| A-1363 | I-79 | A.1.13 |
| A-1364 | I-80 | A.1.13 |
| A-1365 | I-81 | A.1.13 |
| A-1366 | I-82 | A.1.13 |
| A-1367 | I-83 | A.1.13 |
| A-1368 | I-84 | A.1.13 |
| A-1369 | I-85 | A.1.13 |
| A-1370 | I-86 | A.1.13 |
| A-1371 | I-87 | A.1.13 |
| A-1372 | I-88 | A.1.13 |
| A-1373 | I-89 | A.1.13 |
| A-1374 | I-90 | A.1.13 |
| A-1375 | I-91 | A.1.13 |
| A-1376 | I-92 | A.1.13 |
| A-1377 | I-93 | A.1.13 |
| A-1378 | I-94 | A.1.13 |
| A-1379 | I-95 | A.1.13 |
| A-1380 | I-96 | A.1.13 |
| A-1381 | I-97 | A.1.13 |
| A-1382 | I-98 | A.1.13 |
| A-1383 | I-99 | A.1.13 |
| A-1384 | I-100 | A.1.13 |
| A-1385 | I-101 | A.1.13 |
| A-1386 | I-102 | A.1.13 |
| A-1387 | I-103 | A.1.13 |
| A-1388 | I-104 | A.1.13 |
| A-1389 | I-105 | A.1.13 |

| Mixture | Co. 1 | Co. 2 |
|---|---|---|
| A-1390 | I-106 | A.1.13 |
| A-1391 | I-107 | A.1.13 |
| A-1392 | I-1 | A.1.14 |
| A-1393 | I-2 | A.1.14 |
| A-1394 | I-3 | A.1.14 |
| A-1395 | I-4 | A.1.14 |
| A-1396 | I-5 | A.1.14 |
| A-1397 | I-6 | A.1.14 |
| A-1398 | I-7 | A.1.14 |
| A-1399 | I-8 | A.1.14 |
| A-1400 | I-9 | A.1.14 |
| A-1401 | I-10 | A.1.14 |
| A-1402 | I-11 | A.1.14 |
| A-1403 | I-12 | A.1.14 |
| A-1404 | I-13 | A.1.14 |
| A-1405 | I-14 | A.1.14 |
| A-1406 | I-15 | A.1.14 |
| A-1407 | I-16 | A.1.14 |
| A-1408 | I-17 | A.1.14 |
| A-1409 | I-18 | A.1.14 |
| A-1410 | I-19 | A.1.14 |
| A-1411 | I-20 | A.1.14 |
| A-1412 | I-21 | A.1.14 |
| A-1413 | I-22 | A.1.14 |
| A-1414 | I-23 | A.1.14 |
| A-1415 | I-24 | A.1.14 |
| A-1416 | I-25 | A.1.14 |
| A-1417 | I-26 | A.1.14 |
| A-1418 | I-27 | A.1.14 |
| A-1419 | I-28 | A.1.14 |
| A-1420 | I-29 | A.1.14 |
| A-1421 | I-30 | A.1.14 |
| A-1422 | I-31 | A.1.14 |
| A-1423 | I-32 | A.1.14 |
| A-1424 | I-33 | A.1.14 |
| A-1425 | I-34 | A.1.14 |
| A-1426 | I-35 | A.1.14 |
| A-1427 | I-36 | A.1.14 |
| A-1428 | I-37 | A.1.14 |
| A-1429 | I-38 | A.1.14 |
| A-1430 | I-39 | A.1.14 |

| Mixture | Co. 1 | Co. 2 |
|---|---|---|
| A-1431 | I-40 | A.1.14 |
| A-1432 | I-41 | A.1.14 |
| A-1433 | I-42 | A.1.14 |
| A-1434 | I-43 | A.1.14 |
| A-1435 | I-44 | A.1.14 |
| A-1436 | I-45 | A.1.14 |
| A-1437 | I-46 | A.1.14 |
| A-1438 | I-47 | A.1.14 |
| A-1439 | I-48 | A.1.14 |
| A-1440 | I-49 | A.1.14 |
| A-1441 | I-50 | A.1.14 |
| A-1442 | I-51 | A.1.14 |
| A-1443 | I-52 | A.1.14 |
| A-1444 | I-53 | A.1.14 |
| A-1445 | I-54 | A.1.14 |
| A-1446 | I-55 | A.1.14 |
| A-1447 | I-56 | A.1.14 |
| A-1448 | I-57 | A.1.14 |
| A-1449 | I-58 | A.1.14 |
| A-1450 | I-59 | A.1.14 |
| A-1451 | I-60 | A.1.14 |
| A-1452 | I-61 | A.1.14 |
| A-1453 | I-62 | A.1.14 |
| A-1454 | I-63 | A.1.14 |
| A-1455 | I-64 | A.1.14 |
| A-1456 | I-65 | A.1.14 |
| A-1457 | I-66 | A.1.14 |
| A-1458 | I-67 | A.1.14 |
| A-1459 | I-68 | A.1.14 |
| A-1460 | I-69 | A.1.14 |
| A-1461 | I-70 | A.1.14 |
| A-1462 | I-71 | A.1.14 |
| A-1463 | I-72 | A.1.14 |
| A-1464 | I-73 | A.1.14 |
| A-1465 | I-74 | A.1.14 |
| A-1466 | I-75 | A.1.14 |
| A-1467 | I-76 | A.1.14 |
| A-1468 | I-77 | A.1.14 |
| A-1469 | I-78 | A.1.14 |
| A-1470 | I-79 | A.1.14 |
| A-1471 | I-80 | A.1.14 |

| Mixture | Co. 1 | Co. 2 |
|---|---|---|
| A-1472 | I-81 | A.1.14 |
| A-1473 | I-82 | A.1.14 |
| A-1474 | I-83 | A.1.14 |
| A-1475 | I-84 | A.1.14 |
| A-1476 | I-85 | A.1.14 |
| A-1477 | I-86 | A.1.14 |
| A-1478 | I-87 | A.1.14 |
| A-1479 | I-88 | A.1.14 |
| A-1480 | I-89 | A.1.14 |
| A-1481 | I-90 | A.1.14 |
| A-1482 | I-91 | A.1.14 |
| A-1483 | I-92 | A.1.14 |
| A-1484 | I-93 | A.1.14 |
| A-1485 | I-94 | A.1.14 |
| A-1486 | I-95 | A.1.14 |
| A-1487 | I-96 | A.1.14 |
| A-1488 | I-97 | A.1.14 |
| A-1489 | I-98 | A.1.14 |
| A-1490 | I-99 | A.1.14 |
| A-1491 | I-100 | A.1.14 |
| A-1492 | I-101 | A.1.14 |
| A-1493 | I-102 | A.1.14 |
| A-1494 | I-103 | A.1.14 |
| A-1495 | I-104 | A.1.14 |
| A-1496 | I-105 | A.1.14 |
| A-1497 | I-106 | A.1.14 |
| A-1498 | I-107 | A.1.14 |
| A-1499 | I-1 | A.1.15 |
| A-1500 | I-2 | A.1.15 |
| A-1501 | I-3 | A.1.15 |
| A-1502 | I-4 | A.1.15 |
| A-1503 | I-5 | A.1.15 |
| A-1504 | I-6 | A.1.15 |
| A-1505 | I-7 | A.1.15 |
| A-1506 | I-8 | A.1.15 |
| A-1507 | I-9 | A.1.15 |
| A-1508 | I-10 | A.1.15 |
| A-1509 | I-11 | A.1.15 |
| A-1510 | I-12 | A.1.15 |
| A-1511 | I-13 | A.1.15 |
| A-1512 | I-14 | A.1.15 |

| Mixture | Co. 1 | Co. 2 |
|---|---|---|
| A-1513 | I-15 | A.1.15 |
| A-1514 | I-16 | A.1.15 |
| A-1515 | I-17 | A.1.15 |
| A-1516 | I-18 | A.1.15 |
| A-1517 | I-19 | A.1.15 |
| A-1518 | I-20 | A.1.15 |
| A-1519 | I-21 | A.1.15 |
| A-1520 | I-22 | A.1.15 |
| A-1521 | I-23 | A.1.15 |
| A-1522 | I-24 | A.1.15 |
| A-1523 | I-25 | A.1.15 |
| A-1524 | I-26 | A.1.15 |
| A-1525 | I-27 | A.1.15 |
| A-1526 | I-28 | A.1.15 |
| A-1527 | I-29 | A.1.15 |
| A-1528 | I-30 | A.1.15 |
| A-1529 | I-31 | A.1.15 |
| A-1530 | I-32 | A.1.15 |
| A-1531 | I-33 | A.1.15 |
| A-1532 | I-34 | A.1.15 |
| A-1533 | I-35 | A.1.15 |
| A-1534 | I-36 | A.1.15 |
| A-1535 | I-37 | A.1.15 |
| A-1536 | I-38 | A.1.15 |
| A-1537 | I-39 | A.1.15 |
| A-1538 | I-40 | A.1.15 |
| A-1539 | I-41 | A.1.15 |
| A-1540 | I-42 | A.1.15 |
| A-1541 | I-43 | A.1.15 |
| A-1542 | I-44 | A.1.15 |
| A-1543 | I-45 | A.1.15 |
| A-1544 | I-46 | A.1.15 |
| A-1545 | I-47 | A.1.15 |
| A-1546 | I-48 | A.1.15 |
| A-1547 | I-49 | A.1.15 |
| A-1548 | I-50 | A.1.15 |
| A-1549 | I-51 | A.1.15 |
| A-1550 | I-52 | A.1.15 |
| A-1551 | I-53 | A.1.15 |
| A-1552 | I-54 | A.1.15 |
| A-1553 | I-55 | A.1.15 |

| Mixture | Co. 1 | Co. 2 |
|---|---|---|
| A-1554 | I-56 | A.1.15 |
| A-1555 | I-57 | A.1.15 |
| A-1556 | I-58 | A.1.15 |
| A-1557 | I-59 | A.1.15 |
| A-1558 | I-60 | A.1.15 |
| A-1559 | I-61 | A.1.15 |
| A-1560 | I-62 | A.1.15 |
| A-1561 | I-63 | A.1.15 |
| A-1562 | I-64 | A.1.15 |
| A-1563 | I-65 | A.1.15 |
| A-1564 | I-66 | A.1.15 |
| A-1565 | I-67 | A.1.15 |
| A-1566 | I-68 | A.1.15 |
| A-1567 | I-69 | A.1.15 |
| A-1568 | I-70 | A.1.15 |
| A-1569 | I-71 | A.1.15 |
| A-1570 | I-72 | A.1.15 |
| A-1571 | I-73 | A.1.15 |
| A-1572 | I-74 | A.1.15 |
| A-1573 | I-75 | A.1.15 |
| A-1574 | I-76 | A.1.15 |
| A-1575 | I-77 | A.1.15 |
| A-1576 | I-78 | A.1.15 |
| A-1577 | I-79 | A.1.15 |
| A-1578 | I-80 | A.1.15 |
| A-1579 | I-81 | A.1.15 |
| A-1580 | I-82 | A.1.15 |
| A-1581 | I-83 | A.1.15 |
| A-1582 | I-84 | A.1.15 |
| A-1583 | I-85 | A.1.15 |
| A-1584 | I-86 | A.1.15 |
| A-1585 | I-87 | A.1.15 |
| A-1586 | I-88 | A.1.15 |
| A-1587 | I-89 | A.1.15 |
| A-1588 | I-90 | A.1.15 |
| A-1589 | I-91 | A.1.15 |
| A-1590 | I-92 | A.1.15 |
| A-1591 | I-93 | A.1.15 |
| A-1592 | I-94 | A.1.15 |
| A-1593 | I-95 | A.1.15 |
| A-1594 | I-96 | A.1.15 |

| Mixture | Co. 1 | Co. 2 |
|---|---|---|
| A-1595 | I-97 | A.1.15 |
| A-1596 | I-98 | A.1.15 |
| A-1597 | I-99 | A.1.15 |
| A-1598 | I-100 | A.1.15 |
| A-1599 | I-101 | A.1.15 |
| A-1600 | I-102 | A.1.15 |
| A-1601 | I-103 | A.1.15 |
| A-1602 | I-104 | A.1.15 |
| A-1603 | I-105 | A.1.15 |
| A-1604 | I-106 | A.1.15 |
| A-1605 | I-107 | A.1.15 |
| A-1606 | I-1 | A.1.16 |
| A-1607 | I-2 | A.1.16 |
| A-1608 | I-3 | A.1.16 |
| A-1609 | I-4 | A.1.16 |
| A-1610 | I-5 | A.1.16 |
| A-1611 | I-6 | A.1.16 |
| A-1612 | I-7 | A.1.16 |
| A-1613 | I-8 | A.1.16 |
| A-1614 | I-9 | A.1.16 |
| A-1615 | I-10 | A.1.16 |
| A-1616 | I-11 | A.1.16 |
| A-1617 | I-12 | A.1.16 |
| A-1618 | I-13 | A.1.16 |
| A-1619 | I-14 | A.1.16 |
| A-1620 | I-15 | A.1.16 |
| A-1621 | I-16 | A.1.16 |
| A-1622 | I-17 | A.1.16 |
| A-1623 | I-18 | A.1.16 |
| A-1624 | I-19 | A.1.16 |
| A-1625 | I-20 | A.1.16 |
| A-1626 | I-21 | A.1.16 |
| A-1627 | I-22 | A.1.16 |
| A-1628 | I-23 | A.1.16 |
| A-1629 | I-24 | A.1.16 |
| A-1630 | I-25 | A.1.16 |
| A-1631 | I-26 | A.1.16 |
| A-1632 | I-27 | A.1.16 |
| A-1633 | I-28 | A.1.16 |
| A-1634 | I-29 | A.1.16 |
| A-1635 | I-30 | A.1.16 |

| Mixture | Co. 1 | Co. 2 |
|---|---|---|
| A-1636 | I-31 | A.1.16 |
| A-1637 | I-32 | A.1.16 |
| A-1638 | I-33 | A.1.16 |
| A-1639 | I-34 | A.1.16 |
| A-1640 | I-35 | A.1.16 |
| A-1641 | I-36 | A.1.16 |
| A-1642 | I-37 | A.1.16 |
| A-1643 | I-38 | A.1.16 |
| A-1644 | I-39 | A.1.16 |
| A-1645 | I-40 | A.1.16 |
| A-1646 | I-41 | A.1.16 |
| A-1647 | I-42 | A.1.16 |
| A-1648 | I-43 | A.1.16 |
| A-1649 | I-44 | A.1.16 |
| A-1650 | I-45 | A.1.16 |
| A-1651 | I-46 | A.1.16 |
| A-1652 | I-47 | A.1.16 |
| A-1653 | I-48 | A.1.16 |
| A-1654 | I-49 | A.1.16 |
| A-1655 | I-50 | A.1.16 |
| A-1656 | I-51 | A.1.16 |
| A-1657 | I-52 | A.1.16 |
| A-1658 | I-53 | A.1.16 |
| A-1659 | I-54 | A.1.16 |
| A-1660 | I-55 | A.1.16 |
| A-1661 | I-56 | A.1.16 |
| A-1662 | I-57 | A.1.16 |
| A-1663 | I-58 | A.1.16 |
| A-1664 | I-59 | A.1.16 |
| A-1665 | I-60 | A.1.16 |
| A-1666 | I-61 | A.1.16 |
| A-1667 | I-62 | A.1.16 |
| A-1668 | I-63 | A.1.16 |
| A-1669 | I-64 | A.1.16 |
| A-1670 | I-65 | A.1.16 |
| A-1671 | I-66 | A.1.16 |
| A-1672 | I-67 | A.1.16 |
| A-1673 | I-68 | A.1.16 |
| A-1674 | I-69 | A.1.16 |
| A-1675 | I-70 | A.1.16 |
| A-1676 | I-71 | A.1.16 |

| Mixture | Co. 1 | Co. 2 |
|---|---|---|
| A-1677 | I-72 | A.1.16 |
| A-1678 | I-73 | A.1.16 |
| A-1679 | I-74 | A.1.16 |
| A-1680 | I-75 | A.1.16 |
| A-1681 | I-76 | A.1.16 |
| A-1682 | I-77 | A.1.16 |
| A-1683 | I-78 | A.1.16 |
| A-1684 | I-79 | A.1.16 |
| A-1685 | I-80 | A.1.16 |
| A-1686 | I-81 | A.1.16 |
| A-1687 | I-82 | A.1.16 |
| A-1688 | I-83 | A.1.16 |
| A-1689 | I-84 | A.1.16 |
| A-1690 | I-85 | A.1.16 |
| A-1691 | I-86 | A.1.16 |
| A-1692 | I-87 | A.1.16 |
| A-1693 | I-88 | A.1.16 |
| A-1694 | I-89 | A.1.16 |
| A-1695 | I-90 | A.1.16 |
| A-1696 | I-91 | A.1.16 |
| A-1697 | I-92 | A.1.16 |
| A-1698 | I-93 | A.1.16 |
| A-1699 | I-94 | A.1.16 |
| A-1700 | I-95 | A.1.16 |
| A-1701 | I-96 | A.1.16 |
| A-1702 | I-97 | A.1.16 |
| A-1703 | I-98 | A.1.16 |
| A-1704 | I-99 | A.1.16 |
| A-1705 | I-100 | A.1.16 |
| A-1706 | I-101 | A.1.16 |
| A-1707 | I-102 | A.1.16 |
| A-1708 | I-103 | A.1.16 |
| A-1709 | I-104 | A.1.16 |
| A-1710 | I-105 | A.1.16 |
| A-1711 | I-106 | A.1.16 |
| A-1712 | I-107 | A.1.16 |
| A-1713 | I-1 | A.1.17 |
| A-1714 | I-2 | A.1.17 |
| A-1715 | I-3 | A.1.17 |
| A-1716 | I-4 | A.1.17 |
| A-1717 | I-5 | A.1.17 |

| Mixture | Co. 1 | Co. 2 |
|---|---|---|
| A-1718 | I-6 | A.1.17 |
| A-1719 | I-7 | A.1.17 |
| A-1720 | I-8 | A.1.17 |
| A-1721 | I-9 | A.1.17 |
| A-1722 | I-10 | A.1.17 |
| A-1723 | I-11 | A.1.17 |
| A-1724 | I-12 | A.1.17 |
| A-1725 | I-13 | A.1.17 |
| A-1726 | I-14 | A.1.17 |
| A-1727 | I-15 | A.1.17 |
| A-1728 | I-16 | A.1.17 |
| A-1729 | I-17 | A.1.17 |
| A-1730 | I-18 | A.1.17 |
| A-1731 | I-19 | A.1.17 |
| A-1732 | I-20 | A.1.17 |
| A-1733 | I-21 | A.1.17 |
| A-1734 | I-22 | A.1.17 |
| A-1735 | I-23 | A.1.17 |
| A-1736 | I-24 | A.1.17 |
| A-1737 | I-25 | A.1.17 |
| A-1738 | I-26 | A.1.17 |
| A-1739 | I-27 | A.1.17 |
| A-1740 | I-28 | A.1.17 |
| A-1741 | I-29 | A.1.17 |
| A-1742 | I-30 | A.1.17 |
| A-1743 | I-31 | A.1.17 |
| A-1744 | I-32 | A.1.17 |
| A-1745 | I-33 | A.1.17 |
| A-1746 | I-34 | A.1.17 |
| A-1747 | I-35 | A.1.17 |
| A-1748 | I-36 | A.1.17 |
| A-1749 | I-37 | A.1.17 |
| A-1750 | I-38 | A.1.17 |
| A-1751 | I-39 | A.1.17 |
| A-1752 | I-40 | A.1.17 |
| A-1753 | I-41 | A.1.17 |
| A-1754 | I-42 | A.1.17 |
| A-1755 | I-43 | A.1.17 |
| A-1756 | I-44 | A.1.17 |
| A-1757 | I-45 | A.1.17 |
| A-1758 | I-46 | A.1.17 |

| Mixture | Co. 1 | Co. 2 |
|---|---|---|
| A-1759 | I-47 | A.1.17 |
| A-1760 | I-48 | A.1.17 |
| A-1761 | I-49 | A.1.17 |
| A-1762 | I-50 | A.1.17 |
| A-1763 | I-51 | A.1.17 |
| A-1764 | I-52 | A.1.17 |
| A-1765 | I-53 | A.1.17 |
| A-1766 | I-54 | A.1.17 |
| A-1767 | I-55 | A.1.17 |
| A-1768 | I-56 | A.1.17 |
| A-1769 | I-57 | A.1.17 |
| A-1770 | I-58 | A.1.17 |
| A-1771 | I-59 | A.1.17 |
| A-1772 | I-60 | A.1.17 |
| A-1773 | I-61 | A.1.17 |
| A-1774 | I-62 | A.1.17 |
| A-1775 | I-63 | A.1.17 |
| A-1776 | I-64 | A.1.17 |
| A-1777 | I-65 | A.1.17 |
| A-1778 | I-66 | A.1.17 |
| A-1779 | I-67 | A.1.17 |
| A-1780 | I-68 | A.1.17 |
| A-1781 | I-69 | A.1.17 |
| A-1782 | I-70 | A.1.17 |
| A-1783 | I-71 | A.1.17 |
| A-1784 | I-72 | A.1.17 |
| A-1785 | I-73 | A.1.17 |
| A-1786 | I-74 | A.1.17 |
| A-1787 | I-75 | A.1.17 |
| A-1788 | I-76 | A.1.17 |
| A-1789 | I-77 | A.1.17 |
| A-1790 | I-78 | A.1.17 |
| A-1791 | I-79 | A.1.17 |
| A-1792 | I-80 | A.1.17 |
| A-1793 | I-81 | A.1.17 |
| A-1794 | I-82 | A.1.17 |
| A-1795 | I-83 | A.1.17 |
| A-1796 | I-84 | A.1.17 |
| A-1797 | I-85 | A.1.17 |
| A-1798 | I-86 | A.1.17 |
| A-1799 | I-87 | A.1.17 |

| Mixture | Co. 1 | Co. 2 |
|---|---|---|
| A-1800 | I-88 | A.1.17 |
| A-1801 | I-89 | A.1.17 |
| A-1802 | I-90 | A.1.17 |
| A-1803 | I-91 | A.1.17 |
| A-1804 | I-92 | A.1.17 |
| A-1805 | I-93 | A.1.17 |
| A-1806 | I-94 | A.1.17 |
| A-1807 | I-95 | A.1.17 |
| A-1808 | I-96 | A.1.17 |
| A-1809 | I-97 | A.1.17 |
| A-1810 | I-98 | A.1.17 |
| A-1811 | I-99 | A.1.17 |
| A-1812 | I-100 | A.1.17 |
| A-1813 | I-101 | A.1.17 |
| A-1814 | I-102 | A.1.17 |
| A-1815 | I-103 | A.1.17 |
| A-1816 | I-104 | A.1.17 |
| A-1817 | I-105 | A.1.17 |
| A-1818 | I-106 | A.1.17 |
| A-1819 | I-107 | A.1.17 |
| A-1820 | I-1 | A.1.18 |
| A-1821 | I-2 | A.1.18 |
| A-1822 | I-3 | A.1.18 |
| A-1823 | I-4 | A.1.18 |
| A-1824 | I-5 | A.1.18 |
| A-1825 | I-6 | A.1.18 |
| A-1826 | I-7 | A.1.18 |
| A-1827 | I-8 | A.1.18 |
| A-1828 | I-9 | A.1.18 |
| A-1829 | I-10 | A.1.18 |
| A-1830 | I-11 | A.1.18 |
| A-1831 | I-12 | A.1.18 |
| A-1832 | I-13 | A.1.18 |
| A-1833 | I-14 | A.1.18 |
| A-1834 | I-15 | A.1.18 |
| A-1835 | I-16 | A.1.18 |
| A-1836 | I-17 | A.1.18 |
| A-1837 | I-18 | A.1.18 |
| A-1838 | I-19 | A.1.18 |
| A-1839 | I-20 | A.1.18 |
| A-1840 | I-21 | A.1.18 |

| Mixture | Co. 1 | Co. 2 |
|---|---|---|
| A-1841 | I-22 | A.1.18 |
| A-1842 | I-23 | A.1.18 |
| A-1843 | I-24 | A.1.18 |
| A-1844 | I-25 | A.1.18 |
| A-1845 | I-26 | A.1.18 |
| A-1846 | I-27 | A.1.18 |
| A-1847 | I-28 | A.1.18 |
| A-1848 | I-29 | A.1.18 |
| A-1849 | I-30 | A.1.18 |
| A-1850 | I-31 | A.1.18 |
| A-1851 | I-32 | A.1.18 |
| A-1852 | I-33 | A.1.18 |
| A-1853 | I-34 | A.1.18 |
| A-1854 | I-35 | A.1.18 |
| A-1855 | I-36 | A.1.18 |
| A-1856 | I-37 | A.1.18 |
| A-1857 | I-38 | A.1.18 |
| A-1858 | I-39 | A.1.18 |
| A-1859 | I-40 | A.1.18 |
| A-1860 | I-41 | A.1.18 |
| A-1861 | I-42 | A.1.18 |
| A-1862 | I-43 | A.1.18 |
| A-1863 | I-44 | A.1.18 |
| A-1864 | I-45 | A.1.18 |
| A-1865 | I-46 | A.1.18 |
| A-1866 | I-47 | A.1.18 |
| A-1867 | I-48 | A.1.18 |
| A-1868 | I-49 | A.1.18 |
| A-1869 | I-50 | A.1.18 |
| A-1870 | I-51 | A.1.18 |
| A-1871 | I-52 | A.1.18 |
| A-1872 | I-53 | A.1.18 |
| A-1873 | I-54 | A.1.18 |
| A-1874 | I-55 | A.1.18 |
| A-1875 | I-56 | A.1.18 |
| A-1876 | I-57 | A.1.18 |
| A-1877 | I-58 | A.1.18 |
| A-1878 | I-59 | A.1.18 |
| A-1879 | I-60 | A.1.18 |
| A-1880 | I-61 | A.1.18 |
| A-1881 | I-62 | A.1.18 |

| Mixture | Co. 1 | Co. 2 |
|---|---|---|
| A-1882 | I-63 | A.1.18 |
| A-1883 | I-64 | A.1.18 |
| A-1884 | I-65 | A.1.18 |
| A-1885 | I-66 | A.1.18 |
| A-1886 | I-67 | A.1.18 |
| A-1887 | I-68 | A.1.18 |
| A-1888 | I-69 | A.1.18 |
| A-1889 | I-70 | A.1.18 |
| A-1890 | I-71 | A.1.18 |
| A-1891 | I-72 | A.1.18 |
| A-1892 | I-73 | A.1.18 |
| A-1893 | I-74 | A.1.18 |
| A-1894 | I-75 | A.1.18 |
| A-1895 | I-76 | A.1.18 |
| A-1896 | I-77 | A.1.18 |
| A-1897 | I-78 | A.1.18 |
| A-1898 | I-79 | A.1.18 |
| A-1899 | I-80 | A.1.18 |
| A-1900 | I-81 | A.1.18 |
| A-1901 | I-82 | A.1.18 |
| A-1902 | I-83 | A.1.18 |
| A-1903 | I-84 | A.1.18 |
| A-1904 | I-85 | A.1.18 |
| A-1905 | I-86 | A.1.18 |
| A-1906 | I-87 | A.1.18 |
| A-1907 | I-88 | A.1.18 |
| A-1908 | I-89 | A.1.18 |
| A-1909 | I-90 | A.1.18 |
| A-1910 | I-91 | A.1.18 |
| A-1911 | I-92 | A.1.18 |
| A-1912 | I-93 | A.1.18 |
| A-1913 | I-94 | A.1.18 |
| A-1914 | I-95 | A.1.18 |
| A-1915 | I-96 | A.1.18 |
| A-1916 | I-97 | A.1.18 |
| A-1917 | I-98 | A.1.18 |
| A-1918 | I-99 | A.1.18 |
| A-1919 | I-100 | A.1.18 |
| A-1920 | I-101 | A.1.18 |
| A-1921 | I-102 | A.1.18 |
| A-1922 | I-103 | A.1.18 |

| Mixture | Co. 1 | Co. 2 |
|---|---|---|
| A-1923 | I-104 | A.1.18 |
| A-1924 | I-105 | A.1.18 |
| A-1925 | I-106 | A.1.18 |
| A-1926 | I-107 | A.1.18 |
| A-1927 | I-1 | A.1.19 |
| A-1928 | I-2 | A.1.19 |
| A-1929 | I-3 | A.1.19 |
| A-1930 | I-4 | A.1.19 |
| A-1931 | I-5 | A.1.19 |
| A-1932 | I-6 | A.1.19 |
| A-1933 | I-7 | A.1.19 |
| A-1934 | I-8 | A.1.19 |
| A-1935 | I-9 | A.1.19 |
| A-1936 | I-10 | A.1.19 |
| A-1937 | I-11 | A.1.19 |
| A-1938 | I-12 | A.1.19 |
| A-1939 | I-13 | A.1.19 |
| A-1940 | I-14 | A.1.19 |
| A-1941 | I-15 | A.1.19 |
| A-1942 | I-16 | A.1.19 |
| A-1943 | I-17 | A.1.19 |
| A-1944 | I-18 | A.1.19 |
| A-1945 | I-19 | A.1.19 |
| A-1946 | I-20 | A.1.19 |
| A-1947 | I-21 | A.1.19 |
| A-1948 | I-22 | A.1.19 |
| A-1949 | I-23 | A.1.19 |
| A-1950 | I-24 | A.1.19 |
| A-1951 | I-25 | A.1.19 |
| A-1952 | I-26 | A.1.19 |
| A-1953 | I-27 | A.1.19 |
| A-1954 | I-28 | A.1.19 |
| A-1955 | I-29 | A.1.19 |
| A-1956 | I-30 | A.1.19 |
| A-1957 | I-31 | A.1.19 |
| A-1958 | I-32 | A.1.19 |
| A-1959 | I-33 | A.1.19 |
| A-1960 | I-34 | A.1.19 |
| A-1961 | I-35 | A.1.19 |
| A-1962 | I-36 | A.1.19 |
| A-1963 | I-37 | A.1.19 |

| Mixture | Co. 1 | Co. 2 |
|---|---|---|
| A-1964 | I-38 | A.1.19 |
| A-1965 | I-39 | A.1.19 |
| A-1966 | I-40 | A.1.19 |
| A-1967 | I-41 | A.1.19 |
| A-1968 | I-42 | A.1.19 |
| A-1969 | I-43 | A.1.19 |
| A-1970 | I-44 | A.1.19 |
| A-1971 | I-45 | A.1.19 |
| A-1972 | I-46 | A.1.19 |
| A-1973 | I-47 | A.1.19 |
| A-1974 | I-48 | A.1.19 |
| A-1975 | I-49 | A.1.19 |
| A-1976 | I-50 | A.1.19 |
| A-1977 | I-51 | A.1.19 |
| A-1978 | I-52 | A.1.19 |
| A-1979 | I-53 | A.1.19 |
| A-1980 | I-54 | A.1.19 |
| A-1981 | I-55 | A.1.19 |
| A-1982 | I-56 | A.1.19 |
| A-1983 | I-57 | A.1.19 |
| A-1984 | I-58 | A.1.19 |
| A-1985 | I-59 | A.1.19 |
| A-1986 | I-60 | A.1.19 |
| A-1987 | I-61 | A.1.19 |
| A-1988 | I-62 | A.1.19 |
| A-1989 | I-63 | A.1.19 |
| A-1990 | I-64 | A.1.19 |
| A-1991 | I-65 | A.1.19 |
| A-1992 | I-66 | A.1.19 |
| A-1993 | I-67 | A.1.19 |
| A-1994 | I-68 | A.1.19 |
| A-1995 | I-69 | A.1.19 |
| A-1996 | I-70 | A.1.19 |
| A-1997 | I-71 | A.1.19 |
| A-1998 | I-72 | A.1.19 |
| A-1999 | I-73 | A.1.19 |
| A-2000 | I-74 | A.1.19 |
| A-2001 | I-75 | A.1.19 |
| A-2002 | I-76 | A.1.19 |
| A-2003 | I-77 | A.1.19 |
| A-2004 | I-78 | A.1.19 |

| Mixture | Co. 1 | Co. 2 |
|---|---|---|
| A-2005 | I-79 | A.1.19 |
| A-2006 | I-80 | A.1.19 |
| A-2007 | I-81 | A.1.19 |
| A-2008 | I-82 | A.1.19 |
| A-2009 | I-83 | A.1.19 |
| A-2010 | I-84 | A.1.19 |
| A-2011 | I-85 | A.1.19 |
| A-2012 | I-86 | A.1.19 |
| A-2013 | I-87 | A.1.19 |
| A-2014 | I-88 | A.1.19 |
| A-2015 | I-89 | A.1.19 |
| A-2016 | I-90 | A.1.19 |
| A-2017 | I-91 | A.1.19 |
| A-2018 | I-92 | A.1.19 |
| A-2019 | I-93 | A.1.19 |
| A-2020 | I-94 | A.1.19 |
| A-2021 | I-95 | A.1.19 |
| A-2022 | I-96 | A.1.19 |
| A-2023 | I-97 | A.1.19 |
| A-2024 | I-98 | A.1.19 |
| A-2025 | I-99 | A.1.19 |
| A-2026 | I-100 | A.1.19 |
| A-2027 | I-101 | A.1.19 |
| A-2028 | I-102 | A.1.19 |
| A-2029 | I-103 | A.1.19 |
| A-2030 | I-104 | A.1.19 |
| A-2031 | I-105 | A.1.19 |
| A-2032 | I-106 | A.1.19 |
| A-2033 | I-107 | A.1.19 |
| A-2034 | I-1 | A.2.1 |
| A-2035 | I-2 | A.2.1 |
| A-2036 | I-3 | A.2.1 |
| A-2037 | I-4 | A.2.1 |
| A-2038 | I-5 | A.2.1 |
| A-2039 | I-6 | A.2.1 |
| A-2040 | I-7 | A.2.1 |
| A-2041 | I-8 | A.2.1 |
| A-2042 | I-9 | A.2.1 |
| A-2043 | I-10 | A.2.1 |
| A-2044 | I-11 | A.2.1 |
| A-2045 | I-12 | A.2.1 |

| Mixture | Co. 1 | Co. 2 |
|---|---|---|
| A-2046 | I-13 | A.2.1 |
| A-2047 | I-14 | A.2.1 |
| A-2048 | I-15 | A.2.1 |
| A-2049 | I-16 | A.2.1 |
| A-2050 | I-17 | A.2.1 |
| A-2051 | I-18 | A.2.1 |
| A-2052 | I-19 | A.2.1 |
| A-2053 | I-20 | A.2.1 |
| A-2054 | I-21 | A.2.1 |
| A-2055 | I-22 | A.2.1 |
| A-2056 | I-23 | A.2.1 |
| A-2057 | I-24 | A.2.1 |
| A-2058 | I-25 | A.2.1 |
| A-2059 | I-26 | A.2.1 |
| A-2060 | I-27 | A.2.1 |
| A-2061 | I-28 | A.2.1 |
| A-2062 | I-29 | A.2.1 |
| A-2063 | I-30 | A.2.1 |
| A-2064 | I-31 | A.2.1 |
| A-2065 | I-32 | A.2.1 |
| A-2066 | I-33 | A.2.1 |
| A-2067 | I-34 | A.2.1 |
| A-2068 | I-35 | A.2.1 |
| A-2069 | I-36 | A.2.1 |
| A-2070 | I-37 | A.2.1 |
| A-2071 | I-38 | A.2.1 |
| A-2072 | I-39 | A.2.1 |
| A-2073 | I-40 | A.2.1 |
| A-2074 | I-41 | A.2.1 |
| A-2075 | I-42 | A.2.1 |
| A-2076 | I-43 | A.2.1 |
| A-2077 | I-44 | A.2.1 |
| A-2078 | I-45 | A.2.1 |
| A-2079 | I-46 | A.2.1 |
| A-2080 | I-47 | A.2.1 |
| A-2081 | I-48 | A.2.1 |
| A-2082 | I-49 | A.2.1 |
| A-2083 | I-50 | A.2.1 |
| A-2084 | I-51 | A.2.1 |
| A-2085 | I-52 | A.2.1 |
| A-2086 | I-53 | A.2.1 |

| Mixture | Co. 1 | Co. 2 |
|---|---|---|
| A-2087 | I-54 | A.2.1 |
| A-2088 | I-55 | A.2.1 |
| A-2089 | I-56 | A.2.1 |
| A-2090 | I-57 | A.2.1 |
| A-2091 | I-58 | A.2.1 |
| A-2092 | I-59 | A.2.1 |
| A-2093 | I-60 | A.2.1 |
| A-2094 | I-61 | A.2.1 |
| A-2095 | I-62 | A.2.1 |
| A-2096 | I-63 | A.2.1 |
| A-2097 | I-64 | A.2.1 |
| A-2098 | I-65 | A.2.1 |
| A-2099 | I-66 | A.2.1 |
| A-2100 | I-67 | A.2.1 |
| A-2101 | I-68 | A.2.1 |
| A-2102 | I-69 | A.2.1 |
| A-2103 | I-70 | A.2.1 |
| A-2104 | I-71 | A.2.1 |
| A-2105 | I-72 | A.2.1 |
| A-2106 | I-73 | A.2.1 |
| A-2107 | I-74 | A.2.1 |
| A-2108 | I-75 | A.2.1 |
| A-2109 | I-76 | A.2.1 |
| A-2110 | I-77 | A.2.1 |
| A-2111 | I-78 | A.2.1 |
| A-2112 | I-79 | A.2.1 |
| A-2113 | I-80 | A.2.1 |
| A-2114 | I-81 | A.2.1 |
| A-2115 | I-82 | A.2.1 |
| A-2116 | I-83 | A.2.1 |
| A-2117 | I-84 | A.2.1 |
| A-2118 | I-85 | A.2.1 |
| A-2119 | I-86 | A.2.1 |
| A-2120 | I-87 | A.2.1 |
| A-2121 | I-88 | A.2.1 |
| A-2122 | I-89 | A.2.1 |
| A-2123 | I-90 | A.2.1 |
| A-2124 | I-91 | A.2.1 |
| A-2125 | I-92 | A.2.1 |
| A-2126 | I-93 | A.2.1 |
| A-2127 | I-94 | A.2.1 |

| Mixture | Co. 1 | Co. 2 |
|---|---|---|
| A-2128 | I-95 | A.2.1 |
| A-2129 | I-96 | A.2.1 |
| A-2130 | I-97 | A.2.1 |
| A-2131 | I-98 | A.2.1 |
| A-2132 | I-99 | A.2.1 |
| A-2133 | I-100 | A.2.1 |
| A-2134 | I-101 | A.2.1 |
| A-2135 | I-102 | A.2.1 |
| A-2136 | I-103 | A.2.1 |
| A-2137 | I-104 | A.2.1 |
| A-2138 | I-105 | A.2.1 |
| A-2139 | I-106 | A.2.1 |
| A-2140 | I-107 | A.2.1 |
| A-2141 | I-1 | A.2.2 |
| A-2142 | I-2 | A.2.2 |
| A-2143 | I-3 | A.2.2 |
| A-2144 | I-4 | A.2.2 |
| A-2145 | I-5 | A.2.2 |
| A-2146 | I-6 | A.2.2 |
| A-2147 | I-7 | A.2.2 |
| A-2148 | I-8 | A.2.2 |
| A-2149 | I-9 | A.2.2 |
| A-2150 | I-10 | A.2.2 |
| A-2151 | I-11 | A.2.2 |
| A-2152 | I-12 | A.2.2 |
| A-2153 | I-13 | A.2.2 |
| A-2154 | I-14 | A.2.2 |
| A-2155 | I-15 | A.2.2 |
| A-2156 | I-16 | A.2.2 |
| A-2157 | I-17 | A.2.2 |
| A-2158 | I-18 | A.2.2 |
| A-2159 | I-19 | A.2.2 |
| A-2160 | I-20 | A.2.2 |
| A-2161 | I-21 | A.2.2 |
| A-2162 | I-22 | A.2.2 |
| A-2163 | I-23 | A.2.2 |
| A-2164 | I-24 | A.2.2 |
| A-2165 | I-25 | A.2.2 |
| A-2166 | I-26 | A.2.2 |
| A-2167 | I-27 | A.2.2 |
| A-2168 | I-28 | A.2.2 |

| Mixture | Co. 1 | Co. 2 |
|---|---|---|
| A-2169 | I-29 | A.2.2 |
| A-2170 | I-30 | A.2.2 |
| A-2171 | I-31 | A.2.2 |
| A-2172 | I-32 | A.2.2 |
| A-2173 | I-33 | A.2.2 |
| A-2174 | I-34 | A.2.2 |
| A-2175 | I-35 | A.2.2 |
| A-2176 | I-36 | A.2.2 |
| A-2177 | I-37 | A.2.2 |
| A-2178 | I-38 | A.2.2 |
| A-2179 | I-39 | A.2.2 |
| A-2180 | I-40 | A.2.2 |
| A-2181 | I-41 | A.2.2 |
| A-2182 | I-42 | A.2.2 |
| A-2183 | I-43 | A.2.2 |
| A-2184 | I-44 | A.2.2 |
| A-2185 | I-45 | A.2.2 |
| A-2186 | I-46 | A.2.2 |
| A-2187 | I-47 | A.2.2 |
| A-2188 | I-48 | A.2.2 |
| A-2189 | I-49 | A.2.2 |
| A-2190 | I-50 | A.2.2 |
| A-2191 | I-51 | A.2.2 |
| A-2192 | I-52 | A.2.2 |
| A-2193 | I-53 | A.2.2 |
| A-2194 | I-54 | A.2.2 |
| A-2195 | I-55 | A.2.2 |
| A-2196 | I-56 | A.2.2 |
| A-2197 | I-57 | A.2.2 |
| A-2198 | I-58 | A.2.2 |
| A-2199 | I-59 | A.2.2 |
| A-2200 | I-60 | A.2.2 |
| A-2201 | I-61 | A.2.2 |
| A-2202 | I-62 | A.2.2 |
| A-2203 | I-63 | A.2.2 |
| A-2204 | I-64 | A.2.2 |
| A-2205 | I-65 | A.2.2 |
| A-2206 | I-66 | A.2.2 |
| A-2207 | I-67 | A.2.2 |
| A-2208 | I-68 | A.2.2 |
| A-2209 | I-69 | A.2.2 |

| Mixture | Co. 1 | Co. 2 |
|---|---|---|
| A-2210 | I-70 | A.2.2 |
| A-2211 | I-71 | A.2.2 |
| A-2212 | I-72 | A.2.2 |
| A-2213 | I-73 | A.2.2 |
| A-2214 | I-74 | A.2.2 |
| A-2215 | I-75 | A.2.2 |
| A-2216 | I-76 | A.2.2 |
| A-2217 | I-77 | A.2.2 |
| A-2218 | I-78 | A.2.2 |
| A-2219 | I-79 | A.2.2 |
| A-2220 | I-80 | A.2.2 |
| A-2221 | I-81 | A.2.2 |
| A-2222 | I-82 | A.2.2 |
| A-2223 | I-83 | A.2.2 |
| A-2224 | I-84 | A.2.2 |
| A-2225 | I-85 | A.2.2 |
| A-2226 | I-86 | A.2.2 |
| A-2227 | I-87 | A.2.2 |
| A-2228 | I-88 | A.2.2 |
| A-2229 | I-89 | A.2.2 |
| A-2230 | I-90 | A.2.2 |
| A-2231 | I-91 | A.2.2 |
| A-2232 | I-92 | A.2.2 |
| A-2233 | I-93 | A.2.2 |
| A-2234 | I-94 | A.2.2 |
| A-2235 | I-95 | A.2.2 |
| A-2236 | I-96 | A.2.2 |
| A-2237 | I-97 | A.2.2 |
| A-2238 | I-98 | A.2.2 |
| A-2239 | I-99 | A.2.2 |
| A-2240 | I-100 | A.2.2 |
| A-2241 | I-101 | A.2.2 |
| A-2242 | I-102 | A.2.2 |
| A-2243 | I-103 | A.2.2 |
| A-2244 | I-104 | A.2.2 |
| A-2245 | I-105 | A.2.2 |
| A-2246 | I-106 | A.2.2 |
| A-2247 | I-107 | A.2.2 |
| A-2248 | I-1 | A.2.3 |
| A-2249 | I-2 | A.2.3 |
| A-2250 | I-3 | A.2.3 |

| Mixture | Co. 1 | Co. 2 |
|---|---|---|
| A-2251 | I-4 | A.2.3 |
| A-2252 | I-5 | A.2.3 |
| A-2253 | I-6 | A.2.3 |
| A-2254 | I-7 | A.2.3 |
| A-2255 | I-8 | A.2.3 |
| A-2256 | I-9 | A.2.3 |
| A-2257 | I-10 | A.2.3 |
| A-2258 | I-11 | A.2.3 |
| A-2259 | I-12 | A.2.3 |
| A-2260 | I-13 | A.2.3 |
| A-2261 | I-14 | A.2.3 |
| A-2262 | I-15 | A.2.3 |
| A-2263 | I-16 | A.2.3 |
| A-2264 | I-17 | A.2.3 |
| A-2265 | I-18 | A.2.3 |
| A-2266 | I-19 | A.2.3 |
| A-2267 | I-20 | A.2.3 |
| A-2268 | I-21 | A.2.3 |
| A-2269 | I-22 | A.2.3 |
| A-2270 | I-23 | A.2.3 |
| A-2271 | I-24 | A.2.3 |
| A-2272 | I-25 | A.2.3 |
| A-2273 | I-26 | A.2.3 |
| A-2274 | I-27 | A.2.3 |
| A-2275 | I-28 | A.2.3 |
| A-2276 | I-29 | A.2.3 |
| A-2277 | I-30 | A.2.3 |
| A-2278 | I-31 | A.2.3 |
| A-2279 | I-32 | A.2.3 |
| A-2280 | I-33 | A.2.3 |
| A-2281 | I-34 | A.2.3 |
| A-2282 | I-35 | A.2.3 |
| A-2283 | I-36 | A.2.3 |
| A-2284 | I-37 | A.2.3 |
| A-2285 | I-38 | A.2.3 |
| A-2286 | I-39 | A.2.3 |
| A-2287 | I-40 | A.2.3 |
| A-2288 | I-41 | A.2.3 |
| A-2289 | I-42 | A.2.3 |
| A-2290 | I-43 | A.2.3 |
| A-2291 | I-44 | A.2.3 |

| Mixture | Co. 1 | Co. 2 |
|---|---|---|
| A-2292 | I-45 | A.2.3 |
| A-2293 | I-46 | A.2.3 |
| A-2294 | I-47 | A.2.3 |
| A-2295 | I-48 | A.2.3 |
| A-2296 | I-49 | A.2.3 |
| A-2297 | I-50 | A.2.3 |
| A-2298 | I-51 | A.2.3 |
| A-2299 | I-52 | A.2.3 |
| A-2300 | I-53 | A.2.3 |
| A-2301 | I-54 | A.2.3 |
| A-2302 | I-55 | A.2.3 |
| A-2303 | I-56 | A.2.3 |
| A-2304 | I-57 | A.2.3 |
| A-2305 | I-58 | A.2.3 |
| A-2306 | I-59 | A.2.3 |
| A-2307 | I-60 | A.2.3 |
| A-2308 | I-61 | A.2.3 |
| A-2309 | I-62 | A.2.3 |
| A-2310 | I-63 | A.2.3 |
| A-2311 | I-64 | A.2.3 |
| A-2312 | I-65 | A.2.3 |
| A-2313 | I-66 | A.2.3 |
| A-2314 | I-67 | A.2.3 |
| A-2315 | I-68 | A.2.3 |
| A-2316 | I-69 | A.2.3 |
| A-2317 | I-70 | A.2.3 |
| A-2318 | I-71 | A.2.3 |
| A-2319 | I-72 | A.2.3 |
| A-2320 | I-73 | A.2.3 |
| A-2321 | I-74 | A.2.3 |
| A-2322 | I-75 | A.2.3 |
| A-2323 | I-76 | A.2.3 |
| A-2324 | I-77 | A.2.3 |
| A-2325 | I-78 | A.2.3 |
| A-2326 | I-79 | A.2.3 |
| A-2327 | I-80 | A.2.3 |
| A-2328 | I-81 | A.2.3 |
| A-2329 | I-82 | A.2.3 |
| A-2330 | I-83 | A.2.3 |
| A-2331 | I-84 | A.2.3 |
| A-2332 | I-85 | A.2.3 |

| Mixture | Co. 1 | Co. 2 |
|---|---|---|
| A-2333 | I-86 | A.2.3 |
| A-2334 | I-87 | A.2.3 |
| A-2335 | I-88 | A.2.3 |
| A-2336 | I-89 | A.2.3 |
| A-2337 | I-90 | A.2.3 |
| A-2338 | I-91 | A.2.3 |
| A-2339 | I-92 | A.2.3 |
| A-2340 | I-93 | A.2.3 |
| A-2341 | I-94 | A.2.3 |
| A-2342 | I-95 | A.2.3 |
| A-2343 | I-96 | A.2.3 |
| A-2344 | I-97 | A.2.3 |
| A-2345 | I-98 | A.2.3 |
| A-2346 | I-99 | A.2.3 |
| A-2347 | I-100 | A.2.3 |
| A-2348 | I-101 | A.2.3 |
| A-2349 | I-102 | A.2.3 |
| A-2350 | I-103 | A.2.3 |
| A-2351 | I-104 | A.2.3 |
| A-2352 | I-105 | A.2.3 |
| A-2353 | I-106 | A.2.3 |
| A-2354 | I-107 | A.2.3 |
| A-2355 | I-1 | B.1.1 |
| A-2356 | I-2 | B.1.1 |
| A-2357 | I-3 | B.1.1 |
| A-2358 | I-4 | B.1.1 |
| A-2359 | I-5 | B.1.1 |
| A-2360 | I-6 | B.1.1 |
| A-2361 | I-7 | B.1.1 |
| A-2362 | I-8 | B.1.1 |
| A-2363 | I-9 | B.1.1 |
| A-2364 | I-10 | B.1.1 |
| A-2365 | I-11 | B.1.1 |
| A-2366 | I-12 | B.1.1 |
| A-2367 | I-13 | B.1.1 |
| A-2368 | I-14 | B.1.1 |
| A-2369 | I-15 | B.1.1 |
| A-2370 | I-16 | B.1.1 |
| A-2371 | I-17 | B.1.1 |
| A-2372 | I-18 | B.1.1 |
| A-2373 | I-19 | B.1.1 |

| Mixture | Co. 1 | Co. 2 |
|---|---|---|
| A-2374 | I-20 | B.1.1 |
| A-2375 | I-21 | B.1.1 |
| A-2376 | I-22 | B.1.1 |
| A-2377 | I-23 | B.1.1 |
| A-2378 | I-24 | B.1.1 |
| A-2379 | I-25 | B.1.1 |
| A-2380 | I-26 | B.1.1 |
| A-2381 | I-27 | B.1.1 |
| A-2382 | I-28 | B.1.1 |
| A-2383 | I-29 | B.1.1 |
| A-2384 | I-30 | B.1.1 |
| A-2385 | I-31 | B.1.1 |
| A-2386 | I-32 | B.1.1 |
| A-2387 | I-33 | B.1.1 |
| A-2388 | I-34 | B.1.1 |
| A-2389 | I-35 | B.1.1 |
| A-2390 | I-36 | B.1.1 |
| A-2391 | I-37 | B.1.1 |
| A-2392 | I-38 | B.1.1 |
| A-2393 | I-39 | B.1.1 |
| A-2394 | I-40 | B.1.1 |
| A-2395 | I-41 | B.1.1 |
| A-2396 | I-42 | B.1.1 |
| A-2397 | I-43 | B.1.1 |
| A-2398 | I-44 | B.1.1 |
| A-2399 | I-45 | B.1.1 |
| A-2400 | I-46 | B.1.1 |
| A-2401 | I-47 | B.1.1 |
| A-2402 | I-48 | B.1.1 |
| A-2403 | I-49 | B.1.1 |
| A-2404 | I-50 | B.1.1 |
| A-2405 | I-51 | B.1.1 |
| A-2406 | I-52 | B.1.1 |
| A-2407 | I-53 | B.1.1 |
| A-2408 | I-54 | B.1.1 |
| A-2409 | I-55 | B.1.1 |
| A-2410 | I-56 | B.1.1 |
| A-2411 | I-57 | B.1.1 |
| A-2412 | I-58 | B.1.1 |
| A-2413 | I-59 | B.1.1 |
| A-2414 | I-60 | B.1.1 |

| Mixture | Co. 1 | Co. 2 |
|---|---|---|
| A-2415 | I-61 | B.1.1 |
| A-2416 | I-62 | B.1.1 |
| A-2417 | I-63 | B.1.1 |
| A-2418 | I-64 | B.1.1 |
| A-2419 | I-65 | B.1.1 |
| A-2420 | I-66 | B.1.1 |
| A-2421 | I-67 | B.1.1 |
| A-2422 | I-68 | B.1.1 |
| A-2423 | I-69 | B.1.1 |
| A-2424 | I-70 | B.1.1 |
| A-2425 | I-71 | B.1.1 |
| A-2426 | I-72 | B.1.1 |
| A-2427 | I-73 | B.1.1 |
| A-2428 | I-74 | B.1.1 |
| A-2429 | I-75 | B.1.1 |
| A-2430 | I-76 | B.1.1 |
| A-2431 | I-77 | B.1.1 |
| A-2432 | I-78 | B.1.1 |
| A-2433 | I-79 | B.1.1 |
| A-2434 | I-80 | B.1.1 |
| A-2435 | I-81 | B.1.1 |
| A-2436 | I-82 | B.1.1 |
| A-2437 | I-83 | B.1.1 |
| A-2438 | I-84 | B.1.1 |
| A-2439 | I-85 | B.1.1 |
| A-2440 | I-86 | B.1.1 |
| A-2441 | I-87 | B.1.1 |
| A-2442 | I-88 | B.1.1 |
| A-2443 | I-89 | B.1.1 |
| A-2444 | I-90 | B.1.1 |
| A-2445 | I-91 | B.1.1 |
| A-2446 | I-92 | B.1.1 |
| A-2447 | I-93 | B.1.1 |
| A-2448 | I-94 | B.1.1 |
| A-2449 | I-95 | B.1.1 |
| A-2450 | I-96 | B.1.1 |
| A-2451 | I-97 | B.1.1 |
| A-2452 | I-98 | B.1.1 |
| A-2453 | I-99 | B.1.1 |
| A-2454 | I-100 | B.1.1 |
| A-2455 | I-101 | B.1.1 |

| Mixture | Co. 1 | Co. 2 |
|---|---|---|
| A-2456 | I-102 | B.1.1 |
| A-2457 | I-103 | B.1.1 |
| A-2458 | I-104 | B.1.1 |
| A-2459 | I-105 | B.1.1 |
| A-2460 | I-106 | B.1.1 |
| A-2461 | I-107 | B.1.1 |
| A-2462 | I-1 | B.1.2 |
| A-2463 | I-2 | B.1.2 |
| A-2464 | I-3 | B.1.2 |
| A-2465 | I-4 | B.1.2 |
| A-2466 | I-5 | B.1.2 |
| A-2467 | I-6 | B.1.2 |
| A-2468 | I-7 | B.1.2 |
| A-2469 | I-8 | B.1.2 |
| A-2470 | I-9 | B.1.2 |
| A-2471 | I-10 | B.1.2 |
| A-2472 | I-11 | B.1.2 |
| A-2473 | I-12 | B.1.2 |
| A-2474 | I-13 | B.1.2 |
| A-2475 | I-14 | B.1.2 |
| A-2476 | I-15 | B.1.2 |
| A-2477 | I-16 | B.1.2 |
| A-2478 | I-17 | B.1.2 |
| A-2479 | I-18 | B.1.2 |
| A-2480 | I-19 | B.1.2 |
| A-2481 | I-20 | B.1.2 |
| A-2482 | I-21 | B.1.2 |
| A-2483 | I-22 | B.1.2 |
| A-2484 | I-23 | B.1.2 |
| A-2485 | I-24 | B.1.2 |
| A-2486 | I-25 | B.1.2 |
| A-2487 | I-26 | B.1.2 |
| A-2488 | I-27 | B.1.2 |
| A-2489 | I-28 | B.1.2 |
| A-2490 | I-29 | B.1.2 |
| A-2491 | I-30 | B.1.2 |
| A-2492 | I-31 | B.1.2 |
| A-2493 | I-32 | B.1.2 |
| A-2494 | I-33 | B.1.2 |
| A-2495 | I-34 | B.1.2 |
| A-2496 | I-35 | B.1.2 |

| Mixture | Co. 1 | Co. 2 |
|---|---|---|
| A-2497 | I-36 | B.1.2 |
| A-2498 | I-37 | B.1.2 |
| A-2499 | I-38 | B.1.2 |
| A-2500 | I-39 | B.1.2 |
| A-2501 | I-40 | B.1.2 |
| A-2502 | I-41 | B.1.2 |
| A-2503 | I-42 | B.1.2 |
| A-2504 | I-43 | B.1.2 |
| A-2505 | I-44 | B.1.2 |
| A-2506 | I-45 | B.1.2 |
| A-2507 | I-46 | B.1.2 |
| A-2508 | I-47 | B.1.2 |
| A-2509 | I-48 | B.1.2 |
| A-2510 | I-49 | B.1.2 |
| A-2511 | I-50 | B.1.2 |
| A-2512 | I-51 | B.1.2 |
| A-2513 | I-52 | B.1.2 |
| A-2514 | I-53 | B.1.2 |
| A-2515 | I-54 | B.1.2 |
| A-2516 | I-55 | B.1.2 |
| A-2517 | I-56 | B.1.2 |
| A-2518 | I-57 | B.1.2 |
| A-2519 | I-58 | B.1.2 |
| A-2520 | I-59 | B.1.2 |
| A-2521 | I-60 | B.1.2 |
| A-2522 | I-61 | B.1.2 |
| A-2523 | I-62 | B.1.2 |
| A-2524 | I-63 | B.1.2 |
| A-2525 | I-64 | B.1.2 |
| A-2526 | I-65 | B.1.2 |
| A-2527 | I-66 | B.1.2 |
| A-2528 | I-67 | B.1.2 |
| A-2529 | I-68 | B.1.2 |
| A-2530 | I-69 | B.1.2 |
| A-2531 | I-70 | B.1.2 |
| A-2532 | I-71 | B.1.2 |
| A-2533 | I-72 | B.1.2 |
| A-2534 | I-73 | B.1.2 |
| A-2535 | I-74 | B.1.2 |
| A-2536 | I-75 | B.1.2 |
| A-2537 | I-76 | B.1.2 |
| A-2538 | I-77 | B.1.2 |
| A-2539 | I-78 | B.1.2 |
| A-2540 | I-79 | B.1.2 |
| A-2541 | I-80 | B.1.2 |
| A-2542 | I-81 | B.1.2 |
| A-2543 | I-82 | B.1.2 |
| A-2544 | I-83 | B.1.2 |
| A-2545 | I-84 | B.1.2 |
| A-2546 | I-85 | B.1.2 |
| A-2547 | I-86 | B.1.2 |
| A-2548 | I-87 | B.1.2 |
| A-2549 | I-88 | B.1.2 |
| A-2550 | I-89 | B.1.2 |
| A-2551 | I-90 | B.1.2 |
| A-2552 | I-91 | B.1.2 |
| A-2553 | I-92 | B.1.2 |
| A-2554 | I-93 | B.1.2 |
| A-2555 | I-94 | B.1.2 |
| A-2556 | I-95 | B.1.2 |
| A-2557 | I-96 | B.1.2 |
| A-2558 | I-97 | B.1.2 |
| A-2559 | I-98 | B.1.2 |
| A-2560 | I-99 | B.1.2 |
| A-2561 | I-100 | B.1.2 |
| A-2562 | I-101 | B.1.2 |
| A-2563 | I-102 | B.1.2 |
| A-2564 | I-103 | B.1.2 |
| A-2565 | I-104 | B.1.2 |
| A-2566 | I-105 | B.1.2 |
| A-2567 | I-106 | B.1.2 |
| A-2568 | I-107 | B.1.2 |
| A-2569 | I-1 | B.1.3 |
| A-2570 | I-2 | B.1.3 |
| A-2571 | I-3 | B.1.3 |
| A-2572 | I-4 | B.1.3 |
| A-2573 | I-5 | B.1.3 |
| A-2574 | I-6 | B.1.3 |
| A-2575 | I-7 | B.1.3 |
| A-2576 | I-8 | B.1.3 |
| A-2577 | I-9 | B.1.3 |
| A-2578 | I-10 | B.1.3 |
| A-2579 | I-11 | B.1.3 |
| A-2580 | I-12 | B.1.3 |
| A-2581 | I-13 | B.1.3 |
| A-2582 | I-14 | B.1.3 |
| A-2583 | I-15 | B.1.3 |
| A-2584 | I-16 | B.1.3 |
| A-2585 | I-17 | B.1.3 |
| A-2586 | I-18 | B.1.3 |
| A-2587 | I-19 | B.1.3 |
| A-2588 | I-20 | B.1.3 |
| A-2589 | I-21 | B.1.3 |
| A-2590 | I-22 | B.1.3 |
| A-2591 | I-23 | B.1.3 |
| A-2592 | I-24 | B.1.3 |
| A-2593 | I-25 | B.1.3 |
| A-2594 | I-26 | B.1.3 |
| A-2595 | I-27 | B.1.3 |
| A-2596 | I-28 | B.1.3 |
| A-2597 | I-29 | B.1.3 |
| A-2598 | I-30 | B.1.3 |
| A-2599 | I-31 | B.1.3 |
| A-2600 | I-32 | B.1.3 |
| A-2601 | I-33 | B.1.3 |
| A-2602 | I-34 | B.1.3 |
| A-2603 | I-35 | B.1.3 |
| A-2604 | I-36 | B.1.3 |
| A-2605 | I-37 | B.1.3 |
| A-2606 | I-38 | B.1.3 |
| A-2607 | I-39 | B.1.3 |
| A-2608 | I-40 | B.1.3 |
| A-2609 | I-41 | B.1.3 |
| A-2610 | I-42 | B.1.3 |
| A-2611 | I-43 | B.1.3 |
| A-2612 | I-44 | B.1.3 |
| A-2613 | I-45 | B.1.3 |
| A-2614 | I-46 | B.1.3 |
| A-2615 | I-47 | B.1.3 |
| A-2616 | I-48 | B.1.3 |
| A-2617 | I-49 | B.1.3 |
| A-2618 | I-50 | B.1.3 |
| A-2619 | I-51 | B.1.3 |

| Mixture | Co. 1 | Co. 2 |
|---|---|---|
| A-2620 | I-52 | B.1.3 |
| A-2621 | I-53 | B.1.3 |
| A-2622 | I-54 | B.1.3 |
| A-2623 | I-55 | B.1.3 |
| A-2624 | I-56 | B.1.3 |
| A-2625 | I-57 | B.1.3 |
| A-2626 | I-58 | B.1.3 |
| A-2627 | I-59 | B.1.3 |
| A-2628 | I-60 | B.1.3 |
| A-2629 | I-61 | B.1.3 |
| A-2630 | I-62 | B.1.3 |
| A-2631 | I-63 | B.1.3 |
| A-2632 | I-64 | B.1.3 |
| A-2633 | I-65 | B.1.3 |
| A-2634 | I-66 | B.1.3 |
| A-2635 | I-67 | B.1.3 |
| A-2636 | I-68 | B.1.3 |
| A-2637 | I-69 | B.1.3 |
| A-2638 | I-70 | B.1.3 |
| A-2639 | I-71 | B.1.3 |
| A-2640 | I-72 | B.1.3 |
| A-2641 | I-73 | B.1.3 |
| A-2642 | I-74 | B.1.3 |
| A-2643 | I-75 | B.1.3 |
| A-2644 | I-76 | B.1.3 |
| A-2645 | I-77 | B.1.3 |
| A-2646 | I-78 | B.1.3 |
| A-2647 | I-79 | B.1.3 |
| A-2648 | I-80 | B.1.3 |
| A-2649 | I-81 | B.1.3 |
| A-2650 | I-82 | B.1.3 |
| A-2651 | I-83 | B.1.3 |
| A-2652 | I-84 | B.1.3 |
| A-2653 | I-85 | B.1.3 |
| A-2654 | I-86 | B.1.3 |
| A-2655 | I-87 | B.1.3 |
| A-2656 | I-88 | B.1.3 |
| A-2657 | I-89 | B.1.3 |
| A-2658 | I-90 | B.1.3 |
| A-2659 | I-91 | B.1.3 |
| A-2660 | I-92 | B.1.3 |

| Mixture | Co. 1 | Co. 2 |
|---|---|---|
| A-2661 | I-93 | B.1.3 |
| A-2662 | I-94 | B.1.3 |
| A-2663 | I-95 | B.1.3 |
| A-2664 | I-96 | B.1.3 |
| A-2665 | I-97 | B.1.3 |
| A-2666 | I-98 | B.1.3 |
| A-2667 | I-99 | B.1.3 |
| A-2668 | I-100 | B.1.3 |
| A-2669 | I-101 | B.1.3 |
| A-2670 | I-102 | B.1.3 |
| A-2671 | I-103 | B.1.3 |
| A-2672 | I-104 | B.1.3 |
| A-2673 | I-105 | B.1.3 |
| A-2674 | I-106 | B.1.3 |
| A-2675 | I-107 | B.1.3 |
| A-2676 | I-1 | B.1.4 |
| A-2677 | I-2 | B.1.4 |
| A-2678 | I-3 | B.1.4 |
| A-2679 | I-4 | B.1.4 |
| A-2680 | I-5 | B.1.4 |
| A-2681 | I-6 | B.1.4 |
| A-2682 | I-7 | B.1.4 |
| A-2683 | I-8 | B.1.4 |
| A-2684 | I-9 | B.1.4 |
| A-2685 | I-10 | B.1.4 |
| A-2686 | I-11 | B.1.4 |
| A-2687 | I-12 | B.1.4 |
| A-2688 | I-13 | B.1.4 |
| A-2689 | I-14 | B.1.4 |
| A-2690 | I-15 | B.1.4 |
| A-2691 | I-16 | B.1.4 |
| A-2692 | I-17 | B.1.4 |
| A-2693 | I-18 | B.1.4 |
| A-2694 | I-19 | B.1.4 |
| A-2695 | I-20 | B.1.4 |
| A-2696 | I-21 | B.1.4 |
| A-2697 | I-22 | B.1.4 |
| A-2698 | I-23 | B.1.4 |
| A-2699 | I-24 | B.1.4 |
| A-2700 | I-25 | B.1.4 |
| A-2701 | I-26 | B.1.4 |

| Mixture | Co. 1 | Co. 2 |
|---|---|---|
| A-2702 | I-27 | B.1.4 |
| A-2703 | I-28 | B.1.4 |
| A-2704 | I-29 | B.1.4 |
| A-2705 | I-30 | B.1.4 |
| A-2706 | I-31 | B.1.4 |
| A-2707 | I-32 | B.1.4 |
| A-2708 | I-33 | B.1.4 |
| A-2709 | I-34 | B.1.4 |
| A-2710 | I-35 | B.1.4 |
| A-2711 | I-36 | B.1.4 |
| A-2712 | I-37 | B.1.4 |
| A-2713 | I-38 | B.1.4 |
| A-2714 | I-39 | B.1.4 |
| A-2715 | I-40 | B.1.4 |
| A-2716 | I-41 | B.1.4 |
| A-2717 | I-42 | B.1.4 |
| A-2718 | I-43 | B.1.4 |
| A-2719 | I-44 | B.1.4 |
| A-2720 | I-45 | B.1.4 |
| A-2721 | I-46 | B.1.4 |
| A-2722 | I-47 | B.1.4 |
| A-2723 | I-48 | B.1.4 |
| A-2724 | I-49 | B.1.4 |
| A-2725 | I-50 | B.1.4 |
| A-2726 | I-51 | B.1.4 |
| A-2727 | I-52 | B.1.4 |
| A-2728 | I-53 | B.1.4 |
| A-2729 | I-54 | B.1.4 |
| A-2730 | I-55 | B.1.4 |
| A-2731 | I-56 | B.1.4 |
| A-2732 | I-57 | B.1.4 |
| A-2733 | I-58 | B.1.4 |
| A-2734 | I-59 | B.1.4 |
| A-2735 | I-60 | B.1.4 |
| A-2736 | I-61 | B.1.4 |
| A-2737 | I-62 | B.1.4 |
| A-2738 | I-63 | B.1.4 |
| A-2739 | I-64 | B.1.4 |
| A-2740 | I-65 | B.1.4 |
| A-2741 | I-66 | B.1.4 |
| A-2742 | I-67 | B.1.4 |

| Mixture | Co. 1 | Co. 2 |
|---|---|---|
| A-2743 | I-68 | B.1.4 |
| A-2744 | I-69 | B.1.4 |
| A-2745 | I-70 | B.1.4 |
| A-2746 | I-71 | B.1.4 |
| A-2747 | I-72 | B.1.4 |
| A-2748 | I-73 | B.1.4 |
| A-2749 | I-74 | B.1.4 |
| A-2750 | I-75 | B.1.4 |
| A-2751 | I-76 | B.1.4 |
| A-2752 | I-77 | B.1.4 |
| A-2753 | I-78 | B.1.4 |
| A-2754 | I-79 | B.1.4 |
| A-2755 | I-80 | B.1.4 |
| A-2756 | I-81 | B.1.4 |
| A-2757 | I-82 | B.1.4 |
| A-2758 | I-83 | B.1.4 |
| A-2759 | I-84 | B.1.4 |
| A-2760 | I-85 | B.1.4 |
| A-2761 | I-86 | B.1.4 |
| A-2762 | I-87 | B.1.4 |
| A-2763 | I-88 | B.1.4 |
| A-2764 | I-89 | B.1.4 |
| A-2765 | I-90 | B.1.4 |
| A-2766 | I-91 | B.1.4 |
| A-2767 | I-92 | B.1.4 |
| A-2768 | I-93 | B.1.4 |
| A-2769 | I-94 | B.1.4 |
| A-2770 | I-95 | B.1.4 |
| A-2771 | I-96 | B.1.4 |
| A-2772 | I-97 | B.1.4 |
| A-2773 | I-98 | B.1.4 |
| A-2774 | I-99 | B.1.4 |
| A-2775 | I-100 | B.1.4 |
| A-2776 | I-101 | B.1.4 |
| A-2777 | I-102 | B.1.4 |
| A-2778 | I-103 | B.1.4 |
| A-2779 | I-104 | B.1.4 |
| A-2780 | I-105 | B.1.4 |
| A-2781 | I-106 | B.1.4 |
| A-2782 | I-107 | B.1.4 |
| A-2783 | I-1 | B.1.5 |

| Mixture | Co. 1 | Co. 2 |
|---|---|---|
| A-2784 | I-2 | B.1.5 |
| A-2785 | I-3 | B.1.5 |
| A-2786 | I-4 | B.1.5 |
| A-2787 | I-5 | B.1.5 |
| A-2788 | I-6 | B.1.5 |
| A-2789 | I-7 | B.1.5 |
| A-2790 | I-8 | B.1.5 |
| A-2791 | I-9 | B.1.5 |
| A-2792 | I-10 | B.1.5 |
| A-2793 | I-11 | B.1.5 |
| A-2794 | I-12 | B.1.5 |
| A-2795 | I-13 | B.1.5 |
| A-2796 | I-14 | B.1.5 |
| A-2797 | I-15 | B.1.5 |
| A-2798 | I-16 | B.1.5 |
| A-2799 | I-17 | B.1.5 |
| A-2800 | I-18 | B.1.5 |
| A-2801 | I-19 | B.1.5 |
| A-2802 | I-20 | B.1.5 |
| A-2803 | I-21 | B.1.5 |
| A-2804 | I-22 | B.1.5 |
| A-2805 | I-23 | B.1.5 |
| A-2806 | I-24 | B.1.5 |
| A-2807 | I-25 | B.1.5 |
| A-2808 | I-26 | B.1.5 |
| A-2809 | I-27 | B.1.5 |
| A-2810 | I-28 | B.1.5 |
| A-2811 | I-29 | B.1.5 |
| A-2812 | I-30 | B.1.5 |
| A-2813 | I-31 | B.1.5 |
| A-2814 | I-32 | B.1.5 |
| A-2815 | I-33 | B.1.5 |
| A-2816 | I-34 | B.1.5 |
| A-2817 | I-35 | B.1.5 |
| A-2818 | I-36 | B.1.5 |
| A-2819 | I-37 | B.1.5 |
| A-2820 | I-38 | B.1.5 |
| A-2821 | I-39 | B.1.5 |
| A-2822 | I-40 | B.1.5 |
| A-2823 | I-41 | B.1.5 |
| A-2824 | I-42 | B.1.5 |

| Mixture | Co. 1 | Co. 2 |
|---|---|---|
| A-2825 | I-43 | B.1.5 |
| A-2826 | I-44 | B.1.5 |
| A-2827 | I-45 | B.1.5 |
| A-2828 | I-46 | B.1.5 |
| A-2829 | I-47 | B.1.5 |
| A-2830 | I-48 | B.1.5 |
| A-2831 | I-49 | B.1.5 |
| A-2832 | I-50 | B.1.5 |
| A-2833 | I-51 | B.1.5 |
| A-2834 | I-52 | B.1.5 |
| A-2835 | I-53 | B.1.5 |
| A-2836 | I-54 | B.1.5 |
| A-2837 | I-55 | B.1.5 |
| A-2838 | I-56 | B.1.5 |
| A-2839 | I-57 | B.1.5 |
| A-2840 | I-58 | B.1.5 |
| A-2841 | I-59 | B.1.5 |
| A-2842 | I-60 | B.1.5 |
| A-2843 | I-61 | B.1.5 |
| A-2844 | I-62 | B.1.5 |
| A-2845 | I-63 | B.1.5 |
| A-2846 | I-64 | B.1.5 |
| A-2847 | I-65 | B.1.5 |
| A-2848 | I-66 | B.1.5 |
| A-2849 | I-67 | B.1.5 |
| A-2850 | I-68 | B.1.5 |
| A-2851 | I-69 | B.1.5 |
| A-2852 | I-70 | B.1.5 |
| A-2853 | I-71 | B.1.5 |
| A-2854 | I-72 | B.1.5 |
| A-2855 | I-73 | B.1.5 |
| A-2856 | I-74 | B.1.5 |
| A-2857 | I-75 | B.1.5 |
| A-2858 | I-76 | B.1.5 |
| A-2859 | I-77 | B.1.5 |
| A-2860 | I-78 | B.1.5 |
| A-2861 | I-79 | B.1.5 |
| A-2862 | I-80 | B.1.5 |
| A-2863 | I-81 | B.1.5 |
| A-2864 | I-82 | B.1.5 |
| A-2865 | I-83 | B.1.5 |

| Mixture | Co. 1 | Co. 2 |
|---|---|---|
| A-2866 | I-84 | B.1.5 |
| A-2867 | I-85 | B.1.5 |
| A-2868 | I-86 | B.1.5 |
| A-2869 | I-87 | B.1.5 |
| A-2870 | I-88 | B.1.5 |
| A-2871 | I-89 | B.1.5 |
| A-2872 | I-90 | B.1.5 |
| A-2873 | I-91 | B.1.5 |
| A-2874 | I-92 | B.1.5 |
| A-2875 | I-93 | B.1.5 |
| A-2876 | I-94 | B.1.5 |
| A-2877 | I-95 | B.1.5 |
| A-2878 | I-96 | B.1.5 |
| A-2879 | I-97 | B.1.5 |
| A-2880 | I-98 | B.1.5 |
| A-2881 | I-99 | B.1.5 |
| A-2882 | I-100 | B.1.5 |
| A-2883 | I-101 | B.1.5 |
| A-2884 | I-102 | B.1.5 |
| A-2885 | I-103 | B.1.5 |
| A-2886 | I-104 | B.1.5 |
| A-2887 | I-105 | B.1.5 |
| A-2888 | I-106 | B.1.5 |
| A-2889 | I-107 | B.1.5 |
| A-2890 | I-1 | B.1.6 |
| A-2891 | I-2 | B.1.6 |
| A-2892 | I-3 | B.1.6 |
| A-2893 | I-4 | B.1.6 |
| A-2894 | I-5 | B.1.6 |
| A-2895 | I-6 | B.1.6 |
| A-2896 | I-7 | B.1.6 |
| A-2897 | I-8 | B.1.6 |
| A-2898 | I-9 | B.1.6 |
| A-2899 | I-10 | B.1.6 |
| A-2900 | I-11 | B.1.6 |
| A-2901 | I-12 | B.1.6 |
| A-2902 | I-13 | B.1.6 |
| A-2903 | I-14 | B.1.6 |
| A-2904 | I-15 | B.1.6 |
| A-2905 | I-16 | B.1.6 |
| A-2906 | I-17 | B.1.6 |

| Mixture | Co. 1 | Co. 2 |
|---|---|---|
| A-2907 | I-18 | B.1.6 |
| A-2908 | I-19 | B.1.6 |
| A-2909 | I-20 | B.1.6 |
| A-2910 | I-21 | B.1.6 |
| A-2911 | I-22 | B.1.6 |
| A-2912 | I-23 | B.1.6 |
| A-2913 | I-24 | B.1.6 |
| A-2914 | I-25 | B.1.6 |
| A-2915 | I-26 | B.1.6 |
| A-2916 | I-27 | B.1.6 |
| A-2917 | I-28 | B.1.6 |
| A-2918 | I-29 | B.1.6 |
| A-2919 | I-30 | B.1.6 |
| A-2920 | I-31 | B.1.6 |
| A-2921 | I-32 | B.1.6 |
| A-2922 | I-33 | B.1.6 |
| A-2923 | I-34 | B.1.6 |
| A-2924 | I-35 | B.1.6 |
| A-2925 | I-36 | B.1.6 |
| A-2926 | I-37 | B.1.6 |
| A-2927 | I-38 | B.1.6 |
| A-2928 | I-39 | B.1.6 |
| A-2929 | I-40 | B.1.6 |
| A-2930 | I-41 | B.1.6 |
| A-2931 | I-42 | B.1.6 |
| A-2932 | I-43 | B.1.6 |
| A-2933 | I-44 | B.1.6 |
| A-2934 | I-45 | B.1.6 |
| A-2935 | I-46 | B.1.6 |
| A-2936 | I-47 | B.1.6 |
| A-2937 | I-48 | B.1.6 |
| A-2938 | I-49 | B.1.6 |
| A-2939 | I-50 | B.1.6 |
| A-2940 | I-51 | B.1.6 |
| A-2941 | I-52 | B.1.6 |
| A-2942 | I-53 | B.1.6 |
| A-2943 | I-54 | B.1.6 |
| A-2944 | I-55 | B.1.6 |
| A-2945 | I-56 | B.1.6 |
| A-2946 | I-57 | B.1.6 |
| A-2947 | I-58 | B.1.6 |

| Mixture | Co. 1 | Co. 2 |
|---|---|---|
| A-2948 | I-59 | B.1.6 |
| A-2949 | I-60 | B.1.6 |
| A-2950 | I-61 | B.1.6 |
| A-2951 | I-62 | B.1.6 |
| A-2952 | I-63 | B.1.6 |
| A-2953 | I-64 | B.1.6 |
| A-2954 | I-65 | B.1.6 |
| A-2955 | I-66 | B.1.6 |
| A-2956 | I-67 | B.1.6 |
| A-2957 | I-68 | B.1.6 |
| A-2958 | I-69 | B.1.6 |
| A-2959 | I-70 | B.1.6 |
| A-2960 | I-71 | B.1.6 |
| A-2961 | I-72 | B.1.6 |
| A-2962 | I-73 | B.1.6 |
| A-2963 | I-74 | B.1.6 |
| A-2964 | I-75 | B.1.6 |
| A-2965 | I-76 | B.1.6 |
| A-2966 | I-77 | B.1.6 |
| A-2967 | I-78 | B.1.6 |
| A-2968 | I-79 | B.1.6 |
| A-2969 | I-80 | B.1.6 |
| A-2970 | I-81 | B.1.6 |
| A-2971 | I-82 | B.1.6 |
| A-2972 | I-83 | B.1.6 |
| A-2973 | I-84 | B.1.6 |
| A-2974 | I-85 | B.1.6 |
| A-2975 | I-86 | B.1.6 |
| A-2976 | I-87 | B.1.6 |
| A-2977 | I-88 | B.1.6 |
| A-2978 | I-89 | B.1.6 |
| A-2979 | I-90 | B.1.6 |
| A-2980 | I-91 | B.1.6 |
| A-2981 | I-92 | B.1.6 |
| A-2982 | I-93 | B.1.6 |
| A-2983 | I-94 | B.1.6 |
| A-2984 | I-95 | B.1.6 |
| A-2985 | I-96 | B.1.6 |
| A-2986 | I-97 | B.1.6 |
| A-2987 | I-98 | B.1.6 |
| A-2988 | I-99 | B.1.6 |

| Mixture | Co. 1 | Co. 2 |
|---|---|---|
| A-2989 | I-100 | B.1.6 |
| A-2990 | I-101 | B.1.6 |
| A-2991 | I-102 | B.1.6 |
| A-2992 | I-103 | B.1.6 |
| A-2993 | I-104 | B.1.6 |
| A-2994 | I-105 | B.1.6 |
| A-2995 | I-106 | B.1.6 |
| A-2996 | I-107 | B.1.6 |
| A-2997 | I-1 | B.1.7 |
| A-2998 | I-2 | B.1.7 |
| A-2999 | I-3 | B.1.7 |
| A-3000 | I-4 | B.1.7 |
| A-3001 | I-5 | B.1.7 |
| A-3002 | I-6 | B.1.7 |
| A-3003 | I-7 | B.1.7 |
| A-3004 | I-8 | B.1.7 |
| A-3005 | I-9 | B.1.7 |
| A-3006 | I-10 | B.1.7 |
| A-3007 | I-11 | B.1.7 |
| A-3008 | I-12 | B.1.7 |
| A-3009 | I-13 | B.1.7 |
| A-3010 | I-14 | B.1.7 |
| A-3011 | I-15 | B.1.7 |
| A-3012 | I-16 | B.1.7 |
| A-3013 | I-17 | B.1.7 |
| A-3014 | I-18 | B.1.7 |
| A-3015 | I-19 | B.1.7 |
| A-3016 | I-20 | B.1.7 |
| A-3017 | I-21 | B.1.7 |
| A-3018 | I-22 | B.1.7 |
| A-3019 | I-23 | B.1.7 |
| A-3020 | I-24 | B.1.7 |
| A-3021 | I-25 | B.1.7 |
| A-3022 | I-26 | B.1.7 |
| A-3023 | I-27 | B.1.7 |
| A-3024 | I-28 | B.1.7 |
| A-3025 | I-29 | B.1.7 |
| A-3026 | I-30 | B.1.7 |
| A-3027 | I-31 | B.1.7 |
| A-3028 | I-32 | B.1.7 |
| A-3029 | I-33 | B.1.7 |

| Mixture | Co. 1 | Co. 2 |
|---|---|---|
| A-3030 | I-34 | B.1.7 |
| A-3031 | I-35 | B.1.7 |
| A-3032 | I-36 | B.1.7 |
| A-3033 | I-37 | B.1.7 |
| A-3034 | I-38 | B.1.7 |
| A-3035 | I-39 | B.1.7 |
| A-3036 | I-40 | B.1.7 |
| A-3037 | I-41 | B.1.7 |
| A-3038 | I-42 | B.1.7 |
| A-3039 | I-43 | B.1.7 |
| A-3040 | I-44 | B.1.7 |
| A-3041 | I-45 | B.1.7 |
| A-3042 | I-46 | B.1.7 |
| A-3043 | I-47 | B.1.7 |
| A-3044 | I-48 | B.1.7 |
| A-3045 | I-49 | B.1.7 |
| A-3046 | I-50 | B.1.7 |
| A-3047 | I-51 | B.1.7 |
| A-3048 | I-52 | B.1.7 |
| A-3049 | I-53 | B.1.7 |
| A-3050 | I-54 | B.1.7 |
| A-3051 | I-55 | B.1.7 |
| A-3052 | I-56 | B.1.7 |
| A-3053 | I-57 | B.1.7 |
| A-3054 | I-58 | B.1.7 |
| A-3055 | I-59 | B.1.7 |
| A-3056 | I-60 | B.1.7 |
| A-3057 | I-61 | B.1.7 |
| A-3058 | I-62 | B.1.7 |
| A-3059 | I-63 | B.1.7 |
| A-3060 | I-64 | B.1.7 |
| A-3061 | I-65 | B.1.7 |
| A-3062 | I-66 | B.1.7 |
| A-3063 | I-67 | B.1.7 |
| A-3064 | I-68 | B.1.7 |
| A-3065 | I-69 | B.1.7 |
| A-3066 | I-70 | B.1.7 |
| A-3067 | I-71 | B.1.7 |
| A-3068 | I-72 | B.1.7 |
| A-3069 | I-73 | B.1.7 |
| A-3070 | I-74 | B.1.7 |

| Mixture | Co. 1 | Co. 2 |
|---|---|---|
| A-3071 | I-75 | B.1.7 |
| A-3072 | I-76 | B.1.7 |
| A-3073 | I-77 | B.1.7 |
| A-3074 | I-78 | B.1.7 |
| A-3075 | I-79 | B.1.7 |
| A-3076 | I-80 | B.1.7 |
| A-3077 | I-81 | B.1.7 |
| A-3078 | I-82 | B.1.7 |
| A-3079 | I-83 | B.1.7 |
| A-3080 | I-84 | B.1.7 |
| A-3081 | I-85 | B.1.7 |
| A-3082 | I-86 | B.1.7 |
| A-3083 | I-87 | B.1.7 |
| A-3084 | I-88 | B.1.7 |
| A-3085 | I-89 | B.1.7 |
| A-3086 | I-90 | B.1.7 |
| A-3087 | I-91 | B.1.7 |
| A-3088 | I-92 | B.1.7 |
| A-3089 | I-93 | B.1.7 |
| A-3090 | I-94 | B.1.7 |
| A-3091 | I-95 | B.1.7 |
| A-3092 | I-96 | B.1.7 |
| A-3093 | I-97 | B.1.7 |
| A-3094 | I-98 | B.1.7 |
| A-3095 | I-99 | B.1.7 |
| A-3096 | I-100 | B.1.7 |
| A-3097 | I-101 | B.1.7 |
| A-3098 | I-102 | B.1.7 |
| A-3099 | I-103 | B.1.7 |
| A-3100 | I-104 | B.1.7 |
| A-3101 | I-105 | B.1.7 |
| A-3102 | I-106 | B.1.7 |
| A-3103 | I-107 | B.1.7 |
| A-3104 | I-1 | B.1.8 |
| A-3105 | I-2 | B.1.8 |
| A-3106 | I-3 | B.1.8 |
| A-3107 | I-4 | B.1.8 |
| A-3108 | I-5 | B.1.8 |
| A-3109 | I-6 | B.1.8 |
| A-3110 | I-7 | B.1.8 |
| A-3111 | I-8 | B.1.8 |

| Mixture | Co. 1 | Co. 2 |
|---|---|---|
| A-3112 | I-9 | B.1.8 |
| A-3113 | I-10 | B.1.8 |
| A-3114 | I-11 | B.1.8 |
| A-3115 | I-12 | B.1.8 |
| A-3116 | I-13 | B.1.8 |
| A-3117 | I-14 | B.1.8 |
| A-3118 | I-15 | B.1.8 |
| A-3119 | I-16 | B.1.8 |
| A-3120 | I-17 | B.1.8 |
| A-3121 | I-18 | B.1.8 |
| A-3122 | I-19 | B.1.8 |
| A-3123 | I-20 | B.1.8 |
| A-3124 | I-21 | B.1.8 |
| A-3125 | I-22 | B.1.8 |
| A-3126 | I-23 | B.1.8 |
| A-3127 | I-24 | B.1.8 |
| A-3128 | I-25 | B.1.8 |
| A-3129 | I-26 | B.1.8 |
| A-3130 | I-27 | B.1.8 |
| A-3131 | I-28 | B.1.8 |
| A-3132 | I-29 | B.1.8 |
| A-3133 | I-30 | B.1.8 |
| A-3134 | I-31 | B.1.8 |
| A-3135 | I-32 | B.1.8 |
| A-3136 | I-33 | B.1.8 |
| A-3137 | I-34 | B.1.8 |
| A-3138 | I-35 | B.1.8 |
| A-3139 | I-36 | B.1.8 |
| A-3140 | I-37 | B.1.8 |
| A-3141 | I-38 | B.1.8 |
| A-3142 | I-39 | B.1.8 |
| A-3143 | I-40 | B.1.8 |
| A-3144 | I-41 | B.1.8 |
| A-3145 | I-42 | B.1.8 |
| A-3146 | I-43 | B.1.8 |
| A-3147 | I-44 | B.1.8 |
| A-3148 | I-45 | B.1.8 |
| A-3149 | I-46 | B.1.8 |
| A-3150 | I-47 | B.1.8 |
| A-3151 | I-48 | B.1.8 |
| A-3152 | I-49 | B.1.8 |

| Mixture | Co. 1 | Co. 2 |
|---|---|---|
| A-3153 | I-50 | B.1.8 |
| A-3154 | I-51 | B.1.8 |
| A-3155 | I-52 | B.1.8 |
| A-3156 | I-53 | B.1.8 |
| A-3157 | I-54 | B.1.8 |
| A-3158 | I-55 | B.1.8 |
| A-3159 | I-56 | B.1.8 |
| A-3160 | I-57 | B.1.8 |
| A-3161 | I-58 | B.1.8 |
| A-3162 | I-59 | B.1.8 |
| A-3163 | I-60 | B.1.8 |
| A-3164 | I-61 | B.1.8 |
| A-3165 | I-62 | B.1.8 |
| A-3166 | I-63 | B.1.8 |
| A-3167 | I-64 | B.1.8 |
| A-3168 | I-65 | B.1.8 |
| A-3169 | I-66 | B.1.8 |
| A-3170 | I-67 | B.1.8 |
| A-3171 | I-68 | B.1.8 |
| A-3172 | I-69 | B.1.8 |
| A-3173 | I-70 | B.1.8 |
| A-3174 | I-71 | B.1.8 |
| A-3175 | I-72 | B.1.8 |
| A-3176 | I-73 | B.1.8 |
| A-3177 | I-74 | B.1.8 |
| A-3178 | I-75 | B.1.8 |
| A-3179 | I-76 | B.1.8 |
| A-3180 | I-77 | B.1.8 |
| A-3181 | I-78 | B.1.8 |
| A-3182 | I-79 | B.1.8 |
| A-3183 | I-80 | B.1.8 |
| A-3184 | I-81 | B.1.8 |
| A-3185 | I-82 | B.1.8 |
| A-3186 | I-83 | B.1.8 |
| A-3187 | I-84 | B.1.8 |
| A-3188 | I-85 | B.1.8 |
| A-3189 | I-86 | B.1.8 |
| A-3190 | I-87 | B.1.8 |
| A-3191 | I-88 | B.1.8 |
| A-3192 | I-89 | B.1.8 |
| A-3193 | I-90 | B.1.8 |

| Mixture | Co. 1 | Co. 2 |
|---|---|---|
| A-3194 | I-91 | B.1.8 |
| A-3195 | I-92 | B.1.8 |
| A-3196 | I-93 | B.1.8 |
| A-3197 | I-94 | B.1.8 |
| A-3198 | I-95 | B.1.8 |
| A-3199 | I-96 | B.1.8 |
| A-3200 | I-97 | B.1.8 |
| A-3201 | I-98 | B.1.8 |
| A-3202 | I-99 | B.1.8 |
| A-3203 | I-100 | B.1.8 |
| A-3204 | I-101 | B.1.8 |
| A-3205 | I-102 | B.1.8 |
| A-3206 | I-103 | B.1.8 |
| A-3207 | I-104 | B.1.8 |
| A-3208 | I-105 | B.1.8 |
| A-3209 | I-106 | B.1.8 |
| A-3210 | I-107 | B.1.8 |
| A-3211 | I-1 | B.1.9 |
| A-3212 | I-2 | B.1.9 |
| A-3213 | I-3 | B.1.9 |
| A-3214 | I-4 | B.1.9 |
| A-3215 | I-5 | B.1.9 |
| A-3216 | I-6 | B.1.9 |
| A-3217 | I-7 | B.1.9 |
| A-3218 | I-8 | B.1.9 |
| A-3219 | I-9 | B.1.9 |
| A-3220 | I-10 | B.1.9 |
| A-3221 | I-11 | B.1.9 |
| A-3222 | I-12 | B.1.9 |
| A-3223 | I-13 | B.1.9 |
| A-3224 | I-14 | B.1.9 |
| A-3225 | I-15 | B.1.9 |
| A-3226 | I-16 | B.1.9 |
| A-3227 | I-17 | B.1.9 |
| A-3228 | I-18 | B.1.9 |
| A-3229 | I-19 | B.1.9 |
| A-3230 | I-20 | B.1.9 |
| A-3231 | I-21 | B.1.9 |
| A-3232 | I-22 | B.1.9 |
| A-3233 | I-23 | B.1.9 |
| A-3234 | I-24 | B.1.9 |

| Mixture | Co. 1 | Co. 2 |
|---|---|---|
| A-3235 | I-25 | B.1.9 |
| A-3236 | I-26 | B.1.9 |
| A-3237 | I-27 | B.1.9 |
| A-3238 | I-28 | B.1.9 |
| A-3239 | I-29 | B.1.9 |
| A-3240 | I-30 | B.1.9 |
| A-3241 | I-31 | B.1.9 |
| A-3242 | I-32 | B.1.9 |
| A-3243 | I-33 | B.1.9 |
| A-3244 | I-34 | B.1.9 |
| A-3245 | I-35 | B.1.9 |
| A-3246 | I-36 | B.1.9 |
| A-3247 | I-37 | B.1.9 |
| A-3248 | I-38 | B.1.9 |
| A-3249 | I-39 | B.1.9 |
| A-3250 | I-40 | B.1.9 |
| A-3251 | I-41 | B.1.9 |
| A-3252 | I-42 | B.1.9 |
| A-3253 | I-43 | B.1.9 |
| A-3254 | I-44 | B.1.9 |
| A-3255 | I-45 | B.1.9 |
| A-3256 | I-46 | B.1.9 |
| A-3257 | I-47 | B.1.9 |
| A-3258 | I-48 | B.1.9 |
| A-3259 | I-49 | B.1.9 |
| A-3260 | I-50 | B.1.9 |
| A-3261 | I-51 | B.1.9 |
| A-3262 | I-52 | B.1.9 |
| A-3263 | I-53 | B.1.9 |
| A-3264 | I-54 | B.1.9 |
| A-3265 | I-55 | B.1.9 |
| A-3266 | I-56 | B.1.9 |
| A-3267 | I-57 | B.1.9 |
| A-3268 | I-58 | B.1.9 |
| A-3269 | I-59 | B.1.9 |
| A-3270 | I-60 | B.1.9 |
| A-3271 | I-61 | B.1.9 |
| A-3272 | I-62 | B.1.9 |
| A-3273 | I-63 | B.1.9 |
| A-3274 | I-64 | B.1.9 |
| A-3275 | I-65 | B.1.9 |

| Mixture | Co. 1 | Co. 2 |
|---|---|---|
| A-3276 | I-66 | B.1.9 |
| A-3277 | I-67 | B.1.9 |
| A-3278 | I-68 | B.1.9 |
| A-3279 | I-69 | B.1.9 |
| A-3280 | I-70 | B.1.9 |
| A-3281 | I-71 | B.1.9 |
| A-3282 | I-72 | B.1.9 |
| A-3283 | I-73 | B.1.9 |
| A-3284 | I-74 | B.1.9 |
| A-3285 | I-75 | B.1.9 |
| A-3286 | I-76 | B.1.9 |
| A-3287 | I-77 | B.1.9 |
| A-3288 | I-78 | B.1.9 |
| A-3289 | I-79 | B.1.9 |
| A-3290 | I-80 | B.1.9 |
| A-3291 | I-81 | B.1.9 |
| A-3292 | I-82 | B.1.9 |
| A-3293 | I-83 | B.1.9 |
| A-3294 | I-84 | B.1.9 |
| A-3295 | I-85 | B.1.9 |
| A-3296 | I-86 | B.1.9 |
| A-3297 | I-87 | B.1.9 |
| A-3298 | I-88 | B.1.9 |
| A-3299 | I-89 | B.1.9 |
| A-3300 | I-90 | B.1.9 |
| A-3301 | I-91 | B.1.9 |
| A-3302 | I-92 | B.1.9 |
| A-3303 | I-93 | B.1.9 |
| A-3304 | I-94 | B.1.9 |
| A-3305 | I-95 | B.1.9 |
| A-3306 | I-96 | B.1.9 |
| A-3307 | I-97 | B.1.9 |
| A-3308 | I-98 | B.1.9 |
| A-3309 | I-99 | B.1.9 |
| A-3310 | I-100 | B.1.9 |
| A-3311 | I-101 | B.1.9 |
| A-3312 | I-102 | B.1.9 |
| A-3313 | I-103 | B.1.9 |
| A-3314 | I-104 | B.1.9 |
| A-3315 | I-105 | B.1.9 |
| A-3316 | I-106 | B.1.9 |

| Mixture | Co. 1 | Co. 2 |
|---|---|---|
| A-3317 | I-107 | B.1.9 |
| A-3318 | I-1 | B.1.10 |
| A-3319 | I-2 | B.1.10 |
| A-3320 | I-3 | B.1.10 |
| A-3321 | I-4 | B.1.10 |
| A-3322 | I-5 | B.1.10 |
| A-3323 | I-6 | B.1.10 |
| A-3324 | I-7 | B.1.10 |
| A-3325 | I-8 | B.1.10 |
| A-3326 | I-9 | B.1.10 |
| A-3327 | I-10 | B.1.10 |
| A-3328 | I-11 | B.1.10 |
| A-3329 | I-12 | B.1.10 |
| A-3330 | I-13 | B.1.10 |
| A-3331 | I-14 | B.1.10 |
| A-3332 | I-15 | B.1.10 |
| A-3333 | I-16 | B.1.10 |
| A-3334 | I-17 | B.1.10 |
| A-3335 | I-18 | B.1.10 |
| A-3336 | I-19 | B.1.10 |
| A-3337 | I-20 | B.1.10 |
| A-3338 | I-21 | B.1.10 |
| A-3339 | I-22 | B.1.10 |
| A-3340 | I-23 | B.1.10 |
| A-3341 | I-24 | B.1.10 |
| A-3342 | I-25 | B.1.10 |
| A-3343 | I-26 | B.1.10 |
| A-3344 | I-27 | B.1.10 |
| A-3345 | I-28 | B.1.10 |
| A-3346 | I-29 | B.1.10 |
| A-3347 | I-30 | B.1.10 |
| A-3348 | I-31 | B.1.10 |
| A-3349 | I-32 | B.1.10 |
| A-3350 | I-33 | B.1.10 |
| A-3351 | I-34 | B.1.10 |
| A-3352 | I-35 | B.1.10 |
| A-3353 | I-36 | B.1.10 |
| A-3354 | I-37 | B.1.10 |
| A-3355 | I-38 | B.1.10 |
| A-3356 | I-39 | B.1.10 |
| A-3357 | I-40 | B.1.10 |

| Mixture | Co. 1 | Co. 2 |
|---|---|---|
| A-3358 | I-41 | B.1.10 |
| A-3359 | I-42 | B.1.10 |
| A-3360 | I-43 | B.1.10 |
| A-3361 | I-44 | B.1.10 |
| A-3362 | I-45 | B.1.10 |
| A-3363 | I-46 | B.1.10 |
| A-3364 | I-47 | B.1.10 |
| A-3365 | I-48 | B.1.10 |
| A-3366 | I-49 | B.1.10 |
| A-3367 | I-50 | B.1.10 |
| A-3368 | I-51 | B.1.10 |
| A-3369 | I-52 | B.1.10 |
| A-3370 | I-53 | B.1.10 |
| A-3371 | I-54 | B.1.10 |
| A-3372 | I-55 | B.1.10 |
| A-3373 | I-56 | B.1.10 |
| A-3374 | I-57 | B.1.10 |
| A-3375 | I-58 | B.1.10 |
| A-3376 | I-59 | B.1.10 |
| A-3377 | I-60 | B.1.10 |
| A-3378 | I-61 | B.1.10 |
| A-3379 | I-62 | B.1.10 |
| A-3380 | I-63 | B.1.10 |
| A-3381 | I-64 | B.1.10 |
| A-3382 | I-65 | B.1.10 |
| A-3383 | I-66 | B.1.10 |
| A-3384 | I-67 | B.1.10 |
| A-3385 | I-68 | B.1.10 |
| A-3386 | I-69 | B.1.10 |
| A-3387 | I-70 | B.1.10 |
| A-3388 | I-71 | B.1.10 |
| A-3389 | I-72 | B.1.10 |
| A-3390 | I-73 | B.1.10 |
| A-3391 | I-74 | B.1.10 |
| A-3392 | I-75 | B.1.10 |
| A-3393 | I-76 | B.1.10 |
| A-3394 | I-77 | B.1.10 |
| A-3395 | I-78 | B.1.10 |
| A-3396 | I-79 | B.1.10 |
| A-3397 | I-80 | B.1.10 |
| A-3398 | I-81 | B.1.10 |

| Mixture | Co. 1 | Co. 2 |
|---|---|---|
| A-3399 | I-82 | B.1.10 |
| A-3400 | I-83 | B.1.10 |
| A-3401 | I-84 | B.1.10 |
| A-3402 | I-85 | B.1.10 |
| A-3403 | I-86 | B.1.10 |
| A-3404 | I-87 | B.1.10 |
| A-3405 | I-88 | B.1.10 |
| A-3406 | I-89 | B.1.10 |
| A-3407 | I-90 | B.1.10 |
| A-3408 | I-91 | B.1.10 |
| A-3409 | I-92 | B.1.10 |
| A-3410 | I-93 | B.1.10 |
| A-3411 | I-94 | B.1.10 |
| A-3412 | I-95 | B.1.10 |
| A-3413 | I-96 | B.1.10 |
| A-3414 | I-97 | B.1.10 |
| A-3415 | I-98 | B.1.10 |
| A-3416 | I-99 | B.1.10 |
| A-3417 | I-100 | B.1.10 |
| A-3418 | I-101 | B.1.10 |
| A-3419 | I-102 | B.1.10 |
| A-3420 | I-103 | B.1.10 |
| A-3421 | I-104 | B.1.10 |
| A-3422 | I-105 | B.1.10 |
| A-3423 | I-106 | B.1.10 |
| A-3424 | I-107 | B.1.10 |
| A-3425 | I-1 | B.1.11 |
| A-3426 | I-2 | B.1.11 |
| A-3427 | I-3 | B.1.11 |
| A-3428 | I-4 | B.1.11 |
| A-3429 | I-5 | B.1.11 |
| A-3430 | I-6 | B.1.11 |
| A-3431 | I-7 | B.1.11 |
| A-3432 | I-8 | B.1.11 |
| A-3433 | I-9 | B.1.11 |
| A-3434 | I-10 | B.1.11 |
| A-3435 | I-11 | B.1.11 |
| A-3436 | I-12 | B.1.11 |
| A-3437 | I-13 | B.1.11 |
| A-3438 | I-14 | B.1.11 |
| A-3439 | I-15 | B.1.11 |

| Mixture | Co. 1 | Co. 2 |
|---|---|---|
| A-3440 | I-16 | B.1.11 |
| A-3441 | I-17 | B.1.11 |
| A-3442 | I-18 | B.1.11 |
| A-3443 | I-19 | B.1.11 |
| A-3444 | I-20 | B.1.11 |
| A-3445 | I-21 | B.1.11 |
| A-3446 | I-22 | B.1.11 |
| A-3447 | I-23 | B.1.11 |
| A-3448 | I-24 | B.1.11 |
| A-3449 | I-25 | B.1.11 |
| A-3450 | I-26 | B.1.11 |
| A-3451 | I-27 | B.1.11 |
| A-3452 | I-28 | B.1.11 |
| A-3453 | I-29 | B.1.11 |
| A-3454 | I-30 | B.1.11 |
| A-3455 | I-31 | B.1.11 |
| A-3456 | I-32 | B.1.11 |
| A-3457 | I-33 | B.1.11 |
| A-3458 | I-34 | B.1.11 |
| A-3459 | I-35 | B.1.11 |
| A-3460 | I-36 | B.1.11 |
| A-3461 | I-37 | B.1.11 |
| A-3462 | I-38 | B.1.11 |
| A-3463 | I-39 | B.1.11 |
| A-3464 | I-40 | B.1.11 |
| A-3465 | I-41 | B.1.11 |
| A-3466 | I-42 | B.1.11 |
| A-3467 | I-43 | B.1.11 |
| A-3468 | I-44 | B.1.11 |
| A-3469 | I-45 | B.1.11 |
| A-3470 | I-46 | B.1.11 |
| A-3471 | I-47 | B.1.11 |
| A-3472 | I-48 | B.1.11 |
| A-3473 | I-49 | B.1.11 |
| A-3474 | I-50 | B.1.11 |
| A-3475 | I-51 | B.1.11 |
| A-3476 | I-52 | B.1.11 |
| A-3477 | I-53 | B.1.11 |
| A-3478 | I-54 | B.1.11 |
| A-3479 | I-55 | B.1.11 |
| A-3480 | I-56 | B.1.11 |

| Mixture | Co. 1 | Co. 2 |
|---|---|---|
| A-3481 | I-57 | B.1.11 |
| A-3482 | I-58 | B.1.11 |
| A-3483 | I-59 | B.1.11 |
| A-3484 | I-60 | B.1.11 |
| A-3485 | I-61 | B.1.11 |
| A-3486 | I-62 | B.1.11 |
| A-3487 | I-63 | B.1.11 |
| A-3488 | I-64 | B.1.11 |
| A-3489 | I-65 | B.1.11 |
| A-3490 | I-66 | B.1.11 |
| A-3491 | I-67 | B.1.11 |
| A-3492 | I-68 | B.1.11 |
| A-3493 | I-69 | B.1.11 |
| A-3494 | I-70 | B.1.11 |
| A-3495 | I-71 | B.1.11 |
| A-3496 | I-72 | B.1.11 |
| A-3497 | I-73 | B.1.11 |
| A-3498 | I-74 | B.1.11 |
| A-3499 | I-75 | B.1.11 |
| A-3500 | I-76 | B.1.11 |
| A-3501 | I-77 | B.1.11 |
| A-3502 | I-78 | B.1.11 |
| A-3503 | I-79 | B.1.11 |
| A-3504 | I-80 | B.1.11 |
| A-3505 | I-81 | B.1.11 |
| A-3506 | I-82 | B.1.11 |
| A-3507 | I-83 | B.1.11 |
| A-3508 | I-84 | B.1.11 |
| A-3509 | I-85 | B.1.11 |
| A-3510 | I-86 | B.1.11 |
| A-3511 | I-87 | B.1.11 |
| A-3512 | I-88 | B.1.11 |
| A-3513 | I-89 | B.1.11 |
| A-3514 | I-90 | B.1.11 |
| A-3515 | I-91 | B.1.11 |
| A-3516 | I-92 | B.1.11 |
| A-3517 | I-93 | B.1.11 |
| A-3518 | I-94 | B.1.11 |
| A-3519 | I-95 | B.1.11 |
| A-3520 | I-96 | B.1.11 |
| A-3521 | I-97 | B.1.11 |

| Mixture | Co. 1 | Co. 2 |
|---|---|---|
| A-3522 | I-98 | B.1.11 |
| A-3523 | I-99 | B.1.11 |
| A-3524 | I-100 | B.1.11 |
| A-3525 | I-101 | B.1.11 |
| A-3526 | I-102 | B.1.11 |
| A-3527 | I-103 | B.1.11 |
| A-3528 | I-104 | B.1.11 |
| A-3529 | I-105 | B.1.11 |
| A-3530 | I-106 | B.1.11 |
| A-3531 | I-107 | B.1.11 |
| A-3532 | I-1 | B.1.12 |
| A-3533 | I-2 | B.1.12 |
| A-3534 | I-3 | B.1.12 |
| A-3535 | I-4 | B.1.12 |
| A-3536 | I-5 | B.1.12 |
| A-3537 | I-6 | B.1.12 |
| A-3538 | I-7 | B.1.12 |
| A-3539 | I-8 | B.1.12 |
| A-3540 | I-9 | B.1.12 |
| A-3541 | I-10 | B.1.12 |
| A-3542 | I-11 | B.1.12 |
| A-3543 | I-12 | B.1.12 |
| A-3544 | I-13 | B.1.12 |
| A-3545 | I-14 | B.1.12 |
| A-3546 | I-15 | B.1.12 |
| A-3547 | I-16 | B.1.12 |
| A-3548 | I-17 | B.1.12 |
| A-3549 | I-18 | B.1.12 |
| A-3550 | I-19 | B.1.12 |
| A-3551 | I-20 | B.1.12 |
| A-3552 | I-21 | B.1.12 |
| A-3553 | I-22 | B.1.12 |
| A-3554 | I-23 | B.1.12 |
| A-3555 | I-24 | B.1.12 |
| A-3556 | I-25 | B.1.12 |
| A-3557 | I-26 | B.1.12 |
| A-3558 | I-27 | B.1.12 |
| A-3559 | I-28 | B.1.12 |
| A-3560 | I-29 | B.1.12 |
| A-3561 | I-30 | B.1.12 |
| A-3562 | I-31 | B.1.12 |

| Mixture | Co. 1 | Co. 2 |
|---|---|---|
| A-3563 | I-32 | B.1.12 |
| A-3564 | I-33 | B.1.12 |
| A-3565 | I-34 | B.1.12 |
| A-3566 | I-35 | B.1.12 |
| A-3567 | I-36 | B.1.12 |
| A-3568 | I-37 | B.1.12 |
| A-3569 | I-38 | B.1.12 |
| A-3570 | I-39 | B.1.12 |
| A-3571 | I-40 | B.1.12 |
| A-3572 | I-41 | B.1.12 |
| A-3573 | I-42 | B.1.12 |
| A-3574 | I-43 | B.1.12 |
| A-3575 | I-44 | B.1.12 |
| A-3576 | I-45 | B.1.12 |
| A-3577 | I-46 | B.1.12 |
| A-3578 | I-47 | B.1.12 |
| A-3579 | I-48 | B.1.12 |
| A-3580 | I-49 | B.1.12 |
| A-3581 | I-50 | B.1.12 |
| A-3582 | I-51 | B.1.12 |
| A-3583 | I-52 | B.1.12 |
| A-3584 | I-53 | B.1.12 |
| A-3585 | I-54 | B.1.12 |
| A-3586 | I-55 | B.1.12 |
| A-3587 | I-56 | B.1.12 |
| A-3588 | I-57 | B.1.12 |
| A-3589 | I-58 | B.1.12 |
| A-3590 | I-59 | B.1.12 |
| A-3591 | I-60 | B.1.12 |
| A-3592 | I-61 | B.1.12 |
| A-3593 | I-62 | B.1.12 |
| A-3594 | I-63 | B.1.12 |
| A-3595 | I-64 | B.1.12 |
| A-3596 | I-65 | B.1.12 |
| A-3597 | I-66 | B.1.12 |
| A-3598 | I-67 | B.1.12 |
| A-3599 | I-68 | B.1.12 |
| A-3600 | I-69 | B.1.12 |
| A-3601 | I-70 | B.1.12 |
| A-3602 | I-71 | B.1.12 |
| A-3603 | I-72 | B.1.12 |

| Mixture | Co. 1 | Co. 2 |
|---|---|---|
| A-3604 | I-73 | B.1.12 |
| A-3605 | I-74 | B.1.12 |
| A-3606 | I-75 | B.1.12 |
| A-3607 | I-76 | B.1.12 |
| A-3608 | I-77 | B.1.12 |
| A-3609 | I-78 | B.1.12 |
| A-3610 | I-79 | B.1.12 |
| A-3611 | I-80 | B.1.12 |
| A-3612 | I-81 | B.1.12 |
| A-3613 | I-82 | B.1.12 |
| A-3614 | I-83 | B.1.12 |
| A-3615 | I-84 | B.1.12 |
| A-3616 | I-85 | B.1.12 |
| A-3617 | I-86 | B.1.12 |
| A-3618 | I-87 | B.1.12 |
| A-3619 | I-88 | B.1.12 |
| A-3620 | I-89 | B.1.12 |
| A-3621 | I-90 | B.1.12 |
| A-3622 | I-91 | B.1.12 |
| A-3623 | I-92 | B.1.12 |
| A-3624 | I-93 | B.1.12 |
| A-3625 | I-94 | B.1.12 |
| A-3626 | I-95 | B.1.12 |
| A-3627 | I-96 | B.1.12 |
| A-3628 | I-97 | B.1.12 |
| A-3629 | I-98 | B.1.12 |
| A-3630 | I-99 | B.1.12 |
| A-3631 | I-100 | B.1.12 |
| A-3632 | I-101 | B.1.12 |
| A-3633 | I-102 | B.1.12 |
| A-3634 | I-103 | B.1.12 |
| A-3635 | I-104 | B.1.12 |
| A-3636 | I-105 | B.1.12 |
| A-3637 | I-106 | B.1.12 |
| A-3638 | I-107 | B.1.12 |
| A-3639 | I-1 | B.1.13 |
| A-3640 | I-2 | B.1.13 |
| A-3641 | I-3 | B.1.13 |
| A-3642 | I-4 | B.1.13 |
| A-3643 | I-5 | B.1.13 |
| A-3644 | I-6 | B.1.13 |

| Mixture | Co. 1 | Co. 2 |
|---|---|---|
| A-3645 | I-7 | B.1.13 |
| A-3646 | I-8 | B.1.13 |
| A-3647 | I-9 | B.1.13 |
| A-3648 | I-10 | B.1.13 |
| A-3649 | I-11 | B.1.13 |
| A-3650 | I-12 | B.1.13 |
| A-3651 | I-13 | B.1.13 |
| A-3652 | I-14 | B.1.13 |
| A-3653 | I-15 | B.1.13 |
| A-3654 | I-16 | B.1.13 |
| A-3655 | I-17 | B.1.13 |
| A-3656 | I-18 | B.1.13 |
| A-3657 | I-19 | B.1.13 |
| A-3658 | I-20 | B.1.13 |
| A-3659 | I-21 | B.1.13 |
| A-3660 | I-22 | B.1.13 |
| A-3661 | I-23 | B.1.13 |
| A-3662 | I-24 | B.1.13 |
| A-3663 | I-25 | B.1.13 |
| A-3664 | I-26 | B.1.13 |
| A-3665 | I-27 | B.1.13 |
| A-3666 | I-28 | B.1.13 |
| A-3667 | I-29 | B.1.13 |
| A-3668 | I-30 | B.1.13 |
| A-3669 | I-31 | B.1.13 |
| A-3670 | I-32 | B.1.13 |
| A-3671 | I-33 | B.1.13 |
| A-3672 | I-34 | B.1.13 |
| A-3673 | I-35 | B.1.13 |
| A-3674 | I-36 | B.1.13 |
| A-3675 | I-37 | B.1.13 |
| A-3676 | I-38 | B.1.13 |
| A-3677 | I-39 | B.1.13 |
| A-3678 | I-40 | B.1.13 |
| A-3679 | I-41 | B.1.13 |
| A-3680 | I-42 | B.1.13 |
| A-3681 | I-43 | B.1.13 |
| A-3682 | I-44 | B.1.13 |
| A-3683 | I-45 | B.1.13 |
| A-3684 | I-46 | B.1.13 |
| A-3685 | I-47 | B.1.13 |

| Mixture | Co. 1 | Co. 2 |
|---|---|---|
| A-3686 | I-48 | B.1.13 |
| A-3687 | I-49 | B.1.13 |
| A-3688 | I-50 | B.1.13 |
| A-3689 | I-51 | B.1.13 |
| A-3690 | I-52 | B.1.13 |
| A-3691 | I-53 | B.1.13 |
| A-3692 | I-54 | B.1.13 |
| A-3693 | I-55 | B.1.13 |
| A-3694 | I-56 | B.1.13 |
| A-3695 | I-57 | B.1.13 |
| A-3696 | I-58 | B.1.13 |
| A-3697 | I-59 | B.1.13 |
| A-3698 | I-60 | B.1.13 |
| A-3699 | I-61 | B.1.13 |
| A-3700 | I-62 | B.1.13 |
| A-3701 | I-63 | B.1.13 |
| A-3702 | I-64 | B.1.13 |
| A-3703 | I-65 | B.1.13 |
| A-3704 | I-66 | B.1.13 |
| A-3705 | I-67 | B.1.13 |
| A-3706 | I-68 | B.1.13 |
| A-3707 | I-69 | B.1.13 |
| A-3708 | I-70 | B.1.13 |
| A-3709 | I-71 | B.1.13 |
| A-3710 | I-72 | B.1.13 |
| A-3711 | I-73 | B.1.13 |
| A-3712 | I-74 | B.1.13 |
| A-3713 | I-75 | B.1.13 |
| A-3714 | I-76 | B.1.13 |
| A-3715 | I-77 | B.1.13 |
| A-3716 | I-78 | B.1.13 |
| A-3717 | I-79 | B.1.13 |
| A-3718 | I-80 | B.1.13 |
| A-3719 | I-81 | B.1.13 |
| A-3720 | I-82 | B.1.13 |
| A-3721 | I-83 | B.1.13 |
| A-3722 | I-84 | B.1.13 |
| A-3723 | I-85 | B.1.13 |
| A-3724 | I-86 | B.1.13 |
| A-3725 | I-87 | B.1.13 |
| A-3726 | I-88 | B.1.13 |

| Mixture | Co. 1 | Co. 2 |
|---|---|---|
| A-3727 | I-89 | B.1.13 |
| A-3728 | I-90 | B.1.13 |
| A-3729 | I-91 | B.1.13 |
| A-3730 | I-92 | B.1.13 |
| A-3731 | I-93 | B.1.13 |
| A-3732 | I-94 | B.1.13 |
| A-3733 | I-95 | B.1.13 |
| A-3734 | I-96 | B.1.13 |
| A-3735 | I-97 | B.1.13 |
| A-3736 | I-98 | B.1.13 |
| A-3737 | I-99 | B.1.13 |
| A-3738 | I-100 | B.1.13 |
| A-3739 | I-101 | B.1.13 |
| A-3740 | I-102 | B.1.13 |
| A-3741 | I-103 | B.1.13 |
| A-3742 | I-104 | B.1.13 |
| A-3743 | I-105 | B.1.13 |
| A-3744 | I-106 | B.1.13 |
| A-3745 | I-107 | B.1.13 |
| A-3746 | I-1 | B.1.14 |
| A-3747 | I-2 | B.1.14 |
| A-3748 | I-3 | B.1.14 |
| A-3749 | I-4 | B.1.14 |
| A-3750 | I-5 | B.1.14 |
| A-3751 | I-6 | B.1.14 |
| A-3752 | I-7 | B.1.14 |
| A-3753 | I-8 | B.1.14 |
| A-3754 | I-9 | B.1.14 |
| A-3755 | I-10 | B.1.14 |
| A-3756 | I-11 | B.1.14 |
| A-3757 | I-12 | B.1.14 |
| A-3758 | I-13 | B.1.14 |
| A-3759 | I-14 | B.1.14 |
| A-3760 | I-15 | B.1.14 |
| A-3761 | I-16 | B.1.14 |
| A-3762 | I-17 | B.1.14 |
| A-3763 | I-18 | B.1.14 |
| A-3764 | I-19 | B.1.14 |
| A-3765 | I-20 | B.1.14 |
| A-3766 | I-21 | B.1.14 |
| A-3767 | I-22 | B.1.14 |
| A-3768 | I-23 | B.1.14 |
| A-3769 | I-24 | B.1.14 |
| A-3770 | I-25 | B.1.14 |
| A-3771 | I-26 | B.1.14 |
| A-3772 | I-27 | B.1.14 |
| A-3773 | I-28 | B.1.14 |
| A-3774 | I-29 | B.1.14 |
| A-3775 | I-30 | B.1.14 |
| A-3776 | I-31 | B.1.14 |
| A-3777 | I-32 | B.1.14 |
| A-3778 | I-33 | B.1.14 |
| A-3779 | I-34 | B.1.14 |
| A-3780 | I-35 | B.1.14 |
| A-3781 | I-36 | B.1.14 |
| A-3782 | I-37 | B.1.14 |
| A-3783 | I-38 | B.1.14 |
| A-3784 | I-39 | B.1.14 |
| A-3785 | I-40 | B.1.14 |
| A-3786 | I-41 | B.1.14 |
| A-3787 | I-42 | B.1.14 |
| A-3788 | I-43 | B.1.14 |
| A-3789 | I-44 | B.1.14 |
| A-3790 | I-45 | B.1.14 |
| A-3791 | I-46 | B.1.14 |
| A-3792 | I-47 | B.1.14 |
| A-3793 | I-48 | B.1.14 |
| A-3794 | I-49 | B.1.14 |
| A-3795 | I-50 | B.1.14 |
| A-3796 | I-51 | B.1.14 |
| A-3797 | I-52 | B.1.14 |
| A-3798 | I-53 | B.1.14 |
| A-3799 | I-54 | B.1.14 |
| A-3800 | I-55 | B.1.14 |
| A-3801 | I-56 | B.1.14 |
| A-3802 | I-57 | B.1.14 |
| A-3803 | I-58 | B.1.14 |
| A-3804 | I-59 | B.1.14 |
| A-3805 | I-60 | B.1.14 |
| A-3806 | I-61 | B.1.14 |
| A-3807 | I-62 | B.1.14 |
| A-3808 | I-63 | B.1.14 |
| A-3809 | I-64 | B.1.14 |
| A-3810 | I-65 | B.1.14 |
| A-3811 | I-66 | B.1.14 |
| A-3812 | I-67 | B.1.14 |
| A-3813 | I-68 | B.1.14 |
| A-3814 | I-69 | B.1.14 |
| A-3815 | I-70 | B.1.14 |
| A-3816 | I-71 | B.1.14 |
| A-3817 | I-72 | B.1.14 |
| A-3818 | I-73 | B.1.14 |
| A-3819 | I-74 | B.1.14 |
| A-3820 | I-75 | B.1.14 |
| A-3821 | I-76 | B.1.14 |
| A-3822 | I-77 | B.1.14 |
| A-3823 | I-78 | B.1.14 |
| A-3824 | I-79 | B.1.14 |
| A-3825 | I-80 | B.1.14 |
| A-3826 | I-81 | B.1.14 |
| A-3827 | I-82 | B.1.14 |
| A-3828 | I-83 | B.1.14 |
| A-3829 | I-84 | B.1.14 |
| A-3830 | I-85 | B.1.14 |
| A-3831 | I-86 | B.1.14 |
| A-3832 | I-87 | B.1.14 |
| A-3833 | I-88 | B.1.14 |
| A-3834 | I-89 | B.1.14 |
| A-3835 | I-90 | B.1.14 |
| A-3836 | I-91 | B.1.14 |
| A-3837 | I-92 | B.1.14 |
| A-3838 | I-93 | B.1.14 |
| A-3839 | I-94 | B.1.14 |
| A-3840 | I-95 | B.1.14 |
| A-3841 | I-96 | B.1.14 |
| A-3842 | I-97 | B.1.14 |
| A-3843 | I-98 | B.1.14 |
| A-3844 | I-99 | B.1.14 |
| A-3845 | I-100 | B.1.14 |
| A-3846 | I-101 | B.1.14 |
| A-3847 | I-102 | B.1.14 |
| A-3848 | I-103 | B.1.14 |
| A-3849 | I-104 | B.1.14 |

| Mixture | Co. 1 | Co. 2 |
|---|---|---|
| A-3850 | I-105 | B.1.14 |
| A-3851 | I-106 | B.1.14 |
| A-3852 | I-107 | B.1.14 |
| A-3853 | I-1 | B.1.15 |
| A-3854 | I-2 | B.1.15 |
| A-3855 | I-3 | B.1.15 |
| A-3856 | I-4 | B.1.15 |
| A-3857 | I-5 | B.1.15 |
| A-3858 | I-6 | B.1.15 |
| A-3859 | I-7 | B.1.15 |
| A-3860 | I-8 | B.1.15 |
| A-3861 | I-9 | B.1.15 |
| A-3862 | I-10 | B.1.15 |
| A-3863 | I-11 | B.1.15 |
| A-3864 | I-12 | B.1.15 |
| A-3865 | I-13 | B.1.15 |
| A-3866 | I-14 | B.1.15 |
| A-3867 | I-15 | B.1.15 |
| A-3868 | I-16 | B.1.15 |
| A-3869 | I-17 | B.1.15 |
| A-3870 | I-18 | B.1.15 |
| A-3871 | I-19 | B.1.15 |
| A-3872 | I-20 | B.1.15 |
| A-3873 | I-21 | B.1.15 |
| A-3874 | I-22 | B.1.15 |
| A-3875 | I-23 | B.1.15 |
| A-3876 | I-24 | B.1.15 |
| A-3877 | I-25 | B.1.15 |
| A-3878 | I-26 | B.1.15 |
| A-3879 | I-27 | B.1.15 |
| A-3880 | I-28 | B.1.15 |
| A-3881 | I-29 | B.1.15 |
| A-3882 | I-30 | B.1.15 |
| A-3883 | I-31 | B.1.15 |
| A-3884 | I-32 | B.1.15 |
| A-3885 | I-33 | B.1.15 |
| A-3886 | I-34 | B.1.15 |
| A-3887 | I-35 | B.1.15 |
| A-3888 | I-36 | B.1.15 |
| A-3889 | I-37 | B.1.15 |
| A-3890 | I-38 | B.1.15 |

| Mixture | Co. 1 | Co. 2 |
|---|---|---|
| A-3891 | I-39 | B.1.15 |
| A-3892 | I-40 | B.1.15 |
| A-3893 | I-41 | B.1.15 |
| A-3894 | I-42 | B.1.15 |
| A-3895 | I-43 | B.1.15 |
| A-3896 | I-44 | B.1.15 |
| A-3897 | I-45 | B.1.15 |
| A-3898 | I-46 | B.1.15 |
| A-3899 | I-47 | B.1.15 |
| A-3900 | I-48 | B.1.15 |
| A-3901 | I-49 | B.1.15 |
| A-3902 | I-50 | B.1.15 |
| A-3903 | I-51 | B.1.15 |
| A-3904 | I-52 | B.1.15 |
| A-3905 | I-53 | B.1.15 |
| A-3906 | I-54 | B.1.15 |
| A-3907 | I-55 | B.1.15 |
| A-3908 | I-56 | B.1.15 |
| A-3909 | I-57 | B.1.15 |
| A-3910 | I-58 | B.1.15 |
| A-3911 | I-59 | B.1.15 |
| A-3912 | I-60 | B.1.15 |
| A-3913 | I-61 | B.1.15 |
| A-3914 | I-62 | B.1.15 |
| A-3915 | I-63 | B.1.15 |
| A-3916 | I-64 | B.1.15 |
| A-3917 | I-65 | B.1.15 |
| A-3918 | I-66 | B.1.15 |
| A-3919 | I-67 | B.1.15 |
| A-3920 | I-68 | B.1.15 |
| A-3921 | I-69 | B.1.15 |
| A-3922 | I-70 | B.1.15 |
| A-3923 | I-71 | B.1.15 |
| A-3924 | I-72 | B.1.15 |
| A-3925 | I-73 | B.1.15 |
| A-3926 | I-74 | B.1.15 |
| A-3927 | I-75 | B.1.15 |
| A-3928 | I-76 | B.1.15 |
| A-3929 | I-77 | B.1.15 |
| A-3930 | I-78 | B.1.15 |
| A-3931 | I-79 | B.1.15 |

| Mixture | Co. 1 | Co. 2 |
|---|---|---|
| A-3932 | I-80 | B.1.15 |
| A-3933 | I-81 | B.1.15 |
| A-3934 | I-82 | B.1.15 |
| A-3935 | I-83 | B.1.15 |
| A-3936 | I-84 | B.1.15 |
| A-3937 | I-85 | B.1.15 |
| A-3938 | I-86 | B.1.15 |
| A-3939 | I-87 | B.1.15 |
| A-3940 | I-88 | B.1.15 |
| A-3941 | I-89 | B.1.15 |
| A-3942 | I-90 | B.1.15 |
| A-3943 | I-91 | B.1.15 |
| A-3944 | I-92 | B.1.15 |
| A-3945 | I-93 | B.1.15 |
| A-3946 | I-94 | B.1.15 |
| A-3947 | I-95 | B.1.15 |
| A-3948 | I-96 | B.1.15 |
| A-3949 | I-97 | B.1.15 |
| A-3950 | I-98 | B.1.15 |
| A-3951 | I-99 | B.1.15 |
| A-3952 | I-100 | B.1.15 |
| A-3953 | I-101 | B.1.15 |
| A-3954 | I-102 | B.1.15 |
| A-3955 | I-103 | B.1.15 |
| A-3956 | I-104 | B.1.15 |
| A-3957 | I-105 | B.1.15 |
| A-3958 | I-106 | B.1.15 |
| A-3959 | I-107 | B.1.15 |
| A-3960 | I-1 | B.1.16 |
| A-3961 | I-2 | B.1.16 |
| A-3962 | I-3 | B.1.16 |
| A-3963 | I-4 | B.1.16 |
| A-3964 | I-5 | B.1.16 |
| A-3965 | I-6 | B.1.16 |
| A-3966 | I-7 | B.1.16 |
| A-3967 | I-8 | B.1.16 |
| A-3968 | I-9 | B.1.16 |
| A-3969 | I-10 | B.1.16 |
| A-3970 | I-11 | B.1.16 |
| A-3971 | I-12 | B.1.16 |
| A-3972 | I-13 | B.1.16 |

| Mixture | Co. 1 | Co. 2 |
|---|---|---|
| A-3973 | I-14 | B.1.16 |
| A-3974 | I-15 | B.1.16 |
| A-3975 | I-16 | B.1.16 |
| A-3976 | I-17 | B.1.16 |
| A-3977 | I-18 | B.1.16 |
| A-3978 | I-19 | B.1.16 |
| A-3979 | I-20 | B.1.16 |
| A-3980 | I-21 | B.1.16 |
| A-3981 | I-22 | B.1.16 |
| A-3982 | I-23 | B.1.16 |
| A-3983 | I-24 | B.1.16 |
| A-3984 | I-25 | B.1.16 |
| A-3985 | I-26 | B.1.16 |
| A-3986 | I-27 | B.1.16 |
| A-3987 | I-28 | B.1.16 |
| A-3988 | I-29 | B.1.16 |
| A-3989 | I-30 | B.1.16 |
| A-3990 | I-31 | B.1.16 |
| A-3991 | I-32 | B.1.16 |
| A-3992 | I-33 | B.1.16 |
| A-3993 | I-34 | B.1.16 |
| A-3994 | I-35 | B.1.16 |
| A-3995 | I-36 | B.1.16 |
| A-3996 | I-37 | B.1.16 |
| A-3997 | I-38 | B.1.16 |
| A-3998 | I-39 | B.1.16 |
| A-3999 | I-40 | B.1.16 |
| A-4000 | I-41 | B.1.16 |
| A-4001 | I-42 | B.1.16 |
| A-4002 | I-43 | B.1.16 |
| A-4003 | I-44 | B.1.16 |
| A-4004 | I-45 | B.1.16 |
| A-4005 | I-46 | B.1.16 |
| A-4006 | I-47 | B.1.16 |
| A-4007 | I-48 | B.1.16 |
| A-4008 | I-49 | B.1.16 |
| A-4009 | I-50 | B.1.16 |
| A-4010 | I-51 | B.1.16 |
| A-4011 | I-52 | B.1.16 |
| A-4012 | I-53 | B.1.16 |
| A-4013 | I-54 | B.1.16 |

| Mixture | Co. 1 | Co. 2 |
|---|---|---|
| A-4014 | I-55 | B.1.16 |
| A-4015 | I-56 | B.1.16 |
| A-4016 | I-57 | B.1.16 |
| A-4017 | I-58 | B.1.16 |
| A-4018 | I-59 | B.1.16 |
| A-4019 | I-60 | B.1.16 |
| A-4020 | I-61 | B.1.16 |
| A-4021 | I-62 | B.1.16 |
| A-4022 | I-63 | B.1.16 |
| A-4023 | I-64 | B.1.16 |
| A-4024 | I-65 | B.1.16 |
| A-4025 | I-66 | B.1.16 |
| A-4026 | I-67 | B.1.16 |
| A-4027 | I-68 | B.1.16 |
| A-4028 | I-69 | B.1.16 |
| A-4029 | I-70 | B.1.16 |
| A-4030 | I-71 | B.1.16 |
| A-4031 | I-72 | B.1.16 |
| A-4032 | I-73 | B.1.16 |
| A-4033 | I-74 | B.1.16 |
| A-4034 | I-75 | B.1.16 |
| A-4035 | I-76 | B.1.16 |
| A-4036 | I-77 | B.1.16 |
| A-4037 | I-78 | B.1.16 |
| A-4038 | I-79 | B.1.16 |
| A-4039 | I-80 | B.1.16 |
| A-4040 | I-81 | B.1.16 |
| A-4041 | I-82 | B.1.16 |
| A-4042 | I-83 | B.1.16 |
| A-4043 | I-84 | B.1.16 |
| A-4044 | I-85 | B.1.16 |
| A-4045 | I-86 | B.1.16 |
| A-4046 | I-87 | B.1.16 |
| A-4047 | I-88 | B.1.16 |
| A-4048 | I-89 | B.1.16 |
| A-4049 | I-90 | B.1.16 |
| A-4050 | I-91 | B.1.16 |
| A-4051 | I-92 | B.1.16 |
| A-4052 | I-93 | B.1.16 |
| A-4053 | I-94 | B.1.16 |
| A-4054 | I-95 | B.1.16 |

| Mixture | Co. 1 | Co. 2 |
|---|---|---|
| A-4055 | I-96 | B.1.16 |
| A-4056 | I-97 | B.1.16 |
| A-4057 | I-98 | B.1.16 |
| A-4058 | I-99 | B.1.16 |
| A-4059 | I-100 | B.1.16 |
| A-4060 | I-101 | B.1.16 |
| A-4061 | I-102 | B.1.16 |
| A-4062 | I-103 | B.1.16 |
| A-4063 | I-104 | B.1.16 |
| A-4064 | I-105 | B.1.16 |
| A-4065 | I-106 | B.1.16 |
| A-4066 | I-107 | B.1.16 |
| A-4067 | I-1 | B.1.17 |
| A-4068 | I-2 | B.1.17 |
| A-4069 | I-3 | B.1.17 |
| A-4070 | I-4 | B.1.17 |
| A-4071 | I-5 | B.1.17 |
| A-4072 | I-6 | B.1.17 |
| A-4073 | I-7 | B.1.17 |
| A-4074 | I-8 | B.1.17 |
| A-4075 | I-9 | B.1.17 |
| A-4076 | I-10 | B.1.17 |
| A-4077 | I-11 | B.1.17 |
| A-4078 | I-12 | B.1.17 |
| A-4079 | I-13 | B.1.17 |
| A-4080 | I-14 | B.1.17 |
| A-4081 | I-15 | B.1.17 |
| A-4082 | I-16 | B.1.17 |
| A-4083 | I-17 | B.1.17 |
| A-4084 | I-18 | B.1.17 |
| A-4085 | I-19 | B.1.17 |
| A-4086 | I-20 | B.1.17 |
| A-4087 | I-21 | B.1.17 |
| A-4088 | I-22 | B.1.17 |
| A-4089 | I-23 | B.1.17 |
| A-4090 | I-24 | B.1.17 |
| A-4091 | I-25 | B.1.17 |
| A-4092 | I-26 | B.1.17 |
| A-4093 | I-27 | B.1.17 |
| A-4094 | I-28 | B.1.17 |
| A-4095 | I-29 | B.1.17 |

| Mixture | Co. 1 | Co. 2 |
|---|---|---|
| A-4096 | I-30 | B.1.17 |
| A-4097 | I-31 | B.1.17 |
| A-4098 | I-32 | B.1.17 |
| A-4099 | I-33 | B.1.17 |
| A-4100 | I-34 | B.1.17 |
| A-4101 | I-35 | B.1.17 |
| A-4102 | I-36 | B.1.17 |
| A-4103 | I-37 | B.1.17 |
| A-4104 | I-38 | B.1.17 |
| A-4105 | I-39 | B.1.17 |
| A-4106 | I-40 | B.1.17 |
| A-4107 | I-41 | B.1.17 |
| A-4108 | I-42 | B.1.17 |
| A-4109 | I-43 | B.1.17 |
| A-4110 | I-44 | B.1.17 |
| A-4111 | I-45 | B.1.17 |
| A-4112 | I-46 | B.1.17 |
| A-4113 | I-47 | B.1.17 |
| A-4114 | I-48 | B.1.17 |
| A-4115 | I-49 | B.1.17 |
| A-4116 | I-50 | B.1.17 |
| A-4117 | I-51 | B.1.17 |
| A-4118 | I-52 | B.1.17 |
| A-4119 | I-53 | B.1.17 |
| A-4120 | I-54 | B.1.17 |
| A-4121 | I-55 | B.1.17 |
| A-4122 | I-56 | B.1.17 |
| A-4123 | I-57 | B.1.17 |
| A-4124 | I-58 | B.1.17 |
| A-4125 | I-59 | B.1.17 |
| A-4126 | I-60 | B.1.17 |
| A-4127 | I-61 | B.1.17 |
| A-4128 | I-62 | B.1.17 |
| A-4129 | I-63 | B.1.17 |
| A-4130 | I-64 | B.1.17 |
| A-4131 | I-65 | B.1.17 |
| A-4132 | I-66 | B.1.17 |
| A-4133 | I-67 | B.1.17 |
| A-4134 | I-68 | B.1.17 |
| A-4135 | I-69 | B.1.17 |
| A-4136 | I-70 | B.1.17 |

| Mixture | Co. 1 | Co. 2 |
|---|---|---|
| A-4137 | I-71 | B.1.17 |
| A-4138 | I-72 | B.1.17 |
| A-4139 | I-73 | B.1.17 |
| A-4140 | I-74 | B.1.17 |
| A-4141 | I-75 | B.1.17 |
| A-4142 | I-76 | B.1.17 |
| A-4143 | I-77 | B.1.17 |
| A-4144 | I-78 | B.1.17 |
| A-4145 | I-79 | B.1.17 |
| A-4146 | I-80 | B.1.17 |
| A-4147 | I-81 | B.1.17 |
| A-4148 | I-82 | B.1.17 |
| A-4149 | I-83 | B.1.17 |
| A-4150 | I-84 | B.1.17 |
| A-4151 | I-85 | B.1.17 |
| A-4152 | I-86 | B.1.17 |
| A-4153 | I-87 | B.1.17 |
| A-4154 | I-88 | B.1.17 |
| A-4155 | I-89 | B.1.17 |
| A-4156 | I-90 | B.1.17 |
| A-4157 | I-91 | B.1.17 |
| A-4158 | I-92 | B.1.17 |
| A-4159 | I-93 | B.1.17 |
| A-4160 | I-94 | B.1.17 |
| A-4161 | I-95 | B.1.17 |
| A-4162 | I-96 | B.1.17 |
| A-4163 | I-97 | B.1.17 |
| A-4164 | I-98 | B.1.17 |
| A-4165 | I-99 | B.1.17 |
| A-4166 | I-100 | B.1.17 |
| A-4167 | I-101 | B.1.17 |
| A-4168 | I-102 | B.1.17 |
| A-4169 | I-103 | B.1.17 |
| A-4170 | I-104 | B.1.17 |
| A-4171 | I-105 | B.1.17 |
| A-4172 | I-106 | B.1.17 |
| A-4173 | I-107 | B.1.17 |
| A-4174 | I-1 | B.1.18 |
| A-4175 | I-2 | B.1.18 |
| A-4176 | I-3 | B.1.18 |
| A-4177 | I-4 | B.1.18 |

| Mixture | Co. 1 | Co. 2 |
|---|---|---|
| A-4178 | I-5 | B.1.18 |
| A-4179 | I-6 | B.1.18 |
| A-4180 | I-7 | B.1.18 |
| A-4181 | I-8 | B.1.18 |
| A-4182 | I-9 | B.1.18 |
| A-4183 | I-10 | B.1.18 |
| A-4184 | I-11 | B.1.18 |
| A-4185 | I-12 | B.1.18 |
| A-4186 | I-13 | B.1.18 |
| A-4187 | I-14 | B.1.18 |
| A-4188 | I-15 | B.1.18 |
| A-4189 | I-16 | B.1.18 |
| A-4190 | I-17 | B.1.18 |
| A-4191 | I-18 | B.1.18 |
| A-4192 | I-19 | B.1.18 |
| A-4193 | I-20 | B.1.18 |
| A-4194 | I-21 | B.1.18 |
| A-4195 | I-22 | B.1.18 |
| A-4196 | I-23 | B.1.18 |
| A-4197 | I-24 | B.1.18 |
| A-4198 | I-25 | B.1.18 |
| A-4199 | I-26 | B.1.18 |
| A-4200 | I-27 | B.1.18 |
| A-4201 | I-28 | B.1.18 |
| A-4202 | I-29 | B.1.18 |
| A-4203 | I-30 | B.1.18 |
| A-4204 | I-31 | B.1.18 |
| A-4205 | I-32 | B.1.18 |
| A-4206 | I-33 | B.1.18 |
| A-4207 | I-34 | B.1.18 |
| A-4208 | I-35 | B.1.18 |
| A-4209 | I-36 | B.1.18 |
| A-4210 | I-37 | B.1.18 |
| A-4211 | I-38 | B.1.18 |
| A-4212 | I-39 | B.1.18 |
| A-4213 | I-40 | B.1.18 |
| A-4214 | I-41 | B.1.18 |
| A-4215 | I-42 | B.1.18 |
| A-4216 | I-43 | B.1.18 |
| A-4217 | I-44 | B.1.18 |
| A-4218 | I-45 | B.1.18 |

| Mixture | Co. 1 | Co. 2 |
|---|---|---|
| A-4219 | I-46 | B.1.18 |
| A-4220 | I-47 | B.1.18 |
| A-4221 | I-48 | B.1.18 |
| A-4222 | I-49 | B.1.18 |
| A-4223 | I-50 | B.1.18 |
| A-4224 | I-51 | B.1.18 |
| A-4225 | I-52 | B.1.18 |
| A-4226 | I-53 | B.1.18 |
| A-4227 | I-54 | B.1.18 |
| A-4228 | I-55 | B.1.18 |
| A-4229 | I-56 | B.1.18 |
| A-4230 | I-57 | B.1.18 |
| A-4231 | I-58 | B.1.18 |
| A-4232 | I-59 | B.1.18 |
| A-4233 | I-60 | B.1.18 |
| A-4234 | I-61 | B.1.18 |
| A-4235 | I-62 | B.1.18 |
| A-4236 | I-63 | B.1.18 |
| A-4237 | I-64 | B.1.18 |
| A-4238 | I-65 | B.1.18 |
| A-4239 | I-66 | B.1.18 |
| A-4240 | I-67 | B.1.18 |
| A-4241 | I-68 | B.1.18 |
| A-4242 | I-69 | B.1.18 |
| A-4243 | I-70 | B.1.18 |
| A-4244 | I-71 | B.1.18 |
| A-4245 | I-72 | B.1.18 |
| A-4246 | I-73 | B.1.18 |
| A-4247 | I-74 | B.1.18 |
| A-4248 | I-75 | B.1.18 |
| A-4249 | I-76 | B.1.18 |
| A-4250 | I-77 | B.1.18 |
| A-4251 | I-78 | B.1.18 |
| A-4252 | I-79 | B.1.18 |
| A-4253 | I-80 | B.1.18 |
| A-4254 | I-81 | B.1.18 |
| A-4255 | I-82 | B.1.18 |
| A-4256 | I-83 | B.1.18 |
| A-4257 | I-84 | B.1.18 |
| A-4258 | I-85 | B.1.18 |
| A-4259 | I-86 | B.1.18 |

| Mixture | Co. 1 | Co. 2 |
|---|---|---|
| A-4260 | I-87 | B.1.18 |
| A-4261 | I-88 | B.1.18 |
| A-4262 | I-89 | B.1.18 |
| A-4263 | I-90 | B.1.18 |
| A-4264 | I-91 | B.1.18 |
| A-4265 | I-92 | B.1.18 |
| A-4266 | I-93 | B.1.18 |
| A-4267 | I-94 | B.1.18 |
| A-4268 | I-95 | B.1.18 |
| A-4269 | I-96 | B.1.18 |
| A-4270 | I-97 | B.1.18 |
| A-4271 | I-98 | B.1.18 |
| A-4272 | I-99 | B.1.18 |
| A-4273 | I-100 | B.1.18 |
| A-4274 | I-101 | B.1.18 |
| A-4275 | I-102 | B.1.18 |
| A-4276 | I-103 | B.1.18 |
| A-4277 | I-104 | B.1.18 |
| A-4278 | I-105 | B.1.18 |
| A-4279 | I-106 | B.1.18 |
| A-4280 | I-107 | B.1.18 |
| A-4281 | I-1 | B.1.19 |
| A-4282 | I-2 | B.1.19 |
| A-4283 | I-3 | B.1.19 |
| A-4284 | I-4 | B.1.19 |
| A-4285 | I-5 | B.1.19 |
| A-4286 | I-6 | B.1.19 |
| A-4287 | I-7 | B.1.19 |
| A-4288 | I-8 | B.1.19 |
| A-4289 | I-9 | B.1.19 |
| A-4290 | I-10 | B.1.19 |
| A-4291 | I-11 | B.1.19 |
| A-4292 | I-12 | B.1.19 |
| A-4293 | I-13 | B.1.19 |
| A-4294 | I-14 | B.1.19 |
| A-4295 | I-15 | B.1.19 |
| A-4296 | I-16 | B.1.19 |
| A-4297 | I-17 | B.1.19 |
| A-4298 | I-18 | B.1.19 |
| A-4299 | I-19 | B.1.19 |
| A-4300 | I-20 | B.1.19 |

| Mixture | Co. 1 | Co. 2 |
|---|---|---|
| A-4301 | I-21 | B.1.19 |
| A-4302 | I-22 | B.1.19 |
| A-4303 | I-23 | B.1.19 |
| A-4304 | I-24 | B.1.19 |
| A-4305 | I-25 | B.1.19 |
| A-4306 | I-26 | B.1.19 |
| A-4307 | I-27 | B.1.19 |
| A-4308 | I-28 | B.1.19 |
| A-4309 | I-29 | B.1.19 |
| A-4310 | I-30 | B.1.19 |
| A-4311 | I-31 | B.1.19 |
| A-4312 | I-32 | B.1.19 |
| A-4313 | I-33 | B.1.19 |
| A-4314 | I-34 | B.1.19 |
| A-4315 | I-35 | B.1.19 |
| A-4316 | I-36 | B.1.19 |
| A-4317 | I-37 | B.1.19 |
| A-4318 | I-38 | B.1.19 |
| A-4319 | I-39 | B.1.19 |
| A-4320 | I-40 | B.1.19 |
| A-4321 | I-41 | B.1.19 |
| A-4322 | I-42 | B.1.19 |
| A-4323 | I-43 | B.1.19 |
| A-4324 | I-44 | B.1.19 |
| A-4325 | I-45 | B.1.19 |
| A-4326 | I-46 | B.1.19 |
| A-4327 | I-47 | B.1.19 |
| A-4328 | I-48 | B.1.19 |
| A-4329 | I-49 | B.1.19 |
| A-4330 | I-50 | B.1.19 |
| A-4331 | I-51 | B.1.19 |
| A-4332 | I-52 | B.1.19 |
| A-4333 | I-53 | B.1.19 |
| A-4334 | I-54 | B.1.19 |
| A-4335 | I-55 | B.1.19 |
| A-4336 | I-56 | B.1.19 |
| A-4337 | I-57 | B.1.19 |
| A-4338 | I-58 | B.1.19 |
| A-4339 | I-59 | B.1.19 |
| A-4340 | I-60 | B.1.19 |
| A-4341 | I-61 | B.1.19 |

| Mixture | Co. 1 | Co. 2 |
|---|---|---|
| A-4342 | I-62 | B.1.19 |
| A-4343 | I-63 | B.1.19 |
| A-4344 | I-64 | B.1.19 |
| A-4345 | I-65 | B.1.19 |
| A-4346 | I-66 | B.1.19 |
| A-4347 | I-67 | B.1.19 |
| A-4348 | I-68 | B.1.19 |
| A-4349 | I-69 | B.1.19 |
| A-4350 | I-70 | B.1.19 |
| A-4351 | I-71 | B.1.19 |
| A-4352 | I-72 | B.1.19 |
| A-4353 | I-73 | B.1.19 |
| A-4354 | I-74 | B.1.19 |
| A-4355 | I-75 | B.1.19 |
| A-4356 | I-76 | B.1.19 |
| A-4357 | I-77 | B.1.19 |
| A-4358 | I-78 | B.1.19 |
| A-4359 | I-79 | B.1.19 |
| A-4360 | I-80 | B.1.19 |
| A-4361 | I-81 | B.1.19 |
| A-4362 | I-82 | B.1.19 |
| A-4363 | I-83 | B.1.19 |
| A-4364 | I-84 | B.1.19 |
| A-4365 | I-85 | B.1.19 |
| A-4366 | I-86 | B.1.19 |
| A-4367 | I-87 | B.1.19 |
| A-4368 | I-88 | B.1.19 |
| A-4369 | I-89 | B.1.19 |
| A-4370 | I-90 | B.1.19 |
| A-4371 | I-91 | B.1.19 |
| A-4372 | I-92 | B.1.19 |
| A-4373 | I-93 | B.1.19 |
| A-4374 | I-94 | B.1.19 |
| A-4375 | I-95 | B.1.19 |
| A-4376 | I-96 | B.1.19 |
| A-4377 | I-97 | B.1.19 |
| A-4378 | I-98 | B.1.19 |
| A-4379 | I-99 | B.1.19 |
| A-4380 | I-100 | B.1.19 |
| A-4381 | I-101 | B.1.19 |
| A-4382 | I-102 | B.1.19 |

| Mixture | Co. 1 | Co. 2 |
|---|---|---|
| A-4383 | I-103 | B.1.19 |
| A-4384 | I-104 | B.1.19 |
| A-4385 | I-105 | B.1.19 |
| A-4386 | I-106 | B.1.19 |
| A-4387 | I-107 | B.1.19 |
| A-4388 | I-1 | B.1.20 |
| A-4389 | I-2 | B.1.20 |
| A-4390 | I-3 | B.1.20 |
| A-4391 | I-4 | B.1.20 |
| A-4392 | I-5 | B.1.20 |
| A-4393 | I-6 | B.1.20 |
| A-4394 | I-7 | B.1.20 |
| A-4395 | I-8 | B.1.20 |
| A-4396 | I-9 | B.1.20 |
| A-4397 | I-10 | B.1.20 |
| A-4398 | I-11 | B.1.20 |
| A-4399 | I-12 | B.1.20 |
| A-4400 | I-13 | B.1.20 |
| A-4401 | I-14 | B.1.20 |
| A-4402 | I-15 | B.1.20 |
| A-4403 | I-16 | B.1.20 |
| A-4404 | I-17 | B.1.20 |
| A-4405 | I-18 | B.1.20 |
| A-4406 | I-19 | B.1.20 |
| A-4407 | I-20 | B.1.20 |
| A-4408 | I-21 | B.1.20 |
| A-4409 | I-22 | B.1.20 |
| A-4410 | I-23 | B.1.20 |
| A-4411 | I-24 | B.1.20 |
| A-4412 | I-25 | B.1.20 |
| A-4413 | I-26 | B.1.20 |
| A-4414 | I-27 | B.1.20 |
| A-4415 | I-28 | B.1.20 |
| A-4416 | I-29 | B.1.20 |
| A-4417 | I-30 | B.1.20 |
| A-4418 | I-31 | B.1.20 |
| A-4419 | I-32 | B.1.20 |
| A-4420 | I-33 | B.1.20 |
| A-4421 | I-34 | B.1.20 |
| A-4422 | I-35 | B.1.20 |
| A-4423 | I-36 | B.1.20 |

| Mixture | Co. 1 | Co. 2 |
|---|---|---|
| A-4424 | I-37 | B.1.20 |
| A-4425 | I-38 | B.1.20 |
| A-4426 | I-39 | B.1.20 |
| A-4427 | I-40 | B.1.20 |
| A-4428 | I-41 | B.1.20 |
| A-4429 | I-42 | B.1.20 |
| A-4430 | I-43 | B.1.20 |
| A-4431 | I-44 | B.1.20 |
| A-4432 | I-45 | B.1.20 |
| A-4433 | I-46 | B.1.20 |
| A-4434 | I-47 | B.1.20 |
| A-4435 | I-48 | B.1.20 |
| A-4436 | I-49 | B.1.20 |
| A-4437 | I-50 | B.1.20 |
| A-4438 | I-51 | B.1.20 |
| A-4439 | I-52 | B.1.20 |
| A-4440 | I-53 | B.1.20 |
| A-4441 | I-54 | B.1.20 |
| A-4442 | I-55 | B.1.20 |
| A-4443 | I-56 | B.1.20 |
| A-4444 | I-57 | B.1.20 |
| A-4445 | I-58 | B.1.20 |
| A-4446 | I-59 | B.1.20 |
| A-4447 | I-60 | B.1.20 |
| A-4448 | I-61 | B.1.20 |
| A-4449 | I-62 | B.1.20 |
| A-4450 | I-63 | B.1.20 |
| A-4451 | I-64 | B.1.20 |
| A-4452 | I-65 | B.1.20 |
| A-4453 | I-66 | B.1.20 |
| A-4454 | I-67 | B.1.20 |
| A-4455 | I-68 | B.1.20 |
| A-4456 | I-69 | B.1.20 |
| A-4457 | I-70 | B.1.20 |
| A-4458 | I-71 | B.1.20 |
| A-4459 | I-72 | B.1.20 |
| A-4460 | I-73 | B.1.20 |
| A-4461 | I-74 | B.1.20 |
| A-4462 | I-75 | B.1.20 |
| A-4463 | I-76 | B.1.20 |
| A-4464 | I-77 | B.1.20 |

| Mixture | Co. 1 | Co. 2 |
|---|---|---|
| A-4465 | I-78 | B.1.20 |
| A-4466 | I-79 | B.1.20 |
| A-4467 | I-80 | B.1.20 |
| A-4468 | I-81 | B.1.20 |
| A-4469 | I-82 | B.1.20 |
| A-4470 | I-83 | B.1.20 |
| A-4471 | I-84 | B.1.20 |
| A-4472 | I-85 | B.1.20 |
| A-4473 | I-86 | B.1.20 |
| A-4474 | I-87 | B.1.20 |
| A-4475 | I-88 | B.1.20 |
| A-4476 | I-89 | B.1.20 |
| A-4477 | I-90 | B.1.20 |
| A-4478 | I-91 | B.1.20 |
| A-4479 | I-92 | B.1.20 |
| A-4480 | I-93 | B.1.20 |
| A-4481 | I-94 | B.1.20 |
| A-4482 | I-95 | B.1.20 |
| A-4483 | I-96 | B.1.20 |
| A-4484 | I-97 | B.1.20 |
| A-4485 | I-98 | B.1.20 |
| A-4486 | I-99 | B.1.20 |
| A-4487 | I-100 | B.1.20 |
| A-4488 | I-101 | B.1.20 |
| A-4489 | I-102 | B.1.20 |
| A-4490 | I-103 | B.1.20 |
| A-4491 | I-104 | B.1.20 |
| A-4492 | I-105 | B.1.20 |
| A-4493 | I-106 | B.1.20 |
| A-4494 | I-107 | B.1.20 |
| A-4495 | I-1 | B.1.21 |
| A-4496 | I-2 | B.1.21 |
| A-4497 | I-3 | B.1.21 |
| A-4498 | I-4 | B.1.21 |
| A-4499 | I-5 | B.1.21 |
| A-4500 | I-6 | B.1.21 |
| A-4501 | I-7 | B.1.21 |
| A-4502 | I-8 | B.1.21 |
| A-4503 | I-9 | B.1.21 |
| A-4504 | I-10 | B.1.21 |
| A-4505 | I-11 | B.1.21 |

| Mixture | Co. 1 | Co. 2 |
|---|---|---|
| A-4506 | I-12 | B.1.21 |
| A-4507 | I-13 | B.1.21 |
| A-4508 | I-14 | B.1.21 |
| A-4509 | I-15 | B.1.21 |
| A-4510 | I-16 | B.1.21 |
| A-4511 | I-17 | B.1.21 |
| A-4512 | I-18 | B.1.21 |
| A-4513 | I-19 | B.1.21 |
| A-4514 | I-20 | B.1.21 |
| A-4515 | I-21 | B.1.21 |
| A-4516 | I-22 | B.1.21 |
| A-4517 | I-23 | B.1.21 |
| A-4518 | I-24 | B.1.21 |
| A-4519 | I-25 | B.1.21 |
| A-4520 | I-26 | B.1.21 |
| A-4521 | I-27 | B.1.21 |
| A-4522 | I-28 | B.1.21 |
| A-4523 | I-29 | B.1.21 |
| A-4524 | I-30 | B.1.21 |
| A-4525 | I-31 | B.1.21 |
| A-4526 | I-32 | B.1.21 |
| A-4527 | I-33 | B.1.21 |
| A-4528 | I-34 | B.1.21 |
| A-4529 | I-35 | B.1.21 |
| A-4530 | I-36 | B.1.21 |
| A-4531 | I-37 | B.1.21 |
| A-4532 | I-38 | B.1.21 |
| A-4533 | I-39 | B.1.21 |
| A-4534 | I-40 | B.1.21 |
| A-4535 | I-41 | B.1.21 |
| A-4536 | I-42 | B.1.21 |
| A-4537 | I-43 | B.1.21 |
| A-4538 | I-44 | B.1.21 |
| A-4539 | I-45 | B.1.21 |
| A-4540 | I-46 | B.1.21 |
| A-4541 | I-47 | B.1.21 |
| A-4542 | I-48 | B.1.21 |
| A-4543 | I-49 | B.1.21 |
| A-4544 | I-50 | B.1.21 |
| A-4545 | I-51 | B.1.21 |
| A-4546 | I-52 | B.1.21 |

| Mixture | Co. 1 | Co. 2 |
|---|---|---|
| A-4547 | I-53 | B.1.21 |
| A-4548 | I-54 | B.1.21 |
| A-4549 | I-55 | B.1.21 |
| A-4550 | I-56 | B.1.21 |
| A-4551 | I-57 | B.1.21 |
| A-4552 | I-58 | B.1.21 |
| A-4553 | I-59 | B.1.21 |
| A-4554 | I-60 | B.1.21 |
| A-4555 | I-61 | B.1.21 |
| A-4556 | I-62 | B.1.21 |
| A-4557 | I-63 | B.1.21 |
| A-4558 | I-64 | B.1.21 |
| A-4559 | I-65 | B.1.21 |
| A-4560 | I-66 | B.1.21 |
| A-4561 | I-67 | B.1.21 |
| A-4562 | I-68 | B.1.21 |
| A-4563 | I-69 | B.1.21 |
| A-4564 | I-70 | B.1.21 |
| A-4565 | I-71 | B.1.21 |
| A-4566 | I-72 | B.1.21 |
| A-4567 | I-73 | B.1.21 |
| A-4568 | I-74 | B.1.21 |
| A-4569 | I-75 | B.1.21 |
| A-4570 | I-76 | B.1.21 |
| A-4571 | I-77 | B.1.21 |
| A-4572 | I-78 | B.1.21 |
| A-4573 | I-79 | B.1.21 |
| A-4574 | I-80 | B.1.21 |
| A-4575 | I-81 | B.1.21 |
| A-4576 | I-82 | B.1.21 |
| A-4577 | I-83 | B.1.21 |
| A-4578 | I-84 | B.1.21 |
| A-4579 | I-85 | B.1.21 |
| A-4580 | I-86 | B.1.21 |
| A-4581 | I-87 | B.1.21 |
| A-4582 | I-88 | B.1.21 |
| A-4583 | I-89 | B.1.21 |
| A-4584 | I-90 | B.1.21 |
| A-4585 | I-91 | B.1.21 |
| A-4586 | I-92 | B.1.21 |
| A-4587 | I-93 | B.1.21 |

| Mixture | Co. 1 | Co. 2 |
|---|---|---|
| A-4588 | I-94 | B.1.21 |
| A-4589 | I-95 | B.1.21 |
| A-4590 | I-96 | B.1.21 |
| A-4591 | I-97 | B.1.21 |
| A-4592 | I-98 | B.1.21 |
| A-4593 | I-99 | B.1.21 |
| A-4594 | I-100 | B.1.21 |
| A-4595 | I-101 | B.1.21 |
| A-4596 | I-102 | B.1.21 |
| A-4597 | I-103 | B.1.21 |
| A-4598 | I-104 | B.1.21 |
| A-4599 | I-105 | B.1.21 |
| A-4600 | I-106 | B.1.21 |
| A-4601 | I-107 | B.1.21 |
| A-4602 | I-1 | B.1.22 |
| A-4603 | I-2 | B.1.22 |
| A-4604 | I-3 | B.1.22 |
| A-4605 | I-4 | B.1.22 |
| A-4606 | I-5 | B.1.22 |
| A-4607 | I-6 | B.1.22 |
| A-4608 | I-7 | B.1.22 |
| A-4609 | I-8 | B.1.22 |
| A-4610 | I-9 | B.1.22 |
| A-4611 | I-10 | B.1.22 |
| A-4612 | I-11 | B.1.22 |
| A-4613 | I-12 | B.1.22 |
| A-4614 | I-13 | B.1.22 |
| A-4615 | I-14 | B.1.22 |
| A-4616 | I-15 | B.1.22 |
| A-4617 | I-16 | B.1.22 |
| A-4618 | I-17 | B.1.22 |
| A-4619 | I-18 | B.1.22 |
| A-4620 | I-19 | B.1.22 |
| A-4621 | I-20 | B.1.22 |
| A-4622 | I-21 | B.1.22 |
| A-4623 | I-22 | B.1.22 |
| A-4624 | I-23 | B.1.22 |
| A-4625 | I-24 | B.1.22 |
| A-4626 | I-25 | B.1.22 |
| A-4627 | I-26 | B.1.22 |
| A-4628 | I-27 | B.1.22 |

| Mixture | Co. 1 | Co. 2 |
|---|---|---|
| A-4629 | I-28 | B.1.22 |
| A-4630 | I-29 | B.1.22 |
| A-4631 | I-30 | B.1.22 |
| A-4632 | I-31 | B.1.22 |
| A-4633 | I-32 | B.1.22 |
| A-4634 | I-33 | B.1.22 |
| A-4635 | I-34 | B.1.22 |
| A-4636 | I-35 | B.1.22 |
| A-4637 | I-36 | B.1.22 |
| A-4638 | I-37 | B.1.22 |
| A-4639 | I-38 | B.1.22 |
| A-4640 | I-39 | B.1.22 |
| A-4641 | I-40 | B.1.22 |
| A-4642 | I-41 | B.1.22 |
| A-4643 | I-42 | B.1.22 |
| A-4644 | I-43 | B.1.22 |
| A-4645 | I-44 | B.1.22 |
| A-4646 | I-45 | B.1.22 |
| A-4647 | I-46 | B.1.22 |
| A-4648 | I-47 | B.1.22 |
| A-4649 | I-48 | B.1.22 |
| A-4650 | I-49 | B.1.22 |
| A-4651 | I-50 | B.1.22 |
| A-4652 | I-51 | B.1.22 |
| A-4653 | I-52 | B.1.22 |
| A-4654 | I-53 | B.1.22 |
| A-4655 | I-54 | B.1.22 |
| A-4656 | I-55 | B.1.22 |
| A-4657 | I-56 | B.1.22 |
| A-4658 | I-57 | B.1.22 |
| A-4659 | I-58 | B.1.22 |
| A-4660 | I-59 | B.1.22 |
| A-4661 | I-60 | B.1.22 |
| A-4662 | I-61 | B.1.22 |
| A-4663 | I-62 | B.1.22 |
| A-4664 | I-63 | B.1.22 |
| A-4665 | I-64 | B.1.22 |
| A-4666 | I-65 | B.1.22 |
| A-4667 | I-66 | B.1.22 |
| A-4668 | I-67 | B.1.22 |
| A-4669 | I-68 | B.1.22 |

| Mixture | Co. 1 | Co. 2 |
|---|---|---|
| A-4670 | I-69 | B.1.22 |
| A-4671 | I-70 | B.1.22 |
| A-4672 | I-71 | B.1.22 |
| A-4673 | I-72 | B.1.22 |
| A-4674 | I-73 | B.1.22 |
| A-4675 | I-74 | B.1.22 |
| A-4676 | I-75 | B.1.22 |
| A-4677 | I-76 | B.1.22 |
| A-4678 | I-77 | B.1.22 |
| A-4679 | I-78 | B.1.22 |
| A-4680 | I-79 | B.1.22 |
| A-4681 | I-80 | B.1.22 |
| A-4682 | I-81 | B.1.22 |
| A-4683 | I-82 | B.1.22 |
| A-4684 | I-83 | B.1.22 |
| A-4685 | I-84 | B.1.22 |
| A-4686 | I-85 | B.1.22 |
| A-4687 | I-86 | B.1.22 |
| A-4688 | I-87 | B.1.22 |
| A-4689 | I-88 | B.1.22 |
| A-4690 | I-89 | B.1.22 |
| A-4691 | I-90 | B.1.22 |
| A-4692 | I-91 | B.1.22 |
| A-4693 | I-92 | B.1.22 |
| A-4694 | I-93 | B.1.22 |
| A-4695 | I-94 | B.1.22 |
| A-4696 | I-95 | B.1.22 |
| A-4697 | I-96 | B.1.22 |
| A-4698 | I-97 | B.1.22 |
| A-4699 | I-98 | B.1.22 |
| A-4700 | I-99 | B.1.22 |
| A-4701 | I-100 | B.1.22 |
| A-4702 | I-101 | B.1.22 |
| A-4703 | I-102 | B.1.22 |
| A-4704 | I-103 | B.1.22 |
| A-4705 | I-104 | B.1.22 |
| A-4706 | I-105 | B.1.22 |
| A-4707 | I-106 | B.1.22 |
| A-4708 | I-107 | B.1.22 |
| A-4709 | I-1 | B.1.23 |
| A-4710 | I-2 | B.1.23 |

| Mixture | Co. 1 | Co. 2 |
|---|---|---|
| A-4711 | I-3 | B.1.23 |
| A-4712 | I-4 | B.1.23 |
| A-4713 | I-5 | B.1.23 |
| A-4714 | I-6 | B.1.23 |
| A-4715 | I-7 | B.1.23 |
| A-4716 | I-8 | B.1.23 |
| A-4717 | I-9 | B.1.23 |
| A-4718 | I-10 | B.1.23 |
| A-4719 | I-11 | B.1.23 |
| A-4720 | I-12 | B.1.23 |
| A-4721 | I-13 | B.1.23 |
| A-4722 | I-14 | B.1.23 |
| A-4723 | I-15 | B.1.23 |
| A-4724 | I-16 | B.1.23 |
| A-4725 | I-17 | B.1.23 |
| A-4726 | I-18 | B.1.23 |
| A-4727 | I-19 | B.1.23 |
| A-4728 | I-20 | B.1.23 |
| A-4729 | I-21 | B.1.23 |
| A-4730 | I-22 | B.1.23 |
| A-4731 | I-23 | B.1.23 |
| A-4732 | I-24 | B.1.23 |
| A-4733 | I-25 | B.1.23 |
| A-4734 | I-26 | B.1.23 |
| A-4735 | I-27 | B.1.23 |
| A-4736 | I-28 | B.1.23 |
| A-4737 | I-29 | B.1.23 |
| A-4738 | I-30 | B.1.23 |
| A-4739 | I-31 | B.1.23 |
| A-4740 | I-32 | B.1.23 |
| A-4741 | I-33 | B.1.23 |
| A-4742 | I-34 | B.1.23 |
| A-4743 | I-35 | B.1.23 |
| A-4744 | I-36 | B.1.23 |
| A-4745 | I-37 | B.1.23 |
| A-4746 | I-38 | B.1.23 |
| A-4747 | I-39 | B.1.23 |
| A-4748 | I-40 | B.1.23 |
| A-4749 | I-41 | B.1.23 |
| A-4750 | I-42 | B.1.23 |
| A-4751 | I-43 | B.1.23 |

| Mixture | Co. 1 | Co. 2 |
|---|---|---|
| A-4752 | I-44 | B.1.23 |
| A-4753 | I-45 | B.1.23 |
| A-4754 | I-46 | B.1.23 |
| A-4755 | I-47 | B.1.23 |
| A-4756 | I-48 | B.1.23 |
| A-4757 | I-49 | B.1.23 |
| A-4758 | I-50 | B.1.23 |
| A-4759 | I-51 | B.1.23 |
| A-4760 | I-52 | B.1.23 |
| A-4761 | I-53 | B.1.23 |
| A-4762 | I-54 | B.1.23 |
| A-4763 | I-55 | B.1.23 |
| A-4764 | I-56 | B.1.23 |
| A-4765 | I-57 | B.1.23 |
| A-4766 | I-58 | B.1.23 |
| A-4767 | I-59 | B.1.23 |
| A-4768 | I-60 | B.1.23 |
| A-4769 | I-61 | B.1.23 |
| A-4770 | I-62 | B.1.23 |
| A-4771 | I-63 | B.1.23 |
| A-4772 | I-64 | B.1.23 |
| A-4773 | I-65 | B.1.23 |
| A-4774 | I-66 | B.1.23 |
| A-4775 | I-67 | B.1.23 |
| A-4776 | I-68 | B.1.23 |
| A-4777 | I-69 | B.1.23 |
| A-4778 | I-70 | B.1.23 |
| A-4779 | I-71 | B.1.23 |
| A-4780 | I-72 | B.1.23 |
| A-4781 | I-73 | B.1.23 |
| A-4782 | I-74 | B.1.23 |
| A-4783 | I-75 | B.1.23 |
| A-4784 | I-76 | B.1.23 |
| A-4785 | I-77 | B.1.23 |
| A-4786 | I-78 | B.1.23 |
| A-4787 | I-79 | B.1.23 |
| A-4788 | I-80 | B.1.23 |
| A-4789 | I-81 | B.1.23 |
| A-4790 | I-82 | B.1.23 |
| A-4791 | I-83 | B.1.23 |
| A-4792 | I-84 | B.1.23 |

| Mixture | Co. 1 | Co. 2 |
|---|---|---|
| A-4793 | I-85 | B.1.23 |
| A-4794 | I-86 | B.1.23 |
| A-4795 | I-87 | B.1.23 |
| A-4796 | I-88 | B.1.23 |
| A-4797 | I-89 | B.1.23 |
| A-4798 | I-90 | B.1.23 |
| A-4799 | I-91 | B.1.23 |
| A-4800 | I-92 | B.1.23 |
| A-4801 | I-93 | B.1.23 |
| A-4802 | I-94 | B.1.23 |
| A-4803 | I-95 | B.1.23 |
| A-4804 | I-96 | B.1.23 |
| A-4805 | I-97 | B.1.23 |
| A-4806 | I-98 | B.1.23 |
| A-4807 | I-99 | B.1.23 |
| A-4808 | I-100 | B.1.23 |
| A-4809 | I-101 | B.1.23 |
| A-4810 | I-102 | B.1.23 |
| A-4811 | I-103 | B.1.23 |
| A-4812 | I-104 | B.1.23 |
| A-4813 | I-105 | B.1.23 |
| A-4814 | I-106 | B.1.23 |
| A-4815 | I-107 | B.1.23 |
| A-4816 | I-1 | B.1.24 |
| A-4817 | I-2 | B.1.24 |
| A-4818 | I-3 | B.1.24 |
| A-4819 | I-4 | B.1.24 |
| A-4820 | I-5 | B.1.24 |
| A-4821 | I-6 | B.1.24 |
| A-4822 | I-7 | B.1.24 |
| A-4823 | I-8 | B.1.24 |
| A-4824 | I-9 | B.1.24 |
| A-4825 | I-10 | B.1.24 |
| A-4826 | I-11 | B.1.24 |
| A-4827 | I-12 | B.1.24 |
| A-4828 | I-13 | B.1.24 |
| A-4829 | I-14 | B.1.24 |
| A-4830 | I-15 | B.1.24 |
| A-4831 | I-16 | B.1.24 |
| A-4832 | I-17 | B.1.24 |
| A-4833 | I-18 | B.1.24 |

| Mixture | Co. 1 | Co. 2 |
|---|---|---|
| A-4834 | I-19 | B.1.24 |
| A-4835 | I-20 | B.1.24 |
| A-4836 | I-21 | B.1.24 |
| A-4837 | I-22 | B.1.24 |
| A-4838 | I-23 | B.1.24 |
| A-4839 | I-24 | B.1.24 |
| A-4840 | I-25 | B.1.24 |
| A-4841 | I-26 | B.1.24 |
| A-4842 | I-27 | B.1.24 |
| A-4843 | I-28 | B.1.24 |
| A-4844 | I-29 | B.1.24 |
| A-4845 | I-30 | B.1.24 |
| A-4846 | I-31 | B.1.24 |
| A-4847 | I-32 | B.1.24 |
| A-4848 | I-33 | B.1.24 |
| A-4849 | I-34 | B.1.24 |
| A-4850 | I-35 | B.1.24 |
| A-4851 | I-36 | B.1.24 |
| A-4852 | I-37 | B.1.24 |
| A-4853 | I-38 | B.1.24 |
| A-4854 | I-39 | B.1.24 |
| A-4855 | I-40 | B.1.24 |
| A-4856 | I-41 | B.1.24 |
| A-4857 | I-42 | B.1.24 |
| A-4858 | I-43 | B.1.24 |
| A-4859 | I-44 | B.1.24 |
| A-4860 | I-45 | B.1.24 |
| A-4861 | I-46 | B.1.24 |
| A-4862 | I-47 | B.1.24 |
| A-4863 | I-48 | B.1.24 |
| A-4864 | I-49 | B.1.24 |
| A-4865 | I-50 | B.1.24 |
| A-4866 | I-51 | B.1.24 |
| A-4867 | I-52 | B.1.24 |
| A-4868 | I-53 | B.1.24 |
| A-4869 | I-54 | B.1.24 |
| A-4870 | I-55 | B.1.24 |
| A-4871 | I-56 | B.1.24 |
| A-4872 | I-57 | B.1.24 |
| A-4873 | I-58 | B.1.24 |
| A-4874 | I-59 | B.1.24 |

| Mixture | Co. 1 | Co. 2 |
|---|---|---|
| A-4875 | I-60 | B.1.24 |
| A-4876 | I-61 | B.1.24 |
| A-4877 | I-62 | B.1.24 |
| A-4878 | I-63 | B.1.24 |
| A-4879 | I-64 | B.1.24 |
| A-4880 | I-65 | B.1.24 |
| A-4881 | I-66 | B.1.24 |
| A-4882 | I-67 | B.1.24 |
| A-4883 | I-68 | B.1.24 |
| A-4884 | I-69 | B.1.24 |
| A-4885 | I-70 | B.1.24 |
| A-4886 | I-71 | B.1.24 |
| A-4887 | I-72 | B.1.24 |
| A-4888 | I-73 | B.1.24 |
| A-4889 | I-74 | B.1.24 |
| A-4890 | I-75 | B.1.24 |
| A-4891 | I-76 | B.1.24 |
| A-4892 | I-77 | B.1.24 |
| A-4893 | I-78 | B.1.24 |
| A-4894 | I-79 | B.1.24 |
| A-4895 | I-80 | B.1.24 |
| A-4896 | I-81 | B.1.24 |
| A-4897 | I-82 | B.1.24 |
| A-4898 | I-83 | B.1.24 |
| A-4899 | I-84 | B.1.24 |
| A-4900 | I-85 | B.1.24 |
| A-4901 | I-86 | B.1.24 |
| A-4902 | I-87 | B.1.24 |
| A-4903 | I-88 | B.1.24 |
| A-4904 | I-89 | B.1.24 |
| A-4905 | I-90 | B.1.24 |
| A-4906 | I-91 | B.1.24 |
| A-4907 | I-92 | B.1.24 |
| A-4908 | I-93 | B.1.24 |
| A-4909 | I-94 | B.1.24 |
| A-4910 | I-95 | B.1.24 |
| A-4911 | I-96 | B.1.24 |
| A-4912 | I-97 | B.1.24 |
| A-4913 | I-98 | B.1.24 |
| A-4914 | I-99 | B.1.24 |
| A-4915 | I-100 | B.1.24 |

| Mixture | Co. 1 | Co. 2 |
|---|---|---|
| A-4916 | I-101 | B.1.24 |
| A-4917 | I-102 | B.1.24 |
| A-4918 | I-103 | B.1.24 |
| A-4919 | I-104 | B.1.24 |
| A-4920 | I-105 | B.1.24 |
| A-4921 | I-106 | B.1.24 |
| A-4922 | I-107 | B.1.24 |
| A-4923 | I-1 | B.1.25 |
| A-4924 | I-2 | B.1.25 |
| A-4925 | I-3 | B.1.25 |
| A-4926 | I-4 | B.1.25 |
| A-4927 | I-5 | B.1.25 |
| A-4928 | I-6 | B.1.25 |
| A-4929 | I-7 | B.1.25 |
| A-4930 | I-8 | B.1.25 |
| A-4931 | I-9 | B.1.25 |
| A-4932 | I-10 | B.1.25 |
| A-4933 | I-11 | B.1.25 |
| A-4934 | I-12 | B.1.25 |
| A-4935 | I-13 | B.1.25 |
| A-4936 | I-14 | B.1.25 |
| A-4937 | I-15 | B.1.25 |
| A-4938 | I-16 | B.1.25 |
| A-4939 | I-17 | B.1.25 |
| A-4940 | I-18 | B.1.25 |
| A-4941 | I-19 | B.1.25 |
| A-4942 | I-20 | B.1.25 |
| A-4943 | I-21 | B.1.25 |
| A-4944 | I-22 | B.1.25 |
| A-4945 | I-23 | B.1.25 |
| A-4946 | I-24 | B.1.25 |
| A-4947 | I-25 | B.1.25 |
| A-4948 | I-26 | B.1.25 |
| A-4949 | I-27 | B.1.25 |
| A-4950 | I-28 | B.1.25 |
| A-4951 | I-29 | B.1.25 |
| A-4952 | I-30 | B.1.25 |
| A-4953 | I-31 | B.1.25 |
| A-4954 | I-32 | B.1.25 |
| A-4955 | I-33 | B.1.25 |
| A-4956 | I-34 | B.1.25 |

| Mixture | Co. 1 | Co. 2 |
|---|---|---|
| A-4957 | I-35 | B.1.25 |
| A-4958 | I-36 | B.1.25 |
| A-4959 | I-37 | B.1.25 |
| A-4960 | I-38 | B.1.25 |
| A-4961 | I-39 | B.1.25 |
| A-4962 | I-40 | B.1.25 |
| A-4963 | I-41 | B.1.25 |
| A-4964 | I-42 | B.1.25 |
| A-4965 | I-43 | B.1.25 |
| A-4966 | I-44 | B.1.25 |
| A-4967 | I-45 | B.1.25 |
| A-4968 | I-46 | B.1.25 |
| A-4969 | I-47 | B.1.25 |
| A-4970 | I-48 | B.1.25 |
| A-4971 | I-49 | B.1.25 |
| A-4972 | I-50 | B.1.25 |
| A-4973 | I-51 | B.1.25 |
| A-4974 | I-52 | B.1.25 |
| A-4975 | I-53 | B.1.25 |
| A-4976 | I-54 | B.1.25 |
| A-4977 | I-55 | B.1.25 |
| A-4978 | I-56 | B.1.25 |
| A-4979 | I-57 | B.1.25 |
| A-4980 | I-58 | B.1.25 |
| A-4981 | I-59 | B.1.25 |
| A-4982 | I-60 | B.1.25 |
| A-4983 | I-61 | B.1.25 |
| A-4984 | I-62 | B.1.25 |
| A-4985 | I-63 | B.1.25 |
| A-4986 | I-64 | B.1.25 |
| A-4987 | I-65 | B.1.25 |
| A-4988 | I-66 | B.1.25 |
| A-4989 | I-67 | B.1.25 |
| A-4990 | I-68 | B.1.25 |
| A-4991 | I-69 | B.1.25 |
| A-4992 | I-70 | B.1.25 |
| A-4993 | I-71 | B.1.25 |
| A-4994 | I-72 | B.1.25 |
| A-4995 | I-73 | B.1.25 |
| A-4996 | I-74 | B.1.25 |
| A-4997 | I-75 | B.1.25 |

| Mixture | Co. 1 | Co. 2 |
|---|---|---|
| A-4998 | I-76 | B.1.25 |
| A-4999 | I-77 | B.1.25 |
| A-5000 | I-78 | B.1.25 |
| A-5001 | I-79 | B.1.25 |
| A-5002 | I-80 | B.1.25 |
| A-5003 | I-81 | B.1.25 |
| A-5004 | I-82 | B.1.25 |
| A-5005 | I-83 | B.1.25 |
| A-5006 | I-84 | B.1.25 |
| A-5007 | I-85 | B.1.25 |
| A-5008 | I-86 | B.1.25 |
| A-5009 | I-87 | B.1.25 |
| A-5010 | I-88 | B.1.25 |
| A-5011 | I-89 | B.1.25 |
| A-5012 | I-90 | B.1.25 |
| A-5013 | I-91 | B.1.25 |
| A-5014 | I-92 | B.1.25 |
| A-5015 | I-93 | B.1.25 |
| A-5016 | I-94 | B.1.25 |
| A-5017 | I-95 | B.1.25 |
| A-5018 | I-96 | B.1.25 |
| A-5019 | I-97 | B.1.25 |
| A-5020 | I-98 | B.1.25 |
| A-5021 | I-99 | B.1.25 |
| A-5022 | I-100 | B.1.25 |
| A-5023 | I-101 | B.1.25 |
| A-5024 | I-102 | B.1.25 |
| A-5025 | I-103 | B.1.25 |
| A-5026 | I-104 | B.1.25 |
| A-5027 | I-105 | B.1.25 |
| A-5028 | I-106 | B.1.25 |
| A-5029 | I-107 | B.1.25 |
| A-5030 | I-1 | B.1.26 |
| A-5031 | I-2 | B.1.26 |
| A-5032 | I-3 | B.1.26 |
| A-5033 | I-4 | B.1.26 |
| A-5034 | I-5 | B.1.26 |
| A-5035 | I-6 | B.1.26 |
| A-5036 | I-7 | B.1.26 |
| A-5037 | I-8 | B.1.26 |
| A-5038 | I-9 | B.1.26 |

| Mixture | Co. 1 | Co. 2 |
|---|---|---|
| A-5039 | I-10 | B.1.26 |
| A-5040 | I-11 | B.1.26 |
| A-5041 | I-12 | B.1.26 |
| A-5042 | I-13 | B.1.26 |
| A-5043 | I-14 | B.1.26 |
| A-5044 | I-15 | B.1.26 |
| A-5045 | I-16 | B.1.26 |
| A-5046 | I-17 | B.1.26 |
| A-5047 | I-18 | B.1.26 |
| A-5048 | I-19 | B.1.26 |
| A-5049 | I-20 | B.1.26 |
| A-5050 | I-21 | B.1.26 |
| A-5051 | I-22 | B.1.26 |
| A-5052 | I-23 | B.1.26 |
| A-5053 | I-24 | B.1.26 |
| A-5054 | I-25 | B.1.26 |
| A-5055 | I-26 | B.1.26 |
| A-5056 | I-27 | B.1.26 |
| A-5057 | I-28 | B.1.26 |
| A-5058 | I-29 | B.1.26 |
| A-5059 | I-30 | B.1.26 |
| A-5060 | I-31 | B.1.26 |
| A-5061 | I-32 | B.1.26 |
| A-5062 | I-33 | B.1.26 |
| A-5063 | I-34 | B.1.26 |
| A-5064 | I-35 | B.1.26 |
| A-5065 | I-36 | B.1.26 |
| A-5066 | I-37 | B.1.26 |
| A-5067 | I-38 | B.1.26 |
| A-5068 | I-39 | B.1.26 |
| A-5069 | I-40 | B.1.26 |
| A-5070 | I-41 | B.1.26 |
| A-5071 | I-42 | B.1.26 |
| A-5072 | I-43 | B.1.26 |
| A-5073 | I-44 | B.1.26 |
| A-5074 | I-45 | B.1.26 |
| A-5075 | I-46 | B.1.26 |
| A-5076 | I-47 | B.1.26 |
| A-5077 | I-48 | B.1.26 |
| A-5078 | I-49 | B.1.26 |
| A-5079 | I-50 | B.1.26 |

| Mixture | Co. 1 | Co. 2 |
|---|---|---|
| A-5080 | I-51 | B.1.26 |
| A-5081 | I-52 | B.1.26 |
| A-5082 | I-53 | B.1.26 |
| A-5083 | I-54 | B.1.26 |
| A-5084 | I-55 | B.1.26 |
| A-5085 | I-56 | B.1.26 |
| A-5086 | I-57 | B.1.26 |
| A-5087 | I-58 | B.1.26 |
| A-5088 | I-59 | B.1.26 |
| A-5089 | I-60 | B.1.26 |
| A-5090 | I-61 | B.1.26 |
| A-5091 | I-62 | B.1.26 |
| A-5092 | I-63 | B.1.26 |
| A-5093 | I-64 | B.1.26 |
| A-5094 | I-65 | B.1.26 |
| A-5095 | I-66 | B.1.26 |
| A-5096 | I-67 | B.1.26 |
| A-5097 | I-68 | B.1.26 |
| A-5098 | I-69 | B.1.26 |
| A-5099 | I-70 | B.1.26 |
| A-5100 | I-71 | B.1.26 |
| A-5101 | I-72 | B.1.26 |
| A-5102 | I-73 | B.1.26 |
| A-5103 | I-74 | B.1.26 |
| A-5104 | I-75 | B.1.26 |
| A-5105 | I-76 | B.1.26 |
| A-5106 | I-77 | B.1.26 |
| A-5107 | I-78 | B.1.26 |
| A-5108 | I-79 | B.1.26 |
| A-5109 | I-80 | B.1.26 |
| A-5110 | I-81 | B.1.26 |
| A-5111 | I-82 | B.1.26 |
| A-5112 | I-83 | B.1.26 |
| A-5113 | I-84 | B.1.26 |
| A-5114 | I-85 | B.1.26 |
| A-5115 | I-86 | B.1.26 |
| A-5116 | I-87 | B.1.26 |
| A-5117 | I-88 | B.1.26 |
| A-5118 | I-89 | B.1.26 |
| A-5119 | I-90 | B.1.26 |
| A-5120 | I-91 | B.1.26 |

| Mixture | Co. 1 | Co. 2 |
|---|---|---|
| A-5121 | I-92 | B.1.26 |
| A-5122 | I-93 | B.1.26 |
| A-5123 | I-94 | B.1.26 |
| A-5124 | I-95 | B.1.26 |
| A-5125 | I-96 | B.1.26 |
| A-5126 | I-97 | B.1.26 |
| A-5127 | I-98 | B.1.26 |
| A-5128 | I-99 | B.1.26 |
| A-5129 | I-100 | B.1.26 |
| A-5130 | I-101 | B.1.26 |
| A-5131 | I-102 | B.1.26 |
| A-5132 | I-103 | B.1.26 |
| A-5133 | I-104 | B.1.26 |
| A-5134 | I-105 | B.1.26 |
| A-5135 | I-106 | B.1.26 |
| A-5136 | I-107 | B.1.26 |
| A-5137 | I-1 | B.1.27 |
| A-5138 | I-2 | B.1.27 |
| A-5139 | I-3 | B.1.27 |
| A-5140 | I-4 | B.1.27 |
| A-5141 | I-5 | B.1.27 |
| A-5142 | I-6 | B.1.27 |
| A-5143 | I-7 | B.1.27 |
| A-5144 | I-8 | B.1.27 |
| A-5145 | I-9 | B.1.27 |
| A-5146 | I-10 | B.1.27 |
| A-5147 | I-11 | B.1.27 |
| A-5148 | I-12 | B.1.27 |
| A-5149 | I-13 | B.1.27 |
| A-5150 | I-14 | B.1.27 |
| A-5151 | I-15 | B.1.27 |
| A-5152 | I-16 | B.1.27 |
| A-5153 | I-17 | B.1.27 |
| A-5154 | I-18 | B.1.27 |
| A-5155 | I-19 | B.1.27 |
| A-5156 | I-20 | B.1.27 |
| A-5157 | I-21 | B.1.27 |
| A-5158 | I-22 | B.1.27 |
| A-5159 | I-23 | B.1.27 |
| A-5160 | I-24 | B.1.27 |
| A-5161 | I-25 | B.1.27 |

| Mixture | Co. 1 | Co. 2 |
|---|---|---|
| A-5162 | I-26 | B.1.27 |
| A-5163 | I-27 | B.1.27 |
| A-5164 | I-28 | B.1.27 |
| A-5165 | I-29 | B.1.27 |
| A-5166 | I-30 | B.1.27 |
| A-5167 | I-31 | B.1.27 |
| A-5168 | I-32 | B.1.27 |
| A-5169 | I-33 | B.1.27 |
| A-5170 | I-34 | B.1.27 |
| A-5171 | I-35 | B.1.27 |
| A-5172 | I-36 | B.1.27 |
| A-5173 | I-37 | B.1.27 |
| A-5174 | I-38 | B.1.27 |
| A-5175 | I-39 | B.1.27 |
| A-5176 | I-40 | B.1.27 |
| A-5177 | I-41 | B.1.27 |
| A-5178 | I-42 | B.1.27 |
| A-5179 | I-43 | B.1.27 |
| A-5180 | I-44 | B.1.27 |
| A-5181 | I-45 | B.1.27 |
| A-5182 | I-46 | B.1.27 |
| A-5183 | I-47 | B.1.27 |
| A-5184 | I-48 | B.1.27 |
| A-5185 | I-49 | B.1.27 |
| A-5186 | I-50 | B.1.27 |
| A-5187 | I-51 | B.1.27 |
| A-5188 | I-52 | B.1.27 |
| A-5189 | I-53 | B.1.27 |
| A-5190 | I-54 | B.1.27 |
| A-5191 | I-55 | B.1.27 |
| A-5192 | I-56 | B.1.27 |
| A-5193 | I-57 | B.1.27 |
| A-5194 | I-58 | B.1.27 |
| A-5195 | I-59 | B.1.27 |
| A-5196 | I-60 | B.1.27 |
| A-5197 | I-61 | B.1.27 |
| A-5198 | I-62 | B.1.27 |
| A-5199 | I-63 | B.1.27 |
| A-5200 | I-64 | B.1.27 |
| A-5201 | I-65 | B.1.27 |
| A-5202 | I-66 | B.1.27 |

| Mixture | Co. 1 | Co. 2 |
|---|---|---|
| A-5203 | I-67 | B.1.27 |
| A-5204 | I-68 | B.1.27 |
| A-5205 | I-69 | B.1.27 |
| A-5206 | I-70 | B.1.27 |
| A-5207 | I-71 | B.1.27 |
| A-5208 | I-72 | B.1.27 |
| A-5209 | I-73 | B.1.27 |
| A-5210 | I-74 | B.1.27 |
| A-5211 | I-75 | B.1.27 |
| A-5212 | I-76 | B.1.27 |
| A-5213 | I-77 | B.1.27 |
| A-5214 | I-78 | B.1.27 |
| A-5215 | I-79 | B.1.27 |
| A-5216 | I-80 | B.1.27 |
| A-5217 | I-81 | B.1.27 |
| A-5218 | I-82 | B.1.27 |
| A-5219 | I-83 | B.1.27 |
| A-5220 | I-84 | B.1.27 |
| A-5221 | I-85 | B.1.27 |
| A-5222 | I-86 | B.1.27 |
| A-5223 | I-87 | B.1.27 |
| A-5224 | I-88 | B.1.27 |
| A-5225 | I-89 | B.1.27 |
| A-5226 | I-90 | B.1.27 |
| A-5227 | I-91 | B.1.27 |
| A-5228 | I-92 | B.1.27 |
| A-5229 | I-93 | B.1.27 |
| A-5230 | I-94 | B.1.27 |
| A-5231 | I-95 | B.1.27 |
| A-5232 | I-96 | B.1.27 |
| A-5233 | I-97 | B.1.27 |
| A-5234 | I-98 | B.1.27 |
| A-5235 | I-99 | B.1.27 |
| A-5236 | I-100 | B.1.27 |
| A-5237 | I-101 | B.1.27 |
| A-5238 | I-102 | B.1.27 |
| A-5239 | I-103 | B.1.27 |
| A-5240 | I-104 | B.1.27 |
| A-5241 | I-105 | B.1.27 |
| A-5242 | I-106 | B.1.27 |
| A-5243 | I-107 | B.1.27 |

| Mixture | Co. 1 | Co. 2 |
|---|---|---|
| A-5244 | I-1 | B.1.28 |
| A-5245 | I-2 | B.1.28 |
| A-5246 | I-3 | B.1.28 |
| A-5247 | I-4 | B.1.28 |
| A-5248 | I-5 | B.1.28 |
| A-5249 | I-6 | B.1.28 |
| A-5250 | I-7 | B.1.28 |
| A-5251 | I-8 | B.1.28 |
| A-5252 | I-9 | B.1.28 |
| A-5253 | I-10 | B.1.28 |
| A-5254 | I-11 | B.1.28 |
| A-5255 | I-12 | B.1.28 |
| A-5256 | I-13 | B.1.28 |
| A-5257 | I-14 | B.1.28 |
| A-5258 | I-15 | B.1.28 |
| A-5259 | I-16 | B.1.28 |
| A-5260 | I-17 | B.1.28 |
| A-5261 | I-18 | B.1.28 |
| A-5262 | I-19 | B.1.28 |
| A-5263 | I-20 | B.1.28 |
| A-5264 | I-21 | B.1.28 |
| A-5265 | I-22 | B.1.28 |
| A-5266 | I-23 | B.1.28 |
| A-5267 | I-24 | B.1.28 |
| A-5268 | I-25 | B.1.28 |
| A-5269 | I-26 | B.1.28 |
| A-5270 | I-27 | B.1.28 |
| A-5271 | I-28 | B.1.28 |
| A-5272 | I-29 | B.1.28 |
| A-5273 | I-30 | B.1.28 |
| A-5274 | I-31 | B.1.28 |
| A-5275 | I-32 | B.1.28 |
| A-5276 | I-33 | B.1.28 |
| A-5277 | I-34 | B.1.28 |
| A-5278 | I-35 | B.1.28 |
| A-5279 | I-36 | B.1.28 |
| A-5280 | I-37 | B.1.28 |
| A-5281 | I-38 | B.1.28 |
| A-5282 | I-39 | B.1.28 |
| A-5283 | I-40 | B.1.28 |
| A-5284 | I-41 | B.1.28 |

| Mixture | Co. 1 | Co. 2 |
|---|---|---|
| A-5285 | I-42 | B.1.28 |
| A-5286 | I-43 | B.1.28 |
| A-5287 | I-44 | B.1.28 |
| A-5288 | I-45 | B.1.28 |
| A-5289 | I-46 | B.1.28 |
| A-5290 | I-47 | B.1.28 |
| A-5291 | I-48 | B.1.28 |
| A-5292 | I-49 | B.1.28 |
| A-5293 | I-50 | B.1.28 |
| A-5294 | I-51 | B.1.28 |
| A-5295 | I-52 | B.1.28 |
| A-5296 | I-53 | B.1.28 |
| A-5297 | I-54 | B.1.28 |
| A-5298 | I-55 | B.1.28 |
| A-5299 | I-56 | B.1.28 |
| A-5300 | I-57 | B.1.28 |
| A-5301 | I-58 | B.1.28 |
| A-5302 | I-59 | B.1.28 |
| A-5303 | I-60 | B.1.28 |
| A-5304 | I-61 | B.1.28 |
| A-5305 | I-62 | B.1.28 |
| A-5306 | I-63 | B.1.28 |
| A-5307 | I-64 | B.1.28 |
| A-5308 | I-65 | B.1.28 |
| A-5309 | I-66 | B.1.28 |
| A-5310 | I-67 | B.1.28 |
| A-5311 | I-68 | B.1.28 |
| A-5312 | I-69 | B.1.28 |
| A-5313 | I-70 | B.1.28 |
| A-5314 | I-71 | B.1.28 |
| A-5315 | I-72 | B.1.28 |
| A-5316 | I-73 | B.1.28 |
| A-5317 | I-74 | B.1.28 |
| A-5318 | I-75 | B.1.28 |
| A-5319 | I-76 | B.1.28 |
| A-5320 | I-77 | B.1.28 |
| A-5321 | I-78 | B.1.28 |
| A-5322 | I-79 | B.1.28 |
| A-5323 | I-80 | B.1.28 |
| A-5324 | I-81 | B.1.28 |
| A-5325 | I-82 | B.1.28 |

| Mixture | Co. 1 | Co. 2 |
|---|---|---|
| A-5326 | I-83 | B.1.28 |
| A-5327 | I-84 | B.1.28 |
| A-5328 | I-85 | B.1.28 |
| A-5329 | I-86 | B.1.28 |
| A-5330 | I-87 | B.1.28 |
| A-5331 | I-88 | B.1.28 |
| A-5332 | I-89 | B.1.28 |
| A-5333 | I-90 | B.1.28 |
| A-5334 | I-91 | B.1.28 |
| A-5335 | I-92 | B.1.28 |
| A-5336 | I-93 | B.1.28 |
| A-5337 | I-94 | B.1.28 |
| A-5338 | I-95 | B.1.28 |
| A-5339 | I-96 | B.1.28 |
| A-5340 | I-97 | B.1.28 |
| A-5341 | I-98 | B.1.28 |
| A-5342 | I-99 | B.1.28 |
| A-5343 | I-100 | B.1.28 |
| A-5344 | I-101 | B.1.28 |
| A-5345 | I-102 | B.1.28 |
| A-5346 | I-103 | B.1.28 |
| A-5347 | I-104 | B.1.28 |
| A-5348 | I-105 | B.1.28 |
| A-5349 | I-106 | B.1.28 |
| A-5350 | I-107 | B.1.28 |
| A-5351 | I-1 | B.1.29 |
| A-5352 | I-2 | B.1.29 |
| A-5353 | I-3 | B.1.29 |
| A-5354 | I-4 | B.1.29 |
| A-5355 | I-5 | B.1.29 |
| A-5356 | I-6 | B.1.29 |
| A-5357 | I-7 | B.1.29 |
| A-5358 | I-8 | B.1.29 |
| A-5359 | I-9 | B.1.29 |
| A-5360 | I-10 | B.1.29 |
| A-5361 | I-11 | B.1.29 |
| A-5362 | I-12 | B.1.29 |
| A-5363 | I-13 | B.1.29 |
| A-5364 | I-14 | B.1.29 |
| A-5365 | I-15 | B.1.29 |
| A-5366 | I-16 | B.1.29 |

| Mixture | Co. 1 | Co. 2 |
|---|---|---|
| A-5367 | I-17 | B.1.29 |
| A-5368 | I-18 | B.1.29 |
| A-5369 | I-19 | B.1.29 |
| A-5370 | I-20 | B.1.29 |
| A-5371 | I-21 | B.1.29 |
| A-5372 | I-22 | B.1.29 |
| A-5373 | I-23 | B.1.29 |
| A-5374 | I-24 | B.1.29 |
| A-5375 | I-25 | B.1.29 |
| A-5376 | I-26 | B.1.29 |
| A-5377 | I-27 | B.1.29 |
| A-5378 | I-28 | B.1.29 |
| A-5379 | I-29 | B.1.29 |
| A-5380 | I-30 | B.1.29 |
| A-5381 | I-31 | B.1.29 |
| A-5382 | I-32 | B.1.29 |
| A-5383 | I-33 | B.1.29 |
| A-5384 | I-34 | B.1.29 |
| A-5385 | I-35 | B.1.29 |
| A-5386 | I-36 | B.1.29 |
| A-5387 | I-37 | B.1.29 |
| A-5388 | I-38 | B.1.29 |
| A-5389 | I-39 | B.1.29 |
| A-5390 | I-40 | B.1.29 |
| A-5391 | I-41 | B.1.29 |
| A-5392 | I-42 | B.1.29 |
| A-5393 | I-43 | B.1.29 |
| A-5394 | I-44 | B.1.29 |
| A-5395 | I-45 | B.1.29 |
| A-5396 | I-46 | B.1.29 |
| A-5397 | I-47 | B.1.29 |
| A-5398 | I-48 | B.1.29 |
| A-5399 | I-49 | B.1.29 |
| A-5400 | I-50 | B.1.29 |
| A-5401 | I-51 | B.1.29 |
| A-5402 | I-52 | B.1.29 |
| A-5403 | I-53 | B.1.29 |
| A-5404 | I-54 | B.1.29 |
| A-5405 | I-55 | B.1.29 |
| A-5406 | I-56 | B.1.29 |
| A-5407 | I-57 | B.1.29 |

| Mixture | Co. 1 | Co. 2 |
|---|---|---|
| A-5408 | I-58 | B.1.29 |
| A-5409 | I-59 | B.1.29 |
| A-5410 | I-60 | B.1.29 |
| A-5411 | I-61 | B.1.29 |
| A-5412 | I-62 | B.1.29 |
| A-5413 | I-63 | B.1.29 |
| A-5414 | I-64 | B.1.29 |
| A-5415 | I-65 | B.1.29 |
| A-5416 | I-66 | B.1.29 |
| A-5417 | I-67 | B.1.29 |
| A-5418 | I-68 | B.1.29 |
| A-5419 | I-69 | B.1.29 |
| A-5420 | I-70 | B.1.29 |
| A-5421 | I-71 | B.1.29 |
| A-5422 | I-72 | B.1.29 |
| A-5423 | I-73 | B.1.29 |
| A-5424 | I-74 | B.1.29 |
| A-5425 | I-75 | B.1.29 |
| A-5426 | I-76 | B.1.29 |
| A-5427 | I-77 | B.1.29 |
| A-5428 | I-78 | B.1.29 |
| A-5429 | I-79 | B.1.29 |
| A-5430 | I-80 | B.1.29 |
| A-5431 | I-81 | B.1.29 |
| A-5432 | I-82 | B.1.29 |
| A-5433 | I-83 | B.1.29 |
| A-5434 | I-84 | B.1.29 |
| A-5435 | I-85 | B.1.29 |
| A-5436 | I-86 | B.1.29 |
| A-5437 | I-87 | B.1.29 |
| A-5438 | I-88 | B.1.29 |
| A-5439 | I-89 | B.1.29 |
| A-5440 | I-90 | B.1.29 |
| A-5441 | I-91 | B.1.29 |
| A-5442 | I-92 | B.1.29 |
| A-5443 | I-93 | B.1.29 |
| A-5444 | I-94 | B.1.29 |
| A-5445 | I-95 | B.1.29 |
| A-5446 | I-96 | B.1.29 |
| A-5447 | I-97 | B.1.29 |
| A-5448 | I-98 | B.1.29 |

| Mixture | Co. 1 | Co. 2 |
|---|---|---|
| A-5449 | I-99 | B.1.29 |
| A-5450 | I-100 | B.1.29 |
| A-5451 | I-101 | B.1.29 |
| A-5452 | I-102 | B.1.29 |
| A-5453 | I-103 | B.1.29 |
| A-5454 | I-104 | B.1.29 |
| A-5455 | I-105 | B.1.29 |
| A-5456 | I-106 | B.1.29 |
| A-5457 | I-107 | B.1.29 |
| A-5458 | I-1 | B.1.30 |
| A-5459 | I-2 | B.1.30 |
| A-5460 | I-3 | B.1.30 |
| A-5461 | I-4 | B.1.30 |
| A-5462 | I-5 | B.1.30 |
| A-5463 | I-6 | B.1.30 |
| A-5464 | I-7 | B.1.30 |
| A-5465 | I-8 | B.1.30 |
| A-5466 | I-9 | B.1.30 |
| A-5467 | I-10 | B.1.30 |
| A-5468 | I-11 | B.1.30 |
| A-5469 | I-12 | B.1.30 |
| A-5470 | I-13 | B.1.30 |
| A-5471 | I-14 | B.1.30 |
| A-5472 | I-15 | B.1.30 |
| A-5473 | I-16 | B.1.30 |
| A-5474 | I-17 | B.1.30 |
| A-5475 | I-18 | B.1.30 |
| A-5476 | I-19 | B.1.30 |
| A-5477 | I-20 | B.1.30 |
| A-5478 | I-21 | B.1.30 |
| A-5479 | I-22 | B.1.30 |
| A-5480 | I-23 | B.1.30 |
| A-5481 | I-24 | B.1.30 |
| A-5482 | I-25 | B.1.30 |
| A-5483 | I-26 | B.1.30 |
| A-5484 | I-27 | B.1.30 |
| A-5485 | I-28 | B.1.30 |
| A-5486 | I-29 | B.1.30 |
| A-5487 | I-30 | B.1.30 |
| A-5488 | I-31 | B.1.30 |
| A-5489 | I-32 | B.1.30 |

| Mixture | Co. 1 | Co. 2 |
|---|---|---|
| A-5490 | I-33 | B.1.30 |
| A-5491 | I-34 | B.1.30 |
| A-5492 | I-35 | B.1.30 |
| A-5493 | I-36 | B.1.30 |
| A-5494 | I-37 | B.1.30 |
| A-5495 | I-38 | B.1.30 |
| A-5496 | I-39 | B.1.30 |
| A-5497 | I-40 | B.1.30 |
| A-5498 | I-41 | B.1.30 |
| A-5499 | I-42 | B.1.30 |
| A-5500 | I-43 | B.1.30 |
| A-5501 | I-44 | B.1.30 |
| A-5502 | I-45 | B.1.30 |
| A-5503 | I-46 | B.1.30 |
| A-5504 | I-47 | B.1.30 |
| A-5505 | I-48 | B.1.30 |
| A-5506 | I-49 | B.1.30 |
| A-5507 | I-50 | B.1.30 |
| A-5508 | I-51 | B.1.30 |
| A-5509 | I-52 | B.1.30 |
| A-5510 | I-53 | B.1.30 |
| A-5511 | I-54 | B.1.30 |
| A-5512 | I-55 | B.1.30 |
| A-5513 | I-56 | B.1.30 |
| A-5514 | I-57 | B.1.30 |
| A-5515 | I-58 | B.1.30 |
| A-5516 | I-59 | B.1.30 |
| A-5517 | I-60 | B.1.30 |
| A-5518 | I-61 | B.1.30 |
| A-5519 | I-62 | B.1.30 |
| A-5520 | I-63 | B.1.30 |
| A-5521 | I-64 | B.1.30 |
| A-5522 | I-65 | B.1.30 |
| A-5523 | I-66 | B.1.30 |
| A-5524 | I-67 | B.1.30 |
| A-5525 | I-68 | B.1.30 |
| A-5526 | I-69 | B.1.30 |
| A-5527 | I-70 | B.1.30 |
| A-5528 | I-71 | B.1.30 |
| A-5529 | I-72 | B.1.30 |
| A-5530 | I-73 | B.1.30 |

| Mixture | Co. 1 | Co. 2 |
|---|---|---|
| A-5531 | I-74 | B.1.30 |
| A-5532 | I-75 | B.1.30 |
| A-5533 | I-76 | B.1.30 |
| A-5534 | I-77 | B.1.30 |
| A-5535 | I-78 | B.1.30 |
| A-5536 | I-79 | B.1.30 |
| A-5537 | I-80 | B.1.30 |
| A-5538 | I-81 | B.1.30 |
| A-5539 | I-82 | B.1.30 |
| A-5540 | I-83 | B.1.30 |
| A-5541 | I-84 | B.1.30 |
| A-5542 | I-85 | B.1.30 |
| A-5543 | I-86 | B.1.30 |
| A-5544 | I-87 | B.1.30 |
| A-5545 | I-88 | B.1.30 |
| A-5546 | I-89 | B.1.30 |
| A-5547 | I-90 | B.1.30 |
| A-5548 | I-91 | B.1.30 |
| A-5549 | I-92 | B.1.30 |
| A-5550 | I-93 | B.1.30 |
| A-5551 | I-94 | B.1.30 |
| A-5552 | I-95 | B.1.30 |
| A-5553 | I-96 | B.1.30 |
| A-5554 | I-97 | B.1.30 |
| A-5555 | I-98 | B.1.30 |
| A-5556 | I-99 | B.1.30 |
| A-5557 | I-100 | B.1.30 |
| A-5558 | I-101 | B.1.30 |
| A-5559 | I-102 | B.1.30 |
| A-5560 | I-103 | B.1.30 |
| A-5561 | I-104 | B.1.30 |
| A-5562 | I-105 | B.1.30 |
| A-5563 | I-106 | B.1.30 |
| A-5564 | I-107 | B.1.30 |
| A-5565 | I-1 | B.1.31 |
| A-5566 | I-2 | B.1.31 |
| A-5567 | I-3 | B.1.31 |
| A-5568 | I-4 | B.1.31 |
| A-5569 | I-5 | B.1.31 |
| A-5570 | I-6 | B.1.31 |
| A-5571 | I-7 | B.1.31 |

| Mixture | Co. 1 | Co. 2 |
|---|---|---|
| A-5572 | I-8 | B.1.31 |
| A-5573 | I-9 | B.1.31 |
| A-5574 | I-10 | B.1.31 |
| A-5575 | I-11 | B.1.31 |
| A-5576 | I-12 | B.1.31 |
| A-5577 | I-13 | B.1.31 |
| A-5578 | I-14 | B.1.31 |
| A-5579 | I-15 | B.1.31 |
| A-5580 | I-16 | B.1.31 |
| A-5581 | I-17 | B.1.31 |
| A-5582 | I-18 | B.1.31 |
| A-5583 | I-19 | B.1.31 |
| A-5584 | I-20 | B.1.31 |
| A-5585 | I-21 | B.1.31 |
| A-5586 | I-22 | B.1.31 |
| A-5587 | I-23 | B.1.31 |
| A-5588 | I-24 | B.1.31 |
| A-5589 | I-25 | B.1.31 |
| A-5590 | I-26 | B.1.31 |
| A-5591 | I-27 | B.1.31 |
| A-5592 | I-28 | B.1.31 |
| A-5593 | I-29 | B.1.31 |
| A-5594 | I-30 | B.1.31 |
| A-5595 | I-31 | B.1.31 |
| A-5596 | I-32 | B.1.31 |
| A-5597 | I-33 | B.1.31 |
| A-5598 | I-34 | B.1.31 |
| A-5599 | I-35 | B.1.31 |
| A-5600 | I-36 | B.1.31 |
| A-5601 | I-37 | B.1.31 |
| A-5602 | I-38 | B.1.31 |
| A-5603 | I-39 | B.1.31 |
| A-5604 | I-40 | B.1.31 |
| A-5605 | I-41 | B.1.31 |
| A-5606 | I-42 | B.1.31 |
| A-5607 | I-43 | B.1.31 |
| A-5608 | I-44 | B.1.31 |
| A-5609 | I-45 | B.1.31 |
| A-5610 | I-46 | B.1.31 |
| A-5611 | I-47 | B.1.31 |
| A-5612 | I-48 | B.1.31 |

| Mixture | Co. 1 | Co. 2 |
|---|---|---|
| A-5613 | I-49 | B.1.31 |
| A-5614 | I-50 | B.1.31 |
| A-5615 | I-51 | B.1.31 |
| A-5616 | I-52 | B.1.31 |
| A-5617 | I-53 | B.1.31 |
| A-5618 | I-54 | B.1.31 |
| A-5619 | I-55 | B.1.31 |
| A-5620 | I-56 | B.1.31 |
| A-5621 | I-57 | B.1.31 |
| A-5622 | I-58 | B.1.31 |
| A-5623 | I-59 | B.1.31 |
| A-5624 | I-60 | B.1.31 |
| A-5625 | I-61 | B.1.31 |
| A-5626 | I-62 | B.1.31 |
| A-5627 | I-63 | B.1.31 |
| A-5628 | I-64 | B.1.31 |
| A-5629 | I-65 | B.1.31 |
| A-5630 | I-66 | B.1.31 |
| A-5631 | I-67 | B.1.31 |
| A-5632 | I-68 | B.1.31 |
| A-5633 | I-69 | B.1.31 |
| A-5634 | I-70 | B.1.31 |
| A-5635 | I-71 | B.1.31 |
| A-5636 | I-72 | B.1.31 |
| A-5637 | I-73 | B.1.31 |
| A-5638 | I-74 | B.1.31 |
| A-5639 | I-75 | B.1.31 |
| A-5640 | I-76 | B.1.31 |
| A-5641 | I-77 | B.1.31 |
| A-5642 | I-78 | B.1.31 |
| A-5643 | I-79 | B.1.31 |
| A-5644 | I-80 | B.1.31 |
| A-5645 | I-81 | B.1.31 |
| A-5646 | I-82 | B.1.31 |
| A-5647 | I-83 | B.1.31 |
| A-5648 | I-84 | B.1.31 |
| A-5649 | I-85 | B.1.31 |
| A-5650 | I-86 | B.1.31 |
| A-5651 | I-87 | B.1.31 |
| A-5652 | I-88 | B.1.31 |
| A-5653 | I-89 | B.1.31 |

| Mixture | Co. 1 | Co. 2 |
|---|---|---|
| A-5654 | I-90 | B.1.31 |
| A-5655 | I-91 | B.1.31 |
| A-5656 | I-92 | B.1.31 |
| A-5657 | I-93 | B.1.31 |
| A-5658 | I-94 | B.1.31 |
| A-5659 | I-95 | B.1.31 |
| A-5660 | I-96 | B.1.31 |
| A-5661 | I-97 | B.1.31 |
| A-5662 | I-98 | B.1.31 |
| A-5663 | I-99 | B.1.31 |
| A-5664 | I-100 | B.1.31 |
| A-5665 | I-101 | B.1.31 |
| A-5666 | I-102 | B.1.31 |
| A-5667 | I-103 | B.1.31 |
| A-5668 | I-104 | B.1.31 |
| A-5669 | I-105 | B.1.31 |
| A-5670 | I-106 | B.1.31 |
| A-5671 | I-107 | B.1.31 |
| A-5672 | I-1 | E.1.1 |
| A-5673 | I-2 | E.1.1 |
| A-5674 | I-3 | E.1.1 |
| A-5675 | I-4 | E.1.1 |
| A-5676 | I-5 | E.1.1 |
| A-5677 | I-6 | E.1.1 |
| A-5678 | I-7 | E.1.1 |
| A-5679 | I-8 | E.1.1 |
| A-5680 | I-9 | E.1.1 |
| A-5681 | I-10 | E.1.1 |
| A-5682 | I-11 | E.1.1 |
| A-5683 | I-12 | E.1.1 |
| A-5684 | I-13 | E.1.1 |
| A-5685 | I-14 | E.1.1 |
| A-5686 | I-15 | E.1.1 |
| A-5687 | I-16 | E.1.1 |
| A-5688 | I-17 | E.1.1 |
| A-5689 | I-18 | E.1.1 |
| A-5690 | I-19 | E.1.1 |
| A-5691 | I-20 | E.1.1 |
| A-5692 | I-21 | E.1.1 |
| A-5693 | I-22 | E.1.1 |
| A-5694 | I-23 | E.1.1 |

| Mixture | Co. 1 | Co. 2 |
|---|---|---|
| A-5695 | I-24 | E.1.1 |
| A-5696 | I-25 | E.1.1 |
| A-5697 | I-26 | E.1.1 |
| A-5698 | I-27 | E.1.1 |
| A-5699 | I-28 | E.1.1 |
| A-5700 | I-29 | E.1.1 |
| A-5701 | I-30 | E.1.1 |
| A-5702 | I-31 | E.1.1 |
| A-5703 | I-32 | E.1.1 |
| A-5704 | I-33 | E.1.1 |
| A-5705 | I-34 | E.1.1 |
| A-5706 | I-35 | E.1.1 |
| A-5707 | I-36 | E.1.1 |
| A-5708 | I-37 | E.1.1 |
| A-5709 | I-38 | E.1.1 |
| A-5710 | I-39 | E.1.1 |
| A-5711 | I-40 | E.1.1 |
| A-5712 | I-41 | E.1.1 |
| A-5713 | I-42 | E.1.1 |
| A-5714 | I-43 | E.1.1 |
| A-5715 | I-44 | E.1.1 |
| A-5716 | I-45 | E.1.1 |
| A-5717 | I-46 | E.1.1 |
| A-5718 | I-47 | E.1.1 |
| A-5719 | I-48 | E.1.1 |
| A-5720 | I-49 | E.1.1 |
| A-5721 | I-50 | E.1.1 |
| A-5722 | I-51 | E.1.1 |
| A-5723 | I-52 | E.1.1 |
| A-5724 | I-53 | E.1.1 |
| A-5725 | I-54 | E.1.1 |
| A-5726 | I-55 | E.1.1 |
| A-5727 | I-56 | E.1.1 |
| A-5728 | I-57 | E.1.1 |
| A-5729 | I-58 | E.1.1 |
| A-5730 | I-59 | E.1.1 |
| A-5731 | I-60 | E.1.1 |
| A-5732 | I-61 | E.1.1 |
| A-5733 | I-62 | E.1.1 |
| A-5734 | I-63 | E.1.1 |
| A-5735 | I-64 | E.1.1 |

| Mixture | Co. 1 | Co. 2 |
|---|---|---|
| A-5736 | I-65 | E.1.1 |
| A-5737 | I-66 | E.1.1 |
| A-5738 | I-67 | E.1.1 |
| A-5739 | I-68 | E.1.1 |
| A-5740 | I-69 | E.1.1 |
| A-5741 | I-70 | E.1.1 |
| A-5742 | I-71 | E.1.1 |
| A-5743 | I-72 | E.1.1 |
| A-5744 | I-73 | E.1.1 |
| A-5745 | I-74 | E.1.1 |
| A-5746 | I-75 | E.1.1 |
| A-5747 | I-76 | E.1.1 |
| A-5748 | I-77 | E.1.1 |
| A-5749 | I-78 | E.1.1 |
| A-5750 | I-79 | E.1.1 |
| A-5751 | I-80 | E.1.1 |
| A-5752 | I-81 | E.1.1 |
| A-5753 | I-82 | E.1.1 |
| A-5754 | I-83 | E.1.1 |
| A-5755 | I-84 | E.1.1 |
| A-5756 | I-85 | E.1.1 |
| A-5757 | I-86 | E.1.1 |
| A-5758 | I-87 | E.1.1 |
| A-5759 | I-88 | E.1.1 |
| A-5760 | I-89 | E.1.1 |
| A-5761 | I-90 | E.1.1 |
| A-5762 | I-91 | E.1.1 |
| A-5763 | I-92 | E.1.1 |
| A-5764 | I-93 | E.1.1 |
| A-5765 | I-94 | E.1.1 |
| A-5766 | I-95 | E.1.1 |
| A-5767 | I-96 | E.1.1 |
| A-5768 | I-97 | E.1.1 |
| A-5769 | I-98 | E.1.1 |
| A-5770 | I-99 | E.1.1 |
| A-5771 | I-100 | E.1.1 |
| A-5772 | I-101 | E.1.1 |
| A-5773 | I-102 | E.1.1 |
| A-5774 | I-103 | E.1.1 |
| A-5775 | I-104 | E.1.1 |
| A-5776 | I-105 | E.1.1 |

| Mixture | Co. 1 | Co. 2 |
|---|---|---|
| A-5777 | I-106 | E.1.1 |
| A-5778 | I-107 | E.1.1 |
| A-5779 | I-1 | E.1.2 |
| A-5780 | I-2 | E.1.2 |
| A-5781 | I-3 | E.1.2 |
| A-5782 | I-4 | E.1.2 |
| A-5783 | I-5 | E.1.2 |
| A-5784 | I-6 | E.1.2 |
| A-5785 | I-7 | E.1.2 |
| A-5786 | I-8 | E.1.2 |
| A-5787 | I-9 | E.1.2 |
| A-5788 | I-10 | E.1.2 |
| A-5789 | I-11 | E.1.2 |
| A-5790 | I-12 | E.1.2 |
| A-5791 | I-13 | E.1.2 |
| A-5792 | I-14 | E.1.2 |
| A-5793 | I-15 | E.1.2 |
| A-5794 | I-16 | E.1.2 |
| A-5795 | I-17 | E.1.2 |
| A-5796 | I-18 | E.1.2 |
| A-5797 | I-19 | E.1.2 |
| A-5798 | I-20 | E.1.2 |
| A-5799 | I-21 | E.1.2 |
| A-5800 | I-22 | E.1.2 |
| A-5801 | I-23 | E.1.2 |
| A-5802 | I-24 | E.1.2 |
| A-5803 | I-25 | E.1.2 |
| A-5804 | I-26 | E.1.2 |
| A-5805 | I-27 | E.1.2 |
| A-5806 | I-28 | E.1.2 |
| A-5807 | I-29 | E.1.2 |
| A-5808 | I-30 | E.1.2 |
| A-5809 | I-31 | E.1.2 |
| A-5810 | I-32 | E.1.2 |
| A-5811 | I-33 | E.1.2 |
| A-5812 | I-34 | E.1.2 |
| A-5813 | I-35 | E.1.2 |
| A-5814 | I-36 | E.1.2 |
| A-5815 | I-37 | E.1.2 |
| A-5816 | I-38 | E.1.2 |
| A-5817 | I-39 | E.1.2 |

| Mixture | Co. 1 | Co. 2 |
|---|---|---|
| A-5818 | I-40 | E.1.2 |
| A-5819 | I-41 | E.1.2 |
| A-5820 | I-42 | E.1.2 |
| A-5821 | I-43 | E.1.2 |
| A-5822 | I-44 | E.1.2 |
| A-5823 | I-45 | E.1.2 |
| A-5824 | I-46 | E.1.2 |
| A-5825 | I-47 | E.1.2 |
| A-5826 | I-48 | E.1.2 |
| A-5827 | I-49 | E.1.2 |
| A-5828 | I-50 | E.1.2 |
| A-5829 | I-51 | E.1.2 |
| A-5830 | I-52 | E.1.2 |
| A-5831 | I-53 | E.1.2 |
| A-5832 | I-54 | E.1.2 |
| A-5833 | I-55 | E.1.2 |
| A-5834 | I-56 | E.1.2 |
| A-5835 | I-57 | E.1.2 |
| A-5836 | I-58 | E.1.2 |
| A-5837 | I-59 | E.1.2 |
| A-5838 | I-60 | E.1.2 |
| A-5839 | I-61 | E.1.2 |
| A-5840 | I-62 | E.1.2 |
| A-5841 | I-63 | E.1.2 |
| A-5842 | I-64 | E.1.2 |
| A-5843 | I-65 | E.1.2 |
| A-5844 | I-66 | E.1.2 |
| A-5845 | I-67 | E.1.2 |
| A-5846 | I-68 | E.1.2 |
| A-5847 | I-69 | E.1.2 |
| A-5848 | I-70 | E.1.2 |
| A-5849 | I-71 | E.1.2 |
| A-5850 | I-72 | E.1.2 |
| A-5851 | I-73 | E.1.2 |
| A-5852 | I-74 | E.1.2 |
| A-5853 | I-75 | E.1.2 |
| A-5854 | I-76 | E.1.2 |
| A-5855 | I-77 | E.1.2 |
| A-5856 | I-78 | E.1.2 |
| A-5857 | I-79 | E.1.2 |
| A-5858 | I-80 | E.1.2 |

| Mixture | Co. 1 | Co. 2 |
|---|---|---|
| A-5859 | I-81 | E.1.2 |
| A-5860 | I-82 | E.1.2 |
| A-5861 | I-83 | E.1.2 |
| A-5862 | I-84 | E.1.2 |
| A-5863 | I-85 | E.1.2 |
| A-5864 | I-86 | E.1.2 |
| A-5865 | I-87 | E.1.2 |
| A-5866 | I-88 | E.1.2 |
| A-5867 | I-89 | E.1.2 |
| A-5868 | I-90 | E.1.2 |
| A-5869 | I-91 | E.1.2 |
| A-5870 | I-92 | E.1.2 |
| A-5871 | I-93 | E.1.2 |
| A-5872 | I-94 | E.1.2 |
| A-5873 | I-95 | E.1.2 |
| A-5874 | I-96 | E.1.2 |
| A-5875 | I-97 | E.1.2 |
| A-5876 | I-98 | E.1.2 |
| A-5877 | I-99 | E.1.2 |
| A-5878 | I-100 | E.1.2 |
| A-5879 | I-101 | E.1.2 |
| A-5880 | I-102 | E.1.2 |
| A-5881 | I-103 | E.1.2 |
| A-5882 | I-104 | E.1.2 |
| A-5883 | I-105 | E.1.2 |
| A-5884 | I-106 | E.1.2 |
| A-5885 | I-107 | E.1.2 |
| A-5886 | I-1 | F.1.1 |
| A-5887 | I-2 | F.1.1 |
| A-5888 | I-3 | F.1.1 |
| A-5889 | I-4 | F.1.1 |
| A-5890 | I-5 | F.1.1 |
| A-5891 | I-6 | F.1.1 |
| A-5892 | I-7 | F.1.1 |
| A-5893 | I-8 | F.1.1 |
| A-5894 | I-9 | F.1.1 |
| A-5895 | I-10 | F.1.1 |
| A-5896 | I-11 | F.1.1 |
| A-5897 | I-12 | F.1.1 |
| A-5898 | I-13 | F.1.1 |
| A-5899 | I-14 | F.1.1 |

| Mixture | Co. 1 | Co. 2 |
|---|---|---|
| A-5900 | I-15 | F.1.1 |
| A-5901 | I-16 | F.1.1 |
| A-5902 | I-17 | F.1.1 |
| A-5903 | I-18 | F.1.1 |
| A-5904 | I-19 | F.1.1 |
| A-5905 | I-20 | F.1.1 |
| A-5906 | I-21 | F.1.1 |
| A-5907 | I-22 | F.1.1 |
| A-5908 | I-23 | F.1.1 |
| A-5909 | I-24 | F.1.1 |
| A-5910 | I-25 | F.1.1 |
| A-5911 | I-26 | F.1.1 |
| A-5912 | I-27 | F.1.1 |
| A-5913 | I-28 | F.1.1 |
| A-5914 | I-29 | F.1.1 |
| A-5915 | I-30 | F.1.1 |
| A-5916 | I-31 | F.1.1 |
| A-5917 | I-32 | F.1.1 |
| A-5918 | I-33 | F.1.1 |
| A-5919 | I-34 | F.1.1 |
| A-5920 | I-35 | F.1.1 |
| A-5921 | I-36 | F.1.1 |
| A-5922 | I-37 | F.1.1 |
| A-5923 | I-38 | F.1.1 |
| A-5924 | I-39 | F.1.1 |
| A-5925 | I-40 | F.1.1 |
| A-5926 | I-41 | F.1.1 |
| A-5927 | I-42 | F.1.1 |
| A-5928 | I-43 | F.1.1 |
| A-5929 | I-44 | F.1.1 |
| A-5930 | I-45 | F.1.1 |
| A-5931 | I-46 | F.1.1 |
| A-5932 | I-47 | F.1.1 |
| A-5933 | I-48 | F.1.1 |
| A-5934 | I-49 | F.1.1 |
| A-5935 | I-50 | F.1.1 |
| A-5936 | I-51 | F.1.1 |
| A-5937 | I-52 | F.1.1 |
| A-5938 | I-53 | F.1.1 |
| A-5939 | I-54 | F.1.1 |
| A-5940 | I-55 | F.1.1 |

| Mixture | Co. 1 | Co. 2 |
|---|---|---|
| A-5941 | I-56 | F.1.1 |
| A-5942 | I-57 | F.1.1 |
| A-5943 | I-58 | F.1.1 |
| A-5944 | I-59 | F.1.1 |
| A-5945 | I-60 | F.1.1 |
| A-5946 | I-61 | F.1.1 |
| A-5947 | I-62 | F.1.1 |
| A-5948 | I-63 | F.1.1 |
| A-5949 | I-64 | F.1.1 |
| A-5950 | I-65 | F.1.1 |
| A-5951 | I-66 | F.1.1 |
| A-5952 | I-67 | F.1.1 |
| A-5953 | I-68 | F.1.1 |
| A-5954 | I-69 | F.1.1 |
| A-5955 | I-70 | F.1.1 |
| A-5956 | I-71 | F.1.1 |
| A-5957 | I-72 | F.1.1 |
| A-5958 | I-73 | F.1.1 |
| A-5959 | I-74 | F.1.1 |
| A-5960 | I-75 | F.1.1 |
| A-5961 | I-76 | F.1.1 |
| A-5962 | I-77 | F.1.1 |
| A-5963 | I-78 | F.1.1 |
| A-5964 | I-79 | F.1.1 |
| A-5965 | I-80 | F.1.1 |
| A-5966 | I-81 | F.1.1 |
| A-5967 | I-82 | F.1.1 |
| A-5968 | I-83 | F.1.1 |
| A-5969 | I-84 | F.1.1 |
| A-5970 | I-85 | F.1.1 |
| A-5971 | I-86 | F.1.1 |
| A-5972 | I-87 | F.1.1 |
| A-5973 | I-88 | F.1.1 |
| A-5974 | I-89 | F.1.1 |
| A-5975 | I-90 | F.1.1 |
| A-5976 | I-91 | F.1.1 |
| A-5977 | I-92 | F.1.1 |
| A-5978 | I-93 | F.1.1 |
| A-5979 | I-94 | F.1.1 |
| A-5980 | I-95 | F.1.1 |
| A-5981 | I-96 | F.1.1 |

| Mixture | Co. 1 | Co. 2 |
|---|---|---|
| A-5982 | I-97 | F.1.1 |
| A-5983 | I-98 | F.1.1 |
| A-5984 | I-99 | F.1.1 |
| A-5985 | I-100 | F.1.1 |
| A-5986 | I-101 | F.1.1 |
| A-5987 | I-102 | F.1.1 |
| A-5988 | I-103 | F.1.1 |
| A-5989 | I-104 | F.1.1 |
| A-5990 | I-105 | F.1.1 |
| A-5991 | I-106 | F.1.1 |
| A-5992 | I-107 | F.1.1 |
| A-5993 | I-1 | F.1.2 |
| A-5994 | I-2 | F.1.2 |
| A-5995 | I-3 | F.1.2 |
| A-5996 | I-4 | F.1.2 |
| A-5997 | I-5 | F.1.2 |
| A-5998 | I-6 | F.1.2 |
| A-5999 | I-7 | F.1.2 |
| A-6000 | I-8 | F.1.2 |
| A-6001 | I-9 | F.1.2 |
| A-6002 | I-10 | F.1.2 |
| A-6003 | I-11 | F.1.2 |
| A-6004 | I-12 | F.1.2 |
| A-6005 | I-13 | F.1.2 |
| A-6006 | I-14 | F.1.2 |
| A-6007 | I-15 | F.1.2 |
| A-6008 | I-16 | F.1.2 |
| A-6009 | I-17 | F.1.2 |
| A-6010 | I-18 | F.1.2 |
| A-6011 | I-19 | F.1.2 |
| A-6012 | I-20 | F.1.2 |
| A-6013 | I-21 | F.1.2 |
| A-6014 | I-22 | F.1.2 |
| A-6015 | I-23 | F.1.2 |
| A-6016 | I-24 | F.1.2 |
| A-6017 | I-25 | F.1.2 |
| A-6018 | I-26 | F.1.2 |
| A-6019 | I-27 | F.1.2 |
| A-6020 | I-28 | F.1.2 |
| A-6021 | I-29 | F.1.2 |
| A-6022 | I-30 | F.1.2 |

| Mixture | Co. 1 | Co. 2 |
|---|---|---|
| A-6023 | I-31 | F.1.2 |
| A-6024 | I-32 | F.1.2 |
| A-6025 | I-33 | F.1.2 |
| A-6026 | I-34 | F.1.2 |
| A-6027 | I-35 | F.1.2 |
| A-6028 | I-36 | F.1.2 |
| A-6029 | I-37 | F.1.2 |
| A-6030 | I-38 | F.1.2 |
| A-6031 | I-39 | F.1.2 |
| A-6032 | I-40 | F.1.2 |
| A-6033 | I-41 | F.1.2 |
| A-6034 | I-42 | F.1.2 |
| A-6035 | I-43 | F.1.2 |
| A-6036 | I-44 | F.1.2 |
| A-6037 | I-45 | F.1.2 |
| A-6038 | I-46 | F.1.2 |
| A-6039 | I-47 | F.1.2 |
| A-6040 | I-48 | F.1.2 |
| A-6041 | I-49 | F.1.2 |
| A-6042 | I-50 | F.1.2 |
| A-6043 | I-51 | F.1.2 |
| A-6044 | I-52 | F.1.2 |
| A-6045 | I-53 | F.1.2 |
| A-6046 | I-54 | F.1.2 |
| A-6047 | I-55 | F.1.2 |
| A-6048 | I-56 | F.1.2 |
| A-6049 | I-57 | F.1.2 |
| A-6050 | I-58 | F.1.2 |
| A-6051 | I-59 | F.1.2 |
| A-6052 | I-60 | F.1.2 |
| A-6053 | I-61 | F.1.2 |
| A-6054 | I-62 | F.1.2 |
| A-6055 | I-63 | F.1.2 |
| A-6056 | I-64 | F.1.2 |
| A-6057 | I-65 | F.1.2 |
| A-6058 | I-66 | F.1.2 |
| A-6059 | I-67 | F.1.2 |
| A-6060 | I-68 | F.1.2 |
| A-6061 | I-69 | F.1.2 |
| A-6062 | I-70 | F.1.2 |
| A-6063 | I-71 | F.1.2 |

| Mixture | Co. 1 | Co. 2 |
|---|---|---|
| A-6064 | I-72 | F.1.2 |
| A-6065 | I-73 | F.1.2 |
| A-6066 | I-74 | F.1.2 |
| A-6067 | I-75 | F.1.2 |
| A-6068 | I-76 | F.1.2 |
| A-6069 | I-77 | F.1.2 |
| A-6070 | I-78 | F.1.2 |
| A-6071 | I-79 | F.1.2 |
| A-6072 | I-80 | F.1.2 |
| A-6073 | I-81 | F.1.2 |
| A-6074 | I-82 | F.1.2 |
| A-6075 | I-83 | F.1.2 |
| A-6076 | I-84 | F.1.2 |
| A-6077 | I-85 | F.1.2 |
| A-6078 | I-86 | F.1.2 |
| A-6079 | I-87 | F.1.2 |
| A-6080 | I-88 | F.1.2 |
| A-6081 | I-89 | F.1.2 |
| A-6082 | I-90 | F.1.2 |
| A-6083 | I-91 | F.1.2 |
| A-6084 | I-92 | F.1.2 |
| A-6085 | I-93 | F.1.2 |
| A-6086 | I-94 | F.1.2 |
| A-6087 | I-95 | F.1.2 |
| A-6088 | I-96 | F.1.2 |
| A-6089 | I-97 | F.1.2 |
| A-6090 | I-98 | F.1.2 |
| A-6091 | I-99 | F.1.2 |
| A-6092 | I-100 | F.1.2 |
| A-6093 | I-101 | F.1.2 |
| A-6094 | I-102 | F.1.2 |
| A-6095 | I-103 | F.1.2 |
| A-6096 | I-104 | F.1.2 |
| A-6097 | I-105 | F.1.2 |
| A-6098 | I-106 | F.1.2 |
| A-6099 | I-107 | F.1.2 |
| A-6100 | I-1 | F.1.3 |
| A-6101 | I-2 | F.1.3 |
| A-6102 | I-3 | F.1.3 |
| A-6103 | I-4 | F.1.3 |
| A-6104 | I-5 | F.1.3 |

| Mixture | Co. 1 | Co. 2 |
|---|---|---|
| A-6105 | I-6 | F.1.3 |
| A-6106 | I-7 | F.1.3 |
| A-6107 | I-8 | F.1.3 |
| A-6108 | I-9 | F.1.3 |
| A-6109 | I-10 | F.1.3 |
| A-6110 | I-11 | F.1.3 |
| A-6111 | I-12 | F.1.3 |
| A-6112 | I-13 | F.1.3 |
| A-6113 | I-14 | F.1.3 |
| A-6114 | I-15 | F.1.3 |
| A-6115 | I-16 | F.1.3 |
| A-6116 | I-17 | F.1.3 |
| A-6117 | I-18 | F.1.3 |
| A-6118 | I-19 | F.1.3 |
| A-6119 | I-20 | F.1.3 |
| A-6120 | I-21 | F.1.3 |
| A-6121 | I-22 | F.1.3 |
| A-6122 | I-23 | F.1.3 |
| A-6123 | I-24 | F.1.3 |
| A-6124 | I-25 | F.1.3 |
| A-6125 | I-26 | F.1.3 |
| A-6126 | I-27 | F.1.3 |
| A-6127 | I-28 | F.1.3 |
| A-6128 | I-29 | F.1.3 |
| A-6129 | I-30 | F.1.3 |
| A-6130 | I-31 | F.1.3 |
| A-6131 | I-32 | F.1.3 |
| A-6132 | I-33 | F.1.3 |
| A-6133 | I-34 | F.1.3 |
| A-6134 | I-35 | F.1.3 |
| A-6135 | I-36 | F.1.3 |
| A-6136 | I-37 | F.1.3 |
| A-6137 | I-38 | F.1.3 |
| A-6138 | I-39 | F.1.3 |
| A-6139 | I-40 | F.1.3 |
| A-6140 | I-41 | F.1.3 |
| A-6141 | I-42 | F.1.3 |
| A-6142 | I-43 | F.1.3 |
| A-6143 | I-44 | F.1.3 |
| A-6144 | I-45 | F.1.3 |
| A-6145 | I-46 | F.1.3 |

| Mixture | Co. 1 | Co. 2 |
|---|---|---|
| A-6146 | I-47 | F.1.3 |
| A-6147 | I-48 | F.1.3 |
| A-6148 | I-49 | F.1.3 |
| A-6149 | I-50 | F.1.3 |
| A-6150 | I-51 | F.1.3 |
| A-6151 | I-52 | F.1.3 |
| A-6152 | I-53 | F.1.3 |
| A-6153 | I-54 | F.1.3 |
| A-6154 | I-55 | F.1.3 |
| A-6155 | I-56 | F.1.3 |
| A-6156 | I-57 | F.1.3 |
| A-6157 | I-58 | F.1.3 |
| A-6158 | I-59 | F.1.3 |
| A-6159 | I-60 | F.1.3 |
| A-6160 | I-61 | F.1.3 |
| A-6161 | I-62 | F.1.3 |
| A-6162 | I-63 | F.1.3 |
| A-6163 | I-64 | F.1.3 |
| A-6164 | I-65 | F.1.3 |
| A-6165 | I-66 | F.1.3 |
| A-6166 | I-67 | F.1.3 |
| A-6167 | I-68 | F.1.3 |
| A-6168 | I-69 | F.1.3 |
| A-6169 | I-70 | F.1.3 |
| A-6170 | I-71 | F.1.3 |
| A-6171 | I-72 | F.1.3 |
| A-6172 | I-73 | F.1.3 |
| A-6173 | I-74 | F.1.3 |
| A-6174 | I-75 | F.1.3 |
| A-6175 | I-76 | F.1.3 |
| A-6176 | I-77 | F.1.3 |
| A-6177 | I-78 | F.1.3 |
| A-6178 | I-79 | F.1.3 |
| A-6179 | I-80 | F.1.3 |
| A-6180 | I-81 | F.1.3 |
| A-6181 | I-82 | F.1.3 |
| A-6182 | I-83 | F.1.3 |
| A-6183 | I-84 | F.1.3 |
| A-6184 | I-85 | F.1.3 |
| A-6185 | I-86 | F.1.3 |
| A-6186 | I-87 | F.1.3 |

| Mixture | Co. 1 | Co. 2 |
|---|---|---|
| A-6187 | I-88 | F.1.3 |
| A-6188 | I-89 | F.1.3 |
| A-6189 | I-90 | F.1.3 |
| A-6190 | I-91 | F.1.3 |
| A-6191 | I-92 | F.1.3 |
| A-6192 | I-93 | F.1.3 |
| A-6193 | I-94 | F.1.3 |
| A-6194 | I-95 | F.1.3 |
| A-6195 | I-96 | F.1.3 |
| A-6196 | I-97 | F.1.3 |
| A-6197 | I-98 | F.1.3 |
| A-6198 | I-99 | F.1.3 |
| A-6199 | I-100 | F.1.3 |
| A-6200 | I-101 | F.1.3 |
| A-6201 | I-102 | F.1.3 |
| A-6202 | I-103 | F.1.3 |
| A-6203 | I-104 | F.1.3 |
| A-6204 | I-105 | F.1.3 |
| A-6205 | I-106 | F.1.3 |
| A-6206 | I-107 | F.1.3 |
| A-6207 | I-1 | F.1.4 |
| A-6208 | I-2 | F.1.4 |
| A-6209 | I-3 | F.1.4 |
| A-6210 | I-4 | F.1.4 |
| A-6211 | I-5 | F.1.4 |
| A-6212 | I-6 | F.1.4 |
| A-6213 | I-7 | F.1.4 |
| A-6214 | I-8 | F.1.4 |
| A-6215 | I-9 | F.1.4 |
| A-6216 | I-10 | F.1.4 |
| A-6217 | I-11 | F.1.4 |
| A-6218 | I-12 | F.1.4 |
| A-6219 | I-13 | F.1.4 |
| A-6220 | I-14 | F.1.4 |
| A-6221 | I-15 | F.1.4 |
| A-6222 | I-16 | F.1.4 |
| A-6223 | I-17 | F.1.4 |
| A-6224 | I-18 | F.1.4 |
| A-6225 | I-19 | F.1.4 |
| A-6226 | I-20 | F.1.4 |
| A-6227 | I-21 | F.1.4 |

| Mixture | Co. 1 | Co. 2 |
|---|---|---|
| A-6228 | I-22 | F.1.4 |
| A-6229 | I-23 | F.1.4 |
| A-6230 | I-24 | F.1.4 |
| A-6231 | I-25 | F.1.4 |
| A-6232 | I-26 | F.1.4 |
| A-6233 | I-27 | F.1.4 |
| A-6234 | I-28 | F.1.4 |
| A-6235 | I-29 | F.1.4 |
| A-6236 | I-30 | F.1.4 |
| A-6237 | I-31 | F.1.4 |
| A-6238 | I-32 | F.1.4 |
| A-6239 | I-33 | F.1.4 |
| A-6240 | I-34 | F.1.4 |
| A-6241 | I-35 | F.1.4 |
| A-6242 | I-36 | F.1.4 |
| A-6243 | I-37 | F.1.4 |
| A-6244 | I-38 | F.1.4 |
| A-6245 | I-39 | F.1.4 |
| A-6246 | I-40 | F.1.4 |
| A-6247 | I-41 | F.1.4 |
| A-6248 | I-42 | F.1.4 |
| A-6249 | I-43 | F.1.4 |
| A-6250 | I-44 | F.1.4 |
| A-6251 | I-45 | F.1.4 |
| A-6252 | I-46 | F.1.4 |
| A-6253 | I-47 | F.1.4 |
| A-6254 | I-48 | F.1.4 |
| A-6255 | I-49 | F.1.4 |
| A-6256 | I-50 | F.1.4 |
| A-6257 | I-51 | F.1.4 |
| A-6258 | I-52 | F.1.4 |
| A-6259 | I-53 | F.1.4 |
| A-6260 | I-54 | F.1.4 |
| A-6261 | I-55 | F.1.4 |
| A-6262 | I-56 | F.1.4 |
| A-6263 | I-57 | F.1.4 |
| A-6264 | I-58 | F.1.4 |
| A-6265 | I-59 | F.1.4 |
| A-6266 | I-60 | F.1.4 |
| A-6267 | I-61 | F.1.4 |
| A-6268 | I-62 | F.1.4 |

| Mixture | Co. 1 | Co. 2 |
|---|---|---|
| A-6269 | I-63 | F.1.4 |
| A-6270 | I-64 | F.1.4 |
| A-6271 | I-65 | F.1.4 |
| A-6272 | I-66 | F.1.4 |
| A-6273 | I-67 | F.1.4 |
| A-6274 | I-68 | F.1.4 |
| A-6275 | I-69 | F.1.4 |
| A-6276 | I-70 | F.1.4 |
| A-6277 | I-71 | F.1.4 |
| A-6278 | I-72 | F.1.4 |
| A-6279 | I-73 | F.1.4 |
| A-6280 | I-74 | F.1.4 |
| A-6281 | I-75 | F.1.4 |
| A-6282 | I-76 | F.1.4 |
| A-6283 | I-77 | F.1.4 |
| A-6284 | I-78 | F.1.4 |
| A-6285 | I-79 | F.1.4 |
| A-6286 | I-80 | F.1.4 |
| A-6287 | I-81 | F.1.4 |
| A-6288 | I-82 | F.1.4 |
| A-6289 | I-83 | F.1.4 |
| A-6290 | I-84 | F.1.4 |
| A-6291 | I-85 | F.1.4 |
| A-6292 | I-86 | F.1.4 |
| A-6293 | I-87 | F.1.4 |
| A-6294 | I-88 | F.1.4 |
| A-6295 | I-89 | F.1.4 |
| A-6296 | I-90 | F.1.4 |
| A-6297 | I-91 | F.1.4 |
| A-6298 | I-92 | F.1.4 |
| A-6299 | I-93 | F.1.4 |
| A-6300 | I-94 | F.1.4 |
| A-6301 | I-95 | F.1.4 |
| A-6302 | I-96 | F.1.4 |
| A-6303 | I-97 | F.1.4 |
| A-6304 | I-98 | F.1.4 |
| A-6305 | I-99 | F.1.4 |
| A-6306 | I-100 | F.1.4 |
| A-6307 | I-101 | F.1.4 |
| A-6308 | I-102 | F.1.4 |
| A-6309 | I-103 | F.1.4 |

| Mixture | Co. 1 | Co. 2 |
|---|---|---|
| A-6310 | I-104 | F.1.4 |
| A-6311 | I-105 | F.1.4 |
| A-6312 | I-106 | F.1.4 |
| A-6313 | I-107 | F.1.4 |
| A-6314 | I-1 | F.1.5 |
| A-6315 | I-2 | F.1.5 |
| A-6316 | I-3 | F.1.5 |
| A-6317 | I-4 | F.1.5 |
| A-6318 | I-5 | F.1.5 |
| A-6319 | I-6 | F.1.5 |
| A-6320 | I-7 | F.1.5 |
| A-6321 | I-8 | F.1.5 |
| A-6322 | I-9 | F.1.5 |
| A-6323 | I-10 | F.1.5 |
| A-6324 | I-11 | F.1.5 |
| A-6325 | I-12 | F.1.5 |
| A-6326 | I-13 | F.1.5 |
| A-6327 | I-14 | F.1.5 |
| A-6328 | I-15 | F.1.5 |
| A-6329 | I-16 | F.1.5 |
| A-6330 | I-17 | F.1.5 |
| A-6331 | I-18 | F.1.5 |
| A-6332 | I-19 | F.1.5 |
| A-6333 | I-20 | F.1.5 |
| A-6334 | I-21 | F.1.5 |
| A-6335 | I-22 | F.1.5 |
| A-6336 | I-23 | F.1.5 |
| A-6337 | I-24 | F.1.5 |
| A-6338 | I-25 | F.1.5 |
| A-6339 | I-26 | F.1.5 |
| A-6340 | I-27 | F.1.5 |
| A-6341 | I-28 | F.1.5 |
| A-6342 | I-29 | F.1.5 |
| A-6343 | I-30 | F.1.5 |
| A-6344 | I-31 | F.1.5 |
| A-6345 | I-32 | F.1.5 |
| A-6346 | I-33 | F.1.5 |
| A-6347 | I-34 | F.1.5 |
| A-6348 | I-35 | F.1.5 |
| A-6349 | I-36 | F.1.5 |
| A-6350 | I-37 | F.1.5 |

| Mixture | Co. 1 | Co. 2 |
|---|---|---|
| A-6351 | I-38 | F.1.5 |
| A-6352 | I-39 | F.1.5 |
| A-6353 | I-40 | F.1.5 |
| A-6354 | I-41 | F.1.5 |
| A-6355 | I-42 | F.1.5 |
| A-6356 | I-43 | F.1.5 |
| A-6357 | I-44 | F.1.5 |
| A-6358 | I-45 | F.1.5 |
| A-6359 | I-46 | F.1.5 |
| A-6360 | I-47 | F.1.5 |
| A-6361 | I-48 | F.1.5 |
| A-6362 | I-49 | F.1.5 |
| A-6363 | I-50 | F.1.5 |
| A-6364 | I-51 | F.1.5 |
| A-6365 | I-52 | F.1.5 |
| A-6366 | I-53 | F.1.5 |
| A-6367 | I-54 | F.1.5 |
| A-6368 | I-55 | F.1.5 |
| A-6369 | I-56 | F.1.5 |
| A-6370 | I-57 | F.1.5 |
| A-6371 | I-58 | F.1.5 |
| A-6372 | I-59 | F.1.5 |
| A-6373 | I-60 | F.1.5 |
| A-6374 | I-61 | F.1.5 |
| A-6375 | I-62 | F.1.5 |
| A-6376 | I-63 | F.1.5 |
| A-6377 | I-64 | F.1.5 |
| A-6378 | I-65 | F.1.5 |
| A-6379 | I-66 | F.1.5 |
| A-6380 | I-67 | F.1.5 |
| A-6381 | I-68 | F.1.5 |
| A-6382 | I-69 | F.1.5 |
| A-6383 | I-70 | F.1.5 |
| A-6384 | I-71 | F.1.5 |
| A-6385 | I-72 | F.1.5 |
| A-6386 | I-73 | F.1.5 |
| A-6387 | I-74 | F.1.5 |
| A-6388 | I-75 | F.1.5 |
| A-6389 | I-76 | F.1.5 |
| A-6390 | I-77 | F.1.5 |
| A-6391 | I-78 | F.1.5 |

| Mixture | Co. 1 | Co. 2 |
|---|---|---|
| A-6392 | I-79 | F.1.5 |
| A-6393 | I-80 | F.1.5 |
| A-6394 | I-81 | F.1.5 |
| A-6395 | I-82 | F.1.5 |
| A-6396 | I-83 | F.1.5 |
| A-6397 | I-84 | F.1.5 |
| A-6398 | I-85 | F.1.5 |
| A-6399 | I-86 | F.1.5 |
| A-6400 | I-87 | F.1.5 |
| A-6401 | I-88 | F.1.5 |
| A-6402 | I-89 | F.1.5 |
| A-6403 | I-90 | F.1.5 |
| A-6404 | I-91 | F.1.5 |
| A-6405 | I-92 | F.1.5 |
| A-6406 | I-93 | F.1.5 |
| A-6407 | I-94 | F.1.5 |
| A-6408 | I-95 | F.1.5 |
| A-6409 | I-96 | F.1.5 |
| A-6410 | I-97 | F.1.5 |
| A-6411 | I-98 | F.1.5 |
| A-6412 | I-99 | F.1.5 |
| A-6413 | I-100 | F.1.5 |
| A-6414 | I-101 | F.1.5 |
| A-6415 | I-102 | F.1.5 |
| A-6416 | I-103 | F.1.5 |
| A-6417 | I-104 | F.1.5 |
| A-6418 | I-105 | F.1.5 |
| A-6419 | I-106 | F.1.5 |
| A-6420 | I-107 | F.1.5 |
| A-6421 | I-1 | F.1.6 |
| A-6422 | I-2 | F.1.6 |
| A-6423 | I-3 | F.1.6 |
| A-6424 | I-4 | F.1.6 |
| A-6425 | I-5 | F.1.6 |
| A-6426 | I-6 | F.1.6 |
| A-6427 | I-7 | F.1.6 |
| A-6428 | I-8 | F.1.6 |
| A-6429 | I-9 | F.1.6 |
| A-6430 | I-10 | F.1.6 |
| A-6431 | I-11 | F.1.6 |
| A-6432 | I-12 | F.1.6 |

| Mixture | Co. 1 | Co. 2 |
|---|---|---|
| A-6433 | I-13 | F.1.6 |
| A-6434 | I-14 | F.1.6 |
| A-6435 | I-15 | F.1.6 |
| A-6436 | I-16 | F.1.6 |
| A-6437 | I-17 | F.1.6 |
| A-6438 | I-18 | F.1.6 |
| A-6439 | I-19 | F.1.6 |
| A-6440 | I-20 | F.1.6 |
| A-6441 | I-21 | F.1.6 |
| A-6442 | I-22 | F.1.6 |
| A-6443 | I-23 | F.1.6 |
| A-6444 | I-24 | F.1.6 |
| A-6445 | I-25 | F.1.6 |
| A-6446 | I-26 | F.1.6 |
| A-6447 | I-27 | F.1.6 |
| A-6448 | I-28 | F.1.6 |
| A-6449 | I-29 | F.1.6 |
| A-6450 | I-30 | F.1.6 |
| A-6451 | I-31 | F.1.6 |
| A-6452 | I-32 | F.1.6 |
| A-6453 | I-33 | F.1.6 |
| A-6454 | I-34 | F.1.6 |
| A-6455 | I-35 | F.1.6 |
| A-6456 | I-36 | F.1.6 |
| A-6457 | I-37 | F.1.6 |
| A-6458 | I-38 | F.1.6 |
| A-6459 | I-39 | F.1.6 |
| A-6460 | I-40 | F.1.6 |
| A-6461 | I-41 | F.1.6 |
| A-6462 | I-42 | F.1.6 |
| A-6463 | I-43 | F.1.6 |
| A-6464 | I-44 | F.1.6 |
| A-6465 | I-45 | F.1.6 |
| A-6466 | I-46 | F.1.6 |
| A-6467 | I-47 | F.1.6 |
| A-6468 | I-48 | F.1.6 |
| A-6469 | I-49 | F.1.6 |
| A-6470 | I-50 | F.1.6 |
| A-6471 | I-51 | F.1.6 |
| A-6472 | I-52 | F.1.6 |
| A-6473 | I-53 | F.1.6 |

| Mixture | Co. 1 | Co. 2 |
|---|---|---|
| A-6474 | I-54 | F.1.6 |
| A-6475 | I-55 | F.1.6 |
| A-6476 | I-56 | F.1.6 |
| A-6477 | I-57 | F.1.6 |
| A-6478 | I-58 | F.1.6 |
| A-6479 | I-59 | F.1.6 |
| A-6480 | I-60 | F.1.6 |
| A-6481 | I-61 | F.1.6 |
| A-6482 | I-62 | F.1.6 |
| A-6483 | I-63 | F.1.6 |
| A-6484 | I-64 | F.1.6 |
| A-6485 | I-65 | F.1.6 |
| A-6486 | I-66 | F.1.6 |
| A-6487 | I-67 | F.1.6 |
| A-6488 | I-68 | F.1.6 |
| A-6489 | I-69 | F.1.6 |
| A-6490 | I-70 | F.1.6 |
| A-6491 | I-71 | F.1.6 |
| A-6492 | I-72 | F.1.6 |
| A-6493 | I-73 | F.1.6 |
| A-6494 | I-74 | F.1.6 |
| A-6495 | I-75 | F.1.6 |
| A-6496 | I-76 | F.1.6 |
| A-6497 | I-77 | F.1.6 |
| A-6498 | I-78 | F.1.6 |
| A-6499 | I-79 | F.1.6 |
| A-6500 | I-80 | F.1.6 |
| A-6501 | I-81 | F.1.6 |
| A-6502 | I-82 | F.1.6 |
| A-6503 | I-83 | F.1.6 |
| A-6504 | I-84 | F.1.6 |
| A-6505 | I-85 | F.1.6 |
| A-6506 | I-86 | F.1.6 |
| A-6507 | I-87 | F.1.6 |
| A-6508 | I-88 | F.1.6 |
| A-6509 | I-89 | F.1.6 |
| A-6510 | I-90 | F.1.6 |
| A-6511 | I-91 | F.1.6 |
| A-6512 | I-92 | F.1.6 |
| A-6513 | I-93 | F.1.6 |
| A-6514 | I-94 | F.1.6 |

| Mixture | Co. 1 | Co. 2 |
|---|---|---|
| A-6515 | I-95 | F.1.6 |
| A-6516 | I-96 | F.1.6 |
| A-6517 | I-97 | F.1.6 |
| A-6518 | I-98 | F.1.6 |
| A-6519 | I-99 | F.1.6 |
| A-6520 | I-100 | F.1.6 |
| A-6521 | I-101 | F.1.6 |
| A-6522 | I-102 | F.1.6 |
| A-6523 | I-103 | F.1.6 |
| A-6524 | I-104 | F.1.6 |
| A-6525 | I-105 | F.1.6 |
| A-6526 | I-106 | F.1.6 |
| A-6527 | I-107 | F.1.6 |
| A-6528 | I-1 | F.1.7 |
| A-6529 | I-2 | F.1.7 |
| A-6530 | I-3 | F.1.7 |
| A-6531 | I-4 | F.1.7 |
| A-6532 | I-5 | F.1.7 |
| A-6533 | I-6 | F.1.7 |
| A-6534 | I-7 | F.1.7 |
| A-6535 | I-8 | F.1.7 |
| A-6536 | I-9 | F.1.7 |
| A-6537 | I-10 | F.1.7 |
| A-6538 | I-11 | F.1.7 |
| A-6539 | I-12 | F.1.7 |
| A-6540 | I-13 | F.1.7 |
| A-6541 | I-14 | F.1.7 |
| A-6542 | I-15 | F.1.7 |
| A-6543 | I-16 | F.1.7 |
| A-6544 | I-17 | F.1.7 |
| A-6545 | I-18 | F.1.7 |
| A-6546 | I-19 | F.1.7 |
| A-6547 | I-20 | F.1.7 |
| A-6548 | I-21 | F.1.7 |
| A-6549 | I-22 | F.1.7 |
| A-6550 | I-23 | F.1.7 |
| A-6551 | I-24 | F.1.7 |
| A-6552 | I-25 | F.1.7 |
| A-6553 | I-26 | F.1.7 |
| A-6554 | I-27 | F.1.7 |
| A-6555 | I-28 | F.1.7 |

| Mixture | Co. 1 | Co. 2 |
|---|---|---|
| A-6556 | I-29 | F.1.7 |
| A-6557 | I-30 | F.1.7 |
| A-6558 | I-31 | F.1.7 |
| A-6559 | I-32 | F.1.7 |
| A-6560 | I-33 | F.1.7 |
| A-6561 | I-34 | F.1.7 |
| A-6562 | I-35 | F.1.7 |
| A-6563 | I-36 | F.1.7 |
| A-6564 | I-37 | F.1.7 |
| A-6565 | I-38 | F.1.7 |
| A-6566 | I-39 | F.1.7 |
| A-6567 | I-40 | F.1.7 |
| A-6568 | I-41 | F.1.7 |
| A-6569 | I-42 | F.1.7 |
| A-6570 | I-43 | F.1.7 |
| A-6571 | I-44 | F.1.7 |
| A-6572 | I-45 | F.1.7 |
| A-6573 | I-46 | F.1.7 |
| A-6574 | I-47 | F.1.7 |
| A-6575 | I-48 | F.1.7 |
| A-6576 | I-49 | F.1.7 |
| A-6577 | I-50 | F.1.7 |
| A-6578 | I-51 | F.1.7 |
| A-6579 | I-52 | F.1.7 |
| A-6580 | I-53 | F.1.7 |
| A-6581 | I-54 | F.1.7 |
| A-6582 | I-55 | F.1.7 |
| A-6583 | I-56 | F.1.7 |
| A-6584 | I-57 | F.1.7 |
| A-6585 | I-58 | F.1.7 |
| A-6586 | I-59 | F.1.7 |
| A-6587 | I-60 | F.1.7 |
| A-6588 | I-61 | F.1.7 |
| A-6589 | I-62 | F.1.7 |
| A-6590 | I-63 | F.1.7 |
| A-6591 | I-64 | F.1.7 |
| A-6592 | I-65 | F.1.7 |
| A-6593 | I-66 | F.1.7 |
| A-6594 | I-67 | F.1.7 |
| A-6595 | I-68 | F.1.7 |
| A-6596 | I-69 | F.1.7 |

| Mixture | Co. 1 | Co. 2 |
|---|---|---|
| A-6597 | I-70 | F.1.7 |
| A-6598 | I-71 | F.1.7 |
| A-6599 | I-72 | F.1.7 |
| A-6600 | I-73 | F.1.7 |
| A-6601 | I-74 | F.1.7 |
| A-6602 | I-75 | F.1.7 |
| A-6603 | I-76 | F.1.7 |
| A-6604 | I-77 | F.1.7 |
| A-6605 | I-78 | F.1.7 |
| A-6606 | I-79 | F.1.7 |
| A-6607 | I-80 | F.1.7 |
| A-6608 | I-81 | F.1.7 |
| A-6609 | I-82 | F.1.7 |
| A-6610 | I-83 | F.1.7 |
| A-6611 | I-84 | F.1.7 |
| A-6612 | I-85 | F.1.7 |
| A-6613 | I-86 | F.1.7 |
| A-6614 | I-87 | F.1.7 |
| A-6615 | I-88 | F.1.7 |
| A-6616 | I-89 | F.1.7 |
| A-6617 | I-90 | F.1.7 |
| A-6618 | I-91 | F.1.7 |
| A-6619 | I-92 | F.1.7 |
| A-6620 | I-93 | F.1.7 |
| A-6621 | I-94 | F.1.7 |
| A-6622 | I-95 | F.1.7 |
| A-6623 | I-96 | F.1.7 |
| A-6624 | I-97 | F.1.7 |
| A-6625 | I-98 | F.1.7 |
| A-6626 | I-99 | F.1.7 |
| A-6627 | I-100 | F.1.7 |
| A-6628 | I-101 | F.1.7 |
| A-6629 | I-102 | F.1.7 |
| A-6630 | I-103 | F.1.7 |
| A-6631 | I-104 | F.1.7 |
| A-6632 | I-105 | F.1.7 |
| A-6633 | I-106 | F.1.7 |
| A-6634 | I-107 | F.1.7 |
| A-6635 | I-1 | F.1.8 |
| A-6636 | I-2 | F.1.8 |
| A-6637 | I-3 | F.1.8 |

| Mixture | Co. 1 | Co. 2 |
|---|---|---|
| A-6638 | I-4 | F.1.8 |
| A-6639 | I-5 | F.1.8 |
| A-6640 | I-6 | F.1.8 |
| A-6641 | I-7 | F.1.8 |
| A-6642 | I-8 | F.1.8 |
| A-6643 | I-9 | F.1.8 |
| A-6644 | I-10 | F.1.8 |
| A-6645 | I-11 | F.1.8 |
| A-6646 | I-12 | F.1.8 |
| A-6647 | I-13 | F.1.8 |
| A-6648 | I-14 | F.1.8 |
| A-6649 | I-15 | F.1.8 |
| A-6650 | I-16 | F.1.8 |
| A-6651 | I-17 | F.1.8 |
| A-6652 | I-18 | F.1.8 |
| A-6653 | I-19 | F.1.8 |
| A-6654 | I-20 | F.1.8 |
| A-6655 | I-21 | F.1.8 |
| A-6656 | I-22 | F.1.8 |
| A-6657 | I-23 | F.1.8 |
| A-6658 | I-24 | F.1.8 |
| A-6659 | I-25 | F.1.8 |
| A-6660 | I-26 | F.1.8 |
| A-6661 | I-27 | F.1.8 |
| A-6662 | I-28 | F.1.8 |
| A-6663 | I-29 | F.1.8 |
| A-6664 | I-30 | F.1.8 |
| A-6665 | I-31 | F.1.8 |
| A-6666 | I-32 | F.1.8 |
| A-6667 | I-33 | F.1.8 |
| A-6668 | I-34 | F.1.8 |
| A-6669 | I-35 | F.1.8 |
| A-6670 | I-36 | F.1.8 |
| A-6671 | I-37 | F.1.8 |
| A-6672 | I-38 | F.1.8 |
| A-6673 | I-39 | F.1.8 |
| A-6674 | I-40 | F.1.8 |
| A-6675 | I-41 | F.1.8 |
| A-6676 | I-42 | F.1.8 |
| A-6677 | I-43 | F.1.8 |
| A-6678 | I-44 | F.1.8 |

| Mixture | Co. 1 | Co. 2 |
|---|---|---|
| A-6679 | I-45 | F.1.8 |
| A-6680 | I-46 | F.1.8 |
| A-6681 | I-47 | F.1.8 |
| A-6682 | I-48 | F.1.8 |
| A-6683 | I-49 | F.1.8 |
| A-6684 | I-50 | F.1.8 |
| A-6685 | I-51 | F.1.8 |
| A-6686 | I-52 | F.1.8 |
| A-6687 | I-53 | F.1.8 |
| A-6688 | I-54 | F.1.8 |
| A-6689 | I-55 | F.1.8 |
| A-6690 | I-56 | F.1.8 |
| A-6691 | I-57 | F.1.8 |
| A-6692 | I-58 | F.1.8 |
| A-6693 | I-59 | F.1.8 |
| A-6694 | I-60 | F.1.8 |
| A-6695 | I-61 | F.1.8 |
| A-6696 | I-62 | F.1.8 |
| A-6697 | I-63 | F.1.8 |
| A-6698 | I-64 | F.1.8 |
| A-6699 | I-65 | F.1.8 |

| Mixture | Co. 1 | Co. 2 |
|---|---|---|
| A-6700 | I-66 | F.1.8 |
| A-6701 | I-67 | F.1.8 |
| A-6702 | I-68 | F.1.8 |
| A-6703 | I-69 | F.1.8 |
| A-6704 | I-70 | F.1.8 |
| A-6705 | I-71 | F.1.8 |
| A-6706 | I-72 | F.1.8 |
| A-6707 | I-73 | F.1.8 |
| A-6708 | I-74 | F.1.8 |
| A-6709 | I-75 | F.1.8 |
| A-6710 | I-76 | F.1.8 |
| A-6711 | I-77 | F.1.8 |
| A-6712 | I-78 | F.1.8 |
| A-6713 | I-79 | F.1.8 |
| A-6714 | I-80 | F.1.8 |
| A-6715 | I-81 | F.1.8 |
| A-6716 | I-82 | F.1.8 |
| A-6717 | I-83 | F.1.8 |
| A-6718 | I-84 | F.1.8 |
| A-6719 | I-85 | F.1.8 |
| A-6720 | I-86 | F.1.8 |

| Mixture | Co. 1 | Co. 2 |
|---|---|---|
| A-6721 | I-87 | F.1.8 |
| A-6722 | I-88 | F.1.8 |
| A-6723 | I-89 | F.1.8 |
| A-6724 | I-90 | F.1.8 |
| A-6725 | I-91 | F.1.8 |
| A-6726 | I-92 | F.1.8 |
| A-6727 | I-93 | F.1.8 |
| A-6728 | I-94 | F.1.8 |
| A-6729 | I-95 | F.1.8 |
| A-6730 | I-96 | F.1.8 |
| A-6731 | I-97 | F.1.8 |
| A-6732 | I-98 | F.1.8 |
| A-6733 | I-99 | F.1.8 |
| A-6734 | I-100 | F.1.8 |
| A-6735 | I-101 | F.1.8 |
| A-6736 | I-102 | F.1.8 |
| A-6737 | I-103 | F.1.8 |
| A-6738 | I-104 | F.1.8 |
| A-6739 | I-105 | F.1.8 |
| A-6740 | I-106 | F.1.8 |
| A-6741 | I-107 | F.1.8 |

A specific embodiment of the above embodiment relates to the mixture comprising a compound I and fluxapyroxad as pesticide II in a weight ratio of 20:1 to 1:20, more specifically 5:1 to 1:5, in particular 3:1 to 1:3, more specifically 2:1 to 1:2. Surprisingly, this composition shows synergistical effects and the components are in particular used in synergistically effective amounts.

A further specific embodiment of the above two-component compositions relates to the mixture comprising a compound I and as pesticide II pyraclostrobin in a weight ratio of 20:1 to 1:20, more specifically 5:1 to 1:5, in particular 3:1 to 1:3, more specifically 2:1 to 1:2. Surprisingly, this composition shows synergistical effects and the components are in particular used in synergistically effective amounts.

A further specific embodiment of the above two-component compositions relates to the mixture comprising compound I and as pesticide II fenpropimorph in a weight ratio of 20:1 to 1:20, more specifically 5:1 to 1:5, in particular 3:1 to 1:3, more specifically 2:1 to 1:2. Surprisingly, this composition shows synergistical effects and the components are in particular used in synergistically effective amounts.

A further specific embodiment of the above two-component ompositions relates to the mixture comprising a compound I and as pesticide II chlorothalonil in a weight ratio of 20:1 to 1:20, more specifically 5:1 to 1:5, in particular 3:1 to 1:3, more specifically 2:1 to 1:2. Surprisingly, this composition shows synergistical effects and the components are in particular used in synergistically effective amounts.

According to the present invention, it may be preferred that the mixtures comprise besides at least one compound I and at least one pesticide II, as defined and preferably defined herein, and at least one further pesticide III as component 3), preferably in a synergistically effective amount. Accordingly, another embodiment of the invention relates to mixtures wherein the component 3) is at least one pesticide III selected from groups A') to O'):

A') Respiration inhibitors

- Inhibitors of complex III at $Q_o$ site (e.g. strobilurins): azoxystrobin, coumethoxystrobin, coumoxystrobin, dimoxystrobin, enestroburin, fenaminstrobin, fenoxy-strobin/flufenoxystrobin, fluoxastrobin, kresoxim-methyl, mandestrobine, meto-minostrobin, orysastrobin, picoxystrobin, pyraclostrobin, pyrametostrobin, pyraoxystrobin, trifloxystrobin and 2-(2-(3-(2,6-dichlorophenyl)-1-methyl-allylideneaminooxymethyl)-phenyl)-2-methoxyimino-N-methyl-acetamide, pyribencarb, triclopyricarb/chlorodincarb, famoxadone, fenamidone, (Z,2E)-5-[1-(4-chlorophenyl)pyrazol-3-yl]oxy-2-methoxyimino-N,3-dimethyl-pent-3-enamide (I-1), (Z,2E)-5-[1-(2,4-difluorophenyl)pyrazol-3-yl]oxy-2-methoxyimino-N,3-dimethyl-pent-3-enamide (I-2), (Z,2E)-5-[1-(2,4-dichlorophenyl)pyrazol-3-yl]oxy-2-methoxyimino-N,3-dimethyl-pent-3-enamide (I-3), (Z,2E)-5-[1-(2-chloro-4-methyl-phenyl)pyrazol-3-yl]oxy-2-methoxyimino-N,3-dimethyl-pent-3-enamide (I-4), (Z,2E)-2-methoxyimino-N,3-dimethyl-5-[1-(p-tolyl)pyrazol-3-yl]oxy-pent-3-enamide (I-5), (Z,2E)-5-[1-(2-methyl-4-fluoro-phenyl)pyrazol-3-yl]oxy-2-methoxyimino-N,3-dimethyl-pent-3-enamide (I-6), (Z,2E)-2-methoxyimino-N,3-dimethyl-5-[1-[4-(trifluoromethyl)-phenyl]pyrazol-3-yl]oxy-pent-3-enamide (I-7), (Z,2E)-5-[1-(3,4-dichlorophenyl)pyrazol-3-yl]oxy-2-methoxyimino-N,3-dimethyl-pent-3-enamide (I-8), (Z,2E)-5-[1-(3,4-dimethylphenyl)pyrazol-3-yl]oxy-2-methoxyimino-N,3-dimethyl-pent-3-enamide (I-9), (Z,2E)-5-[1-(4-fluoro-3-methyl-phenyl)pyrazol-3-yl]oxy-2-methoxyimino-N,3-dimethyl-pent-3-enamide (I-10), (Z,2E)-5-[1-(3-chloro-4-fluoro-phenyl)pyrazol-3-yl]oxy-2-methoxyimino-N,3-dimethyl-pent-3-enamide (I-11), (Z,2E)-5-[1-(3-fluoro-4-chloro-phenyl)pyrazol-3-yl]oxy-2-methoxyimino-N,3-dimethyl-pent-3-enamide (I-12), (Z,2E)-5-[1-(4-chloro-2-fluoro-phenyl)pyrazol-3-yl]oxy-2-methoxyimino-N,3-dimethyl-pent-3-enamide (I-13), (Z,2E)-5-[1-[4-(difluoromethoxy)phenyl]pyrazol-3-yl]oxy-2-methoxyimino-N,3-dimethyl-pent-3-enamide (I-14), (Z,2E)-5-[1-(3-cyclopropylphenyl)pyrazol-3-yl]oxy-2-methoxyimino-N,3-dimethyl-pent-3-enamide (I-15), (Z,2E)-5-[1-[4-chloro-3-(trifluoromethyl)phenyl]pyrazol-3-yl]oxy-2-methoxyimino-N,3-dimethyl-pent-3-enamide (I-16), (Z,2E)-2-methoxyimino-N,3-dimethyl-5-[1-(3,4,5-trifluorophenyl)pyrazol-3-yl]oxy-pent-3-enamide (I-17) and (Z,2E)-2-methoxyimino-N,3-dimethyl-5-[1-[4-(trifluoromethylsulfanyl)phenyl]pyrazol-3-yl]oxy-pent-3-enamide (I-18);

- inhibitors of complex III at $Q_i$ site: cyazofamid, amisulbrom, [(3S,6S,7R,8R)-8-benzyl-3-[(3-acetoxy-4-methoxy-pyridine-2-carbonyl)amino]-6-methyl-4,9-dioxo-1,5-dioxonan-7-yl] 2-methylpropanoate, [(3S,6S,7R,8R)-8-benzyl-3-[[3-(acetoxymethoxy)-4-methoxy-pyridine-2-carbonyl]amino]-6-methyl-4,9-dioxo-1,5-dioxonan-7-yl]2-methylpropanoate, [(3S,6S,7R,8R)-8-benzyl-3-[(3-isobutoxycarbonyloxy-4-methoxy-pyridine-2-carbonyl)amino]-6-methyl-4,9-dioxo-1,5-dioxonan-7-yl]2-methylpropanoate, [(3S,6S,7R,8R)-8-benzyl-3-[[3-(1,3-benzodioxol-5-ylmethoxy)-4-methoxy-pyridine-2-car-bonyl]amino]-6-methyl-4,9-dioxo-1,5-dioxonan-7-yl]2-methylpropanoate; (3S,6S,7R,8R)-3-[[(3-hydroxy-4-methoxy-2-pyridinyl)carbonyl]amino]-6-methyl-4,9-dioxo-8-(phenylmethyl)-1,5-dioxonan-7-yl 2-methylpropanoate
- inhibitors of complex II (e. g. carboxamides): benodanil, benzovindiflupyr, bixafen, boscalid, carboxin, fenfuram, fluopyram, flutolanil, fluxapyroxad, furametpyr, isofetamid, isopyrazam, mepronil, oxycarboxin, penflufen, penthiopyrad, sedaxane, tecloftalam, thifluzamide, N-(4'-trifluoromethylthiobiphenyl-2-yl)-3-difluoromethyl-1-methyl-1 H-pyrazole-4-carboxamide, N-(2-(1,3,3-trimethyl-butyl)-phenyl)-1,3-dimethyl-5-fluoro-1H-pyrazole-4-carboxamide, 3-(difluoromethyl)-1-methyl-N-(1,1,3-trimethylindan-4-yl)pyrazole-4-carboxamide, 3-(trifluoromethyl)-1-methyl-N-(1,1,3-trimethylindan-4-yl)pyrazole-4-carboxamide, 1,3-dimethyl-N-(1,1,3-trimethylindan-4-yl)pyrazole-4-carboxamide, 3-(trifluoromethyl)-1,5-dimethyl-N-(1,1,3-trimethylindan-4-yl)pyrazole-4-carboxamide, 1,3,5-trimethyl-N-(1,1,3-trimethylindan-4-yl)pyrazole-4-carboxamide, N-(7-fluoro-1,1,3-trimethyl-indan-4-yl)-1,3-dimethyl-pyrazole-4-carboxamide, N-[2-(2,4-dichlorophenyl)-2-methoxy-1-methyl-ethyl]-3-(difluoromethyl)-1-methyl-pyrazole-4-carboxamide;
- other respiration inhibitors (e.g. complex I, uncouplers): diflumetorim, (5,8-difluoro-quinazolin-4-yl)-{2-[2-fluoro-4-(4-trifluoromethylpyridin-2-yloxy)-phenyl]-ethyl}-amine; nitrophenyl derivates: binapacryl, dinobuton, dinocap, fluazinam; ferimzone; organometal compounds: fentin salts, such as fentin-acetate, fentin chloride or fentin hydroxide; ametoctradin; and silthiofam;

B') Sterol biosynthesis inhibitors (SBI fungicides)

- C14 demethylase inhibitors (DMI fungicides): triazoles: azaconazole, bitertanol, bromuconazole, cyproconazole, difenoconazole, diniconazole, diniconazole-M, epoxiconazole, fenbuconazole, fluquinconazole, flusilazole, flutriafol, hexaconazole, imibenconazole, ipconazole, metconazole, myclobutanil, oxpoconazole, paclobutrazole, penconazole, propiconazole, prothioconazole, simeconazole, tebuconazole, tetraconazole, triadimefon, triadimenol, triticonazole, uniconazole, 1-[*rel*-(2*S*;3*R*)-3-(2-chlorophenyl)-2-(2,4-difluorophenyl)-oxiranylmethyl]-5-thiocyanato-1H-[1,2,4]triazole, 2-[*rel*-(2*S*;3*R*)-3-(2-chlorophenyl)-2-(2,4-difluorophenyl)-oxiranylmethyl]-2H-[1,2,4]triazole-3-thiol, 2-[2-chloro-4-(4-chlorophenoxy)phenyl]-1-(1,2,4-triazol-1-yl)pent-3-yn-2-ol, 1-[2-chloro-4-(4-chlorophenoxy)phenyl]-1-cyclopropyl-2-(1,2,4-triazol-1-yl)ethanol, 2-[4-(4-chlorophenoxy)-2-(trifluoromethyl)phenyl]-1-(1,2,4-triazol-1-yl)propan-2-ol, 1-[4-(4-chlorophenoxy)-2-(trifluoromethyl)phenyl]-1-cyclopropyl-2-(1,2,4-triazol-1-yl)ethanol, 2-[4-(4-chlorophenoxy)-2-(trifluoromethyl)phenyl]-3-methyl-1-(1,2,4-triazol-1-yl)butan-2-ol, 1-[2-[2-chloro-4-(4-chlorophenoxy)phenyl]-2-methoxy-pent-3-ynyl]-1,2,4-triazole, 2-[4-(4-chlorophenoxy)-2-(trifluoromethyl)phenyl]-1-(1,2,4-triazol-1-yl)butan-2-ol, 1-[2-[2-chloro-4-(4-chlorophenoxy)phenyl]-2-cyclopropyl-2-methoxy-ethyl]-1,2,4-triazole, 1-[2-[4-(4-chlorophenoxy)-2-(trifluoromethyl)phenyl]-2-methoxy-propyl]-1,2,4-triazole, 2-[2-chloro-4-(4-chlorophenoxy)phenyl]-3,3-dimethyl-1-(1,2,4-triazol-1-yl)butan-2-ol, 1-[2-[4-(4-chlorophenoxy)-2-(trifluoromethyl)phenyl]-2-cyclopropyl-2-methoxy-ethyl]-1,2,4-triazole, 1-[2-[2-chloro-4-(4-chlorophenoxy)phenyl]-2-methoxy-3,3-dimethyl-butyl]-1,2,4-triazole, 1-[2-[4-(4-chlorophenoxy)-2-(trifluoromethyl)phenyl]-2-methoxy-butyl]1,2,4-triazole, 2-[4-(4-chlorophenoxy)-2-(trifluoromethyl)phenyl]-1-(1,2,4-triazol-1-yl)pent-3-yn-2-ol, 1-[2-[4-(4-chlorophenoxy)-2-(trifluoromethyl)phenyl]-2-methoxy-pent-3-ynyl]-1,2,4-triazole, 2-[4-(4-chlorophenoxy)-2-(trifluoromethyl)phenyl]-1-(1,2,4-triazol-1-yl)but-3-yn-2-ol, 2-[2-chloro-4-(4-chlorophenoxy)phenyl]-1-(1,2,4-triazol-1-yl)propan-2-ol, 2-[2-chloro-4-(4-fluorophenoxy)phenyl]-1-(1,2,4-triazol-1-yl)propan-2-ol, 2-[2-chloro-4-(4-chlorophenoxy)phenyl]-3-methyl-1-(1,2,4-triazol-1-yl)butan-2-ol, 1-[2-[2-chloro-4-(4-chlorophenoxy)phenyl]-2-methoxy-propyl]-1,2,4-triazole, 1-[2-[2-chloro-4-(4-chlorophenoxy)phenyl]-2-methoxy-butyl]-1,2,4-riazole, 1-[2-[2-chloro-4-(4-chlorophenoxy)phenyl]-2-methoxy-pentyl]-1,2,4-triazole, 2-[2-chloro-4-(4-chlorophenoxy)phenyl]-1,1,1-trifluoro-3-(1,2,4-triazol-1-yl)propan-2-ol, 2-[2-chloro-4-(4-chlorophenoxy)phenyl]-3-fluoro-1-(1,2,4-triazol-1-yl)butan-2-ol hydrochloride, 2-[2-chloro-4-(4-chlorophenoxy)phenyl]-1-(1,2,4-triazol-1-yl)pent-4-yn-2-ol, 2-[2-chloro-4-(4-chlorophenoxy)phenyl]-1-methoxy-3-(1,2,4-triazol-1-yl)propan-2-ol, 2-[2-chloro-4-(4-fluorophenoxy)phenyl]-1-methoxy-3-(1,2,4-triazol-1-yl)propan-2-ol, 2-[4-(4-chlorophenoxy)-2-(trifluoromethyl)phenyl]-1-(1,2,4-triazol-1-yl)pentan-2-ol, and2-[4-(4-fluorophenoxy)-2-(trifluoromethyl)phenyl]-1-(1,2,4-triazol-1-yl)propan-2-ol, 2-[2-chloro-4-(4-chlorophenoxy)phenyl]-1-(1,2,4-triazol-1-yl)butan-2-ol, 2-[2-chloro-4-(4-chlorophenoxy)phenyl]-1-(1,2,4-triazol-1-yl)pentan-2-ol; imidazoles: imazalil, pefurazoate, prochloraz, triflumizol; pyrimidines, pyridines and piperazines: fenarimol, nuarimol, pyrifenox, triforine, [3-(4-chloro-2-fluoro-phenyl)-5-(2,4-difluorophenyl)isoxazol-4-yl]-(3-pyridyl)methanol;

- Delta14-reductase inhibitors: aldimorph, dodemorph, dodemorph-acetate, fenpropimorph, tridemorph, fenpropidin, piperalin, spiroxamine;
- Inhibitors of 3-keto reductase: fenhexamid;

C') Nucleic acid synthesis inhibitors

- phenylamides or acyl amino acid fungicides: benalaxyl, benalaxyl-M, kiralaxyl, metalaxyl, metalaxyl-M (mefenoxam), ofurace, oxadixyl;
- others: hymexazole, octhilinone, oxolinic acid, bupirimate, 5-fluorocytosine, 5-fluoro-2-(p-tolylmethoxy)pyrimidin-4-amine, 5-fluoro-2-(4-fluorophenylmethoxy)pyrimidin-4-amine;

D') Inhibitors of cell division and cytoskeleton

- tubulin inhibitors, such as benzimidazoles, thiophanates: benomyl, carbendazim, fuberidazole, thiabendazole, thiophanate-methyl; triazolopyrimidines: 5-chloro-7-(4-methylpiperidin-1-yl)-6-(2,4,6-trifluorophenyl)-[1,2,4]triazolo[1,5-a]pyrimidine
- other cell division inhibitors: diethofencarb, ethaboxam, pencycuron, fluopicolide, zoxamide, metrafenone, pyriofenone;

E') Inhibitors of amino acid and protein synthesis

- methionine synthesis inhibitors (anilino-pyrimidines): cyprodinil, mepanipyrim, pyrimethanil;
- protein synthesis inhibitors: blasticidin-S, kasugamycin, kasugamycin hydrochloride-hydrate, mildiomycin, streptomycin, oxytetracyclin, polyoxine, validamycin A;

F') Signal transduction inhibitors

- MAP / histidine kinase inhibitors: fluoroimid, iprodione, procymidone, vinclozolin, fenpiclonil, fludioxonil;
- G protein inhibitors: quinoxyfen;

G') Lipid and membrane synthesis inhibitors

- Phospholipid biosynthesis inhibitors: edifenphos, iprobenfos, pyrazophos, isoprothiolane;
- lipid peroxidation: dicloran, quintozene, tecnazene, tolclofos-methyl, biphenyl, chloroneb, etridiazole;
- phospholipid biosynthesis and cell wall deposition: dimethomorph, flumorph, mandipropamid, pyrimorph, benthiavalicarb, iprovalicarb, valifenalate and N-(1-(1-(4-cyano-phenyl)ethanesulfonyl)-but-2-yl) carbamic acid-(4-fluorophenyl) ester;

- compounds affecting cell membrane permeability and fatty acides: propamocarb, propamocarb-hydrochlorid
- fatty acid amide hydrolase inhibitors: oxathiapiprolin;

H') Inhibitors with Multi Site Action

- inorganic active substances: Bordeaux mixture, copper acetate, copper hydroxide, copper oxychloride, basic copper sulfate, sulfur;
- thio- and dithiocarbamates: ferbam, mancozeb, maneb, metam, metiram, propineb, thiram, zineb, ziram;
- organochlorine compounds (e.g. phthalimides, sulfamides, chloronitriles): anilazine, chlorothalonil, captafol, captan, folpet, dichlofluanid, dichlorophen, hexachlorobenzene, pentachlorphenole and its salts, phthalide, tolylfluanid, N-(4-chloro-2-nitro-phenyl)-N-ethyl-4-methyl-benzenesulfonamide;
- guanidines and others: guanidine, dodine, dodine free base, guazatine, guazatine-acetate, iminoctadine, iminoctadine-triacetate, iminoctadine-tris(albesilate), dithianon, 2,6-dimethyl-1H,5H-[1,4]dithiino[2,3-c:5,6-c']dipyrrole-1,3,5,7(2H,6H)-tetraone;

I') Cell wall synthesis inhibitors

- inhibitors of glucan synthesis: validamycin, polyoxin B; melanin synthesis inhibitors: pyroquilon, tricyclazole, carpropamid, dicyclomet, fenoxanil;

J') Plant defence inducers

- acibenzolar-S-methyl, probenazole, isotianil, tiadinil, prohexadione-calcium; phosphonates: fosetyl, fosetyl-aluminum, phosphorous acid and its salts;

K') Unknown mode of action

- bronopol, chinomethionat, cyflufenamid, cymoxanil, dazomet, debacarb, diclomezine, difenzoquat, difenzoquat-methylsulfate, diphenylamin, fenpyrazamine, flumetover, flusulfamide, flutianil, methasulfocarb, nitrapyrin, nitrothal-isopropyl, oxathiapiprolin, tolprocarb, 2-[3,5-bis(difluoromethyl)-1H-pyrazol-1-yl]-1-[4-(4-{5-[2-(prop-2-yn-1-yloxy)phenyl]-4,5-dihydro-1,2-oxazol-3-yl}-1,3-thiazol-2-yl)piperidin-1-yl]ethanone, 2-[3,5-bis(difluoromethyl)-1H-pyrazol-1-yl]-1-[4-(4-{5-[2-fluoro-6-(prop-2-yn-1-yloxy)phenyl]-4,5-dihydro-1,2-oxazol-3-yl}-1,3-thiazol-2-yl)piperidin-1-yl]ethanone, 2-[3,5-bis(difluoromethyl)-1H-pyrazol-1-yl]-1-[4-(4-{5-[2-chloro-6-(prop-2-yn-1-yloxy)phenyl]-4,5-dihydro-1,2-oxazol-3-yl}-1,3-thiazol-2-yl)piperidin-1-yl]ethanone, oxin-copper, proquinazid, tebufloquin, tecloftalam, triazoxide, 2-butoxy-6-iodo-3-propylchromen-4-one, N-(cyclo-propylmethoxyimino-(6-difluoro-methoxy-2,3-difluoro-phenyl)-methyl)-2-phenyl acetamide, N'-(4-(4-chloro-3-trifluoromethyl-phenoxy)-2,5-dimethyl-phenyl)-N-ethyl-N-methyl formamidine, N'-(4-(4-fluoro-3-trifluoromethyl-phenoxy)-2,5-dimethyl-phenyl)-N-ethyl-N-methyl formamidine, N'-(2-methyl-5-trifluoromethyl-4-(3-trimethylsilanyl-propoxy)-phenyl)-N-ethyl-N-methyl formamidine, N'-(5-difluoromethyl-2-methyl-4-(3-trimethylsilanyl-propoxy)-phenyl)-N-ethyl-N-methyl formamidine, methoxy-acetic acid 6-tert-butyl-8-fluoro-2,3-dimethyl-quinolin-4-yl ester, 3-[5-(4-methylphenyl)-2,3-dimethyl-isoxazolidin-3-yl]-pyridine, 3-[5-(4-chloro-phenyl)-2,3-dimethyl-isoxazolidin-3-yl]-pyridine (pyrisoxazole), N-(6-methoxy-pyridin-3-yl) cyclopropanecarboxylic acid amide, 5-chloro-1-(4,6-dimethoxy-pyrimidin-2-yl)-2-methyl-1 H-benzoimidazole, 2-(4-chloro-phenyl)-N-[4-(3,4-dimethoxy-phenyl)-isoxazol-5-yl]-2-prop-2-ynyloxy-acetamide, ethyl (Z)-3-amino-2-cyano-3-phenyl-prop-2-enoate, tert-butyl N-[6-[[(Z)-[(1-methyltetrazol-5-yl)-phenyl-methylene]amino]oxymethyl]-2-pyridyl]carbamate, pentyl N-[6-[[(Z)-[(1-methyltetrazol-5-yl)-phenyl-methylene]amino]oxymethyl]-2-pyridyl]carbamate, 2-[2-[(7,8-difluoro-2-methyl-3-quinolyl)oxy]-6-fluoro-phenyl]propan-2-ol, 2-[2-fluoro-6-[(8-fluoro-2-methyl-3-quinolyl)oxy]phenyl]propan-2-ol, 3-(5-fluoro-3,3,4,4-tetramethyl-3,4-dihydroiso-quinolin-1-yl)quinoline, 3-(4,4-difluoro-3,3-dimethyl-3,4-dihydroisoquinolin-1-yl)quinoline, 3-(4,4,5-trifluoro-3,3-dimethyl-3,4-dihydroisoquinolin-1-yl)quinoline;

M') Growth regulators

abscisic acid, amidochlor, ancymidol, 6-benzylaminopurine, brassinolide, butralin, chlormequat (chlormequat chloride), choline chloride, cyclanilide, daminozide, dikegulac, dimethipin, 2,6-dimethylpuridine, ethephon, flumetralin, flurprimidol, fluthiacet, forchlorfenuron, gibberellic acid, inabenfide, indole-3-acetic acid , maleic hydrazide, mefluidide, mepiquat (mepiquat chloride), naphthaleneacetic acid, N-6-benzyladenine, paclobutrazol, prohexadione (prohexadione-calcium), prohydrojasmon, thidiazuron, triapenthenol, tributyl phosphorotrithioate, 2,3,5-tri-iodobenzoic acid , trinexapac-ethyl and uniconazole;

N') Herbicides

- acetamides: acetochlor, alachlor, butachlor, dimethachlor, dimethenamid, flufenacet, mefenacet, metolachlor, metazachlor, napropamide, naproanilide, pethoxamid, pretilachlor, propachlor, thenylchlor;
- amino acid derivatives: bilanafos, glyphosate, glufosinate, sulfosate;
- aryloxyphenoxypropionates: clodinafop, cyhalofop-butyl, fenoxaprop, fluazifop, haloxyfop, metamifop, propaquizafop, quizalofop, quizalofop-P-tefuryl;
- Bipyridyls: diquat, paraquat;
- (thio)carbamates: asulam, butylate, carbetamide, desmedipham, dimepiperate, eptam (EPTC), esprocarb, molinate, orbencarb, phenmedipham, prosulfocarb, pyributicarb, thiobencarb, triallate;
- cyclohexanediones: butroxydim, clethodim, cycloxydim, profoxydim, sethoxydim, tepraloxydim, tralkoxydim;
- dinitroanilines: benfluralin, ethalfluralin, oryzalin, pendimethalin, prodiamine, trifluralin;
- diphenyl ethers: acifluorfen, aclonifen, bifenox, diclofop, ethoxyfen, fomesafen, lactofen, oxyfluorfen;
- hydroxybenzonitriles: bomoxynil, dichlobenil, ioxynil;
- imidazolinones: imazamethabenz, imazamox, imazapic, imazapyr, imazaquin, imazethapyr;
- phenoxy acetic acids: clomeprop, 2,4-dichlorophenoxyacetic acid (2,4-D), 2,4-DB, dichlorprop, MCPA, MCPA-thioethyl, MCPB, Mecoprop;
- pyrazines: chloridazon, flufenpyr-ethyl, fluthiacet, norflurazon, pyridate;
- pyridines: aminopyralid, clopyralid, diflufenican, dithiopyr, fluridone, fluroxypyr, picloram, picolinafen, thiazopyr;
- sulfonyl ureas: amidosulfuron, azimsulfuron, bensulfuron, chlorimuron-ethyl, chlorsulfuron, cinosulfuron, cyclosulfamuron, ethoxysulfuron, flazasulfuron, flucetosulfuron, flupyrsulfuron, foramsulfuron, halosulfuron, imazosulfuron, iodosulfuron, mesosulfuron, metazosulfuron, metsulfuron-methyl, nicosulfuron, oxasulfuron, primisulfuron, prosulfuron, pyrazosulfuron, rimsulfuron, sulfometuron, sulfosulfuron, thifensulfuron, triasulfuron, tribenuron, trifloxysulfuron, triflusulfuron, tritosulfuron, 1-((2-chloro-6-propyl-imidazo[1,2-b]pyridazin-3-yl)sulfonyl)-3-(4,6-dimethoxy-pyrimidin-2-yl)urea;
- triazines: ametryn, atrazine, cyanazine, dimethametryn, ethiozin, hexazinone, metamitron, metribuzin, prometryn, simazine, terbuthylazine, terbutryn, triaziflam;
- ureas: chlorotoluron, daimuron, diuron, fluometuron, isoproturon, linuron, metha-benzthiazuron,tebuthiuron;
- other acetolactate synthase inhibitors: bispyribac-sodium, cloransulam-methyl, diclosulam, florasulam, flucarbazone, flumetsulam, metosulam, ortho-sulfamuron, penoxsulam, propoxycarbazone, pyribambenz-propyl, pyribenzoxim, pyriftalid, pyriminobac-methyl, pyrimisulfan, pyrithiobac, pyroxasulfone, pyroxsulam;
- others: amicarbazone, aminotriazole, anilofos, beflubutamid, benazolin, bencarbazone,benfluresate, benzofenap, bentazone, benzobicyclon, bicyclopyrone, bromacil, bromobutide, butafenacil, butamifos, cafenstrole, carfentrazone, cinidon-ethyl, chlorthal, cinmethylin, clomazone, cumyluron, cyprosulfamide, dicamba, difenzoquat, diflufenzopyr, *Drechslera monoceras,* endothal, ethofumesate, etobenzanid, fenoxasulfone, fentrazamide, flumiclorac-pentyl, flumioxazin, flupoxam, flurochloridone, flurtamone, indanofan, isoxaben, isoxaflutole, lenacil, propanil, propyzamide, quinclorac, quinmerac, mesotrione, methyl arsonic acid, naptalam, oxadiargyl, oxadiazon, oxaziclomefone, pentoxazone, pinoxaden, pyraclonil, pyraflufen-ethyl, pyrasulfotole, pyrazoxyfen, pyrazolynate, quinoclamine, saflufenacil, sulcotrione, sulfentrazone, terbacil, tefuryltrione, tembotrione, thiencarbazone, topramezone, (3-[2-chloro-4-fluoro-5-(3-methyl-2,6-dioxo-4-trifluoromethyl-3,6-dihydro-2H-pyrimidin-1-yl)-phenoxy]-pyridin-2-yloxy)-acetic acid ethyl ester, 6-amino-5-chloro-2-cyclopropyl-pyrimidine-4-carboxylic acid methyl ester, 6-chloro-3-(2-cyclopropyl-6-methyl-phenoxy)-pyridazin-4-ol, 4-amino-3-chloro-6-(4-chlorophenyl)-5-fluoro-pyridine-2-carboxylic acid, 4-amino-3-chloro-6-(4-chloro-2-fluoro-3-methoxy-phenyl)-pyridine-2-carboxylic acid methyl ester, and 4-amino-3-chloro-6-(4-chloro-3-dimethylamino-2-fluoro-phenyl)-pyridine-2-carboxylic acid methyl ester;

O') Insecticides

- organo(thio)phosphates: acephate, azamethiphos, azinphos-methyl, chlorpyrifos, chlorpyrifos-methyl, chlorfenvinphos, diazinon, dichlorvos, dicrotophos, dimethoate, disulfoton, ethion, fenitrothion, fenthion, isoxathion, malathion, methamidophos, methidathion, methyl-parathion, mevinphos, monocrotophos, oxydemeton-methyl, paraoxon, parathion, phenthoate, phosalone, phosmet, phosphamidon, phorate, phoxim, pirimiphos-methyl, profenofos, prothiofos, sulprophos, tetrachlorvinphos, terbufos, triazophos, trichlorfon;
- carbamates: alanycarb, aldicarb, bendiocarb, benfuracarb, carbaryl, carbofuran, carbosulfan, fenoxycarb, furathiocarb, methiocarb, methomyl, oxamyl, pirimicarb, propoxur, thiodicarb, triazamate;
- pyrethroids: allethrin, bifenthrin, cyfluthrin, cyhalothrin, cyphenothrin, cypermethrin, alpha-cypermethrin, beta-cypermethrin, zeta-cypermethrin, deltamethrin, esfenvalerate, etofenprox, fenpropathrin, fenvalerate, imiprothrin, lambda-cyhalothrin, permethrin, prallethrin, pyrethrin I and II, resmethrin, silafluofen, tau-fluvalinate, tefluthrin, tetramethrin, tralomethrin, transfluthrin, profluthrin, dimefluthrin;

- insect growth regulators: a) chitin synthesis inhibitors: benzoylureas: chlorfluazuron, cyramazin, diflubenzuron, flucycloxuron, flufenoxuron, hexaflumuron, lufenuron, novaluron, teflubenzuron, triflumuron; buprofezin, diofenolan, hexythiazox, etoxazole, clofentazine; b) ecdysone antagonists: halofenozide, methoxyfenozide, tebufenozide, azadirachtin; c) juvenoids: pyriproxyfen, methoprene, fenoxycarb; d) lipid biosynthesis inhibitors: spirodiclofen, spiromesifen, spirotetramat;
- nicotinic receptor agonists/antagonists compounds: clothianidin, dinotefuran, flupyradifurone, imidacloprid, thiamethoxam, nitenpyram, acetamiprid, thiacloprid, 1-2-chloro-thiazol-5-ylmethyl)-2-nitrimino-3,5-dimethyl-[1,3,5]triazinane;
- GABA antagonist compounds: endosulfan, ethiprole, fipronil, vaniliprole, pyrafluprole, pyriprole, 5-amino-1-(2,6-dichloro-4-methyl-phenyl)-4-sulfinamoyl-1H-pyrazole-3-carbothioic acid amide;
- macrocyclic lactone insecticides: abamectin, emamectin, milbemectin, lepimectin, spinosad, spinetoram;
- mitochondrial electron transport inhibitor (METI) I acaricides: fenazaquin, pyridaben, tebufenpyrad, tolfenpyrad, flufenerim;
- METI II and III compounds: acequinocyl, fluacyprim, hydramethylnon;
- Uncouplers: chlorfenapyr;
- oxidative phosphorylation inhibitors: cyhexatin, diafenthiuron, fenbutatin oxide, propargite;
- moulting disruptor compounds: cryomazine;
- mixed function oxidase inhibitors: piperonyl butoxide;
- sodium channel blockers: indoxacarb, metaflumizone;
- ryanodine receptor inhibitors: chlorantraniliprole, cyantraniliprole, flubendiamide, N-[4,6-dichloro-2-[(diethyl-lambda-4-sulfanylidene)carbamoyl]-phenyl]-2-(3-chloro-2-pyridyl)-5-(trifluoromethyl)pyrazole-3-carboxamide; N-[4-chloro-2-[(diethyl-lambda-4-sulfanylidene)carbamoyl]-6-methyl-phenyl]-2-(3-chloro-2-pyridyl)-5-(trifluoromethyl)pyrazole-3-carboxamide; N-[4-chloro-2-[(di-2-propyl-lambda-4-sulfanyli-dene)carbamoyl]-6-methyl-phenyl]-2-(3-chloro-2-pyridyl)-5-(trifluoromethyl)pyrazole-3-carboxamide; N-[4,6-dichloro-2-[(di-2-propyl-lambda-4-sulfanylidene)carbamoyl]-phenyl]-2-(3-chloro-2-pyridyl)-5-(trifluoromethyl)pyrazole-3-carboxamide; N-[4,6-dichloro-2-[(diethyl-lambda-4-sulfanylidene)carbamoyl]-phenyl]-2-(3-chloro-2-pyridyl)-5-(difluoromethyl)pyrazole-3-carboxamide; N-[4,6-dibromo-2-[(di-2-propyl-lambda-4-sulfanylidene)carbamoyl]-phenyl]-2-(3-chloro-2-pyridyl)-5-(trifluoromethyl)pyrazole-3-carboxamide; N-[4-chloro-2-[(di-2-propyl-lambda-4-sulfanylidene)carbamoyl]-6-cyano-phenyl]-2-(3-chloro-2-pyridyl)-5-(trifluoromethyl)pyrazole-3-carboxamide; N-[4,6-dibromo-2-[(diethyl-lambda-4-sulfanylidene)carbamoyl]-phenyl]-2-(3-chloro-2-pyridyl)-5-(tri-fluoromethyl)pyrazole-3-carboxamide; - others: benclothiaz, bifenazate, cartap, flonicamid, pyridalyl, pymetrozine, sulfur, thiocyclam, cyenopyrafen, flupyrazofos, cyflumetofen, amidoflumet, imicyafos, bistrifluron, pyrifluquinazon and 1,1'-[(3S,4R,4aR,6S,6aS,12R,12aS,12bS)-4-[[(2-cyclopropylacetyl)oxy]methyl]-1,3,4,4a,5,6,6a,12,12a,12b-decahydro-12-hydroxy-4,6a,12b-trimethyl-11-oxo-9-(3-pyridinyl)-2H,11H-naphtho[2,1-b]pyrano[3,4-e]pyran-3,6-diyl] cyclopropaneacetic acid ester.

It is preferred that the mixtures comprise as pesticides III fungicidal compounds that are independently of each other selected from the groups A'), B'), C'), D'), E'), F'), G'), H'), I'), J') and K').

Preference is given to mixtures comprising as pesticide III (component 3) at least one active substance selected from group A') and particularly selected from azoxystrobin, dimoxystrobin, fluoxastrobin, kresoxim-methyl, orysastrobin, picoxystrobin, pyraclostrobin, trifloxystrobin; famoxadone, fenamidone; benzovindiflupyr, bixafen, boscalid, fluopyram, fluxapyroxad, isopyrazam, penflufen, penthiopyrad, sedaxane; ametoctradin, cyazofamid, fluazinam, fentin salts, such as fentin acetate.

Preference is also given to mixtures comprising as pesticide III (component 3) at least one active substance selected from group B') and particularly selected from cyproconazole, difenoconazole, epoxiconazole, fluquinconazole, flusilazole, flutriafol, metconazole, myclobutanil, penconazole, propiconazole, prothioconazole, triadimefon, triadimenol, tebuconazole, tetraconazole, triticonazole, prochloraz, fenarimol, triforine; dodemorph, fenpropimorph, tridemorph, fenpropidin, spiroxamine, fenhexamid.

Preference is also given to mixtures comprising as pesticide III (component 3) at least one active substance selected from group C') and particularly selected from metalaxyl, (metalaxyl-M) mefenoxam, ofurace.

Preference is also given to mixtures comprising as pesticide III (component 3) at least one active substance selected from group D') and particularly selected from benomyl, carbendazim, thiophanate-methyl, ethaboxam, fluopicolide, zoxamide, metrafenone, pyriofenone.

Preference is also given to mixtures comprising as pesticide III (component 3) at least one active substance selected from group E') and particularly selected from cyprodinil, mepanipyrim and pyrimethanil.

Preference is also given to mixtures comprising as pesticide III (component 3) at least one active substance selected from group F') and particularly selected from iprodione, fludioxonil, vinclozolin, quinoxyfen.

Preference is also given to mixtures comprising as pesticide III (component 3) at least one active substance selected from group G') and particularly selected from dimethomorph, flumorph, iprovalicarb, benthiavalicarb, mandipropamid, propamocarb.

Preference is also given to mixtures comprising as pesticide III (component 3) at least one active substance selected from group H') and particularly selected from copper acetate, copper hydroxide, copper oxychloride, copper sulfate, sulfur, mancozeb, metiram, propineb, thiram, captafol, folpet, chlorothalonil, dichlofluanid, dithianon.

Preference is also given to mixtures comprising as pesticide III (component 3) at least one active substance selected from group I') and particularly selected from carpropamid and fenoxanil.

Preference is also given to mixtures comprising as pesticide III (component 3) at least one active substance selected from group J') and particularly selected from acibenzolar-S-methyl, probenazole, tiadinil, fosetyl, fosetyl-aluminium, $H_3PO_3$ and salts thereof.

Preference is also given to mixtures comprising as pesticide III (component 3) at least one active substance selected from group K') and particularly selected from cymoxanil, proquinazid and *N*-methyl-2-{1-[(5-methyl-3-trifluoromethyl-1H-pyrazol-1-yl)-acetyl]-piperidin-4-yl}-*N*-[(1R)-1,2,3,4-tetrahydronaphthalen-1-yl]-4-thiazolecarboxamide.

According to another embodiment of the invention, mixtures comprising as pesticide III a herbicidal compound that is selected from the group N').

According to a further embodiment, mixtures comprising as pesticide III an insecticidal compound that is selected from the group O').

According to a particular embodiment of the inventive mixtures comprising three fungicides, the mixture comprises compound I, in particular a compound selected from compounds I-1 to I-107 as component I, fluxapyroxad as component II and pyraclostrobin orfenpropimorph as component III. In a further particular embodiment of the inventive mixtures comprising three fungicides, the mixture comprises compound I, in particular a compound selected from compounds I-1 to I-107 as component I, prothioconazole as component II and fluxapyroxad, bixafen, pyraclostrobin, dimoxystrobin, picoxystrobin, fluoxastrobin, fluopyram or penflufen as component III. In said three-component compositions the weight ratio of component I to component II is 1:20 to 20:1. It may be preferable for the weight ratio to be in the region of from 1:10 to 10:1, preferably from 1:3 to 3:1, in particular from 1:2 to 2:1.

The weight ratio of component I to component III is in the range of from 1:20 to 20:1, and in particular in the range of from 1:10 to 10:1. It may be preferable for the weight to be in the range of from 1:3 to 3:1, in particular from 1:2 to 2:1.

According to a preferred embodiment of the invention the pesticide III in three-component mixtures according to the invention is selected from the group of the following compounds III-1 to III-50:

| | | | |
|---|---|---|---|
| III-1 | chlorothalonil | III-2 | cyprodinil |
| III-3 | difenoconazole | III-26 | prothioconazole |
| III-4 | epoxiconazole | III-27 | carbendazim |
| III-5 | azoxystrobin | III-28 | spiroxamine |
| III-6 | fenpropimorph | III-29 | sulfur |
| III-7 | fluazinam | III-30 | tebuconazole |
| III-8 | fluoxastrobin | III-31 | trifloxystrobin |
| III-9 | flusilazole | III-32 | glyphosate |
| III-10 | fluxapyroxad | III-33 | imazamox |
| III-11 | fosetyl-Al | III-34 | dicamba |
| III-12 | benzovindiflupyr | III-35 | glufosinate |
| III-13 | isopyrazam | III-36 | imazapic |
| III-14 | kresoxim-methyl | III-37 | imazapyr |
| III-15 | bixafen | III-38 | imazethapyr |
| III-16 | metconazole | III-39 | abamectin |
| III-17 | metrafenone | III-40 | acetamiprid |
| III-18 | pyraclostrobin | III-41 | alpha-cypermethrin |
| III-19 | phosporous acid | III-42 | bifenthrin |
| III-20 | boscalid | III-43 | chlorfenapyr |
| III-21 | potassium salt of phosphorous acid | III-44 | chlorpyrifos |
| | | III-45 | clothianidin |
| III-22 | sodium salt of phosphorous acid | III-46 | cyazypyr |
| | | III-47 | cyflumetofen |
| III-23 | penthiopyrad | III-48 | dinotefuran |

(continued)

| | | | |
|---|---|---|---|
| III-24 | prochloraz | III-49 | fipronil |
| III-25 | propiconazole | III-50 | flonicamid |

According to one embodiment the invention relates to three-component mixtures as defined in tables 1 to 50 comprising in each case the binary mixtures A-1 to A-6741 as defined in table A and one further pesticide III selected from the compounds III-1 to III-50. Preferably, the mixtures described in tables 1 to 50 comprise the active substances in synergistically effective amounts.

Accordingly, for example, a mixture herein named mixture Ta3.12 corresponds to a combination of compound I and pesticide II as described in line A-3 of table A and compound III-12.

Table 1: A ternary mixture comprising one binary mixture selected from table A and compound III-1. (mixture Ta1.1 to Ta6741.1).

Table 2: A ternary mixture comprising one binary mixture selected from table A and compound III-2. (mixture Ta1.2 to Ta6741.2).

Table 3: A ternary mixture comprising one binary mixture selected from table A and compound III-3. (mixture Ta1.3 to Ta6741.3).

Table 4: A ternary mixture comprising one binary mixture selected from table A and compound III-4. (mixture Ta1.4 to Ta6741.4).

Table 5: A ternary mixture comprising one binary mixture selected from table A and compound III-5. (mixture Ta1.5 to Ta6741.5).

Table 6: A ternary mixture comprising one binary mixture selected from table A and compound III-6. (mixture Ta1.6 to Ta6741.6).

Table 7: A ternary mixture comprising one binary mixture selected from table A and compound III-7. (mixture Ta1.7 to Ta6741.7).

Table 8: A ternary mixture comprising one binary mixture selected from table A and compound III-8. (mixture Ta1.8 to Ta6741.8).

Table 9: A ternary mixture comprising one binary mixture selected from table A and compound III-9. (mixture Ta1.9 to Ta6741.9).

Table 10: A ternary mixture comprising one binary mixture selected from table A and compound III-10. (mixture Ta1.10 to Ta6741.10).

Table 11: A ternary mixture comprising one binary mixture selected from table A and compound III-11. (mixture Ta1.11 to Ta6741.11).

Table 12: A ternary mixture comprising one binary mixture selected from table A and compound III-12. (mixture Ta1.12 to Ta6741.12).

Table 13: A ternary mixture comprising one binary mixture selected from table A and compound III-13. (mixture Ta1.13 to Ta6741.13).

Table 14: A ternary mixture comprising one binary mixture selected from table A and compound III-14. (mixture Ta1.14 to Ta6741.14).

Table 15: A ternary mixture comprising one binary mixture selected from table A and compound III-15. (mixture Ta1.15 to Ta6741.15).

Table 16: A ternary mixture comprising one binary mixture selected from table A and compound III-16. (mixture Ta1.16 to Ta6741.16).

Table 17: A ternary mixture comprising one binary mixture selected from table A and compound III-17. (mixture Ta1.17 to Ta6741.17).

Table 18: A ternary mixture comprising one binary mixture selected from table A and compound III-18. (mixture Ta1.18 to Ta6741.18).

Table 19: A ternary mixture comprising one binary mixture selected from table A and compound III-19. (mixture Ta1.19 to Ta6741.19).

Table 20: A ternary mixture comprising one binary mixture selected from table A and compound III-20. (mixture Ta1.20 to Ta6741.20).

Table 21: A ternary mixture comprising one binary mixture selected from table A and compound III-21. (mixture Ta1.21 to Ta6741.21).

Table 22: A ternary mixture comprising one binary mixture selected from table A and compound III-22. (mixture Ta1.22 to Ta6741.22).

Table 23: A ternary mixture comprising one binary mixture selected from table A and compound III-23. (mixture Ta1.23 to Ta6741.23).

Table 24: A ternary mixture comprising one binary mixture selected from table A and compound III-24. (mixture Ta1.24 to Ta6741.24).

Table 25: A ternary mixture comprising one binary mixture selected from table A and compound III-25. (mixture Ta1.25 to Ta6741.25).

Table 26: A ternary mixture comprising one binary mixture selected from table A and compound III-26. (mixture Ta1.26 to Ta6741.26).

Table 27: A ternary mixture comprising one binary mixture selected from table A and compound III-27. (mixture Ta1.27 to Ta6741.27).

Table 28: A ternary mixture comprising one binary mixture selected from table A and compound III-28. (mixture Ta1.28 to Ta6741.28).

Table 29: A ternary mixture comprising one binary mixture selected from table A and compound III-29. (mixture Ta1.29 to Ta6741.29).

Table 30: A ternary mixture comprising one binary mixture selected from table A and compound III-30. (mixture Ta1.30 to Ta6741.30).

Table 31: A ternary mixture comprising one binary mixture selected from table A and compound III-31. (mixture Ta1.31 to Ta6741.31).

Table 32: A ternary mixture comprising one binary mixture selected from table A and compound III-32. (mixture Ta1.32 to Ta6741.32).

Table 33: A ternary mixture comprising one binary mixture selected from table A and compound III-33. (mixture Ta1.33 to Ta6741.33).

Table 34: A ternary mixture comprising one binary mixture selected from table A and compound III-34. (mixture Ta1.34 to Ta6741.34).

Table 35: A ternary mixture comprising one binary mixture selected from table A and compound III-35. (mixture Ta1.35 to Ta6741.35).

Table 36: A ternary mixture comprising one binary mixture selected from table A and compound III-36. (mixture Ta1.36 to Ta6741.36).

Table 37: A ternary mixture comprising one binary mixture selected from table A and compound III-37. (mixture Ta1.37 to Ta6741.37).

Table 38: A ternary mixture comprising one binary mixture selected from table A and compound III-38. (mixture Ta1.38 to Ta6741.38).

Table 39: A ternary mixture comprising one binary mixture selected from table A and compound III-39. (mixture Ta1.39 to Ta6741.39).

Table 40: A ternary mixture comprising one binary mixture selected from table A and compound III-40. (mixture Ta1.40 to Ta6741.40).

Table 41: A ternary mixture comprising one binary mixture selected from table A and compound III-41. (mixture Ta1.41 to Ta6741.41).

Table 42: A ternary mixture comprising one binary mixture selected from table A and compound III-42. (mixture Ta1.42 to Ta6741.42).

Table 43: A ternary mixture comprising one binary mixture selected from table A and compound III-43. (mixture Ta1.43 to Ta6741.43).

Table 44: A ternary mixture comprising one binary mixture selected from table A and compound III-44. (mixture Ta1.44 to Ta6741.44).

Table 45: A ternary mixture comprising one binary mixture selected from table A and compound III-45. (mixture Ta1.45 to Ta6741.45).

Table 46: A ternary mixture comprising one binary mixture selected from table A and compound III-46. (mixture Ta1.46 to Ta6741.46).

Table 47: A ternary mixture comprising one binary mixture selected from table A and compound III-47. (mixture Ta1.47 to Ta6741.47).

Table 48: A ternary mixture comprising one binary mixture selected from table A and compound III-48. (mixture Ta1.48 to Ta6741.48).

Table 49: A ternary mixture comprising one binary mixture selected from table A and compound III-49. (mixture Ta1.49 to Ta6741.49).

Table 50: A ternary mixture comprising one binary mixture selected from table A and compound III-50. (mixture Ta1.50 to Ta6741.50).

According to another embodiment the invention relates to three-component mixtures as defined in tables 51 to 157 comprising in each case one compound I as component 1) selected from the compounds I-1 to I-107; and as components 2) and 3) (Co.2 and Co.3) in each case the binary mixtures B-1 to B-2450 as defined in table B, wherein

the binary mixtures comprise compounds selected from compounds III-1 to III-50. Preferably, the mixtures described in tables 51 to 157 comprise the active substances in synergistically effective amounts.

Accordingly, for example, a mixture herein named mixture Tb3.12 corresponds to a combination of compounds III-4 and III-1 as described in line B-3 of table B and compound I-12.

Table B: binary combinations of compounds III-1 to III-50

| Line | Co.2 | Co.3 |
|---|---|---|
| B-1 | III-2 | III-1 |
| B-2 | III-3 | III-1 |
| B-3 | III-4 | III-1 |
| B-4 | III-5 | III-1 |
| B-5 | III-6 | III-1 |
| B-6 | III-7 | III-1 |
| B-7 | III-8 | III-1 |
| B-8 | III-9 | III-1 |
| B-9 | III-10 | III-1 |
| B-10 | III-11 | III-1 |
| B-11 | III-12 | III-1 |
| B-12 | III-13 | III-1 |
| B-13 | III-14 | III-1 |
| B-14 | III-15 | III-1 |
| B-15 | III-16 | III-1 |
| B-16 | III-17 | III-1 |
| B-17 | III-18 | III-1 |
| B-18 | III-19 | III-1 |
| B-19 | III-20 | III-1 |
| B-20 | III-21 | III-1 |
| B-21 | III-22 | III-1 |
| B-22 | III-23 | III-1 |
| B-23 | III-24 | III-1 |
| B-24 | III-25 | III-1 |
| B-25 | III-26 | III-1 |
| B-26 | III-27 | III-1 |
| B-27 | III-28 | III-1 |
| B-28 | III-29 | III-1 |
| B-29 | III-30 | III-1 |
| B-30 | III-31 | III-1 |
| B-31 | III-32 | III-1 |
| B-32 | III-33 | III-1 |
| B-33 | III-34 | III-1 |
| B-34 | III-35 | III-1 |
| B-35 | III-36 | III-1 |
| B-36 | III-37 | III-1 |
| B-37 | III-38 | III-1 |
| B-38 | III-39 | III-1 |
| B-39 | III-40 | III-1 |
| B-40 | III-41 | III-1 |
| B-41 | III-42 | III-1 |
| B-42 | III-43 | III-1 |
| B-43 | III-44 | III-1 |
| B-44 | III-45 | III-1 |
| B-45 | III-46 | III-1 |
| B-46 | III-47 | III-1 |
| B-47 | III-48 | III-1 |
| B-48 | III-49 | III-1 |
| B-49 | III-50 | III-1 |
| B-50 | III-1 | III-2 |
| B-51 | III-3 | III-2 |
| B-52 | III-4 | III-2 |
| B-53 | III-5 | III-2 |
| B-54 | III-6 | III-2 |

| Line | Co.2 | Co.3 |
|---|---|---|
| B-55 | III-7 | III-2 |
| B-56 | III-8 | III-2 |
| B-57 | III-9 | III-2 |
| B-58 | III-10 | III-2 |
| B-59 | III-11 | III-2 |
| B-60 | III-12 | III-2 |
| B-61 | III-13 | III-2 |
| B-62 | III-14 | III-2 |
| B-63 | III-15 | III-2 |
| B-64 | III-16 | III-2 |
| B-65 | III-17 | III-2 |
| B-66 | III-18 | III-2 |
| B-67 | III-19 | III-2 |
| B-68 | III-20 | III-2 |
| B-69 | III-21 | III-2 |
| B-70 | III-22 | III-2 |
| B-71 | III-23 | III-2 |
| B-72 | III-24 | III-2 |
| B-73 | III-25 | III-2 |
| B-74 | III-26 | III-2 |
| B-75 | III-27 | III-2 |
| B-76 | III-28 | III-2 |
| B-77 | III-29 | III-2 |
| B-78 | III-30 | III-2 |
| B-79 | III-31 | III-2 |
| B-80 | III-32 | III-2 |
| B-81 | III-33 | III-2 |
| B-82 | III-34 | III-2 |
| B-83 | III-35 | III-2 |
| B-84 | III-36 | III-2 |
| B-85 | III-37 | III-2 |
| B-86 | III-38 | III-2 |
| B-87 | III-39 | III-2 |
| B-88 | III-40 | III-2 |
| B-89 | III-41 | III-2 |
| B-90 | III-42 | III-2 |
| B-91 | III-43 | III-2 |
| B-92 | III-44 | III-2 |
| B-93 | III-45 | III-2 |
| B-94 | III-46 | III-2 |
| B-95 | III-47 | III-2 |

| Line | Co.2 | Co.3 |
|---|---|---|
| B-96 | III-48 | III-2 |
| B-97 | III-49 | III-2 |
| B-98 | III-50 | III-2 |
| B-99 | III-1 | III-3 |
| B-100 | III-2 | III-3 |
| B-101 | III-4 | III-3 |
| B-102 | III-5 | III-3 |
| B-103 | III-6 | III-3 |
| B-104 | III-7 | III-3 |
| B-105 | III-8 | III-3 |
| B-106 | III-9 | III-3 |
| B-107 | III-10 | III-3 |
| B-108 | III-11 | III-3 |
| B-109 | III-12 | III-3 |
| B-110 | III-13 | III-3 |
| B-111 | III-14 | III-3 |
| B-112 | III-15 | III-3 |
| B-113 | III-16 | III-3 |
| B-114 | III-17 | III-3 |
| B-115 | III-18 | III-3 |
| B-116 | III-19 | III-3 |
| B-117 | III-20 | III-3 |
| B-118 | III-21 | III-3 |
| B-119 | III-22 | III-3 |
| B-120 | III-23 | III-3 |
| B-121 | III-24 | III-3 |
| B-122 | III-25 | III-3 |
| B-123 | III-26 | III-3 |
| B-124 | III-27 | III-3 |
| B-125 | III-28 | III-3 |
| B-126 | III-29 | III-3 |
| B-127 | III-30 | III-3 |
| B-128 | III-31 | III-3 |
| B-129 | III-32 | III-3 |
| B-130 | III-33 | III-3 |
| B-131 | III-34 | III-3 |
| B-132 | III-35 | III-3 |
| B-133 | III-36 | III-3 |
| B-134 | III-37 | III-3 |
| B-135 | III-38 | III-3 |
| B-136 | III-39 | III-3 |

| Line | Co.2 | Co.3 |
|---|---|---|
| B-137 | III-40 | III-3 |
| B-138 | III-41 | III-3 |
| B-139 | III-42 | III-3 |
| B-140 | III-43 | III-3 |
| B-141 | III-44 | III-3 |
| B-142 | III-45 | III-3 |
| B-143 | III-46 | III-3 |
| B-144 | III-47 | III-3 |
| B-145 | III-48 | III-3 |
| B-146 | III-49 | III-3 |
| B-147 | III-50 | III-3 |
| B-148 | III-1 | III-4 |
| B-149 | III-2 | III-4 |
| B-150 | III-3 | III-4 |
| B-151 | III-5 | III-4 |
| B-152 | III-6 | III-4 |
| B-153 | III-7 | III-4 |
| B-154 | III-8 | III-4 |
| B-155 | III-9 | III-4 |
| B-156 | III-10 | III-4 |
| B-157 | III-11 | III-4 |
| B-158 | III-12 | III-4 |
| B-159 | III-13 | III-4 |
| B-160 | III-14 | III-4 |
| B-161 | III-15 | III-4 |
| B-162 | III-16 | III-4 |
| B-163 | III-17 | III-4 |
| B-164 | III-18 | III-4 |
| B-165 | III-19 | III-4 |
| B-166 | III-20 | III-4 |
| B-167 | III-21 | III-4 |
| B-168 | III-22 | III-4 |
| B-169 | III-23 | III-4 |
| B-170 | III-24 | III-4 |
| B-171 | III-25 | III-4 |
| B-172 | III-26 | III-4 |
| B-173 | III-27 | III-4 |
| B-174 | III-28 | III-4 |
| B-175 | III-29 | III-4 |
| B-176 | III-30 | III-4 |
| B-177 | III-31 | III-4 |

| Line | Co.2 | Co.3 |
|---|---|---|
| B-178 | III-32 | III-4 |
| B-179 | III-33 | III-4 |
| B-180 | III-34 | III-4 |
| B-181 | III-35 | III-4 |
| B-182 | III-36 | III-4 |
| B-183 | III-37 | III-4 |
| B-184 | III-38 | III-4 |
| B-185 | III-39 | III-4 |
| B-186 | III-40 | III-4 |
| B-187 | III-41 | III-4 |
| B-188 | III-42 | III-4 |
| B-189 | III-43 | III-4 |
| B-190 | III-44 | III-4 |
| B-191 | III-45 | III-4 |
| B-192 | III-46 | III-4 |
| B-193 | III-47 | III-4 |
| B-194 | III-48 | III-4 |
| B-195 | III-49 | III-4 |
| B-196 | III-50 | III-4 |
| B-197 | III-1 | III-5 |
| B-198 | III-2 | III-5 |
| B-199 | III-3 | III-5 |
| B-200 | III-4 | III-5 |
| B-201 | III-6 | III-5 |
| B-202 | III-7 | III-5 |
| B-203 | III-8 | III-5 |
| B-204 | III-9 | III-5 |
| B-205 | III-10 | III-5 |
| B-206 | III-11 | III-5 |
| B-207 | III-12 | III-5 |
| B-208 | III-13 | III-5 |
| B-209 | III-14 | III-5 |
| B-210 | III-15 | III-5 |
| B-211 | III-16 | III-5 |
| B-212 | III-17 | III-5 |
| B-213 | III-18 | III-5 |
| B-214 | III-19 | III-5 |
| B-215 | III-20 | III-5 |
| B-216 | III-21 | III-5 |
| B-217 | III-22 | III-5 |
| B-218 | III-23 | III-5 |

| Line | Co.2 | Co.3 |
|---|---|---|
| B-219 | III-24 | III-5 |
| B-220 | III-25 | III-5 |
| B-221 | III-26 | III-5 |
| B-222 | III-27 | III-5 |
| B-223 | III-28 | III-5 |
| B-224 | III-29 | III-5 |
| B-225 | III-30 | III-5 |
| B-226 | III-31 | III-5 |
| B-227 | III-32 | III-5 |
| B-228 | III-33 | III-5 |
| B-229 | III-34 | III-5 |
| B-230 | III-35 | III-5 |
| B-231 | III-36 | III-5 |
| B-232 | III-37 | III-5 |
| B-233 | III-38 | III-5 |
| B-234 | III-39 | III-5 |
| B-235 | III-40 | III-5 |
| B-236 | III-41 | III-5 |
| B-237 | III-42 | III-5 |
| B-238 | III-43 | III-5 |
| B-239 | III-44 | III-5 |
| B-240 | III-45 | III-5 |
| B-241 | III-46 | III-5 |
| B-242 | III-47 | III-5 |
| B-243 | III-48 | III-5 |
| B-244 | III-49 | III-5 |
| B-245 | III-50 | III-5 |
| B-246 | III-1 | III-6 |
| B-247 | III-2 | III-6 |
| B-248 | III-3 | III-6 |
| B-249 | III-4 | III-6 |
| B-250 | III-5 | III-6 |
| B-251 | III-7 | III-6 |
| B-252 | III-8 | III-6 |
| B-253 | III-9 | III-6 |
| B-254 | III-10 | III-6 |
| B-255 | III-11 | III-6 |
| B-256 | III-12 | III-6 |
| B-257 | III-13 | III-6 |
| B-258 | III-14 | III-6 |
| B-259 | III-15 | III-6 |

| Line | Co.2 | Co.3 |
|---|---|---|
| B-260 | III-16 | III-6 |
| B-261 | III-17 | III-6 |
| B-262 | III-18 | III-6 |
| B-263 | III-19 | III-6 |
| B-264 | III-20 | III-6 |
| B-265 | III-21 | III-6 |
| B-266 | III-22 | III-6 |
| B-267 | III-23 | III-6 |
| B-268 | III-24 | III-6 |
| B-269 | III-25 | III-6 |
| B-270 | III-26 | III-6 |
| B-271 | III-27 | III-6 |
| B-272 | III-28 | III-6 |
| B-273 | III-29 | III-6 |
| B-274 | III-30 | III-6 |
| B-275 | III-31 | III-6 |
| B-276 | III-32 | III-6 |
| B-277 | III-33 | III-6 |
| B-278 | III-34 | III-6 |
| B-279 | III-35 | III-6 |
| B-280 | III-36 | III-6 |
| B-281 | III-37 | III-6 |
| B-282 | III-38 | III-6 |
| B-283 | III-39 | III-6 |
| B-284 | III-40 | III-6 |
| B-285 | III-41 | III-6 |
| B-286 | III-42 | III-6 |
| B-287 | III-43 | III-6 |
| B-288 | III-44 | III-6 |
| B-289 | III-45 | III-6 |
| B-290 | III-46 | III-6 |
| B-291 | III-47 | III-6 |
| B-292 | III-48 | III-6 |
| B-293 | III-49 | III-6 |
| B-294 | III-50 | III-6 |
| B-295 | III-1 | III-7 |
| B-296 | III-2 | III-7 |
| B-297 | III-3 | III-7 |
| B-298 | III-4 | III-7 |
| B-299 | III-5 | III-7 |
| B-300 | III-6 | III-7 |

| Line | Co.2 | Co.3 |
|---|---|---|
| B-301 | III-8 | III-7 |
| B-302 | III-9 | III-7 |
| B-303 | III-10 | III-7 |
| B-304 | III-11 | III-7 |
| B-305 | III-12 | III-7 |
| B-306 | III-13 | III-7 |
| B-307 | III-14 | III-7 |
| B-308 | III-15 | III-7 |
| B-309 | III-16 | III-7 |
| B-310 | III-17 | III-7 |
| B-311 | III-18 | III-7 |
| B-312 | III-19 | III-7 |
| B-313 | III-20 | III-7 |
| B-314 | III-21 | III-7 |
| B-315 | III-22 | III-7 |
| B-316 | III-23 | III-7 |
| B-317 | III-24 | III-7 |
| B-318 | III-25 | III-7 |
| B-319 | III-26 | III-7 |
| B-320 | III-27 | III-7 |
| B-321 | III-28 | III-7 |
| B-322 | III-29 | III-7 |
| B-323 | III-30 | III-7 |
| B-324 | III-31 | III-7 |
| B-325 | III-32 | III-7 |
| B-326 | III-33 | III-7 |
| B-327 | III-34 | III-7 |
| B-328 | III-35 | III-7 |
| B-329 | III-36 | III-7 |
| B-330 | III-37 | III-7 |
| B-331 | III-38 | III-7 |
| B-332 | III-39 | III-7 |
| B-333 | III-40 | III-7 |
| B-334 | III-41 | III-7 |
| B-335 | III-42 | III-7 |
| B-336 | III-43 | III-7 |
| B-337 | III-44 | III-7 |
| B-338 | III-45 | III-7 |
| B-339 | III-46 | III-7 |
| B-340 | III-47 | III-7 |
| B-341 | III-48 | III-7 |
| B-342 | III-49 | III-7 |
| B-343 | III-50 | III-7 |
| B-344 | III-1 | III-8 |
| B-345 | III-2 | III-8 |
| B-346 | III-3 | III-8 |
| B-347 | III-4 | III-8 |
| B-348 | III-5 | III-8 |
| B-349 | III-6 | III-8 |
| B-350 | III-7 | III-8 |
| B-351 | III-9 | III-8 |
| B-352 | III-10 | III-8 |
| B-353 | III-11 | III-8 |
| B-354 | III-12 | III-8 |
| B-355 | III-13 | III-8 |
| B-356 | III-14 | III-8 |
| B-357 | III-15 | III-8 |
| B-358 | III-16 | III-8 |
| B-359 | III-17 | III-8 |
| B-360 | III-18 | III-8 |
| B-361 | III-19 | III-8 |
| B-362 | III-20 | III-8 |
| B-363 | III-21 | III-8 |
| B-364 | III-22 | III-8 |
| B-365 | III-23 | III-8 |
| B-366 | III-24 | III-8 |
| B-367 | III-25 | III-8 |
| B-368 | III-26 | III-8 |
| B-369 | III-27 | III-8 |
| B-370 | III-28 | III-8 |
| B-371 | III-29 | III-8 |
| B-372 | III-30 | III-8 |
| B-373 | III-31 | III-8 |
| B-374 | III-32 | III-8 |
| B-375 | III-33 | III-8 |
| B-376 | III-34 | III-8 |
| B-377 | III-35 | III-8 |
| B-378 | III-36 | III-8 |
| B-379 | III-37 | III-8 |
| B-380 | III-38 | III-8 |
| B-381 | III-39 | III-8 |
| B-382 | III-40 | III-8 |
| B-383 | III-41 | III-8 |
| B-384 | III-42 | III-8 |
| B-385 | III-43 | III-8 |
| B-386 | III-44 | III-8 |
| B-387 | III-45 | III-8 |
| B-388 | III-46 | III-8 |
| B-389 | III-47 | III-8 |
| B-390 | III-48 | III-8 |
| B-391 | III-49 | III-8 |
| B-392 | III-50 | III-8 |
| B-393 | III-1 | III-9 |
| B-394 | III-2 | III-9 |
| B-395 | III-3 | III-9 |
| B-396 | III-4 | III-9 |
| B-397 | III-5 | III-9 |
| B-398 | III-6 | III-9 |
| B-399 | III-7 | III-9 |
| B-400 | III-8 | III-9 |
| B-401 | III-10 | III-9 |
| B-402 | III-11 | III-9 |
| B-403 | III-12 | III-9 |
| B-404 | III-13 | III-9 |
| B-405 | III-14 | III-9 |
| B-406 | III-15 | III-9 |
| B-407 | III-16 | III-9 |
| B-408 | III-17 | III-9 |
| B-409 | III-18 | III-9 |
| B-410 | III-19 | III-9 |
| B-411 | III-20 | III-9 |
| B-412 | III-21 | III-9 |
| B-413 | III-22 | III-9 |
| B-414 | III-23 | III-9 |
| B-415 | III-24 | III-9 |
| B-416 | III-25 | III-9 |
| B-417 | III-26 | III-9 |
| B-418 | III-27 | III-9 |
| B-419 | III-28 | III-9 |
| B-420 | III-29 | III-9 |
| B-421 | III-30 | III-9 |
| B-422 | III-31 | III-9 |
| B-423 | III-32 | III-9 |

| Line | Co.2 | Co.3 |
|---|---|---|
| B-424 | III-33 | III-9 |
| B-425 | III-34 | III-9 |
| B-426 | III-35 | III-9 |
| B-427 | III-36 | III-9 |
| B-428 | III-37 | III-9 |
| B-429 | III-38 | III-9 |
| B-430 | III-39 | III-9 |
| B-431 | III-40 | III-9 |
| B-432 | III-41 | III-9 |
| B-433 | III-42 | III-9 |
| B-434 | III-43 | III-9 |
| B-435 | III-44 | III-9 |
| B-436 | III-45 | III-9 |
| B-437 | III-46 | III-9 |
| B-438 | III-47 | III-9 |
| B-439 | III-48 | III-9 |
| B-440 | III-49 | III-9 |
| B-441 | III-50 | III-9 |
| B-442 | III-1 | III-10 |
| B-443 | III-2 | III-10 |
| B-444 | III-3 | III-10 |
| B-445 | III-4 | III-10 |
| B-446 | III-5 | III-10 |
| B-447 | III-6 | III-10 |
| B-448 | III-7 | III-10 |
| B-449 | III-8 | III-10 |
| B-450 | III-9 | III-10 |
| B-451 | III-11 | III-10 |
| B-452 | III-12 | III-10 |
| B-453 | III-13 | III-10 |
| B-454 | III-14 | III-10 |
| B-455 | III-15 | III-10 |
| B-456 | III-16 | III-10 |
| B-457 | III-17 | III-10 |
| B-458 | III-18 | III-10 |
| B-459 | III-19 | III-10 |
| B-460 | III-20 | III-10 |
| B-461 | III-21 | III-10 |
| B-462 | III-22 | III-10 |
| B-463 | III-23 | III-10 |
| B-464 | III-24 | III-10 |

| Line | Co.2 | Co.3 |
|---|---|---|
| B-465 | III-25 | III-10 |
| B-466 | III-26 | III-10 |
| B-467 | III-27 | III-10 |
| B-468 | III-28 | III-10 |
| B-469 | III-29 | III-10 |
| B-470 | III-30 | III-10 |
| B-471 | III-31 | III-10 |
| B-472 | III-32 | III-10 |
| B-473 | III-33 | III-10 |
| B-474 | III-34 | III-10 |
| B-475 | III-35 | III-10 |
| B-476 | III-36 | III-10 |
| B-477 | III-37 | III-10 |
| B-478 | III-38 | III-10 |
| B-479 | III-39 | III-10 |
| B-480 | III-40 | III-10 |
| B-481 | III-41 | III-10 |
| B-482 | III-42 | III-10 |
| B-483 | III-43 | III-10 |
| B-484 | III-44 | III-10 |
| B-485 | III-45 | III-10 |
| B-486 | III-46 | III-10 |
| B-487 | III-47 | III-10 |
| B-488 | III-48 | III-10 |
| B-489 | III-49 | III-10 |
| B-490 | III-50 | III-10 |
| B-491 | III-1 | III-11 |
| B-492 | III-2 | III-11 |
| B-493 | III-3 | III-11 |
| B-494 | III-4 | III-11 |
| B-495 | III-5 | III-11 |
| B-496 | III-6 | III-11 |
| B-497 | III-7 | III-11 |
| B-498 | III-8 | III-11 |
| B-499 | III-9 | III-11 |
| B-500 | III-10 | III-11 |
| B-501 | III-12 | III-11 |
| B-502 | III-13 | III-11 |
| B-503 | III-14 | III-11 |
| B-504 | III-15 | III-11 |
| B-505 | III-16 | III-11 |

| Line | Co.2 | Co.3 |
|---|---|---|
| B-506 | III-17 | III-11 |
| B-507 | III-18 | III-11 |
| B-508 | III-19 | III-11 |
| B-509 | III-20 | III-11 |
| B-510 | III-21 | III-11 |
| B-511 | III-22 | III-11 |
| B-512 | III-23 | III-11 |
| B-513 | III-24 | III-11 |
| B-514 | III-25 | III-11 |
| B-515 | III-26 | III-11 |
| B-516 | III-27 | III-11 |
| B-517 | III-28 | III-11 |
| B-518 | III-29 | III-11 |
| B-519 | III-30 | III-11 |
| B-520 | III-31 | III-11 |
| B-521 | III-32 | III-11 |
| B-522 | III-33 | III-11 |
| B-523 | III-34 | III-11 |
| B-524 | III-35 | III-11 |
| B-525 | III-36 | III-11 |
| B-526 | III-37 | III-11 |
| B-527 | III-38 | III-11 |
| B-528 | III-39 | III-11 |
| B-529 | III-40 | III-11 |
| B-530 | III-41 | III-11 |
| B-531 | III-42 | III-11 |
| B-532 | III-43 | III-11 |
| B-533 | III-44 | III-11 |
| B-534 | III-45 | III-11 |
| B-535 | III-46 | III-11 |
| B-536 | III-47 | III-11 |
| B-537 | III-48 | III-11 |
| B-538 | III-49 | III-11 |
| B-539 | III-50 | III-11 |
| B-540 | III-1 | III-12 |
| B-541 | III-2 | III-12 |
| B-542 | III-3 | III-12 |
| B-543 | III-4 | III-12 |
| B-544 | III-5 | III-12 |
| B-545 | III-6 | III-12 |
| B-546 | III-7 | III-12 |

| Line | Co.2 | Co.3 |
|---|---|---|
| B-547 | III-8 | III-12 |
| B-548 | III-9 | III-12 |
| B-549 | III-10 | III-12 |
| B-550 | III-11 | III-12 |
| B-551 | III-13 | III-12 |
| B-552 | III-14 | III-12 |
| B-553 | III-15 | III-12 |
| B-554 | III-16 | III-12 |
| B-555 | III-17 | III-12 |
| B-556 | III-18 | III-12 |
| B-557 | III-19 | III-12 |
| B-558 | III-20 | III-12 |
| B-559 | III-21 | III-12 |
| B-560 | III-22 | III-12 |
| B-561 | III-23 | III-12 |
| B-562 | III-24 | III-12 |
| B-563 | III-25 | III-12 |
| B-564 | III-26 | III-12 |
| B-565 | III-27 | III-12 |
| B-566 | III-28 | III-12 |
| B-567 | III-29 | III-12 |
| B-568 | III-30 | III-12 |
| B-569 | III-31 | III-12 |
| B-570 | III-32 | III-12 |
| B-571 | III-33 | III-12 |
| B-572 | III-34 | III-12 |
| B-573 | III-35 | III-12 |
| B-574 | III-36 | III-12 |
| B-575 | III-37 | III-12 |
| B-576 | III-38 | III-12 |
| B-577 | III-39 | III-12 |
| B-578 | III-40 | III-12 |
| B-579 | III-41 | III-12 |
| B-580 | III-42 | III-12 |
| B-581 | III-43 | III-12 |
| B-582 | III-44 | III-12 |
| B-583 | III-45 | III-12 |
| B-584 | III-46 | III-12 |
| B-585 | III-47 | III-12 |
| B-586 | III-48 | III-12 |
| B-587 | III-49 | III-12 |

| Line | Co.2 | Co.3 |
|---|---|---|
| B-588 | III-50 | III-12 |
| B-589 | III-1 | III-13 |
| B-590 | III-2 | III-13 |
| B-591 | III-3 | III-13 |
| B-592 | III-4 | III-13 |
| B-593 | III-5 | III-13 |
| B-594 | III-6 | III-13 |
| B-595 | III-7 | III-13 |
| B-596 | III-8 | III-13 |
| B-597 | III-9 | III-13 |
| B-598 | III-10 | III-13 |
| B-599 | III-11 | III-13 |
| B-600 | III-12 | III-13 |
| B-601 | III-14 | III-13 |
| B-602 | III-15 | III-13 |
| B-603 | III-16 | III-13 |
| B-604 | III-17 | III-13 |
| B-605 | III-18 | III-13 |
| B-606 | III-19 | III-13 |
| B-607 | III-20 | III-13 |
| B-608 | III-21 | III-13 |
| B-609 | III-22 | III-13 |
| B-610 | III-23 | III-13 |
| B-611 | III-24 | III-13 |
| B-612 | III-25 | III-13 |
| B-613 | III-26 | III-13 |
| B-614 | III-27 | III-13 |
| B-615 | III-28 | III-13 |
| B-616 | III-29 | III-13 |
| B-617 | III-30 | III-13 |
| B-618 | III-31 | III-13 |
| B-619 | III-32 | III-13 |
| B-620 | III-33 | III-13 |
| B-621 | III-34 | III-13 |
| B-622 | III-35 | III-13 |
| B-623 | III-36 | III-13 |
| B-624 | III-37 | III-13 |
| B-625 | III-38 | III-13 |
| B-626 | III-39 | III-13 |
| B-627 | III-40 | III-13 |
| B-628 | III-41 | III-13 |

| Line | Co.2 | Co.3 |
|---|---|---|
| B-629 | III-42 | III-13 |
| B-630 | III-43 | III-13 |
| B-631 | III-44 | III-13 |
| B-632 | III-45 | III-13 |
| B-633 | III-46 | III-13 |
| B-634 | III-47 | III-13 |
| B-635 | III-48 | III-13 |
| B-636 | III-49 | III-13 |
| B-637 | III-50 | III-13 |
| B-638 | III-1 | III-14 |
| B-639 | III-2 | III-14 |
| B-640 | III-3 | III-14 |
| B-641 | III-4 | III-14 |
| B-642 | III-5 | III-14 |
| B-643 | III-6 | III-14 |
| B-644 | III-7 | III-14 |
| B-645 | III-8 | III-14 |
| B-646 | III-9 | III-14 |
| B-647 | III-10 | III-14 |
| B-648 | III-11 | III-14 |
| B-649 | III-12 | III-14 |
| B-650 | III-13 | III-14 |
| B-651 | III-15 | III-14 |
| B-652 | III-16 | III-14 |
| B-653 | III-17 | III-14 |
| B-654 | III-18 | III-14 |
| B-655 | III-19 | III-14 |
| B-656 | III-20 | III-14 |
| B-657 | III-21 | III-14 |
| B-658 | III-22 | III-14 |
| B-659 | III-23 | III-14 |
| B-660 | III-24 | III-14 |
| B-661 | III-25 | III-14 |
| B-662 | III-26 | III-14 |
| B-663 | III-27 | III-14 |
| B-664 | III-28 | III-14 |
| B-665 | III-29 | III-14 |
| B-666 | III-30 | III-14 |
| B-667 | III-31 | III-14 |
| B-668 | III-32 | III-14 |
| B-669 | III-33 | III-14 |

| Line | Co.2 | Co.3 |
|---|---|---|
| B-670 | III-34 | III-14 |
| B-671 | III-35 | III-14 |
| B-672 | III-36 | III-14 |
| B-673 | III-37 | III-14 |
| B-674 | III-38 | III-14 |
| B-675 | III-39 | III-14 |
| B-676 | III-40 | III-14 |
| B-677 | III-41 | III-14 |
| B-678 | III-42 | III-14 |
| B-679 | III-43 | III-14 |
| B-680 | III-44 | III-14 |
| B-681 | III-45 | III-14 |
| B-682 | III-46 | III-14 |
| B-683 | III-47 | III-14 |
| B-684 | III-48 | III-14 |
| B-685 | III-49 | III-14 |
| B-686 | III-50 | III-14 |
| B-687 | III-1 | III-15 |
| B-688 | III-2 | III-15 |
| B-689 | III-3 | III-15 |
| B-690 | III-4 | III-15 |
| B-691 | III-5 | III-15 |
| B-692 | III-6 | III-15 |
| B-693 | III-7 | III-15 |
| B-694 | III-8 | III-15 |
| B-695 | III-9 | III-15 |
| B-696 | III-10 | III-15 |
| B-697 | III-11 | III-15 |
| B-698 | III-12 | III-15 |
| B-699 | III-13 | III-15 |
| B-700 | III-14 | III-15 |
| B-701 | III-16 | III-15 |
| B-702 | III-17 | III-15 |
| B-703 | III-18 | III-15 |
| B-704 | III-19 | III-15 |
| B-705 | III-20 | III-15 |
| B-706 | III-21 | III-15 |
| B-707 | III-22 | III-15 |
| B-708 | III-23 | III-15 |
| B-709 | III-24 | III-15 |
| B-710 | III-25 | III-15 |

| Line | Co.2 | Co.3 |
|---|---|---|
| B-711 | III-26 | III-15 |
| B-712 | III-27 | III-15 |
| B-713 | III-28 | III-15 |
| B-714 | III-29 | III-15 |
| B-715 | III-30 | III-15 |
| B-716 | III-31 | III-15 |
| B-717 | III-32 | III-15 |
| B-718 | III-33 | III-15 |
| B-719 | III-34 | III-15 |
| B-720 | III-35 | III-15 |
| B-721 | III-36 | III-15 |
| B-722 | III-37 | III-15 |
| B-723 | III-38 | III-15 |
| B-724 | III-39 | III-15 |
| B-725 | III-40 | III-15 |
| B-726 | III-41 | III-15 |
| B-727 | III-42 | III-15 |
| B-728 | III-43 | III-15 |
| B-729 | III-44 | III-15 |
| B-730 | III-45 | III-15 |
| B-731 | III-46 | III-15 |
| B-732 | III-47 | III-15 |
| B-733 | III-48 | III-15 |
| B-734 | III-49 | III-15 |
| B-735 | III-50 | III-15 |
| B-736 | III-1 | III-16 |
| B-737 | III-2 | III-16 |
| B-738 | III-3 | III-16 |
| B-739 | III-4 | III-16 |
| B-740 | III-5 | III-16 |
| B-741 | III-6 | III-16 |
| B-742 | III-7 | III-16 |
| B-743 | III-8 | III-16 |
| B-744 | III-9 | III-16 |
| B-745 | III-10 | III-16 |
| B-746 | III-11 | III-16 |
| B-747 | III-12 | III-16 |
| B-748 | III-13 | III-16 |
| B-749 | III-14 | III-16 |
| B-750 | III-15 | III-16 |
| B-751 | III-17 | III-16 |

| Line | Co.2 | Co.3 |
|---|---|---|
| B-752 | III-18 | III-16 |
| B-753 | III-19 | III-16 |
| B-754 | III-20 | III-16 |
| B-755 | III-21 | III-16 |
| B-756 | III-22 | III-16 |
| B-757 | III-23 | III-16 |
| B-758 | III-24 | III-16 |
| B-759 | III-25 | III-16 |
| B-760 | III-26 | III-16 |
| B-761 | III-27 | III-16 |
| B-762 | III-28 | III-16 |
| B-763 | III-29 | III-16 |
| B-764 | III-30 | III-16 |
| B-765 | III-31 | III-16 |
| B-766 | III-32 | III-16 |
| B-767 | III-33 | III-16 |
| B-768 | III-34 | III-16 |
| B-769 | III-35 | III-16 |
| B-770 | III-36 | III-16 |
| B-771 | III-37 | III-16 |
| B-772 | III-38 | III-16 |
| B-773 | III-39 | III-16 |
| B-774 | III-40 | III-16 |
| B-775 | III-41 | III-16 |
| B-776 | III-42 | III-16 |
| B-777 | III-43 | III-16 |
| B-778 | III-44 | III-16 |
| B-779 | III-45 | III-16 |
| B-780 | III-46 | III-16 |
| B-781 | III-47 | III-16 |
| B-782 | III-48 | III-16 |
| B-783 | III-49 | III-16 |
| B-784 | III-50 | III-16 |
| B-785 | III-1 | III-17 |
| B-786 | III-2 | III-17 |
| B-787 | III-3 | III-17 |
| B-788 | III-4 | III-17 |
| B-789 | III-5 | III-17 |
| B-790 | III-6 | III-17 |
| B-791 | III-7 | III-17 |
| B-792 | III-8 | III-17 |

| Line | Co.2 | Co.3 |
|---|---|---|
| B-793 | III-9 | III-17 |
| B-794 | III-10 | III-17 |
| B-795 | III-11 | III-17 |
| B-796 | III-12 | III-17 |
| B-797 | III-13 | III-17 |
| B-798 | III-14 | III-17 |
| B-799 | III-15 | III-17 |
| B-800 | III-16 | III-17 |
| B-801 | III-18 | III-17 |
| B-802 | III-19 | III-17 |
| B-803 | III-20 | III-17 |
| B-804 | III-21 | III-17 |
| B-805 | III-22 | III-17 |
| B-806 | III-23 | III-17 |
| B-807 | III-24 | III-17 |
| B-808 | III-25 | III-17 |
| B-809 | III-26 | III-17 |
| B-810 | III-27 | III-17 |
| B-811 | III-28 | III-17 |
| B-812 | III-29 | III-17 |
| B-813 | III-30 | III-17 |
| B-814 | III-31 | III-17 |
| B-815 | III-32 | III-17 |
| B-816 | III-33 | III-17 |
| B-817 | III-34 | III-17 |
| B-818 | III-35 | III-17 |
| B-819 | III-36 | III-17 |
| B-820 | III-37 | III-17 |
| B-821 | III-38 | III-17 |
| B-822 | III-39 | III-17 |
| B-823 | III-40 | III-17 |
| B-824 | III-41 | III-17 |
| B-825 | III-42 | III-17 |
| B-826 | III-43 | III-17 |
| B-827 | III-44 | III-17 |
| B-828 | III-45 | III-17 |
| B-829 | III-46 | III-17 |
| B-830 | III-47 | III-17 |
| B-831 | III-48 | III-17 |
| B-832 | III-49 | III-17 |
| B-833 | III-50 | III-17 |

| Line | Co.2 | Co.3 |
|---|---|---|
| B-834 | III-1 | III-18 |
| B-835 | III-2 | III-18 |
| B-836 | III-3 | III-18 |
| B-837 | III-4 | III-18 |
| B-838 | III-5 | III-18 |
| B-839 | III-6 | III-18 |
| B-840 | III-7 | III-18 |
| B-841 | III-8 | III-18 |
| B-842 | III-9 | III-18 |
| B-843 | III-10 | III-18 |
| B-844 | III-11 | III-18 |
| B-845 | III-12 | III-18 |
| B-846 | III-13 | III-18 |
| B-847 | III-14 | III-18 |
| B-848 | III-15 | III-18 |
| B-849 | III-16 | III-18 |
| B-850 | III-17 | III-18 |
| B-851 | III-19 | III-18 |
| B-852 | III-20 | III-18 |
| B-853 | III-21 | III-18 |
| B-854 | III-22 | III-18 |
| B-855 | III-23 | III-18 |
| B-856 | III-24 | III-18 |
| B-857 | III-25 | III-18 |
| B-858 | III-26 | III-18 |
| B-859 | III-27 | III-18 |
| B-860 | III-28 | III-18 |
| B-861 | III-29 | III-18 |
| B-862 | III-30 | III-18 |
| B-863 | III-31 | III-18 |
| B-864 | III-32 | III-18 |
| B-865 | III-33 | III-18 |
| B-866 | III-34 | III-18 |
| B-867 | III-35 | III-18 |
| B-868 | III-36 | III-18 |
| B-869 | III-37 | III-18 |
| B-870 | III-38 | III-18 |
| B-871 | III-39 | III-18 |
| B-872 | III-40 | III-18 |
| B-873 | III-41 | III-18 |
| B-874 | III-42 | III-18 |

| Line | Co.2 | Co.3 |
|---|---|---|
| B-875 | III-43 | III-18 |
| B-876 | III-44 | III-18 |
| B-877 | III-45 | III-18 |
| B-878 | III-46 | III-18 |
| B-879 | III-47 | III-18 |
| B-880 | III-48 | III-18 |
| B-881 | III-49 | III-18 |
| B-882 | III-50 | III-18 |
| B-883 | III-1 | III-19 |
| B-884 | III-2 | III-19 |
| B-885 | III-3 | III-19 |
| B-886 | III-4 | III-19 |
| B-887 | III-5 | III-19 |
| B-888 | III-6 | III-19 |
| B-889 | III-7 | III-19 |
| B-890 | III-8 | III-19 |
| B-891 | III-9 | III-19 |
| B-892 | III-10 | III-19 |
| B-893 | III-11 | III-19 |
| B-894 | III-12 | III-19 |
| B-895 | III-13 | III-19 |
| B-896 | III-14 | III-19 |
| B-897 | III-15 | III-19 |
| B-898 | III-16 | III-19 |
| B-899 | III-17 | III-19 |
| B-900 | III-18 | III-19 |
| B-901 | III-20 | III-19 |
| B-902 | III-21 | III-19 |
| B-903 | III-22 | III-19 |
| B-904 | III-23 | III-19 |
| B-905 | III-24 | III-19 |
| B-906 | III-25 | III-19 |
| B-907 | III-26 | III-19 |
| B-908 | III-27 | III-19 |
| B-909 | III-28 | III-19 |
| B-910 | III-29 | III-19 |
| B-911 | III-30 | III-19 |
| B-912 | III-31 | III-19 |
| B-913 | III-32 | III-19 |
| B-914 | III-33 | III-19 |
| B-915 | III-34 | III-19 |

| Line | Co.2 | Co.3 |
|---|---|---|
| B-916 | III-35 | III-19 |
| B-917 | III-36 | III-19 |
| B-918 | III-37 | III-19 |
| B-919 | III-38 | III-19 |
| B-920 | III-39 | III-19 |
| B-921 | III-40 | III-19 |
| B-922 | III-41 | III-19 |
| B-923 | III-42 | III-19 |
| B-924 | III-43 | III-19 |
| B-925 | III-44 | III-19 |
| B-926 | III-45 | III-19 |
| B-927 | III-46 | III-19 |
| B-928 | III-47 | III-19 |
| B-929 | III-48 | III-19 |
| B-930 | III-49 | III-19 |
| B-931 | III-50 | III-19 |
| B-932 | III-1 | III-20 |
| B-933 | III-2 | III-20 |
| B-934 | III-3 | III-20 |
| B-935 | III-4 | III-20 |
| B-936 | III-5 | III-20 |
| B-937 | III-6 | III-20 |
| B-938 | III-7 | III-20 |
| B-939 | III-8 | III-20 |
| B-940 | III-9 | III-20 |
| B-941 | III-10 | III-20 |
| B-942 | III-11 | III-20 |
| B-943 | III-12 | III-20 |
| B-944 | III-13 | III-20 |
| B-945 | III-14 | III-20 |
| B-946 | III-15 | III-20 |
| B-947 | III-16 | III-20 |
| B-948 | III-17 | III-20 |
| B-949 | III-18 | III-20 |
| B-950 | III-19 | III-20 |
| B-951 | III-21 | III-20 |
| B-952 | III-22 | III-20 |
| B-953 | III-23 | III-20 |
| B-954 | III-24 | III-20 |
| B-955 | III-25 | III-20 |
| B-956 | III-26 | III-20 |

| Line | Co.2 | Co.3 |
|---|---|---|
| B-957 | III-27 | III-20 |
| B-958 | III-28 | III-20 |
| B-959 | III-29 | III-20 |
| B-960 | III-30 | III-20 |
| B-961 | III-31 | III-20 |
| B-962 | III-32 | III-20 |
| B-963 | III-33 | III-20 |
| B-964 | III-34 | III-20 |
| B-965 | III-35 | III-20 |
| B-966 | III-36 | III-20 |
| B-967 | III-37 | III-20 |
| B-968 | III-38 | III-20 |
| B-969 | III-39 | III-20 |
| B-970 | III-40 | III-20 |
| B-971 | III-41 | III-20 |
| B-972 | III-42 | III-20 |
| B-973 | III-43 | III-20 |
| B-974 | III-44 | III-20 |
| B-975 | III-45 | III-20 |
| B-976 | III-46 | III-20 |
| B-977 | III-47 | III-20 |
| B-978 | III-48 | III-20 |
| B-979 | III-49 | III-20 |
| B-980 | III-50 | III-20 |
| B-981 | III-1 | III-21 |
| B-982 | III-2 | III-21 |
| B-983 | III-3 | III-21 |
| B-984 | III-4 | III-21 |
| B-985 | III-5 | III-21 |
| B-986 | III-6 | III-21 |
| B-987 | III-7 | III-21 |
| B-988 | III-8 | III-21 |
| B-989 | III-9 | III-21 |
| B-990 | III-10 | III-21 |
| B-991 | III-11 | III-21 |
| B-992 | III-12 | III-21 |
| B-993 | III-13 | III-21 |
| B-994 | III-14 | III-21 |
| B-995 | III-15 | III-21 |
| B-996 | III-16 | III-21 |
| B-997 | III-17 | III-21 |

| Line | Co.2 | Co.3 |
|---|---|---|
| B-998 | III-18 | III-21 |
| B-999 | III-19 | III-21 |
| B-1000 | III-20 | III-21 |
| B-1001 | III-22 | III-21 |
| B-1002 | III-23 | III-21 |
| B-1003 | III-24 | III-21 |
| B-1004 | III-25 | III-21 |
| B-1005 | III-26 | III-21 |
| B-1006 | III-27 | III-21 |
| B-1007 | III-28 | III-21 |
| B-1008 | III-29 | III-21 |
| B-1009 | III-30 | III-21 |
| B-1010 | III-31 | III-21 |
| B-1011 | III-32 | III-21 |
| B-1012 | III-33 | III-21 |
| B-1013 | III-34 | III-21 |
| B-1014 | III-35 | III-21 |
| B-1015 | III-36 | III-21 |
| B-1016 | III-37 | III-21 |
| B-1017 | III-38 | III-21 |
| B-1018 | III-39 | III-21 |
| B-1019 | III-40 | III-21 |
| B-1020 | III-41 | III-21 |
| B-1021 | III-42 | III-21 |
| B-1022 | III-43 | III-21 |
| B-1023 | III-44 | III-21 |
| B-1024 | III-45 | III-21 |
| B-1025 | III-46 | III-21 |
| B-1026 | III-47 | III-21 |
| B-1027 | III-48 | III-21 |
| B-1028 | III-49 | III-21 |
| B-1029 | III-50 | III-21 |
| B-1030 | III-1 | III-22 |
| B-1031 | III-2 | III-22 |
| B-1032 | III-3 | III-22 |
| B-1033 | III-4 | III-22 |
| B-1034 | III-5 | III-22 |
| B-1035 | III-6 | III-22 |
| B-1036 | III-7 | III-22 |
| B-1037 | III-8 | III-22 |
| B-1038 | III-9 | III-22 |

| Line | Co.2 | Co.3 |
|---|---|---|
| B-1039 | III-10 | III-22 |
| B-1040 | III-11 | III-22 |
| B-1041 | III-12 | III-22 |
| B-1042 | III-13 | III-22 |
| B-1043 | III-14 | III-22 |
| B-1044 | III-15 | III-22 |
| B-1045 | III-16 | III-22 |
| B-1046 | III-17 | III-22 |
| B-1047 | III-18 | III-22 |
| B-1048 | III-19 | III-22 |
| B-1049 | III-20 | III-22 |
| B-1050 | III-21 | III-22 |
| B-1051 | III-23 | III-22 |
| B-1052 | III-24 | III-22 |
| B-1053 | III-25 | III-22 |
| B-1054 | III-26 | III-22 |
| B-1055 | III-27 | III-22 |
| B-1056 | III-28 | III-22 |
| B-1057 | III-29 | III-22 |
| B-1058 | III-30 | III-22 |
| B-1059 | III-31 | III-22 |
| B-1060 | III-32 | III-22 |
| B-1061 | III-33 | III-22 |
| B-1062 | III-34 | III-22 |
| B-1063 | III-35 | III-22 |
| B-1064 | III-36 | III-22 |
| B-1065 | III-37 | III-22 |
| B-1066 | III-38 | III-22 |
| B-1067 | III-39 | III-22 |
| B-1068 | III-40 | III-22 |
| B-1069 | III-41 | III-22 |
| B-1070 | III-42 | III-22 |
| B-1071 | III-43 | III-22 |
| B-1072 | III-44 | III-22 |
| B-1073 | III-45 | III-22 |
| B-1074 | III-46 | III-22 |
| B-1075 | III-47 | III-22 |
| B-1076 | III-48 | III-22 |
| B-1077 | III-49 | III-22 |
| B-1078 | III-50 | III-22 |
| B-1079 | III-1 | III-23 |
| B-1080 | III-2 | III-23 |
| B-1081 | III-3 | III-23 |
| B-1082 | III-4 | III-23 |
| B-1083 | III-5 | III-23 |
| B-1084 | III-6 | III-23 |
| B-1085 | III-7 | III-23 |
| B-1086 | III-8 | III-23 |
| B-1087 | III-9 | III-23 |
| B-1088 | III-10 | III-23 |
| B-1089 | III-11 | III-23 |
| B-1090 | III-12 | III-23 |
| B-1091 | III-13 | III-23 |
| B-1092 | III-14 | III-23 |
| B-1093 | III-15 | III-23 |
| B-1094 | III-16 | III-23 |
| B-1095 | III-17 | III-23 |
| B-1096 | III-18 | III-23 |
| B-1097 | III-19 | III-23 |
| B-1098 | III-20 | III-23 |
| B-1099 | III-21 | III-23 |
| B-1100 | III-22 | III-23 |
| B-1101 | III-24 | III-23 |
| B-1102 | III-25 | III-23 |
| B-1103 | III-26 | III-23 |
| B-1104 | III-27 | III-23 |
| B-1105 | III-28 | III-23 |
| B-1106 | III-29 | III-23 |
| B-1107 | III-30 | III-23 |
| B-1108 | III-31 | III-23 |
| B-1109 | III-32 | III-23 |
| B-1110 | III-33 | III-23 |
| B-1111 | III-34 | III-23 |
| B-1112 | III-35 | III-23 |
| B-1113 | III-36 | III-23 |
| B-1114 | III-37 | III-23 |
| B-1115 | III-38 | III-23 |
| B-1116 | III-39 | III-23 |
| B-1117 | III-40 | III-23 |
| B-1118 | III-41 | III-23 |
| B-1119 | III-42 | III-23 |
| B-1120 | III-43 | III-23 |
| B-1121 | III-44 | III-23 |
| B-1122 | III-45 | III-23 |
| B-1123 | III-46 | III-23 |
| B-1124 | III-47 | III-23 |
| B-1125 | III-48 | III-23 |
| B-1126 | III-49 | III-23 |
| B-1127 | III-50 | III-23 |
| B-1128 | III-1 | III-24 |
| B-1129 | III-2 | III-24 |
| B-1130 | III-3 | III-24 |
| B-1131 | III-4 | III-24 |
| B-1132 | III-5 | III-24 |
| B-1133 | III-6 | III-24 |
| B-1134 | III-7 | III-24 |
| B-1135 | III-8 | III-24 |
| B-1136 | III-9 | III-24 |
| B-1137 | III-10 | III-24 |
| B-1138 | III-11 | III-24 |
| B-1139 | III-12 | III-24 |
| B-1140 | III-13 | III-24 |
| B-1141 | III-14 | III-24 |
| B-1142 | III-15 | III-24 |
| B-1143 | III-16 | III-24 |
| B-1144 | III-17 | III-24 |
| B-1145 | III-18 | III-24 |
| B-1146 | III-19 | III-24 |
| B-1147 | III-20 | III-24 |
| B-1148 | III-21 | III-24 |
| B-1149 | III-22 | III-24 |
| B-1150 | III-23 | III-24 |
| B-1151 | III-25 | III-24 |
| B-1152 | III-26 | III-24 |
| B-1153 | III-27 | III-24 |
| B-1154 | III-28 | III-24 |
| B-1155 | III-29 | III-24 |
| B-1156 | III-30 | III-24 |
| B-1157 | III-31 | III-24 |
| B-1158 | III-32 | III-24 |
| B-1159 | III-33 | III-24 |
| B-1160 | III-34 | III-24 |
| B-1161 | III-35 | III-24 |

| Line | Co.2 | Co.3 |
|---|---|---|
| B-1162 | III-36 | III-24 |
| B-1163 | III-37 | III-24 |
| B-1164 | III-38 | III-24 |
| B-1165 | III-39 | III-24 |
| B-1166 | III-40 | III-24 |
| B-1167 | III-41 | III-24 |
| B-1168 | III-42 | III-24 |
| B-1169 | III-43 | III-24 |
| B-1170 | III-44 | III-24 |
| B-1171 | III-45 | III-24 |
| B-1172 | III-46 | III-24 |
| B-1173 | III-47 | III-24 |
| B-1174 | III-48 | III-24 |
| B-1175 | III-49 | III-24 |
| B-1176 | III-50 | III-24 |
| B-1177 | III-1 | III-25 |
| B-1178 | III-2 | III-25 |
| B-1179 | III-3 | III-25 |
| B-1180 | III-4 | III-25 |
| B-1181 | III-5 | III-25 |
| B-1182 | III-6 | III-25 |
| B-1183 | III-7 | III-25 |
| B-1184 | III-8 | III-25 |
| B-1185 | III-9 | III-25 |
| B-1186 | III-10 | III-25 |
| B-1187 | III-11 | III-25 |
| B-1188 | III-12 | III-25 |
| B-1189 | III-13 | III-25 |
| B-1190 | III-14 | III-25 |
| B-1191 | III-15 | III-25 |
| B-1192 | III-16 | III-25 |
| B-1193 | III-17 | III-25 |
| B-1194 | III-18 | III-25 |
| B-1195 | III-19 | III-25 |
| B-1196 | III-20 | III-25 |
| B-1197 | III-21 | III-25 |
| B-1198 | III-22 | III-25 |
| B-1199 | III-23 | III-25 |
| B-1200 | III-24 | III-25 |
| B-1201 | III-26 | III-25 |
| B-1202 | III-27 | III-25 |

| Line | Co.2 | Co.3 |
|---|---|---|
| B-1203 | III-28 | III-25 |
| B-1204 | III-29 | III-25 |
| B-1205 | III-30 | III-25 |
| B-1206 | III-31 | III-25 |
| B-1207 | III-32 | III-25 |
| B-1208 | III-33 | III-25 |
| B-1209 | III-34 | III-25 |
| B-1210 | III-35 | III-25 |
| B-1211 | III-36 | III-25 |
| B-1212 | III-37 | III-25 |
| B-1213 | III-38 | III-25 |
| B-1214 | III-39 | III-25 |
| B-1215 | III-40 | III-25 |
| B-1216 | III-41 | III-25 |
| B-1217 | III-42 | III-25 |
| B-1218 | III-43 | III-25 |
| B-1219 | III-44 | III-25 |
| B-1220 | III-45 | III-25 |
| B-1221 | III-46 | III-25 |
| B-1222 | III-47 | III-25 |
| B-1223 | III-48 | III-25 |
| B-1224 | III-49 | III-25 |
| B-1225 | III-50 | III-25 |
| B-1226 | III-1 | III-26 |
| B-1227 | III-2 | III-26 |
| B-1228 | III-3 | III-26 |
| B-1229 | III-4 | III-26 |
| B-1230 | III-5 | III-26 |
| B-1231 | III-6 | III-26 |
| B-1232 | III-7 | III-26 |
| B-1233 | III-8 | III-26 |
| B-1234 | III-9 | III-26 |
| B-1235 | III-10 | III-26 |
| B-1236 | III-11 | III-26 |
| B-1237 | III-12 | III-26 |
| B-1238 | III-13 | III-26 |
| B-1239 | III-14 | III-26 |
| B-1240 | III-15 | III-26 |
| B-1241 | III-16 | III-26 |
| B-1242 | III-17 | III-26 |
| B-1243 | III-18 | III-26 |

| Line | Co.2 | Co.3 |
|---|---|---|
| B-1244 | III-19 | III-26 |
| B-1245 | III-20 | III-26 |
| B-1246 | III-21 | III-26 |
| B-1247 | III-22 | III-26 |
| B-1248 | III-23 | III-26 |
| B-1249 | III-24 | III-26 |
| B-1250 | III-25 | III-26 |
| B-1251 | III-27 | III-26 |
| B-1252 | III-28 | III-26 |
| B-1253 | III-29 | III-26 |
| B-1254 | III-30 | III-26 |
| B-1255 | III-31 | III-26 |
| B-1256 | III-32 | III-26 |
| B-1257 | III-33 | III-26 |
| B-1258 | III-34 | III-26 |
| B-1259 | III-35 | III-26 |
| B-1260 | III-36 | III-26 |
| B-1261 | III-37 | III-26 |
| B-1262 | III-38 | III-26 |
| B-1263 | III-39 | III-26 |
| B-1264 | III-40 | III-26 |
| B-1265 | III-41 | III-26 |
| B-1266 | III-42 | III-26 |
| B-1267 | III-43 | III-26 |
| B-1268 | III-44 | III-26 |
| B-1269 | III-45 | III-26 |
| B-1270 | III-46 | III-26 |
| B-1271 | III-47 | III-26 |
| B-1272 | III-48 | III-26 |
| B-1273 | III-49 | III-26 |
| B-1274 | III-50 | III-26 |
| B-1275 | III-1 | III-27 |
| B-1276 | III-2 | III-27 |
| B-1277 | III-3 | III-27 |
| B-1278 | III-4 | III-27 |
| B-1279 | III-5 | III-27 |
| B-1280 | III-6 | III-27 |
| B-1281 | III-7 | III-27 |
| B-1282 | III-8 | III-27 |
| B-1283 | III-9 | III-27 |
| B-1284 | III-10 | III-27 |

| Line | Co.2 | Co.3 |
|---|---|---|
| B-1285 | III-11 | III-27 |
| B-1286 | III-12 | III-27 |
| B-1287 | III-13 | III-27 |
| B-1288 | III-14 | III-27 |
| B-1289 | III-15 | III-27 |
| B-1290 | III-16 | III-27 |
| B-1291 | III-17 | III-27 |
| B-1292 | III-18 | III-27 |
| B-1293 | III-19 | III-27 |
| B-1294 | III-20 | III-27 |
| B-1295 | III-21 | III-27 |
| B-1296 | III-22 | III-27 |
| B-1297 | III-23 | III-27 |
| B-1298 | III-24 | III-27 |
| B-1299 | III-25 | III-27 |
| B-1300 | III-26 | III-27 |
| B-1301 | III-28 | III-27 |
| B-1302 | III-29 | III-27 |
| B-1303 | III-30 | III-27 |
| B-1304 | III-31 | III-27 |
| B-1305 | III-32 | III-27 |
| B-1306 | III-33 | III-27 |
| B-1307 | III-34 | III-27 |
| B-1308 | III-35 | III-27 |
| B-1309 | III-36 | III-27 |
| B-1310 | III-37 | III-27 |
| B-1311 | III-38 | III-27 |
| B-1312 | III-39 | III-27 |
| B-1313 | III-40 | III-27 |
| B-1314 | III-41 | III-27 |
| B-1315 | III-42 | III-27 |
| B-1316 | III-43 | III-27 |
| B-1317 | III-44 | III-27 |
| B-1318 | III-45 | III-27 |
| B-1319 | III-46 | III-27 |
| B-1320 | III-47 | III-27 |
| B-1321 | III-48 | III-27 |
| B-1322 | III-49 | III-27 |
| B-1323 | III-50 | III-27 |
| B-1324 | III-1 | III-28 |
| B-1325 | III-2 | III-28 |

| Line | Co.2 | Co.3 |
|---|---|---|
| B-1326 | III-3 | III-28 |
| B-1327 | III-4 | III-28 |
| B-1328 | III-5 | III-28 |
| B-1329 | III-6 | III-28 |
| B-1330 | III-7 | III-28 |
| B-1331 | III-8 | III-28 |
| B-1332 | III-9 | III-28 |
| B-1333 | III-10 | III-28 |
| B-1334 | III-11 | III-28 |
| B-1335 | III-12 | III-28 |
| B-1336 | III-13 | III-28 |
| B-1337 | III-14 | III-28 |
| B-1338 | III-15 | III-28 |
| B-1339 | III-16 | III-28 |
| B-1340 | III-17 | III-28 |
| B-1341 | III-18 | III-28 |
| B-1342 | III-19 | III-28 |
| B-1343 | III-20 | III-28 |
| B-1344 | III-21 | III-28 |
| B-1345 | III-22 | III-28 |
| B-1346 | III-23 | III-28 |
| B-1347 | III-24 | III-28 |
| B-1348 | III-25 | III-28 |
| B-1349 | III-26 | III-28 |
| B-1350 | III-27 | III-28 |
| B-1351 | III-29 | III-28 |
| B-1352 | III-30 | III-28 |
| B-1353 | III-31 | III-28 |
| B-1354 | III-32 | III-28 |
| B-1355 | III-33 | III-28 |
| B-1356 | III-34 | III-28 |
| B-1357 | III-35 | III-28 |
| B-1358 | III-36 | III-28 |
| B-1359 | III-37 | III-28 |
| B-1360 | III-38 | III-28 |
| B-1361 | III-39 | III-28 |
| B-1362 | III-40 | III-28 |
| B-1363 | III-41 | III-28 |
| B-1364 | III-42 | III-28 |
| B-1365 | III-43 | III-28 |
| B-1366 | III-44 | III-28 |

| Line | Co.2 | Co.3 |
|---|---|---|
| B-1367 | III-45 | III-28 |
| B-1368 | III-46 | III-28 |
| B-1369 | III-47 | III-28 |
| B-1370 | III-48 | III-28 |
| B-1371 | III-49 | III-28 |
| B-1372 | III-50 | III-28 |
| B-1373 | III-1 | III-29 |
| B-1374 | III-2 | III-29 |
| B-1375 | III-3 | III-29 |
| B-1376 | III-4 | III-29 |
| B-1377 | III-5 | III-29 |
| B-1378 | III-6 | III-29 |
| B-1379 | III-7 | III-29 |
| B-1380 | III-8 | III-29 |
| B-1381 | III-9 | III-29 |
| B-1382 | III-10 | III-29 |
| B-1383 | III-11 | III-29 |
| B-1384 | III-12 | III-29 |
| B-1385 | III-13 | III-29 |
| B-1386 | III-14 | III-29 |
| B-1387 | III-15 | III-29 |
| B-1388 | III-16 | III-29 |
| B-1389 | III-17 | III-29 |
| B-1390 | III-18 | III-29 |
| B-1391 | III-19 | III-29 |
| B-1392 | III-20 | III-29 |
| B-1393 | III-21 | III-29 |
| B-1394 | III-22 | III-29 |
| B-1395 | III-23 | III-29 |
| B-1396 | III-24 | III-29 |
| B-1397 | III-25 | III-29 |
| B-1398 | III-26 | III-29 |
| B-1399 | III-27 | III-29 |
| B-1400 | III-28 | III-29 |
| B-1401 | III-30 | III-29 |
| B-1402 | III-31 | III-29 |
| B-1403 | III-32 | III-29 |
| B-1404 | III-33 | III-29 |
| B-1405 | III-34 | III-29 |
| B-1406 | III-35 | III-29 |
| B-1407 | III-36 | III-29 |

| Line | Co.2 | Co.3 |
|---|---|---|
| B-1408 | III-37 | III-29 |
| B-1409 | III-38 | III-29 |
| B-1410 | III-39 | III-29 |
| B-1411 | III-40 | III-29 |
| B-1412 | III-41 | III-29 |
| B-1413 | III-42 | III-29 |
| B-1414 | III-43 | III-29 |
| B-1415 | III-44 | III-29 |
| B-1416 | III-45 | III-29 |
| B-1417 | III-46 | III-29 |
| B-1418 | III-47 | III-29 |
| B-1419 | III-48 | III-29 |
| B-1420 | III-49 | III-29 |
| B-1421 | III-50 | III-29 |
| B-1422 | III-1 | III-30 |
| B-1423 | III-2 | III-30 |
| B-1424 | III-3 | III-30 |
| B-1425 | III-4 | III-30 |
| B-1426 | III-5 | III-30 |
| B-1427 | III-6 | III-30 |
| B-1428 | III-7 | III-30 |
| B-1429 | III-8 | III-30 |
| B-1430 | III-9 | III-30 |
| B-1431 | III-10 | III-30 |
| B-1432 | III-11 | III-30 |
| B-1433 | III-12 | III-30 |
| B-1434 | III-13 | III-30 |
| B-1435 | III-14 | III-30 |
| B-1436 | III-15 | III-30 |
| B-1437 | III-16 | III-30 |
| B-1438 | III-17 | III-30 |
| B-1439 | III-18 | III-30 |
| B-1440 | III-19 | III-30 |
| B-1441 | III-20 | III-30 |
| B-1442 | III-21 | III-30 |
| B-1443 | III-22 | III-30 |
| B-1444 | III-23 | III-30 |
| B-1445 | III-24 | III-30 |
| B-1446 | III-25 | III-30 |
| B-1447 | III-26 | III-30 |
| B-1448 | III-27 | III-30 |

| Line | Co.2 | Co.3 |
|---|---|---|
| B-1449 | III-28 | III-30 |
| B-1450 | III-29 | III-30 |
| B-1451 | III-31 | III-30 |
| B-1452 | III-32 | III-30 |
| B-1453 | III-33 | III-30 |
| B-1454 | III-34 | III-30 |
| B-1455 | III-35 | III-30 |
| B-1456 | III-36 | III-30 |
| B-1457 | III-37 | III-30 |
| B-1458 | III-38 | III-30 |
| B-1459 | III-39 | III-30 |
| B-1460 | III-40 | III-30 |
| B-1461 | III-41 | III-30 |
| B-1462 | III-42 | III-30 |
| B-1463 | III-43 | III-30 |
| B-1464 | III-44 | III-30 |
| B-1465 | III-45 | III-30 |
| B-1466 | III-46 | III-30 |
| B-1467 | III-47 | III-30 |
| B-1468 | III-48 | III-30 |
| B-1469 | III-49 | III-30 |
| B-1470 | III-50 | III-30 |
| B-1471 | III-1 | III-31 |
| B-1472 | III-2 | III-31 |
| B-1473 | III-3 | III-31 |
| B-1474 | III-4 | III-31 |
| B-1475 | III-5 | III-31 |
| B-1476 | III-6 | III-31 |
| B-1477 | III-7 | III-31 |
| B-1478 | III-8 | III-31 |
| B-1479 | III-9 | III-31 |
| B-1480 | III-10 | III-31 |
| B-1481 | III-11 | III-31 |
| B-1482 | III-12 | III-31 |
| B-1483 | III-13 | III-31 |
| B-1484 | III-14 | III-31 |
| B-1485 | III-15 | III-31 |
| B-1486 | III-16 | III-31 |
| B-1487 | III-17 | III-31 |
| B-1488 | III-18 | III-31 |
| B-1489 | III-19 | III-31 |

| Line | Co.2 | Co.3 |
|---|---|---|
| B-1490 | III-20 | III-31 |
| B-1491 | III-21 | III-31 |
| B-1492 | III-22 | III-31 |
| B-1493 | III-23 | III-31 |
| B-1494 | III-24 | III-31 |
| B-1495 | III-25 | III-31 |
| B-1496 | III-26 | III-31 |
| B-1497 | III-27 | III-31 |
| B-1498 | III-28 | III-31 |
| B-1499 | III-29 | III-31 |
| B-1500 | III-30 | III-31 |
| B-1501 | III-32 | III-31 |
| B-1502 | III-33 | III-31 |
| B-1503 | III-34 | III-31 |
| B-1504 | III-35 | III-31 |
| B-1505 | III-36 | III-31 |
| B-1506 | III-37 | III-31 |
| B-1507 | III-38 | III-31 |
| B-1508 | III-39 | III-31 |
| B-1509 | III-40 | III-31 |
| B-1510 | III-41 | III-31 |
| B-1511 | III-42 | III-31 |
| B-1512 | III-43 | III-31 |
| B-1513 | III-44 | III-31 |
| B-1514 | III-45 | III-31 |
| B-1515 | III-46 | III-31 |
| B-1516 | III-47 | III-31 |
| B-1517 | III-48 | III-31 |
| B-1518 | III-49 | III-31 |
| B-1519 | III-50 | III-31 |
| B-1520 | III-1 | III-32 |
| B-1521 | III-2 | III-32 |
| B-1522 | III-3 | III-32 |
| B-1523 | III-4 | III-32 |
| B-1524 | III-5 | III-32 |
| B-1525 | III-6 | III-32 |
| B-1526 | III-7 | III-32 |
| B-1527 | III-8 | III-32 |
| B-1528 | III-9 | III-32 |
| B-1529 | III-10 | III-32 |
| B-1530 | III-11 | III-32 |

| Line | Co.2 | Co.3 |
|---|---|---|
| B-1531 | III-12 | III-32 |
| B-1532 | III-13 | III-32 |
| B-1533 | III-14 | III-32 |
| B-1534 | III-15 | III-32 |
| B-1535 | III-16 | III-32 |
| B-1536 | III-17 | III-32 |
| B-1537 | III-18 | III-32 |
| B-1538 | III-19 | III-32 |
| B-1539 | III-20 | III-32 |
| B-1540 | III-21 | III-32 |
| B-1541 | III-22 | III-32 |
| B-1542 | III-23 | III-32 |
| B-1543 | III-24 | III-32 |
| B-1544 | III-25 | III-32 |
| B-1545 | III-26 | III-32 |
| B-1546 | III-27 | III-32 |
| B-1547 | III-28 | III-32 |
| B-1548 | III-29 | III-32 |
| B-1549 | III-30 | III-32 |
| B-1550 | III-31 | III-32 |
| B-1551 | III-33 | III-32 |
| B-1552 | III-34 | III-32 |
| B-1553 | III-35 | III-32 |
| B-1554 | III-36 | III-32 |
| B-1555 | III-37 | III-32 |
| B-1556 | III-38 | III-32 |
| B-1557 | III-39 | III-32 |
| B-1558 | III-40 | III-32 |
| B-1559 | III-41 | III-32 |
| B-1560 | III-42 | III-32 |
| B-1561 | III-43 | III-32 |
| B-1562 | III-44 | III-32 |
| B-1563 | III-45 | III-32 |
| B-1564 | III-46 | III-32 |
| B-1565 | III-47 | III-32 |
| B-1566 | III-48 | III-32 |
| B-1567 | III-49 | III-32 |
| B-1568 | III-50 | III-32 |
| B-1569 | III-1 | III-33 |
| B-1570 | III-2 | III-33 |
| B-1571 | III-3 | III-33 |

| Line | Co.2 | Co.3 |
|---|---|---|
| B-1572 | III-4 | III-33 |
| B-1573 | III-5 | III-33 |
| B-1574 | III-6 | III-33 |
| B-1575 | III-7 | III-33 |
| B-1576 | III-8 | III-33 |
| B-1577 | III-9 | III-33 |
| B-1578 | III-10 | III-33 |
| B-1579 | III-11 | III-33 |
| B-1580 | III-12 | III-33 |
| B-1581 | III-13 | III-33 |
| B-1582 | III-14 | III-33 |
| B-1583 | III-15 | III-33 |
| B-1584 | III-16 | III-33 |
| B-1585 | III-17 | III-33 |
| B-1586 | III-18 | III-33 |
| B-1587 | III-19 | III-33 |
| B-1588 | III-20 | III-33 |
| B-1589 | III-21 | III-33 |
| B-1590 | III-22 | III-33 |
| B-1591 | III-23 | III-33 |
| B-1592 | III-24 | III-33 |
| B-1593 | III-25 | III-33 |
| B-1594 | III-26 | III-33 |
| B-1595 | III-27 | III-33 |
| B-1596 | III-28 | III-33 |
| B-1597 | III-29 | III-33 |
| B-1598 | III-30 | III-33 |
| B-1599 | III-31 | III-33 |
| B-1600 | III-32 | III-33 |
| B-1601 | III-34 | III-33 |
| B-1602 | III-35 | III-33 |
| B-1603 | III-36 | III-33 |
| B-1604 | III-37 | III-33 |
| B-1605 | III-38 | III-33 |
| B-1606 | III-39 | III-33 |
| B-1607 | III-40 | III-33 |
| B-1608 | III-41 | III-33 |
| B-1609 | III-42 | III-33 |
| B-1610 | III-43 | III-33 |
| B-1611 | III-44 | III-33 |
| B-1612 | III-45 | III-33 |

| Line | Co.2 | Co.3 |
|---|---|---|
| B-1613 | III-46 | III-33 |
| B-1614 | III-47 | III-33 |
| B-1615 | III-48 | III-33 |
| B-1616 | III-49 | III-33 |
| B-1617 | III-50 | III-33 |
| B-1618 | III-1 | III-34 |
| B-1619 | III-2 | III-34 |
| B-1620 | III-3 | III-34 |
| B-1621 | III-4 | III-34 |
| B-1622 | III-5 | III-34 |
| B-1623 | III-6 | III-34 |
| B-1624 | III-7 | III-34 |
| B-1625 | III-8 | III-34 |
| B-1626 | III-9 | III-34 |
| B-1627 | III-10 | III-34 |
| B-1628 | III-11 | III-34 |
| B-1629 | III-12 | III-34 |
| B-1630 | III-13 | III-34 |
| B-1631 | III-14 | III-34 |
| B-1632 | III-15 | III-34 |
| B-1633 | III-16 | III-34 |
| B-1634 | III-17 | III-34 |
| B-1635 | III-18 | III-34 |
| B-1636 | III-19 | III-34 |
| B-1637 | III-20 | III-34 |
| B-1638 | III-21 | III-34 |
| B-1639 | III-22 | III-34 |
| B-1640 | III-23 | III-34 |
| B-1641 | III-24 | III-34 |
| B-1642 | III-25 | III-34 |
| B-1643 | III-26 | III-34 |
| B-1644 | III-27 | III-34 |
| B-1645 | III-28 | III-34 |
| B-1646 | III-29 | III-34 |
| B-1647 | III-30 | III-34 |
| B-1648 | III-31 | III-34 |
| B-1649 | III-32 | III-34 |
| B-1650 | III-33 | III-34 |
| B-1651 | III-35 | III-34 |
| B-1652 | III-36 | III-34 |
| B-1653 | III-37 | III-34 |

| Line | Co.2 | Co.3 |
|---|---|---|
| B-1654 | III-38 | III-34 |
| B-1655 | III-39 | III-34 |
| B-1656 | III-40 | III-34 |
| B-1657 | III-41 | III-34 |
| B-1658 | III-42 | III-34 |
| B-1659 | III-43 | III-34 |
| B-1660 | III-44 | III-34 |
| B-1661 | III-45 | III-34 |
| B-1662 | III-46 | III-34 |
| B-1663 | III-47 | III-34 |
| B-1664 | III-48 | III-34 |
| B-1665 | III-49 | III-34 |
| B-1666 | III-50 | III-34 |
| B-1667 | III-1 | III-35 |
| B-1668 | III-2 | III-35 |
| B-1669 | III-3 | III-35 |
| B-1670 | III-4 | III-35 |
| B-1671 | III-5 | III-35 |
| B-1672 | III-6 | III-35 |
| B-1673 | III-7 | III-35 |
| B-1674 | III-8 | III-35 |
| B-1675 | III-9 | III-35 |
| B-1676 | III-10 | III-35 |
| B-1677 | III-11 | III-35 |
| B-1678 | III-12 | III-35 |
| B-1679 | III-13 | III-35 |
| B-1680 | III-14 | III-35 |
| B-1681 | III-15 | III-35 |
| B-1682 | III-16 | III-35 |
| B-1683 | III-17 | III-35 |
| B-1684 | III-18 | III-35 |
| B-1685 | III-19 | III-35 |
| B-1686 | III-20 | III-35 |
| B-1687 | III-21 | III-35 |
| B-1688 | III-22 | III-35 |
| B-1689 | III-23 | III-35 |
| B-1690 | III-24 | III-35 |
| B-1691 | III-25 | III-35 |
| B-1692 | III-26 | III-35 |
| B-1693 | III-27 | III-35 |
| B-1694 | III-28 | III-35 |

| Line | Co.2 | Co.3 |
|---|---|---|
| B-1695 | III-29 | III-35 |
| B-1696 | III-30 | III-35 |
| B-1697 | III-31 | III-35 |
| B-1698 | III-32 | III-35 |
| B-1699 | III-33 | III-35 |
| B-1700 | III-34 | III-35 |
| B-1701 | III-36 | III-35 |
| B-1702 | III-37 | III-35 |
| B-1703 | III-38 | III-35 |
| B-1704 | III-39 | III-35 |
| B-1705 | III-40 | III-35 |
| B-1706 | III-41 | III-35 |
| B-1707 | III-42 | III-35 |
| B-1708 | III-43 | III-35 |
| B-1709 | III-44 | III-35 |
| B-1710 | III-45 | III-35 |
| B-1711 | III-46 | III-35 |
| B-1712 | III-47 | III-35 |
| B-1713 | III-48 | III-35 |
| B-1714 | III-49 | III-35 |
| B-1715 | III-50 | III-35 |
| B-1716 | III-1 | III-36 |
| B-1717 | III-2 | III-36 |
| B-1718 | III-3 | III-36 |
| B-1719 | III-4 | III-36 |
| B-1720 | III-5 | III-36 |
| B-1721 | III-6 | III-36 |
| B-1722 | III-7 | III-36 |
| B-1723 | III-8 | III-36 |
| B-1724 | III-9 | III-36 |
| B-1725 | III-10 | III-36 |
| B-1726 | III-11 | III-36 |
| B-1727 | III-12 | III-36 |
| B-1728 | III-13 | III-36 |
| B-1729 | III-14 | III-36 |
| B-1730 | III-15 | III-36 |
| B-1731 | III-16 | III-36 |
| B-1732 | III-17 | III-36 |
| B-1733 | III-18 | III-36 |
| B-1734 | III-19 | III-36 |
| B-1735 | III-20 | III-36 |

| Line | Co.2 | Co.3 |
|---|---|---|
| B-1736 | III-21 | III-36 |
| B-1737 | III-22 | III-36 |
| B-1738 | III-23 | III-36 |
| B-1739 | III-24 | III-36 |
| B-1740 | III-25 | III-36 |
| B-1741 | III-26 | III-36 |
| B-1742 | III-27 | III-36 |
| B-1743 | III-28 | III-36 |
| B-1744 | III-29 | III-36 |
| B-1745 | III-30 | III-36 |
| B-1746 | III-31 | III-36 |
| B-1747 | III-32 | III-36 |
| B-1748 | III-33 | III-36 |
| B-1749 | III-34 | III-36 |
| B-1750 | III-35 | III-36 |
| B-1751 | III-37 | III-36 |
| B-1752 | III-38 | III-36 |
| B-1753 | III-39 | III-36 |
| B-1754 | III-40 | III-36 |
| B-1755 | III-41 | III-36 |
| B-1756 | III-42 | III-36 |
| B-1757 | III-43 | III-36 |
| B-1758 | III-44 | III-36 |
| B-1759 | III-45 | III-36 |
| B-1760 | III-46 | III-36 |
| B-1761 | III-47 | III-36 |
| B-1762 | III-48 | III-36 |
| B-1763 | III-49 | III-36 |
| B-1764 | III-50 | III-36 |
| B-1765 | III-1 | III-37 |
| B-1766 | III-2 | III-37 |
| B-1767 | III-3 | III-37 |
| B-1768 | III-4 | III-37 |
| B-1769 | III-5 | III-37 |
| B-1770 | III-6 | III-37 |
| B-1771 | III-7 | III-37 |
| B-1772 | III-8 | III-37 |
| B-1773 | III-9 | III-37 |
| B-1774 | III-10 | III-37 |
| B-1775 | III-11 | III-37 |
| B-1776 | III-12 | III-37 |

| Line | Co.2 | Co.3 |
|---|---|---|
| B-1777 | III-13 | III-37 |
| B-1778 | III-14 | III-37 |
| B-1779 | III-15 | III-37 |
| B-1780 | III-16 | III-37 |
| B-1781 | III-17 | III-37 |
| B-1782 | III-18 | III-37 |
| B-1783 | III-19 | III-37 |
| B-1784 | III-20 | III-37 |
| B-1785 | III-21 | III-37 |
| B-1786 | III-22 | III-37 |
| B-1787 | III-23 | III-37 |
| B-1788 | III-24 | III-37 |
| B-1789 | III-25 | III-37 |
| B-1790 | III-26 | III-37 |
| B-1791 | III-27 | III-37 |
| B-1792 | III-28 | III-37 |
| B-1793 | III-29 | III-37 |
| B-1794 | III-30 | III-37 |
| B-1795 | III-31 | III-37 |
| B-1796 | III-32 | III-37 |
| B-1797 | III-33 | III-37 |
| B-1798 | III-34 | III-37 |
| B-1799 | III-35 | III-37 |
| B-1800 | III-36 | III-37 |
| B-1801 | III-38 | III-37 |
| B-1802 | III-39 | III-37 |
| B-1803 | III-40 | III-37 |
| B-1804 | III-41 | III-37 |
| B-1805 | III-42 | III-37 |
| B-1806 | III-43 | III-37 |
| B-1807 | III-44 | III-37 |
| B-1808 | III-45 | III-37 |
| B-1809 | III-46 | III-37 |
| B-1810 | III-47 | III-37 |
| B-1811 | III-48 | III-37 |
| B-1812 | III-49 | III-37 |
| B-1813 | III-50 | III-37 |
| B-1814 | III-1 | III-38 |
| B-1815 | III-2 | III-38 |
| B-1816 | III-3 | III-38 |
| B-1817 | III-4 | III-38 |

| Line | Co.2 | Co.3 |
|---|---|---|
| B-1818 | III-5 | III-38 |
| B-1819 | III-6 | III-38 |
| B-1820 | III-7 | III-38 |
| B-1821 | III-8 | III-38 |
| B-1822 | III-9 | III-38 |
| B-1823 | III-10 | III-38 |
| B-1824 | III-11 | III-38 |
| B-1825 | III-12 | III-38 |
| B-1826 | III-13 | III-38 |
| B-1827 | III-14 | III-38 |
| B-1828 | III-15 | III-38 |
| B-1829 | III-16 | III-38 |
| B-1830 | III-17 | III-38 |
| B-1831 | III-18 | III-38 |
| B-1832 | III-19 | III-38 |
| B-1833 | III-20 | III-38 |
| B-1834 | III-21 | III-38 |
| B-1835 | III-22 | III-38 |
| B-1836 | III-23 | III-38 |
| B-1837 | III-24 | III-38 |
| B-1838 | III-25 | III-38 |
| B-1839 | III-26 | III-38 |
| B-1840 | III-27 | III-38 |
| B-1841 | III-28 | III-38 |
| B-1842 | III-29 | III-38 |
| B-1843 | III-30 | III-38 |
| B-1844 | III-31 | III-38 |
| B-1845 | III-32 | III-38 |
| B-1846 | III-33 | III-38 |
| B-1847 | III-34 | III-38 |
| B-1848 | III-35 | III-38 |
| B-1849 | III-36 | III-38 |
| B-1850 | III-37 | III-38 |
| B-1851 | III-39 | III-38 |
| B-1852 | III-40 | III-38 |
| B-1853 | III-41 | III-38 |
| B-1854 | III-42 | III-38 |
| B-1855 | III-43 | III-38 |
| B-1856 | III-44 | III-38 |
| B-1857 | III-45 | III-38 |
| B-1858 | III-46 | III-38 |

| Line | Co.2 | Co.3 |
|---|---|---|
| B-1859 | III-47 | III-38 |
| B-1860 | III-48 | III-38 |
| B-1861 | III-49 | III-38 |
| B-1862 | III-50 | III-38 |
| B-1863 | III-1 | III-39 |
| B-1864 | III-2 | III-39 |
| B-1865 | III-3 | III-39 |
| B-1866 | III-4 | III-39 |
| B-1867 | III-5 | III-39 |
| B-1868 | III-6 | III-39 |
| B-1869 | III-7 | III-39 |
| B-1870 | III-8 | III-39 |
| B-1871 | III-9 | III-39 |
| B-1872 | III-10 | III-39 |
| B-1873 | III-11 | III-39 |
| B-1874 | III-12 | III-39 |
| B-1875 | III-13 | III-39 |
| B-1876 | III-14 | III-39 |
| B-1877 | III-15 | III-39 |
| B-1878 | III-16 | III-39 |
| B-1879 | III-17 | III-39 |
| B-1880 | III-18 | III-39 |
| B-1881 | III-19 | III-39 |
| B-1882 | III-20 | III-39 |
| B-1883 | III-21 | III-39 |
| B-1884 | III-22 | III-39 |
| B-1885 | III-23 | III-39 |
| B-1886 | III-24 | III-39 |
| B-1887 | III-25 | III-39 |
| B-1888 | III-26 | III-39 |
| B-1889 | III-27 | III-39 |
| B-1890 | III-28 | III-39 |
| B-1891 | III-29 | III-39 |
| B-1892 | III-30 | III-39 |
| B-1893 | III-31 | III-39 |
| B-1894 | III-32 | III-39 |
| B-1895 | III-33 | III-39 |
| B-1896 | III-34 | III-39 |
| B-1897 | III-35 | III-39 |
| B-1898 | III-36 | III-39 |
| B-1899 | III-37 | III-39 |

| Line | Co.2 | Co.3 |
|---|---|---|
| B-1900 | III-38 | III-39 |
| B-1901 | III-40 | III-39 |
| B-1902 | III-41 | III-39 |
| B-1903 | III-42 | III-39 |
| B-1904 | III-43 | III-39 |
| B-1905 | III-44 | III-39 |
| B-1906 | III-45 | III-39 |
| B-1907 | III-46 | III-39 |
| B-1908 | III-47 | III-39 |
| B-1909 | III-48 | III-39 |
| B-1910 | III-49 | III-39 |
| B-1911 | III-50 | III-39 |
| B-1912 | III-1 | III-40 |
| B-1913 | III-2 | III-40 |
| B-1914 | III-3 | III-40 |
| B-1915 | III-4 | III-40 |
| B-1916 | III-5 | III-40 |
| B-1917 | III-6 | III-40 |
| B-1918 | III-7 | III-40 |
| B-1919 | III-8 | III-40 |
| B-1920 | III-9 | III-40 |
| B-1921 | III-10 | III-40 |
| B-1922 | III-11 | III-40 |
| B-1923 | III-12 | III-40 |
| B-1924 | III-13 | III-40 |
| B-1925 | III-14 | III-40 |
| B-1926 | III-15 | III-40 |
| B-1927 | III-16 | III-40 |
| B-1928 | III-17 | III-40 |
| B-1929 | III-18 | III-40 |
| B-1930 | III-19 | III-40 |
| B-1931 | III-20 | III-40 |
| B-1932 | III-21 | III-40 |
| B-1933 | III-22 | III-40 |
| B-1934 | III-23 | III-40 |
| B-1935 | III-24 | III-40 |
| B-1936 | III-25 | III-40 |
| B-1937 | III-26 | III-40 |
| B-1938 | III-27 | III-40 |
| B-1939 | III-28 | III-40 |
| B-1940 | III-29 | III-40 |

| Line | Co.2 | Co.3 |
|---|---|---|
| B-1941 | III-30 | III-40 |
| B-1942 | III-31 | III-40 |
| B-1943 | III-32 | III-40 |
| B-1944 | III-33 | III-40 |
| B-1945 | III-34 | III-40 |
| B-1946 | III-35 | III-40 |
| B-1947 | III-36 | III-40 |
| B-1948 | III-37 | III-40 |
| B-1949 | III-38 | III-40 |
| B-1950 | III-39 | III-40 |
| B-1951 | III-41 | III-40 |
| B-1952 | III-42 | III-40 |
| B-1953 | III-43 | III-40 |
| B-1954 | III-44 | III-40 |
| B-1955 | III-45 | III-40 |
| B-1956 | III-46 | III-40 |
| B-1957 | III-47 | III-40 |
| B-1958 | III-48 | III-40 |
| B-1959 | III-49 | III-40 |
| B-1960 | III-50 | III-40 |
| B-1961 | III-1 | III-41 |
| B-1962 | III-2 | III-41 |
| B-1963 | III-3 | III-41 |
| B-1964 | III-4 | III-41 |
| B-1965 | III-5 | III-41 |
| B-1966 | III-6 | III-41 |
| B-1967 | III-7 | III-41 |
| B-1968 | III-8 | III-41 |
| B-1969 | III-9 | III-41 |
| B-1970 | III-10 | III-41 |
| B-1971 | III-11 | III-41 |
| B-1972 | III-12 | III-41 |
| B-1973 | III-13 | III-41 |
| B-1974 | III-14 | III-41 |
| B-1975 | III-15 | III-41 |
| B-1976 | III-16 | III-41 |
| B-1977 | III-17 | III-41 |
| B-1978 | III-18 | III-41 |
| B-1979 | III-19 | III-41 |
| B-1980 | III-20 | III-41 |
| B-1981 | III-21 | III-41 |

| Line | Co.2 | Co.3 |
|---|---|---|
| B-1982 | III-22 | III-41 |
| B-1983 | III-23 | III-41 |
| B-1984 | III-24 | III-41 |
| B-1985 | III-25 | III-41 |
| B-1986 | III-26 | III-41 |
| B-1987 | III-27 | III-41 |
| B-1988 | III-28 | III-41 |
| B-1989 | III-29 | III-41 |
| B-1990 | III-30 | III-41 |
| B-1991 | III-31 | III-41 |
| B-1992 | III-32 | III-41 |
| B-1993 | III-33 | III-41 |
| B-1994 | III-34 | III-41 |
| B-1995 | III-35 | III-41 |
| B-1996 | III-36 | III-41 |
| B-1997 | III-37 | III-41 |
| B-1998 | III-38 | III-41 |
| B-1999 | III-39 | III-41 |
| B-2000 | III-40 | III-41 |
| B-2001 | III-42 | III-41 |
| B-2002 | III-43 | III-41 |
| B-2003 | III-44 | III-41 |
| B-2004 | III-45 | III-41 |
| B-2005 | III-46 | III-41 |
| B-2006 | III-47 | III-41 |
| B-2007 | III-48 | III-41 |
| B-2008 | III-49 | III-41 |
| B-2009 | III-50 | III-41 |
| B-2010 | III-1 | III-42 |
| B-2011 | III-2 | III-42 |
| B-2012 | III-3 | III-42 |
| B-2013 | III-4 | III-42 |
| B-2014 | III-5 | III-42 |
| B-2015 | III-6 | III-42 |
| B-2016 | III-7 | III-42 |
| B-2017 | III-8 | III-42 |
| B-2018 | III-9 | III-42 |
| B-2019 | III-10 | III-42 |
| B-2020 | III-11 | III-42 |
| B-2021 | III-12 | III-42 |
| B-2022 | III-13 | III-42 |

| Line | Co.2 | Co.3 |
|---|---|---|
| B-2023 | III-14 | III-42 |
| B-2024 | III-15 | III-42 |
| B-2025 | III-16 | III-42 |
| B-2026 | III-17 | III-42 |
| B-2027 | III-18 | III-42 |
| B-2028 | III-19 | III-42 |
| B-2029 | III-20 | III-42 |
| B-2030 | III-21 | III-42 |
| B-2031 | III-22 | III-42 |
| B-2032 | III-23 | III-42 |
| B-2033 | III-24 | III-42 |
| B-2034 | III-25 | III-42 |
| B-2035 | III-26 | III-42 |
| B-2036 | III-27 | III-42 |
| B-2037 | III-28 | III-42 |
| B-2038 | III-29 | III-42 |
| B-2039 | III-30 | III-42 |
| B-2040 | III-31 | III-42 |
| B-2041 | III-32 | III-42 |
| B-2042 | III-33 | III-42 |
| B-2043 | III-34 | III-42 |
| B-2044 | III-35 | III-42 |
| B-2045 | III-36 | III-42 |
| B-2046 | III-37 | III-42 |
| B-2047 | III-38 | III-42 |
| B-2048 | III-39 | III-42 |
| B-2049 | III-40 | III-42 |
| B-2050 | III-41 | III-42 |
| B-2051 | III-43 | III-42 |
| B-2052 | III-44 | III-42 |
| B-2053 | III-45 | III-42 |
| B-2054 | III-46 | III-42 |
| B-2055 | III-47 | III-42 |
| B-2056 | III-48 | III-42 |
| B-2057 | III-49 | III-42 |
| B-2058 | III-50 | III-42 |
| B-2059 | III-1 | III-43 |
| B-2060 | III-2 | III-43 |
| B-2061 | III-3 | III-43 |
| B-2062 | III-4 | III-43 |
| B-2063 | III-5 | III-43 |

| Line | Co.2 | Co.3 |
|---|---|---|
| B-2064 | III-6 | III-43 |
| B-2065 | III-7 | III-43 |
| B-2066 | III-8 | III-43 |
| B-2067 | III-9 | III-43 |
| B-2068 | III-10 | III-43 |
| B-2069 | III-11 | III-43 |
| B-2070 | III-12 | III-43 |
| B-2071 | III-13 | III-43 |
| B-2072 | III-14 | III-43 |
| B-2073 | III-15 | III-43 |
| B-2074 | III-16 | III-43 |
| B-2075 | III-17 | III-43 |
| B-2076 | III-18 | III-43 |
| B-2077 | III-19 | III-43 |
| B-2078 | III-20 | III-43 |
| B-2079 | III-21 | III-43 |
| B-2080 | III-22 | III-43 |
| B-2081 | III-23 | III-43 |
| B-2082 | III-24 | III-43 |
| B-2083 | III-25 | III-43 |
| B-2084 | III-26 | III-43 |
| B-2085 | III-27 | III-43 |
| B-2086 | III-28 | III-43 |
| B-2087 | III-29 | III-43 |
| B-2088 | III-30 | III-43 |
| B-2089 | III-31 | III-43 |
| B-2090 | III-32 | III-43 |
| B-2091 | III-33 | III-43 |
| B-2092 | III-34 | III-43 |
| B-2093 | III-35 | III-43 |
| B-2094 | III-36 | III-43 |
| B-2095 | III-37 | III-43 |
| B-2096 | III-38 | III-43 |
| B-2097 | III-39 | III-43 |
| B-2098 | III-40 | III-43 |
| B-2099 | III-41 | III-43 |
| B-2100 | III-42 | III-43 |
| B-2101 | III-44 | III-43 |
| B-2102 | III-45 | III-43 |
| B-2103 | III-46 | III-43 |
| B-2104 | III-47 | III-43 |

| Line | Co.2 | Co.3 |
|---|---|---|
| B-2105 | III-48 | III-43 |
| B-2106 | III-49 | III-43 |
| B-2107 | III-50 | III-43 |
| B-2108 | III-1 | III-44 |
| B-2109 | III-2 | III-44 |
| B-2110 | III-3 | III-44 |
| B-2111 | III-4 | III-44 |
| B-2112 | III-5 | III-44 |
| B-2113 | III-6 | III-44 |
| B-2114 | III-7 | III-44 |
| B-2115 | III-8 | III-44 |
| B-2116 | III-9 | III-44 |
| B-2117 | III-10 | III-44 |
| B-2118 | III-11 | III-44 |
| B-2119 | III-12 | III-44 |
| B-2120 | III-13 | III-44 |
| B-2121 | III-14 | III-44 |
| B-2122 | III-15 | III-44 |
| B-2123 | III-16 | III-44 |
| B-2124 | III-17 | III-44 |
| B-2125 | III-18 | III-44 |
| B-2126 | III-19 | III-44 |
| B-2127 | III-20 | III-44 |
| B-2128 | III-21 | III-44 |
| B-2129 | III-22 | III-44 |
| B-2130 | III-23 | III-44 |
| B-2131 | III-24 | III-44 |
| B-2132 | III-25 | III-44 |
| B-2133 | III-26 | III-44 |
| B-2134 | III-27 | III-44 |
| B-2135 | III-28 | III-44 |
| B-2136 | III-29 | III-44 |
| B-2137 | III-30 | III-44 |
| B-2138 | III-31 | III-44 |
| B-2139 | III-32 | III-44 |
| B-2140 | III-33 | III-44 |
| B-2141 | III-34 | III-44 |
| B-2142 | III-35 | III-44 |
| B-2143 | III-36 | III-44 |
| B-2144 | III-37 | III-44 |
| B-2145 | III-38 | III-44 |

| Line | Co.2 | Co.3 |
|---|---|---|
| B-2146 | III-39 | III-44 |
| B-2147 | III-40 | III-44 |
| B-2148 | III-41 | III-44 |
| B-2149 | III-42 | III-44 |
| B-2150 | III-43 | III-44 |
| B-2151 | III-45 | III-44 |
| B-2152 | III-46 | III-44 |
| B-2153 | III-47 | III-44 |
| B-2154 | III-48 | III-44 |
| B-2155 | III-49 | III-44 |
| B-2156 | III-50 | III-44 |
| B-2157 | III-1 | III-45 |
| B-2158 | III-2 | III-45 |
| B-2159 | III-3 | III-45 |
| B-2160 | III-4 | III-45 |
| B-2161 | III-5 | III-45 |
| B-2162 | III-6 | III-45 |
| B-2163 | III-7 | III-45 |
| B-2164 | III-8 | III-45 |
| B-2165 | III-9 | III-45 |
| B-2166 | III-10 | III-45 |
| B-2167 | III-11 | III-45 |
| B-2168 | III-12 | III-45 |
| B-2169 | III-13 | III-45 |
| B-2170 | III-14 | III-45 |
| B-2171 | III-15 | III-45 |
| B-2172 | III-16 | III-45 |
| B-2173 | III-17 | III-45 |
| B-2174 | III-18 | III-45 |
| B-2175 | III-19 | III-45 |
| B-2176 | III-20 | III-45 |
| B-2177 | III-21 | III-45 |
| B-2178 | III-22 | III-45 |
| B-2179 | III-23 | III-45 |
| B-2180 | III-24 | III-45 |
| B-2181 | III-25 | III-45 |
| B-2182 | III-26 | III-45 |
| B-2183 | III-27 | III-45 |
| B-2184 | III-28 | III-45 |
| B-2185 | III-29 | III-45 |
| B-2186 | III-30 | III-45 |

| Line | Co.2 | Co.3 |
|---|---|---|
| B-2187 | III-31 | III-45 |
| B-2188 | III-32 | III-45 |
| B-2189 | III-33 | III-45 |
| B-2190 | III-34 | III-45 |
| B-2191 | III-35 | III-45 |
| B-2192 | III-36 | III-45 |
| B-2193 | III-37 | III-45 |
| B-2194 | III-38 | III-45 |
| B-2195 | III-39 | III-45 |
| B-2196 | III-40 | III-45 |
| B-2197 | III-41 | III-45 |
| B-2198 | III-42 | III-45 |
| B-2199 | III-43 | III-45 |
| B-2200 | III-44 | III-45 |
| B-2201 | III-46 | III-45 |
| B-2202 | III-47 | III-45 |
| B-2203 | III-48 | III-45 |
| B-2204 | III-49 | III-45 |
| B-2205 | III-50 | III-45 |
| B-2206 | III-1 | III-46 |
| B-2207 | III-2 | III-46 |
| B-2208 | III-3 | III-46 |
| B-2209 | III-4 | III-46 |
| B-2210 | III-5 | III-46 |
| B-2211 | III-6 | III-46 |
| B-2212 | III-7 | III-46 |
| B-2213 | III-8 | III-46 |
| B-2214 | III-9 | III-46 |
| B-2215 | III-10 | III-46 |
| B-2216 | III-11 | III-46 |
| B-2217 | III-12 | III-46 |
| B-2218 | III-13 | III-46 |
| B-2219 | III-14 | III-46 |
| B-2220 | III-15 | III-46 |
| B-2221 | III-16 | III-46 |
| B-2222 | III-17 | III-46 |
| B-2223 | III-18 | III-46 |
| B-2224 | III-19 | III-46 |
| B-2225 | III-20 | III-46 |
| B-2226 | III-21 | III-46 |
| B-2227 | III-22 | III-46 |

| Line | Co.2 | Co.3 |
|---|---|---|
| B-2228 | III-23 | III-46 |
| B-2229 | III-24 | III-46 |
| B-2230 | III-25 | III-46 |
| B-2231 | III-26 | III-46 |
| B-2232 | III-27 | III-46 |
| B-2233 | III-28 | III-46 |
| B-2234 | III-29 | III-46 |
| B-2235 | III-30 | III-46 |
| B-2236 | III-31 | III-46 |
| B-2237 | III-32 | III-46 |
| B-2238 | III-33 | III-46 |
| B-2239 | III-34 | III-46 |
| B-2240 | III-35 | III-46 |
| B-2241 | III-36 | III-46 |
| B-2242 | III-37 | III-46 |
| B-2243 | III-38 | III-46 |
| B-2244 | III-39 | III-46 |
| B-2245 | III-40 | III-46 |
| B-2246 | III-41 | III-46 |
| B-2247 | III-42 | III-46 |
| B-2248 | III-43 | III-46 |
| B-2249 | III-44 | III-46 |
| B-2250 | III-45 | III-46 |
| B-2251 | III-47 | III-46 |
| B-2252 | III-48 | III-46 |
| B-2253 | III-49 | III-46 |
| B-2254 | III-50 | III-46 |
| B-2255 | III-1 | III-47 |
| B-2256 | III-2 | III-47 |
| B-2257 | III-3 | III-47 |
| B-2258 | III-4 | III-47 |
| B-2259 | III-5 | III-47 |
| B-2260 | III-6 | III-47 |
| B-2261 | III-7 | III-47 |
| B-2262 | III-8 | III-47 |
| B-2263 | III-9 | III-47 |
| B-2264 | III-10 | III-47 |
| B-2265 | III-11 | III-47 |
| B-2266 | III-12 | III-47 |
| B-2267 | III-13 | III-47 |
| B-2268 | III-14 | III-47 |

| Line | Co.2 | Co.3 |
|---|---|---|
| B-2269 | III-15 | III-47 |
| B-2270 | III-16 | III-47 |
| B-2271 | III-17 | III-47 |
| B-2272 | III-18 | III-47 |
| B-2273 | III-19 | III-47 |
| B-2274 | III-20 | III-47 |
| B-2275 | III-21 | III-47 |
| B-2276 | III-22 | III-47 |
| B-2277 | III-23 | III-47 |
| B-2278 | III-24 | III-47 |
| B-2279 | III-25 | III-47 |
| B-2280 | III-26 | III-47 |
| B-2281 | III-27 | III-47 |
| B-2282 | III-28 | III-47 |
| B-2283 | III-29 | III-47 |
| B-2284 | III-30 | III-47 |
| B-2285 | III-31 | III-47 |
| B-2286 | III-32 | III-47 |
| B-2287 | III-33 | III-47 |
| B-2288 | III-34 | III-47 |
| B-2289 | III-35 | III-47 |
| B-2290 | III-36 | III-47 |
| B-2291 | III-37 | III-47 |
| B-2292 | III-38 | III-47 |
| B-2293 | III-39 | III-47 |
| B-2294 | III-40 | III-47 |
| B-2295 | III-41 | III-47 |
| B-2296 | III-42 | III-47 |
| B-2297 | III-43 | III-47 |
| B-2298 | III-44 | III-47 |
| B-2299 | III-45 | III-47 |
| B-2300 | III-46 | III-47 |
| B-2301 | III-48 | III-47 |
| B-2302 | III-49 | III-47 |
| B-2303 | III-50 | III-47 |
| B-2304 | III-1 | III-48 |
| B-2305 | III-2 | III-48 |
| B-2306 | III-3 | III-48 |
| B-2307 | III-4 | III-48 |
| B-2308 | III-5 | III-48 |
| B-2309 | III-6 | III-48 |

| Line | Co.2 | Co.3 |
|---|---|---|
| B-2310 | III-7 | III-48 |
| B-2311 | III-8 | III-48 |
| B-2312 | III-9 | III-48 |
| B-2313 | III-10 | III-48 |
| B-2314 | III-11 | III-48 |
| B-2315 | III-12 | III-48 |
| B-2316 | III-13 | III-48 |
| B-2317 | III-14 | III-48 |
| B-2318 | III-15 | III-48 |
| B-2319 | III-16 | III-48 |
| B-2320 | III-17 | III-48 |
| B-2321 | III-18 | III-48 |
| B-2322 | III-19 | III-48 |
| B-2323 | III-20 | III-48 |
| B-2324 | III-21 | III-48 |
| B-2325 | III-22 | III-48 |
| B-2326 | III-23 | III-48 |
| B-2327 | III-24 | III-48 |
| B-2328 | III-25 | III-48 |
| B-2329 | III-26 | III-48 |
| B-2330 | III-27 | III-48 |
| B-2331 | III-28 | III-48 |
| B-2332 | III-29 | III-48 |
| B-2333 | III-30 | III-48 |
| B-2334 | III-31 | III-48 |
| B-2335 | III-32 | III-48 |
| B-2336 | III-33 | III-48 |
| B-2337 | III-34 | III-48 |
| B-2338 | III-35 | III-48 |
| B-2339 | III-36 | III-48 |
| B-2340 | III-37 | III-48 |
| B-2341 | III-38 | III-48 |
| B-2342 | III-39 | III-48 |
| B-2343 | III-40 | III-48 |
| B-2344 | III-41 | III-48 |
| B-2345 | III-42 | III-48 |
| B-2346 | III-43 | III-48 |
| B-2347 | III-44 | III-48 |
| B-2348 | III-45 | III-48 |
| B-2349 | III-46 | III-48 |
| B-2350 | III-47 | III-48 |

| Line | Co.2 | Co.3 |
|---|---|---|
| B-2351 | III-49 | III-48 |
| B-2352 | III-50 | III-48 |
| B-2353 | III-1 | III-49 |
| B-2354 | III-2 | III-49 |
| B-2355 | III-3 | III-49 |
| B-2356 | III-4 | III-49 |
| B-2357 | III-5 | III-49 |
| B-2358 | III-6 | III-49 |
| B-2359 | III-7 | III-49 |
| B-2360 | III-8 | III-49 |
| B-2361 | III-9 | III-49 |
| B-2362 | III-10 | III-49 |
| B-2363 | III-11 | III-49 |
| B-2364 | III-12 | III-49 |
| B-2365 | III-13 | III-49 |
| B-2366 | III-14 | III-49 |
| B-2367 | III-15 | III-49 |
| B-2368 | III-16 | III-49 |
| B-2369 | III-17 | III-49 |
| B-2370 | III-18 | III-49 |
| B-2371 | III-19 | III-49 |
| B-2372 | III-20 | III-49 |
| B-2373 | III-21 | III-49 |
| B-2374 | III-22 | III-49 |
| B-2375 | III-23 | III-49 |
| B-2376 | III-24 | III-49 |
| B-2377 | III-25 | III-49 |
| B-2378 | III-26 | III-49 |
| B-2379 | III-27 | III-49 |
| B-2380 | III-28 | III-49 |
| B-2381 | III-29 | III-49 |
| B-2382 | III-30 | III-49 |
| B-2383 | III-31 | III-49 |
| B-2384 | III-32 | III-49 |
| B-2385 | III-33 | III-49 |
| B-2386 | III-34 | III-49 |
| B-2387 | III-35 | III-49 |
| B-2388 | III-36 | III-49 |
| B-2389 | III-37 | III-49 |
| B-2390 | III-38 | III-49 |
| B-2391 | III-39 | III-49 |

| Line | Co.2 | Co.3 |
|---|---|---|
| B-2392 | III-40 | III-49 |
| B-2393 | III-41 | III-49 |
| B-2394 | III-42 | III-49 |
| B-2395 | III-43 | III-49 |
| B-2396 | III-44 | III-49 |
| B-2397 | III-45 | III-49 |
| B-2398 | III-46 | III-49 |
| B-2399 | III-47 | III-49 |
| B-2400 | III-48 | III-49 |
| B-2401 | III-50 | III-49 |
| B-2402 | III-1 | III-50 |
| B-2403 | III-2 | III-50 |
| B-2404 | III-3 | III-50 |
| B-2405 | III-4 | III-50 |
| B-2406 | III-5 | III-50 |
| B-2407 | III-6 | III-50 |
| B-2408 | III-7 | III-50 |
| B-2409 | III-8 | III-50 |
| B-2410 | III-9 | III-50 |
| B-2411 | III-10 | III-50 |

| Line | Co.2 | Co.3 |
|---|---|---|
| B-2412 | III-11 | III-50 |
| B-2413 | III-12 | III-50 |
| B-2414 | III-13 | III-50 |
| B-2415 | III-14 | III-50 |
| B-2416 | III-15 | III-50 |
| B-2417 | III-16 | III-50 |
| B-2418 | III-17 | III-50 |
| B-2419 | III-18 | III-50 |
| B-2420 | III-19 | III-50 |
| B-2421 | III-20 | III-50 |
| B-2422 | III-21 | III-50 |
| B-2423 | III-22 | III-50 |
| B-2424 | III-23 | III-50 |
| B-2425 | III-24 | III-50 |
| B-2426 | III-25 | III-50 |
| B-2427 | III-26 | III-50 |
| B-2428 | III-27 | III-50 |
| B-2429 | III-28 | III-50 |
| B-2430 | III-29 | III-50 |
| B-2431 | III-30 | III-50 |

| Line | Co.2 | Co.3 |
|---|---|---|
| B-2432 | III-31 | III-50 |
| B-2433 | III-32 | III-50 |
| B-2434 | III-33 | III-50 |
| B-2435 | III-34 | III-50 |
| B-2436 | III-35 | III-50 |
| B-2437 | III-36 | III-50 |
| B-2438 | III-37 | III-50 |
| B-2439 | III-38 | III-50 |
| B-2440 | III-39 | III-50 |
| B-2441 | III-40 | III-50 |
| B-2442 | III-41 | III-50 |
| B-2443 | III-42 | III-50 |
| B-2444 | III-43 | III-50 |
| B-2445 | III-44 | III-50 |
| B-2446 | III-45 | III-50 |
| B-2447 | III-46 | III-50 |
| B-2448 | III-47 | III-50 |
| B-2449 | III-48 | III-50 |
| B-2450 | III-49 | III-50 |

Table 51: A ternary mixture comprising one binary mixture selected from table B and compound I-1. (mixture Tb1.1 to Tb2450.1).

Table 52: A ternary mixture comprising one binary mixture selected from table B and compound I-2. (mixture Tb1.2 to Tb2450.2).

Table 53: A ternary mixture comprising one binary mixture selected from table B and compound I-3. (mixture Tb1.3 to Tb2450.3).

Table 54: A ternary mixture comprising one binary mixture selected from table B and compound I-4. (mixture Tb1.4 to Tb2450.4).

Table 55: A ternary mixture comprising one binary mixture selected from table B and compound I-5. (mixture Tb1.5 to Tb2450.5).

Table 56: A ternary mixture comprising one binary mixture selected from table B and compound I-6. (mixture Tb1.6 to Tb2450.6).

Table 57: A ternary mixture comprising one binary mixture selected from table B and compound I-7. (mixture Tb1.7 to Tb2450.7).

Table 58: A ternary mixture comprising one binary mixture selected from table B and compound I-8. (mixture Tb1.8 to Tb2450.8).

Table 59: A ternary mixture comprising one binary mixture selected from table B and compound I-9. (mixture Tb1.9 to Tb2450.9).

Table 60: A ternary mixture comprising one binary mixture selected from table B and compound I-10. (mixture Tb1.10 to Tb2450.10).

Table 61: A ternary mixture comprising one binary mixture selected from table B and compound I-11. (mixture Tb1.11 to Tb2450.11).

Table 62: A ternary mixture comprising one binary mixture selected from table B and compound I-12. (mixture Tb1.12 to Tb2450.12).

Table 63: A ternary mixture comprising one binary mixture selected from table B and compound I-13. (mixture Tb1.13 to Tb2450.13).

Table 64: A ternary mixture comprising one binary mixture selected from table B and compound I-14. (mixture Tb1.14 to Tb2450.14).

Table 65: A ternary mixture comprising one binary mixture selected from table B and compound I-15. (mixture Tb1.15 to Tb2450.15).

Table 66: A ternary mixture comprising one binary mixture selected from table B and compound I-16. (mixture Tb1.16 to Tb2450.16).

Table 67: A ternary mixture comprising one binary mixture selected from table B and compound I-17. (mixture Tb1.17 to Tb2450.17).

Table 68: A ternary mixture comprising one binary mixture selected from table B and compound I-18. (mixture Tb1.18 to Tb2450.18).

Table 69: A ternary mixture comprising one binary mixture selected from table B and compound I-19. (mixture Tb1.19 to Tb2450.19).

Table 70: A ternary mixture comprising one binary mixture selected from table B and compound I-20. (mixture Tb1.20 to Tb2450.20).

Table 71: A ternary mixture comprising one binary mixture selected from table B and compound I-21. (mixture Tb1.21 to Tb2450.21).

Table 72: A ternary mixture comprising one binary mixture selected from table B and compound I-22. (mixture Tb1.22 to Tb2450.22).

Table 73: A ternary mixture comprising one binary mixture selected from table B and compound I-23. (mixture Tb1.23 to Tb2450.23).

Table 74: A ternary mixture comprising one binary mixture selected from table B and compound I-24. (mixture Tb1.24 to Tb2450.24).

Table 75: A ternary mixture comprising one binary mixture selected from table B and compound I-25. (mixture Tb1.25 to Tb2450.25).

Table 76: A ternary mixture comprising one binary mixture selected from table B and compound I-26. (mixture Tb1.26 to Tb2450.26).

Table 77: A ternary mixture comprising one binary mixture selected from table B and compound I-27. (mixture Tb1.27 to Tb2450.27).

Table 78: A ternary mixture comprising one binary mixture selected from table B and compound I-28. (mixture Tb1.28 to Tb2450.28).

Table 79: A ternary mixture comprising one binary mixture selected from table B and compound I-29. (mixture Tb1.29 to Tb2450.29.

Table 80: A ternary mixture comprising one binary mixture selected from table B and compound I-30. (mixture Tb1.30 to Tb2450.30).

Table 81: A ternary mixture comprising one binary mixture selected from table B and compound I-31. (mixture Tb1.31 to Tb2450.31).

Table 82: A ternary mixture comprising one binary mixture selected from table B and compound I-32. (mixture Tb1.32 to Tb2450.32).

Table 83: A ternary mixture comprising one binary mixture selected from table B and compound I-33. (mixture Tb1.33 to Tb2450.33).

Table 84: A ternary mixture comprising one binary mixture selected from table B and compound I-34. (mixture Tb1.34 to Tb2450.34).

Table 85: A ternary mixture comprising one binary mixture selected from table B and compound I-35. (mixture Tb1.35 to Tb2450.35).

Table 86: A ternary mixture comprising one binary mixture selected from table B and compound I-36. (mixture Tb1.36 to Tb2450.36).

Table 87: A ternary mixture comprising one binary mixture selected from table B and compound I-37. (mixture Tb1.37 to Tb2450.37).

Table 88: A ternary mixture comprising one binary mixture selected from table B and compound I-38. (mixture Tb1.38 to Tb2450.38).

Table 89: A ternary mixture comprising one binary mixture selected from table B and compound I-39. (mixture Tb1.39 to Tb2450.39).

Table 90: A ternary mixture comprising one binary mixture selected from table B and compound I-40. (mixture Tb1.40 to Tb2450.40).

Table 91: A ternary mixture comprising one binary mixture selected from table B and compound I-41. (mixture Tb1.41 to Tb2450.41).

Table 92: A ternary mixture comprising one binary mixture selected from table B and compound I-42. (mixture Tb1.42 to Tb2450.42).

Table 93: A ternary mixture comprising one binary mixture selected from table B and compound I-43. (mixture Tb1.43 to Tb2450.43).

Table 94: A ternary mixture comprising one binary mixture selected from table B and compound I-44. (mixture Tb1.44 to Tb2450.44).

Table 95: A ternary mixture comprising one binary mixture selected from table B and compound I-45. (mixture Tb1.45 to Tb2450.45).

Table 96: A ternary mixture comprising one binary mixture selected from table B and compound I-46. (mixture Tb1.46 to Tb2450.46).

Table 97: A ternary mixture comprising one binary mixture selected from table B and compound I-47. (mixture Tb1.47 to Tb2450.47).

Table 98: A ternary mixture comprising one binary mixture selected from table B and compound I-48. (mixture Tb1.48 to Tb2450.48).

Table 99: A ternary mixture comprising one binary mixture selected from table B and compound I-49. (mixture Tb1.49 to Tb2450.49).

Table 100: A ternary mixture comprising one binary mixture selected from table B and compound I-50. (mixture Tb1.50 to Tb2450.50).

Table 101: A ternary mixture comprising one binary mixture selected from table B and compound I-51. (mixture Tb1.51 to Tb2450.51).

Table 102: A ternary mixture comprising one binary mixture selected from table B and compound I-52. (mixture Tb1.52 to Tb2450.52).

Table 103: A ternary mixture comprising one binary mixture selected from table B and compound I-53. (mixture Tb1.53 to Tb2450.53).

Table 104: A ternary mixture comprising one binary mixture selected from table B and compound I-54. (mixture Tb1.54 to Tb2450.54).

Table 105: A ternary mixture comprising one binary mixture selected from table B and compound I-55. (mixture Tb1.55 to Tb2450.55).

Table 106: A ternary mixture comprising one binary mixture selected from table B and compound I-56. (mixture Tb1.56 to Tb2450.56).

Table 107: A ternary mixture comprising one binary mixture selected from table B and compound I-57. (mixture Tb1.57 to Tb2450.57).

Table 108: A ternary mixture comprising one binary mixture selected from table B and compound I-58. (mixture Tb1.58 to Tb2450.58).

Table 109: A ternary mixture comprising one binary mixture selected from table B and compound I-59. (mixture Tb1.59 to Tb2450.59).

Table 110: A ternary mixture comprising one binary mixture selected from table B and compound I-60. (mixture Tb1.60 to Tb2450.60).

Table 111: A ternary mixture comprising one binary mixture selected from table B and compound I-61. (mixture Tb1.61 to Tb2450.61).

Table 112: A ternary mixture comprising one binary mixture selected from table B and compound I-62. (mixture Tb1.62 to Tb2450.62).

Table 113: A ternary mixture comprising one binary mixture selected from table B and compound I-63. (mixture Tb1.63 to Tb2450.63).

Table 114: A ternary mixture comprising one binary mixture selected from table B and compound I-64. (mixture Tb1.64 to Tb2450.64).

Table 115: A ternary mixture comprising one binary mixture selected from table B and compound I-65. (mixture Tb1.65 to Tb2450.65).

Table 116: A ternary mixture comprising one binary mixture selected from table B and compound I-66. (mixture Tb1.66 to Tb2450.66).

Table 117: A ternary mixture comprising one binary mixture selected from table B and compound I-67. (mixture Tb1.67 to Tb2450.67).

Table 118: A ternary mixture comprising one binary mixture selected from table B and compound I-68. (mixture Tb1.68 to Tb2450.68).

Table 119: A ternary mixture comprising one binary mixture selected from table B and compound I-69. (mixture Tb1.69 to Tb2450.69).

Table 120: A ternary mixture comprising one binary mixture selected from table B and compound I-70. (mixture Tb1.70 to Tb2450.70).

Table 121: A ternary mixture comprising one binary mixture selected from table B and compound I-71. (mixture Tb1.71 to Tb2450.71).

Table 122: A ternary mixture comprising one binary mixture selected from table B and compound I-72. (mixture Tb1.72 to Tb2450.72).

Table 123: A ternary mixture comprising one binary mixture selected from table B and compound I-73. (mixture Tb1.73 to Tb2450.73).

Table 124: A ternary mixture comprising one binary mixture selected from table B and compound I-74. (mixture Tb1.74 to Tb2450.74).

Table 125: A ternary mixture comprising one binary mixture selected from table B and compound I-75. (mixture Tb1.75 to Tb2450.75).

Table 126: A ternary mixture comprising one binary mixture selected from table B and compound I-76. (mixture Tb1.76 to Tb2450.76).

Table 127: A ternary mixture comprising one binary mixture selected from table B and compound I-77. (mixture Tb1.77 to Tb2450.77).

Table 128: A ternary mixture comprising one binary mixture selected from table B and compound I-78. (mixture Tb1.78 to Tb2450.78).

Table 129: A ternary mixture comprising one binary mixture selected from table B and compound I-79. (mixture Tb1.79 to Tb2450.79).

Table 130: A ternary mixture comprising one binary mixture selected from table B and compound I-80. (mixture Tb1.80 to Tb2450.80).

Table 131: A ternary mixture comprising one binary mixture selected from table B and compound I-81. (mixture Tb1.81 to Tb2450.81).

Table 132: A ternary mixture comprising one binary mixture selected from table B and compound I-82. (mixture Tb1.82 to Tb2450.82).

Table 133: A ternary mixture comprising one binary mixture selected from table B and compound I-83. (mixture Tb1.83 to Tb2450.83).

Table 134: A ternary mixture comprising one binary mixture selected from table B and compound I-84. (mixture Tb1.84 to Tb2450.84).

Table 135: A ternary mixture comprising one binary mixture selected from table B and compound I-85. (mixture Tb1.85 to Tb2450.85).

Table 136: A ternary mixture comprising one binary mixture selected from table B and compound I-86. (mixture Tb1.86 to Tb2450.86).

Table 137: A ternary mixture comprising one binary mixture selected from table B and compound I-87. (mixture Tb1.87 to Tb2450.87).

Table 138: A ternary mixture comprising one binary mixture selected from table B and compound I-88. (mixture Tb1.88 to Tb2450.88).

Table 139: A ternary mixture comprising one binary mixture selected from table B and compound I-89. (mixture Tb1.89 to Tb2450.89).

Table 140: A ternary mixture comprising one binary mixture selected from table B and compound I-90. (mixture Tb1.90 to Tb2450.90).

Table 141: A ternary mixture comprising one binary mixture selected from table B and compound I-91. (mixture Tb1.91 to Tb2450.91).

Table 142: A ternary mixture comprising one binary mixture selected from table B and compound I-92. (mixture Tb1.92 to Tb2450.92).

Table 143: A ternary mixture comprising one binary mixture selected from table B and compound I-93. (mixture Tb1.93 to Tb2450.93).

Table 144: A ternary mixture comprising one binary mixture selected from table B and compound I-94. (mixture Tb1.94 to Tb2450.94).

Table 145: A ternary mixture comprising one binary mixture selected from table B and compound I-95. (mixture Tb1.95 to Tb2450.95).

Table 146: A ternary mixture comprising one binary mixture selected from table B and compound I-96. (mixture Tb1.96 to Tb2450.96).

Table 147: A ternary mixture comprising one binary mixture selected from table B and compound I-97. (mixture Tb1.97 to Tb2450.97).

Table 148: A ternary mixture comprising one binary mixture selected from table B and compound I-98. (mixture Tb1.98 to Tb2450.98).

Table 149: A ternary mixture comprising one binary mixture selected from table B and compound I-99. (mixture Tb1.99 to Tb2450.99).

Table 150: A ternary mixture comprising one binary mixture selected from table B and compound I-100. (mixture Tb1.100 to Tb2450.100).

Table 151: A ternary mixture comprising one binary mixture selected from table B and compound I-101. (mixture Tb1.101 to Tb2450.101).

Table 152: A ternary mixture comprising one binary mixture selected from table B and compound I-102. (mixture Tb1.102 to Tb2450.102).

Table 153: A ternary mixture comprising one binary mixture selected from table B and compound I-103. (mixture Tb1.103 to Tb2450.103).

Table 154: A ternary mixture comprising one binary mixture selected from table B and compound I-104. (mixture Tb1.104 to Tb2450.104).

Table 155: A ternary mixture comprising one binary mixture selected from table B and compound I-105. (mixture Tb1.105 to Tb2450.105).

Table 156: A ternary mixture comprising one binary mixture selected from table B and compound I-106. (mixture Tb1.106 to Tb2450.106).

Table 157: A ternary mixture comprising one binary mixture selected from table B and compound I-107. (mixture Tb1.107 to Tb2450.107).

The mixtures and compositions thereof according to the invention can, in the use form as fungicides, also be present together with other active substances, e. g. with herbicides, insecticides, growth regulators, fungicides or else with fertilizers, as pre-mix or, if appropriate, not until immeadiately prior to use (tank mix).

Mixing the compounds I and pesticides II and the compositions comprising them, respectively, in the use form as fungicides with other fungicides results in many cases in an expansion of the fungicidal spectrum of activity being obtained or in a prevention of fungicide resistance development. Furthermore, in many cases, synergistic effects are obtained.

The pesticides II and/or III described by common names, their preparation and their activity against harmful fungi is known (cf.: http://www.alanwood.net/pesticides/); these substances are commercially available and known, for example, from the references below: benalaxyl, methyl *N*-(phenylacetyl)-*N*-(2,6-xylyl)-DL-alaninate (DE 29 03 612); metalaxyl, methyl *N*-(methoxyacetyl)-*N*-(2,6-xylyl)-DL-alaninate (GB 15 00 581 ); ofurace, (RS)-α-(2-chloro-*N*-2,6-xylylacetamido)-γ-butyrolactone [CAS RN 58810-48-3]; oxadixyl; N-(2,6-dimethylphenyl)-2-methoxy-N-(2-oxo-3-oxazolidinyl)acetamide (GB 20 58 059); aldimorph, "4-alkyl-2,5(or 2,6)-dimethylmorpholine", comprising 65-75% of 2,6-dimethylmorpholine and 25-35% of 2,5-dimethylmorpholine, comprising more than 85% of 4-dodecyl-2,5(or 2,6)-dimethylmorpholine, where "alkyl" also includes octyl, decyl, tetradecyl and hexadecyl, with a cis/trans ratio of 1:1 [CAS RN 91315-15-0]; dodine, 1-dodecylguanidinium acetate (Plant Dis. Rep., Vol. 41, p.1029 (1957)); dodemorph, 4-cyclododecyl-2,6-dimethylmorpholine (DE 1198125); fenpropimorph, (RS)-cis-4-[3-(4-tert-butylphenyl)-2-methylpropyl]-2,6-dimethylmorpholine (DE 27 52 096); fenpropidin, (RS)-1-[3-(4-tert-butylphenyl)-2-methylpropyl]piperidine (DE 27 52 096); guazatine, mixture of the reaction products from the amidation of technical grade iminodi(octamethylene)diamine, comprising various guanidines and polyamines [CAS RN 108173-90-6]; iminoctadine, 1,1'-iminodi(octamethylene)diguanidine (Congr. Plant Pathol. 1, p.27 (1968); spiroxamine, (8-tert-butyl-1,4-dioxaspiro[4.5]dec-2-yl)diethylamine (EP-A281 842); tridemorph, 2,6-dimethyl-4-tridecylmorpholine (DE 11 64 152); pyrimethanil, 4,6-dimethylpyrimidin-2-ylphenylamine (DD-A 151 404); mepanipyrim, (4-methyl -6-prop-1-ynylpyrimidin-2-yl)phenylamine (EP-A 224 339); cyprodinil, (4-cyclopropyl-6-methylpyrimidin-2-yl)phenylamine (EP-A 310 550); cycloheximid, 4-{(2R)-2-[(1S,3S,5S)-3,5-dimethyl-2-oxocyclohexyl]-2-hydroxyethyl}piperidine-2,6-dione [CAS RN 66-81-9]; griseofulvin, 7-chloro-2',4,6-trimethoxy-6'-methylspiro[benzofuran-2(3H),1'-cyclohex-2'-ene]-3,4'-dione [CAS RN 126-07-8]; kasugamycin, 3-O-[2-amino-4-[(carboxyiminomethyl)amino]-2,3,4,6-tetradeoxy-α-D-arabino-hexopyranosyl]-D-chiro-inositol [CAS RN 6980-18-3]; natamycin, (8E,14E,16E,18E,20E)-(1R,3S,5R, 7R,12R,22R,24S,25R,26S)-22-(3-amino-3,6-dideoxy-β-D-mannopyranosyloxy)-1,3,26-trihydroxy-12-methyl-10-oxo-6,11,28-trioxatricyclo[22.3.1.05,7]octacosa-8,14,16,18,20-pentaene-25-carboxylic acid [CAS RN 7681-93-8]; polyoxin, 5-(2-amino-5-O-carbamoyl-2-deoxy-L-xylonamido)-1-(5-carboxy-1,2,3,4-tetrahydro-2,4-dioxopyrimidin-1-yl)-1,5-dideoxy-β-D-allofuranuronic acid [CAS RN 22976-86-9]; streptomycin, 1,1'-{1-L-(1,3,5/2,4,6)-4-[5-deoxy-2-0-(2-deoxy-2-methylamino-α-L-glucopyranosyl)-3-C-formyl-α-L-lyxofuranosyloxy]-2,5,6-trihydroxycyclohex-1,3-ylene}diguanidine (J. Am. Chem. Soc. 69, p.1234 (1947)); bitertanol, β-([1,1'-biphenyl]-4-yloxy)-α-(1,1-dimethylethyl)-1H-1,2,4-triazole-1-ethanol (DE 23 24 020); bromuconazole, 1-[[4-bromo-2-(2,4-dichlorophenyl)tetrahydro-2-furanyl]methyl]-1H-1,2,4-triazole (Proc. Br. Crop. Prot. Conf. 1990 - Pests Dis. Vol. 1, p. 459); cyproconazole, 2-(4-chlorophenyl)-3-cyclopropyl-1-[1,2,4]triazol-1-ylbutan-2-ol (US 4 664 696); difenoconazole, 1-{2-[2-chloro-4-(4-chlorophenoxy)phenyl]-4-methyl-[1,3]dioxolan-2-ylmethyl}-1H-[1,2,4]triazole (GB-A 2 098 607); diniconazole, (βE)-β-[(2,4-dichlorophenyl)methylene]-α-(1,1-dimethylethyl)-1H-1,2,4-triazole-1-ethanol (Noyaku Kagaku, 1983, Vol. 8, p. 575); enilconazole (imazalil), 1-[2-(2,4-dichlorphenyl)-2-(2-propenyloxy)ethyl]-1 H-imidazole (Fruits 28, p. 545, 1973); epoxiconazole, (2RS,3SR)-1-[3-(2-chlorophenyl)-2,3-epoxy-2-(4-fluorophenyl)propyl]-1 H-1,2,4-triazole (EP-A 196 038); fenbuconazole, α-[2-(4-chlorophenyl)ethyl]-α-phenyl-1H-1,2,4-triazole-1-propanenitrile (Proc. Br. Crop Prot. Conf. 1988-Pests Dis. Vol. 1, p. 33); fluquinconazole, 3-(2,4-dichlorophenyl)-6-fluoro-2-[1,2,4]-triazol-1-yl-3H-quinazolin-4-one (Proc. Br. Crop Prot. Conf.-Pests Dis., 5-3, 411 (1992)); flusilazole, 1-{[bis-(4-fluorophenyl)methylsilanyl]methyl}-1H-[1,2,4]triazole (Proc. Br. Crop Prot. Conf.-Pests Dis., 1, 413 (1984)); flutriafol, α-(2-fluorophenyl)-α-(4-fluorophenyl)-1H-1,2,4-triazole-1-ethanol (EP 15 756); hexaconazole, 2-(2,4-dichlorophenyl)-1-[1,2,4]triazol-1-ylhexan-2-ol (CAS RN 79983-71-4); ipconazole, 2-[(4-chlorophenyl)methyl]-5-(1-methylethyl)-1-(1 H-1,2,4-triazol-1-ylmethyl)cyclopentanol (EP 267 778), metconazole, 5-(4-chlorobenzyl)-2,2-dimethyl-1-[1,2,4]triazol-1-ylmethylcyclopentanol (GB 857 383); myclobutanil, 2-(4-chlorophenyl)-2-[1,2,4]triazol-1-ylmethylpentanenitrile (CAS RN 88671-89-0); penconazole, 1-[2-(2,4-dichlorophenyl)pentyl]-1H-[1,2,4]triazole (Pesticide Manual, 12th Ed. (2000), S.712); propiconazole, 1-[[2-(2,4-dichlorophenyl)-4-propyl-1,3-dioxolan-2-yl]methyl]-1 H-1,2,4-triazole (BE 835 579); prochloraz, N-(propyl-[2-(2,4,6-trichlorophenoxy)ethyl])imidazole-1-carboxamide (US 3 991 071); prothioconazole, 2-[2-(1-chlorocyclopropyl)-3-(2-chlorophenyl)-2-hydroxypropyl]-2,4-dihydro-[1,2,4]triazole-3-thione (WO 96/16048); simeconazole, α-(4-fluorophenyl)-α-[(trimethylsilyl)methyl]-1H-1,2,4-triazole-1-ethanol [CAS RN 149508-90-7]; tebuconazole, 1-(4-chlorophenyl)-4,4-dimethyl-3-[1,2,4]triazol-1-ylmethylpentan-3-ol (EP-A 40 345); tetraconazole, 1-[2-(2,4-dichlorophenyl)-3-(1,1,2,2-tetrafluoroethoxy)propyl]-1H-1,2,4-triazole (EP 234 242); triadimefon, 1-(4-chloro-phenoxy)-3,3-dimethyl-1-(1H-1,2,4-triazol-1-yl)-2-butanone (BE 793 867); triadimenol, β-(4-chlorophenoxy)-α-(1,1-dimethylethyl)-1H-1,2,4-triazole-1-ethanol (DE 23 24 010); triflumizol, (4-chloro-2-trifluoromethylphenyl)-(2-propoxy-1-[1,2,4]triazol-1-ylethyliden)-amine (JP-A 79/119 462); triticonazole, (5E)-5-[(4-chlorophenyl)methylene]-2,2-dimethyl-1-(1 H-1,2,4-triazol-1-ylmethyl)cyclopentanol (FR 26 41 277); iprodione, N-isopropyl-3-(3,5-dichlorophenyl)-2,4-dioxoimidazolidine-1-carboxamide (GB 13 12 536); myclozolin, (RS)-3-(3,5-dichlorophenyl)-5-methoxymethyl-5-methyl-1,3-oxazolidine-2,4-dione [CAS RN 54864-61-8]; procymidone, *N*-(3,5-dichlorophenyl)-1,2-dimethylcyclopropane-1,2-dicarboximide (US 3 903 090); vinclozolin, 3-(3,5-dichlorophenyl)-5-methyl-5-vinyloxazolidine-2,4-dione (DE-A 22 07 576); ferbam, iron(3+) dimethyldithiocarbamate (US 1 972 961); nabam, disodium ethylenebis(dithiocarbamate) (US 2 317 765); maneb, manganese ethylenebis(dithiocarbamate) (US 2 504 404); mancozeb, manganese ethylenebis-(dithiocarbamate) polymer complex zinc salt (GB 996 264); metam, methyldithiocarbaminic acid (US 2 791 605); metiram, zinc ammoniate ethylenebis(dithiocarbamate) (US 3 248 400); propineb, zinc propylenebis(dithiocarbamate) polymer (BE 611 960); polycarbamate, bis(dimethylcarbamodithioato-S,S')[μ-[[1,2-ethanediylbis[carbamodithioato-S,S']](2-)]]di[zinc] [CAS RN 64440-88-6]; thiram, bis(dimethylthiocarbamoyl) disulfide (DE 642 532); ziram, dimethyldithiocarbamate [CAS RN 137-30-4]; zineb, zinc ethylenebis(dithiocarbamate) (US 2 457 674); anilazine, 4,6-dichloro-*N*-(2-chlorophenyl)-1,3,5-triazine-2-amine (US 2 720 480); benomyl, *N*-butyl-2-acetylaminobenzoimidazole-1-carboxamide (US 3 631 176); boscalid, 2-chloro-N-(4'-chlorobiphenyl-2-yl)nicotinamide (EP-A 545 099); carbendazim, methyl (1H-benzoimidazol-2-yl)carbamate (US 3 657 443); carboxin, 5,6-dihydro-2-methyl-N-phenyl-1,4-oxathiin-3-carboxamide (US 3 249 499); oxycarboxin, 5,6-dihydro-2-methyl-1,4-oxathiin-3-carboxanilide 4,4-dioxide (US 3 399 214); cyazofamid, 4-chloro-2-cyano-N,N-dimethyl-5-(4-methylphenyl)-1 H-imidazole-1-sulfonamide (CAS RN 120116-88-3]; dazomet, 3,5-dimethyl-1,3,5-thiadiazinane-2-thione (Bull. Soc. Chim. Fr. 15, p. 891 (1897)); dithianon, 5,10-dioxo-5,10-dihydronaphtho[2,3-b][1,4]dithiin-2,3-dicarbonitrile (GB 857 383); famoxadone, (RS)-3-anilino-5-methyl-5-(4-phenoxyphenyl)-1,3-oxazolidine-2,4-dione [CAS RN 131807-57-3]; fenamidone, (S)-1-anilino-4-methyl-2-methylthio-4-phenylimidazolin-5-one [CAS RN 161326-34-7]; fenarimol, α-(2-chlorophenyl)-α-(4-chlorophenyl)-5-pyrimidinemethanol (GB 12 18 623); fuberidazole, 2-(2-furanyl)-1 H-benzimidazole (DE 12 09 799); flutolanil, α,α,α-trifluoro-3'-isopropoxy-o-toluanilide (JP 1104514); furametpyr, 5-chloro-*N*-(1,3-dihydro-1,1,3-trimethyl-4-isobenzofuranyl)-1,3-dimethyl-1H-pyrazole-4-carboxamide [CAS RN 123572-88-3]; isoprothiolane, diisopropyl 1,3-dithiolan-2-ylidenemalonate (Proc. Insectic. Fungic. Conf. 8. Vol. 2, p. 715 (1975)); mepronil, 3'-isopropoxy-o-toluanilide (US 3 937 840); nuarimol, α-(2-chlorophenyl)-α-(4-fluorophenyl)-5-pyrimidinemethanol (GB 12 18 623); fluopicolide (picobenzamid), 2,6-dichloro-*N*-(3-chloro-5-trifluoromethylpyridin-2-ylmethyl)benzamide (WO 99/42447); probenazole, 3-allyloxy-1,2-benzothiazole 1,1-dioxide (Agric. Biol. Chem. 37, p. 737 (1973)); proquinazid, 6-iodo-2-propoxy-3-propylquinazolin-4(3H)-one (WO 97/48684); pyrifenox, 2',4'-dichloro-2-(3-pyridyl)acetophenone (EZ)-O-methyloxime (EP 49 854); pyroquilon, 1,2,5,6-tetrahydropyrrolo[3,2,1-ij]quinolin-4-one (GB 139 43 373) quinoxyfen, 5,7-dichloro-4-(4-fluorophenoxy)quinoline (US 5 240 940); silthiofam, N-allyl-4,5-dimethyl-2(trimethylsilyl)thiophene-3-carboxamide [CAS RN 175217-20-6]; thiabendazole, 2-(1,3-thiazol-4-yl)benzimidazole (US 3 017 415); thifluzamide, 2',6'-dibromo-2-methyl-4'-trifluormethoxy-4-trifluormethyl-1,3-thiazole-5-carboxanilide [CAS RN 130000-40-7]; thiophanate-methyl, 1,2-phenylenebis(iminocarbonothioyl)bis(dimethylcarbamate) (DE-A 19 30 540); tiadinil, 3'-chloro-4,4'-dimethyl-1,2,3-thiadiazole-5-carboxanilide [CAS RN 223580-51-6]; tricyclazole, 5-methyl-1,2,4-triazolo[3,4-b][1,3]benzothiazole [CAS RN 41814-78-2]; triforine, N,N'-{piperazine-1,4-diylbis[(trichlormethyl)methylene]}diformamide (DE 19 01 421); Bordeaux mixture, mixture of $CuSO_4$ x $3Cu(OH)_2$ x $3CaSO_4$ [CAS RN 8011-63-0]; copper acetate, $Cu(OCOCH_3)_2$ [CAS RN 8011-63-0]; copper oxychloride, $Cu_2Cl(OH)_3$ [CAS RN 1332-40-7]; basic copper sulfate, $CuSO_4$ [CAS RN 1344-73-6]; binapacryl, (RS)-2-sec-butyl-4,6-dinitrophenyl 3-methylcrotonate [CAS RN 485-31-4]; dinocap, mixture of 2,6-dinitro-4-octylphenylcrotonate and 2,4-dinitro-6-octylphenylcrotonate, where "octyl" is a mixture of 1-methylheptyl, 1-ethylhexyl and 1-propylpentyl (US 2 526 660); dinobuton, (RS)-2-sec-butyl-4,6-dinitrophenyl isopropyl carbonate [CAS RN 973-21-7]; nitrothal-isopropyl, diisopropyl 5-nitroisophthalate (Proc. Br. Insectic. Fungic. Conf. 7., Vol. 2, p. 673 (1973)); fenpiclonil, 4-(2,3-dichlorophenyl)-1 H-pyrrole-3-carbonitrile (Proc. 1988 Br. Crop Prot. Conf. - Pests Dis., Vol. 1, p. 65); fludioxonil, 4-(2,2-difluorobenzo[1,3]dioxol-4-yl)-1H-pyrrole-3-carbonitrile (The Pesticide Manual, publ. The British Crop Protection Council, 10th ed. (1995), p. 482); acibenzolar-S-methyl, methyl 1,2,3-benzothiadiazol-7-carbothioate [CAS

RN 135158-54-2]; flubenthiavalicarb (benthiavalicarb), isopropyl {(S)-1-[(1R)-1-(6-fluorobenzothiazol-2-yl)-ethylcarbamoyl]-2-methylpropyl}carbamate (JP-A 09/323 984); carpropamid, 2,2-dichloro-N-[1-(4-chlorophenyl)ethyl]-1-ethyl-3-methylcyclopropanecarboxamide [CAS RN 104030-54-8]; chlorothalonil, 2,4,5,6-tetrachloroisophthalonitrile (US 3 290 353); cyflufenamid, (Z)-*N*-[α-(cyclopropylmethoxyimino)-2,3-difluoro-6-(trifluoromethyl)benzyl]-2-phenylacetamide (WO 96/19442); cymoxanil, 1-(2-cyano-2-methoxyiminoacetyl)-3-ethylurea (US 3 957 847); diclomezine, 6-(3,5-dichlorophenyl-p-tolyl)pyridazin-3(2H)-one (US 4 052 395) diclocymet, (RS)-2-cyano-*N*-[(R)-1-(2,4-dichlorophenyl)ethyl]-3,3-dimethylbutyramide [CAS RN 139920-32-4]; diethofencarb, isopropyl 3,4-diethoxycarbanilate (EP 78 663); edifenphos, O-ethyl S,S-diphenyl phosphorodithioate (DE 14 93 736) ethaboxam, N-(cyano-2-thienylmethyl)-4-ethyl-2-(ethylamino)-5-thiazolecarboxamide (EP-A 639 574); fenhexamid, N-(2,3-dichloro-4-hydroxyphenyl)-1-methylcyclohexanecarboxamide (Proc. Br. Crop Prot. Conf. - Pests Dis., 1998, Vol. 2, p. 327); fentin acetate, triphenyltin (US 3 499 086); fenoxanil, *N*-(1-cyano-1,2-dimethylpropyl)-2-(2,4-dichlorophenoxy)propanamide (EP 262 393); ferimzone, mepanipyrim, (Z)-2'-methylacetophenone-4,6-dimethylpyrimidin-2-ylhydrazone [CAS RN 89269-64-7]; fluazinam, 3-chloro-*N*-[3-chloro-2,6-dinitro-4-(trifluoromethyl)phenyl]-5-(trifluoromethyl)-2-pyridinamine (The Pesticide Manual, publ. The British Crop Protection Council, 10th ed. (1995), p. 474); fosetyl, fosetyl-aluminum, ethylphosphonate (FR 22 54 276); iprovalicarb, isopropyl [(1S)-2-methyl-1-(1-p-tolylethylcarbamoyl)propyl]carbamate (EP-A 472 996); hexachlorbenzene (C. R. Seances Acad. Agric. Fr. 31, p. 24, 1945); metrafenon, 3'-bromo-2,3,4,6'-tetramethoxy-2',6-dimethylbenzophenone (US 5 945 567); pencycuron, 1-(4-chlorobenzyl)-1-cyclopentyl-3-phenylurea (DE 27 32 257); penthiopyrad, (RS)-N-[2-(1,3-dimethylbutyl)-3-thienyl]-1-methyl-3-(trifluoromethyl)-1 H-pyrazole-4-carboxamide (JP 10130268); propamocarb, propyl 3-(dimethylamino)propylcarbamate (DE 15 67 169); phthalide (DE 16 43 347); toloclofos-methyl, O-2,6-dichloro-p-tolyl O,O-dimethyl phosphorothioate (GB 14 67 561); quintozene, pentachlornitrobenzene (DE 682 048); zoxamide, (RS)-3,5-dichloro-*N*-(3-chloro-1-ethyl-1-methyl-2-oxopropyl)-p-toluamide [CAS RN 156052-68-5]; azoxystrobin, methyl 2-{2-[6-(2-cyano-1-vinylpenta-1,3-dienyloxy)pyrimidin-4-yloxy]phenyl}-3-methoxyacrylate (EP 382 375), dimoxystrobin, (E)-2-(methoxyimino)-*N*-methyl-2-[α-(2,5-xylyloxy)-o-tolyl]acetamide (EP 477 631); enestroburin, methyl 2-{2-[3-(4-chlorophenyl)-1-methylallylideneaminooxymethyl]phenyl}-3-methoxyacrylate (EP 936 213); fluoxastrobin, (E)-{2-[6-(2-chlorophenoxy)-5-fluoropyrimidin-4-yloxy]phenyl}(5,6-dihydro-1,4,2-dioxazin-3-yl)methanone O-methyloxime (WO 97/27189); kresoxim-methyl, methyl (E)-methoxyimino[α-(o-tolyloxy)-o-tolyl]acetate (EP 253 213); metominostrobin, (E)-2-(methoxyimino)-N-methyl-2-(2-phenoxyphenyl)acetamide (EP 398 692); orysastrobin, (2E)-2-(methoxyimino)-2-{2-[(3E,5E,6E)-5-(methoxyimino)-4,6-dimethyl-2,8-dioxa-3,7-diazanona-3,6-dien-1-yl]phenyl}-*N*-methylacetamide (WO 97/15552); picoxystrobin, methyl 3-methoxy-2-[2-(6-trifluoromethylpyridin-2-yloxymethyl)phenyl]acrylate (EP 278 595); pyraclostrobin, methyl *N*-{2-[1-(4-chlorophenyl)-1H-pyrazol-3-yloxymethyl]phenyl}(*N*-methoxy)carbamate (WO 96/01256); trifloxystrobin, methyl (E)-methoxyimino-{(E)-α-[1-(α,α,α-trifluoro-m-tolyl)ethylideneaminooxy]-o-tolyl}acetate (EP 460 575); captafol, *N*-(1,1,2,2-tetrachloroethylthio)cyclohex-4-ene-1,2-dicarboximide (Phytopathology, Vol. 52, p. 754 (1962)); captan, *N*-(trichloromethylthio)cyclohex-4-ene-1,2-dicarboximide (US 2 553 770); dichlofluanid, N-dichlorofluoromethylthio-N',N'-dimethyl-N-phenylsulfamide (DE 11 93 498); folpet, *N*-(trichlormethylthio)phthalimide (US 2 553 770); tolylfluanid, N-dichlorofluoromethyl-thio-N',N'-dimethyl-N-p-tolylsulfamide (DE 11 93 498); dimethomorph, 3-(4-chlorophenyl)-3-(3,4-dimethoxyphenyl)-1-morpholin-4-yl-propenone (EP 120 321); flumetover, 2-(3,4-dimethoxyphenyl)-*N*-ethyl-α,α,α-trifluoro-*N*-methyl-p-toluamide [AGROW no. 243, 22 (1995)]; flumorph, 3-(4-fluorophenyl)-3-(3,4-dimethoxyphenyl)-1-morpholin-4-ylpropenone (EP 860 438); 5-Amino-2-isopropyl-3-oxo-4-o-tolyl-2,3-dihydro-pyrazole-1-carbothioic acid *S*-allyl ester (CN1939128).

The pesticides described by IUPAC nomenclature, their preparation and their fungicidal activity are also known (cf. Can. J. Plant Sci. 48(6), 587-94, 1968; EP-A 141 317; EP-A 152 031; EP-A 226 917; EP-A 243 970; EP-A 256 503; EP-A 428 941; EP-A 532 022; EP-A 1 028 125; EP-A 1 035 122; EP-A 1 201 648; EP-A 1 122 244, JP 2002316902; DE 19650197; DE 10021412; DE 102005009458; US 3,296,272; US 3,325,503; WO 98/46608; WO 99/14187; WO 99/24413; WO 99/27783; WO 00/29404; WO 00/46148; WO 00/65913; WO 01/54501; WO 01/56358; WO 02/22583; WO 02/40431; WO 03/10149; WO 03/11853; WO 03/14103; WO 03/16286; WO 03/53145; WO 03/61388; WO 03/66609; WO 03/74491; WO 04/49804; WO 04/83193; WO 05/120234; WO 05/123689; WO 05/123690; WO 05/63721; WO 05/87772; WO 05/87773; WO 06/15866; WO 06/87325; WO 06/87343; WO 07/82098; WO 07/90624, WO 11/028657, WO2012/168188, WO 2007/006670, WO 2011/77514; WO13/047749, WO 10/069882, WO 13/047441, WO 03/16303, WO 09/90181, WO 13/007767, WO 13/010862, PCT/EP2012/065650 and PCT/EP2012/065651).

The mixtures and compositions according to the invention are suitable as fungicides. They are distinguished by an outstanding effectiveness against a broad spectrum of phytopathogenic fungi, including soil-borne fungi, which derive especially from the classes of the Plasmodiophoromycetes, Peronosporomycetes (syn. Oomycetes), Chytridiomycetes, Zygomycetes, Ascomycetes, Basidiomycetes and Deuteromycetes (syn. Fungi imperfecti). Some are systemically effective and they can be used in crop protection as foliar fungicides, fungicides for seed dressing and soil fungicides. Moreover, they are suitable for controlling harmful fungi, which inter alia occur in wood or roots of plants.

The mixtures and compositions according to the invention are particularly important in the control of a multitude of phytopathogenic fungi on various cultivated plants, such as cereals, e. g. wheat, rye, barley, triticale, oats or rice; beet, e. g. sugar beet or fodder beet; fruits, such as pomes, stone fruits or soft fruits, e. g. apples, pears, plums, peaches,

almonds, cherries, strawberries, raspberries, blackberries or gooseberries; leguminous plants, such as lentils, peas, alfalfa or soybeans; oil plants, such as rape, mustard, olives, sunflowers, coconut, cocoa beans, castor oil plants, oil palms, ground nuts or soybeans; cucurbits, such as squashes, cucumber or melons; fiber plants, such as cotton, flax, hemp or jute; citrus fruit, such as oranges, lemons, grapefruits or mandarins; vegetables, such as spinach, lettuce, asparagus, cabbages, carrots, onions, tomatoes, potatoes, cucurbits or paprika; lauraceous plants, such as avocados, cinnamon or camphor; energy and raw material plants, such as corn, soybean, rape, sugar cane or oil palm; corn; tobacco; nuts; coffee; tea; bananas; vines (table grapes and grape juice grape vines); hop; turf; natural rubber plants or ornamental and forestry plants, such as flowers, shrubs, broad-leaved trees or evergreens, e. g. conifers; and on the plant propagation material, such as seeds, and the crop material of these plants. Preferably the inventive mixtures and compositions are used for controlling a multitude of fungi on field crops, such as potatoes sugar beets, tobacco, wheat, rye, barley, oats, rice, corn, cotton, soybeans, rape, legumes, sunflowers, coffee or sugar cane; fruits; vines; ornamentals; or vegetables, such as cucumbers, tomatoes, beans or squashes.

The term "plant propagation material" is to be understood to denote all the generative parts of the plant such as seeds and vegetative plant material such as cuttings and tubers (e. g. potatoes), which can be used for the multiplication of the plant. This includes seeds, roots, fruits, tubers, bulbs, rhizomes, shoots, sprouts and other parts of plants, including seedlings and young plants, which are to be transplanted after germination or after emergence from soil. These young plants may also be protected before transplantation by a total or partial treatment by immersion or pouring.

Preferably, treatment of plant propagation materials with the inventive combination of compound I and pesticides II and compositions thereof, respectively, is used for controlling a multitude of fungi on cereals, such as wheat, rye, barley and oats; rice, corn, cotton and soybeans.

The term "cultivated plants" is to be understood as including plants which have been modified by breeding, mutagenesis or genetic engineering including but not limiting to agricultural biotech products on the market or in development (cf. http://cera-gmc.org/, see GM crop database therein). Genetically modified plants are plants, which genetic material has been so modified by the use of recombinant DNA techniques that under natural circumstances cannot readily be obtained by cross breeding, mutations or natural recombination. Typically, one or more genes have been integrated into the genetic material of a genetically modified plant in order to improve certain properties of the plant. Such genetic modifications also include but are not limited to targeted post-transtional modification of protein(s), oligo- or polypeptides e. g. by glycosylation or polymer additions such as prenylated, acetylated or farnesylated moieties or PEG moieties.

Plants that have been modified by breeding, mutagenesis or genetic engineering, e. g. have been rendered tolerant to applications of specific classes of herbicides, such as hydroxyphenylpyruvate dioxygenase (HPPD) inhibitors; acetolactate synthase (ALS) inhibitors, such as sulfonyl ureas (see e. g. US 6,222,100, WO 01/82685, WO 00/26390, WO 97/41218, WO 98/02526, WO 98/02527, WO 04/106529, WO 05/20673, WO 03/14357, WO 03/13225, WO 03/14356, WO 04/16073) or imidazolinones (see e. g. US 6,222,100, WO 01/82685, WO 00/026390, WO 97/41218, WO 98/002526, WO 98/02527, WO 04/106529, WO 05/20673, WO 03/014357, WO 03/13225, WO 03/14356, WO 04/16073); enolpyruvylshikimate-3-phosphate synthase (EPSPS) inhibitors, such as glyphosate (see e. g. WO 92/00377); glutamine synthetase (GS) inhibitors, such as glufosinate (see e.g. EP-A 242 236, EP-A 242 246) or oxynil herbicides (see e. g. US 5,559,024) as a result of conventional methods of breeding or genetic engineering. Several cultivated plants have been rendered tolerant to herbicides by conventional methods of breeding (mutagenesis), e. g. Clearfield® summer rape (Canola, BASF SE, Germany) being tolerant to imidazolinones, e. g. imazamox. Genetic engineering methods have been used to render cultivated plants such as soybean, cotton, corn, beets and rape, tolerant to herbicides such as glyphosate and glufosinate, some of which are commercially available under the trade names RoundupReady® (glyphosate-tolerant, Monsanto, U.S.A.) and LibertyLink® (glufosinate-tolerant, Bayer CropScience, Germany).

Furthermore, plants are also covered that are by the use of recombinant DNA techniques capable to synthesize one or more insecticidal proteins, especially those known from the bacterial genus *Bacillus,* particularly from *Bacillus thuringiensis,* such as δ-endotoxins, e. g. CryIA(b), CryIA(c), CryIF, CryIF(a2), CryIIA(b), CryIIIA, CryIIIB(b1) or Cry9c; vegetative insecticidal proteins (VIP), e. g. VIP1, VIP2, VIP3 or VIP3A; insecticidal proteins of bacteria colonizing nematodes, e. g. *Photorhabdus* spp. or *Xenorhabdus* spp.; toxins produced by animals, such as scorpion toxins, arachnid toxins, wasp toxins, or other insect-specific neurotoxins; toxins produced by fungi, such Streptomycetes toxins, plant lectins, such as pea or barley lectins; agglutinins; proteinase inhibitors, such as trypsin inhibitors, serine protease inhibitors, patatin, cystatin or papain inhibitors; ribosome-inactivating proteins (RIP), such as ricin, maize-RIP, abrin, luffin, saporin or bryodin; steroid metabolism enzymes, such as 3-hydroxysteroid oxidase, ecdysteroid-IDP-glycosyl-transferase, cholesterol oxidases, ecdysone inhibitors or HMG-CoA-reductase; ion channel blockers, such as blockers of sodium or calcium channels; juvenile hormone esterase; diuretic hormone receptors (helicokinin receptors); stilben synthase, bibenzyl synthase, chitinases or glucanases. In the context of the present invention these insecticidal proteins or toxins are to be understood expressly also as pre-toxins, hybrid proteins, truncated or otherwise modified proteins. Hybrid proteins are characterized by a new combination of protein domains, (see, e. g. WO 02/015701). Further examples of such toxins or genetically modified plants capable of synthesizing such toxins are disclosed, e. g., in EP-A 374 753,

WO 93/007278,

WO 95/34656, EP-A 427 529, EP-A 451 878, WO 03/18810 und WO 03/52073. The methods for producing such genetically modified plants are generally known to the person skilled in the art and are described, e. g. in the publications mentioned above. These insecticidal proteins contained in the genetically modified plants impart to the plants producing these proteins tolerance to harmful pests from all taxonomic groups of athropods, especially to beetles (Coeloptera), two-winged insects (Diptera), and moths (Lepidoptera) and to nematodes (Nematoda). Genetically modified plants capable to synthesize one or more insecticidal proteins are, e. g., described in the publications mentioned above, and some of which are commercially available such as YieldGard® (corn cultivars producing the Cry1Ab toxin), YieldGard® Plus (corn cultivars producing Cry1Ab and Cry3Bb1 toxins), Starlink® (corn cultivars producing the Cry9c toxin), Herculex® RW (corn cultivars producing Cry34Ab1, Cry35Ab1 and the enzyme Phosphinothricin-*N*-Acetyltransferase [PAT]); NuCOTN® 33B (cotton cultivars producing the Cry1Ac toxin), Bollgard® I (cotton cultivars producing the Cry1Ac toxin), Bollgard® II (cotton cultivars producing Cry1Ac and Cry2Ab2 toxins); VIPCOT® (cotton cultivars producing a VIP-toxin); NewLeaf® (potato cultivars producing the Cry3A toxin); Bt-Xtra®, NatureGard®, KnockOut®, BiteGard®, Protecta®, Bt11 (e. g. Agrisure® CB) and Bt176 from Syngenta Seeds SAS, France, (corn cultivars producing the Cry1Ab toxin and PAT enyzme), MIR604 from Syngenta Seeds SAS, France (corn cultivars producing a modified version of the Cry3A toxin, c.f. WO 03/018810), MON 863 from Monsanto Europe S.A., Belgium (corn cultivars producing the Cry3Bb1 toxin), IPC 531 from Monsanto Europe S.A., Belgium (cotton cultivars producing a modified version of the Cry1Ac toxin) and 1507 from Pioneer Overseas Corporation, Belgium (corn cultivars producing the Cry1 F toxin and PAT enzyme).

Furthermore, plants are also covered that are by the use of recombinant DNA techniques capable to synthesize one or more proteins to increase the resistance or tolerance of those plants to bacterial, viral or fungal pathogens. Examples of such proteins are the so-called "pathogenesis-related proteins" (PR proteins, see, e. g. EP-A 392 225), plant disease resistance genes (e. g. potato cultivars, which express resistance genes acting against *Phytophthora infestans* derived from the mexican wild potato *Solanum bulbocastanum*) or T4-lysozym (e. g. potato cultivars capable of synthesizing these proteins with increased resistance against bacteria such as *Erwinia amylvora*). The methods for producing such genetically modified plants are generally known to the person skilled in the art and are described, e. g. in the publications mentioned above.

Furthermore, plants are also covered that are by the use of recombinant DNA techniques capable to synthesize one or more proteins to increase the productivity (e. g. bio mass production, grain yield, starch content, oil content or protein content), tolerance to drought, salinity or other growth-limiting environmental factors or tolerance to pests and fungal, bacterial or viral pathogens of those plants.

Furthermore, plants are also covered that contain by the use of recombinant DNA techniques a modified amount of substances of content or new substances of content, specifically to improve human or animal nutrition, e. g. oil crops that produce health-promoting long-chain omega-3 fatty acids or unsaturated omega-9 fatty acids (e. g. Nexera® rape, DOW Agro Sciences, Canada).

Furthermore, plants are also covered that contain by the use of recombinant DNA techniques a modified amount of substances of content or new substances of content, specifically to improve raw material production, e. g. potatoes that produce increased amounts of amylopectin (e. g. Amflora® potato, BASF SE, Germany).

The inventive mixtures and compositions are particularly suitable for controlling the following plant diseases:

*Albugo* spp. (white rust) on ornamentals, vegetables (e. g. *A. candida*) and sunflowers (e. g. *A. tragopogonis*); *Alternaria* spp. (Alternaria leaf spot) on vegetables, rape (A. *brassicola* or *brassicae),* sugar beets (A. *tenuis),* fruits, rice, soybeans, potatoes (e. g. A. *solani* or A. *alternata*), tomatoes (e. g. A. *solani* or A. *alternata*) and wheat; *Aphanomyces* spp. on sugar beets and vegetables; *Ascochyta* spp. on cereals and vegetables, e. g. A. *tritici* (anthracnose) on wheat and A. *hordei on* barley; *Bipolaris* and *Drechslera* spp. (teleomorph: *Cochliobolus* spp.) on corn (e. g. *D. maydis),* cereals (e. g. *B. sorokiniana:* spot blotch), rice (e. g. *B. oryzae*) and turfs; *Blumeria* (formerly *Erysiphe*) *graminis* (powdery mildew) on cereals (e. g. on wheat or barley); *Botrytis cinerea* (teleomorph: *Botryotinia fuckeliana:* grey mold) on fruits and berries (e. g. strawberries), vegetables (e. g. lettuce, carrots, celery and cabbages), rape, flowers, vines, forestry plants and wheat; *Bremia lactucae* (downy mildew) on lettuce;

*Ceratocystis* (syn. *Ophiostoma)* spp. (rot or wilt) on broad-leaved trees and evergreens, e. g. *C. ulmi* (Dutch elm disease) on elms; *Cercospora* spp. (Cercospora leaf spots) on corn, rice, sugar beets (e. g. *C. beticola),* sugar cane, vegetables, coffee, soybeans (e. g. *C. sojina* or *C. kikuchii*) and rice; *Cladosporium* spp. on tomatoes (e. g. *C. fulvum*: leaf mold) and cereals, e. g. *C. herbarum* (black ear) on wheat; *Claviceps purpurea* (ergot) on cereals; *Cochliobolus* (anamorph: *Helminthosporium* of *Bipolaris)* spp. (leaf spots) on corn (C. *carbonum*), cereals (e. g. *C. sativus,* anamorph: *B. sorokiniana)* and rice (e. g. *C. miyabeanus,* anamorph: H. *oryzae*); *Colletotrichum* (teleomorph: *Glomerella*) spp. (anthracnose) on cotton (e. g. *C. gossypii*), corn (e. g. *C. graminicola),* soft fruits, potatoes (e. g. *C. coccodes:* black dot), beans (e. g. *C. lindemuthianum)* and soybeans (e. g. *C. truncatum* or *C. gloeosporioides*);

*Corticium* spp., e. g. *C. sasakii* (sheath blight) on rice; *Corynespora cassiicola* (leaf spots) on soybeans and ornamentals; *Cycloconium* spp., e. g. *C. oleaginum* on olive trees;

*Cylindrocarpon* spp. (e. g. fruit tree canker or young vine decline, teleomorph: *Nectria* or *Neonectria* spp.) on fruit trees,

vines (e. g. *C. liriodendri,* teleomorph: *Neonectria liriodendri*: Black Foot Disease) and ornamentals; *Dematophora* (teleomorph: *Rosellinia)* necatrix (root and stem rot) on soybeans; *Diaporthe* spp., e. g. *D. phaseolorum* (damping off) on soybeans; *Drechslera* (syn. *Helminthosporium,* teleomorph: *Pyrenophora)* spp. on corn, cereals, such as barley (e. g. *D. teres,* net blotch) and wheat (e. g. *D. tritici-repentis*: tan spot), rice and turf;
Esca (dieback, apoplexy) on vines, caused by *Formitiporia* (syn. *Phellinus*) *punctata, F. mediterranea, Phaeomoniella chlamydospora* (earlier *Phaeoacremonium chlamydosporum*), *Phaeoacremonium aleophilum* and/or *Botryosphaeria obtusa*; *Elsinoe* spp. on pome fruits (*E. pyri*), soft fruits (*E. veneta:* anthracnose) and vines (*E. ampelina:* anthracnose); *Entyloma oryzae* (leaf smut) on rice; *Epicoccum* spp. (black mold) on wheat; *Erysiphe* spp. (powdery mildew) on sugar beets *(E. betae),* vegetables (e. g. *E. pisi*), such as cucurbits (e. g. *E. cichoracearum),* cabbages, rape (e. g. *E. cruciferarum*); *Eutypa lata* (Eutypa canker or dieback, anamorph: *Cytosporina lata,* syn. *Libertella blepharis*) on fruit trees, vines and ornamental woods; *Exserohilum* (syn. *Helminthosporium*) spp. on corn (e. g. *E. turcicum*)*;*
*Fusarium* (teleomorph: *Gibberella)* spp. (wilt, root or stem rot) on various plants, such as *F. graminearum* or *F. culmorum* (root rot, scab or head blight) on cereals (e. g. wheat or barley), *F. oxysporum* on tomatoes, *F. solani* (f. sp. *glycines* now syn. *F. virguliforme*) and *F. tucumaniae* and *F. brasiliense* each causing sudden death syndrome on soybeans, and *F. verticillioides* on corn; *Gaeumannomyces graminis* (take-all) on cereals (e. g. wheat or barley) and corn; *Gibberella* spp. on cereals (e. g. *G. zeae*) and rice (e. g. *G. fujikuroi*: Bakanae disease); *Glomerella cingulata* on vines, pome fruits and other plants and *G. gossypii* on cotton; Grainstaining complex on rice; *Guignardia bidwellii* (black rot) on vines; *Gymnosporangium* spp. on rosaceous plants and junipers, e. g. *G. sabinae* (rust) on pears;
*Helminthosporium* spp. (syn. *Drechslera,* teleomorph: *Cochliobolus*) on corn, cereals and rice; *Hemileia* spp., e. g. *H. vastatrix* (coffee leaf rust) on coffee; *Isariopsis clavispora* (syn. *Cladosporium vitis)* on vines; *Macrophomina phaseolina* (syn. *phaseoli*) (root and stem rot) on soybeans and cotton; *Microdochium* (syn. *Fusarium) nivale* (pink snow mold) on cereals (e. g. wheat or barley); *Microsphaera diffusa* (powdery mildew) on soybeans; *Monilinia* spp., e. g. *M. laxa, M. fructicola* and *M. fructigena* (bloom and twig blight, brown rot) on stone fruits and other rosaceous plants; *Mycosphaerella* spp. on cereals, bananas, soft fruits and ground nuts, such as e. g. *M. graminicola* (anamorph: *Septoria tritici,* Septoria blotch) on wheat or *M. fijiensis* (black Sigatoka disease) on bananas; *Peronospora* spp. (downy mildew) on cabbage (e. g. *P. brassicae),* rape (e. g. *P. parasitica),* onions (e. g. *P. destructor),* tobacco (P. *tabacina)* and soybeans (e. g. *P. manshurica*); *Phakopsora pachyrhizi* and *P. meibomiae* (soybean rust) on soybeans; *Phialophora* spp. e. g. on vines (e. g. *P. tracheiphila* and *P. tetraspora*) and soybeans (e. g. *P. gregata:* stem rot); *Phoma lingam* (root and stem rot) on rape and cabbage and *P. betae* (root rot, leaf spot and damping-off) on sugar beets;
*Phomopsis* spp. on sunflowers, vines (e. g. *P. viticola*: can and leaf spot) and soybeans (e. g. stem rot: *P. phaseoli,* teleomorph: *Diaporthe phaseolorum*); *Physoderma maydis* (brown spots) on corn; *Phytophthora* spp. (wilt, root, leaf, fruit and stem root) on various plants, such as paprika and cucurbits (e. g. *P. capsici*), soybeans (e. g. *P. megasperma,* syn. *P. sojae*), potatoes and tomatoes (e. g. *P. infestans:* late blight) and broad-leaved trees (e. g. P. *ramorum*: sudden oak death); *Plasmodiophora brassicae* (club root) on cabbage, rape, radish and other plants; *Plasmopara* spp., e. g. *P. viticola* (grapevine downy mildew) on vines and *P. halstedii* on sunflowers; *Podosphaera* spp. (powdery mildew) on rosaceous plants, hop, pome and soft fruits, e. g. *P. leucotricha* on apples; *Polymyxa* spp., e. g. on cereals, such as barley and wheat (*P. graminis)* and sugar beets (*P. betae)* and thereby transmitted viral diseases; *Pseudocercosporella herpotrichoides* (eyespot, teleomorph: *Tapesia yallundae)* on cereals, e. g. wheat or barley; *Pseudoperonospora* (downy mildew) on various plants, e. g. *P. cubensis* on cucurbits or P. *humili* on hop; *Pseudopezicula tracheiphila* (red fire disease or ‚rotbrenner', anamorph: *Phialophora*) on vines; *Puccinia* spp. (rusts) on various plants, e. g. *P. triticina* (brown or leaf rust), *P. striiformis* (stripe or yellow rust), *P. hordei* (dwarf rust), *P. graminis* (stem or black rust) or *P. recondita* (brown or leaf rust) on cereals, such as e. g. wheat, barley or rye, and asparagus (e. g. *P. asparagi*); *Pyrenophora* (anamorph: *Drechslera*) *tritici-repentis* (tan spot) on wheat or *P. teres* (net blotch) on barley;
*Pyricularia* spp., e. g. *P. oryzae* (teleomorph: *Magnaporthe grisea,* rice blast) on rice and *P. grisea* on turf and cereals; *Pythium* spp. (damping-off) on turf, rice, corn, wheat, cotton, rape, sunflowers, soybeans, sugar beets, vegetables and various other plants (e. g. *P. ultimum* or *P. aphanidermatum*); *Ramularia* spp., e. g. *R. collo-cygni* (Ramularia leaf spots, Physiological leaf spots) on barley and *R. beticola* on sugar beets; *Rhizoctonia* spp. on cotton, rice, potatoes, turf, corn, rape, potatoes, sugar beets, vegetables and various other plants, e. g. *R. solani* (root and stem rot) on soybeans, *R. solani* (sheath blight) on rice or R. *cerealis* (Rhizoctonia spring blight) on wheat or barley; *Rhizopus stolonifer* (black mold, soft rot) on strawberries, carrots, cabbage, vines and tomatoes; *Rhynchosporium secalis* (scald) on barley, rye and triticale; *Sarocladium oryzae* and S. *attenuatum* (sheath rot) on rice;
*Sclerotinia* spp. (stem rot or white mold) on vegetables and field crops, such as rape, sunflowers (e. g. S. *sclerotiorum*) and soybeans (e. g. S. *rolfsii* or S. *sclerotiorum*); *Septoria* spp. on various plants, e. g. *S. glycines* (brown spot) on soybeans, *S. tritici* (Septoria blotch) on wheat and *S.* (syn. *Stagonospora)* nodorum (Stagonospora blotch) on cereals; *Uncinula* (syn. *Erysiphe*) *necator* (powdery mildew, anamorph: *Oidium tuckeri*) on vines; *Setospaeria* spp. (leaf blight) on corn (e. g. *S. turcicum,* syn. *Helminthosporium turcicum)* and turf;
*Sphacelotheca* spp. (smut) on corn, (e. g. *S. reiliana:* head smut), sorghum und sugar cane;
*Sphaerotheca fuliginea* (powdery mildew) on cucurbits; *Spongospora subterranea* (powdery scab) on potatoes and

thereby transmitted viral diseases; *Stagonospora* spp. on cereals, e. g. *S. nodorum* (Stagonospora blotch, teleomorph: *Leptosphaeria* [syn. *Phaeosphaeria] nodorum)* on wheat; *Synchytrium endobioticum* on potatoes (potato wart disease); *Taphrina* spp., e. g. *T. deformans* (leaf curl disease) on peaches and *T. pruni* (plum pocket) on plums; *Thielaviopsis* spp. (black root rot) on tobacco, pome fruits, vegetables, soybeans and cotton, e. g. *T. basicola* (syn. *Chalara elegans*); *Tilletia* spp. (common bunt or stinking smut) on cereals, such as e. g. *T. tritici* (syn. *T. caries,* wheat bunt) and *T. controversa* (dwarf bunt) on wheat; *Typhula incarnata* (grey snow mold) on barley or wheat; *Urocystis* spp., e. g. *U. occulta* (stem smut) on rye; *Uromyces* spp. (rust) on vegetables, such as beans (e. g. *U. appendiculatus,* syn. *U. phaseoli*) and sugar beets (e. g. *U. betae*); *Ustilago* spp. (loose smut) on cereals (e. g. *U. nuda* and *U. avaenae*), corn (e. g. *U. maydis:* corn smut) and sugar cane; *Venturia* spp. (scab) on apples (e. g. *V. inaequalis)* and pears; and *Verticillium* spp. (wilt) on various plants, such as fruits and ornamentals, vines, soft fruits, vegetables and field crops, e. g. *V. dahliae* on strawberries, rape, potatoes and tomatoes.

In particular, the mixtures and compositions of the present invention are effective against plant pathogens in speciality crops such as vine, fruits, hop, vegetables and tabacco - see above list.

Bacteria pathogenic for plants are responsible for devastating losses in agriculture. The use of antibiotics to control such infections is restricted in many countries due to worries over the evolution and transmission of antibiotic resistance.

The mixtures and compositions according to the invention are also suitable as bactericides. They are distinguished by an outstanding effectiveness against a broad spectrum of phytopathogenic bacteria, including soil-borne bacteria, which derive especially from the genera of Agrobacterium, Clavibacter, Corynebacterium, Erwinia, Leifsonia, Pectobacterium, Pseudomonas, Ralstonia, Xanthomonas (e.g. Xanthomonas oryzae causing bacterial blight on rice) and Xylella; preferably Erwinia; even more preferably Erwinia amylovora causing fire blight on apples, pears and other memb er of the family Rosaceae.

The inventive mixtures and compositions are also suitable for controlling harmful fungi in the protection of stored products or harvest and in the protection of materials. The term "protection of materials" is to be understood to denote the protection of technical and non-living materials, such as adhesives, glues, wood, paper and paperboard, textiles, leather, paint dispersions, plastics, colling lubricants, fiber or fabrics, against the infestation and destruction by harmful microorganisms, such as fungi and bacteria. As to the protection of wood and other materials, the particular attention is paid to the following harmful fungi: Ascomycetes such as *Ophiostoma* spp., *Ceratocystis* spp., *Aureobasidium pullulans, Sclerophoma* spp., *Chaetomium* spp., *Humicola* spp., *Petriella* spp., *Trichurus* spp.; Basidiomycetes such as *Coniophora* spp., *Coriolus* spp., *Gloeophyllum* spp., *Lentinus* spp., *Pleurotus* spp., *Poria* spp., *Serpula* spp. and *Tyromyces* spp., Deuteromycetes such as *Aspergillus* spp., *Cladosporium* spp., *Penicillium* spp., *Trichorma* spp., *Alternaria* spp., *Paecilomyces* spp. and Zygomycetes such as *Mucorspp.,* and in addition in the protection of stored products and harvest the following yeast fungi are worthy of note: *Candida* spp. and *Saccharomyces cerevisae.*

The method of treatment according to the invention can also be used in the field of protecting stored products or harvest against attack of fungi and microorganisms. According to the present invention, the term "stored products" is understood to denote natural substances of plant or animal origin and their processed forms, which have been taken from the natural life cycle and for which long-term protection is desired. Stored products of crop plant origin, such as plants or parts thereof, for example stalks, leafs, tubers, seeds, fruits or grains, can be protected in the freshly harvested state or in processed form, such as pre-dried, moistened, comminuted, ground, pressed or roasted, which process is also known as post-harvest treatment. Also falling under the definition of stored products is timber, whether in the form of crude timber, such as construction timber, electricity pylons and barriers, or in the form of finished articles, such as furniture or objects made from wood. Stored products of animal origin are hides, leather, furs, hairs and the like. The combinations according the present invention can prevent disadvantageous effects such as decay, discoloration or mold. Preferably "stored products" is understood to denote natural substances of plant origin and their processed forms, more preferably fruits and their processed forms, such as pomes, stone fruits, soft fruits and citrus fruits and their processed forms.

Plant propagation materials may be treated with the mixtures and compositions of the invention prophylactically either at or before planting or transplanting.

The invention also relates to agrochemical compositions comprising an auxiliary and mixtures acciording to the invention.

An agrochemical composition comprises a fungicidally effective amount of a compound I and a pesticide II and a pesticide III. The term "effective amount" denotes an amount of the composition or of the compounds I, which is sufficient for controlling harmful fungi on cultivated plants or in the protection of materials and which does not result in a substantial damage to the treated plants. Such an amount can vary in a broad range and is dependent on various factors, such as the fungal species to be controlled, the treated cultivated plant or material, the climatic conditions and the specific mixture or composition used.

The compounds I and pesticides II and III, their N-oxides and salts can be converted into customary types of agrochemical compositions, e. g. solutions, emulsions, suspensions, dusts, powders, pastes, granules, pressings, capsules, and mixtures thereof. Examples for composition types are suspensions (e.g. SC, OD, FS), emulsifiable concentrates (e.g. EC), emulsions (e.g. EW, EO, ES, ME), capsules (e.g. CS, ZC), pastes, pastilles, wettable powders or dusts (e.g. WP, SP, WS, DP, DS), pressings (e.g. BR, TB, DT), granules (e.g. WG, SG, GR, FG, GG, MG), insecticidal articles (e.g. LN), as well as gel formulations for the treatment of plant propagation materials such as seeds (e.g. GF). These and further compositions types are defined in the "Catalogue of pesticide formulation types and international coding system", Technical Monograph No. 2, 6th Ed. May 2008, CropLife International.

The compositions are prepared in a known manner, such as described by Mollet and Grubemann, Formulation technology, Wiley VCH, Weinheim, 2001; or Knowles, New developments in crop protection product formulation, Agrow Reports DS243, T&F Informa, London, 2005.

According to one embodiment, individual components of the composition according to the invention such as parts of a kit or parts of a two-component or three-component mixture may be mixed by the user himself in a spray tank or any other kind of vessel used for applications (e.g seed treater drums, seed pelleting machinery, knapsack sprayer) and further auxiliaries may be added, if appropriate. Consequently, one embodiment of the invention is a kit for preparing a usable pesticidal composition, the kit compring a) a composition comprising component 1) as defined herein and at least one auxiliary; and b) a composition comprising component 2) as defined herein and at least one auxiliary; and optionally c) a composition comprising at least one auxiliary and optionally a further active component 3) as defined herein.

Suitable auxiliaries are solvents, liquid carriers, solid carriers or fillers, surfactants, dispersants, emulsifiers, wetters, adjuvants, solubilizers, penetration enhancers, protective colloids, adhesion agents, thickeners, humectants, repellents, attractants, feeding stimulants, compatibilizers, bactericides, anti-freezing agents, anti-foaming agents, colorants, tackifiers and binders.

Suitable solvents and liquid carriers are water and organic solvents, such as mineral oil fractions of medium to high boiling point, e.g. kerosene, diesel oil; oils of vegetable or animal origin; aliphatic, cyclic and aromatic hydrocarbons, e. g. toluene, paraffin, tetrahydronaphthalene, alkylated naphthalenes; alcohols, e.g. ethanol, propanol, butanol, benzylalcohol, cyclohexanol; glycols; DMSO; ketones, e.g. cyclohexanone; esters, e.g. lactates, carbonates, fatty acid esters, gamma-butyrolactone; fatty acids; phosphonates; amines; amides, e.g. N-methylpyrrolidone, fatty acid dimethylamides; and mixtures thereof. Suitable solid carriers or fillers are mineral earths, e.g. silicates, silica gels, talc, kaolins, limestone, lime, chalk, clays, dolomite, diatomaceous earth, bentonite, calcium sulfate, magnesium sulfate, magnesium oxide; polysaccharides, e.g. cellulose, starch; fertilizers, e.g. ammonium sulfate, ammonium phosphate, ammonium nitrate, ureas; products of vegetable origin, e.g. cereal meal, tree bark meal, wood meal, nutshell meal, and mixtures thereof. Suitable surfactants are surface-active compounds, such as anionic, cationic, nonionic and amphoteric surfactants, block polymers, polyelectrolytes, and mixtures thereof. Such surfactants can be used as emusifier, dispersant, solubilizer, wetter, penetration enhancer, protective colloid, or adjuvant. Examples of surfactants are listed in McCutcheon's, Vol.1: Emulsifiers & Detergents, McCutcheon's Directories, Glen Rock, USA, 2008 (International Ed. or North American Ed.).

Suitable anionic surfactants are alkali, alkaline earth or ammonium salts of sulfonates, sulfates, phosphates, carboxylates, and mixtures thereof. Examples of sulfonates are alkylarylsulfonates, diphenylsulfonates, alpha-olefin sulfonates, lignine sulfonates, sulfonates of fatty acids and oils, sulfonates of ethoxylated alkylphenols, sulfonates of alkoxylated arylphenols, sulfonates of condensed naphthalenes, sulfonates of dodecyl- and tridecylbenzenes, sulfonates of naphthalenes and alkylnaphthalenes, sulfosuccinates or sulfosuccinamates. Examples of sulfates are sulfates of fatty acids and oils, of ethoxylated alkylphenols, of alcohols, of ethoxylated alcohols, or of fatty acid esters. Examples of phosphates are phosphate esters. Examples of carboxylates are alkyl carboxylates, and carboxylated alcohol or alkylphenol ethoxylates.

Suitable nonionic surfactants are alkoxylates, N-subsituted fatty acid amides, amine oxides, esters, sugar-based surfactants, polymeric surfactants, and mixtures thereof. Examples of alkoxylates are compounds such as alcohols, alkylphenols, amines, amides, arylphenols, fatty acids or fatty acid esters which have been alkoxylated with 1 to 50 equivalents. Ethylene oxide and/or propylene oxide may be employed for the alkoxylation, preferably ethylene oxide. Examples of N-subsitituted fatty acid amides are fatty acid glucamides or fatty acid alkanolamides. Examples of esters are fatty acid esters, glycerol esters or monoglycerides. Examples of sugar-based surfactants are sorbitans, ethoxylated sorbitans, sucrose and glucose esters or alkylpolyglucosides. Examples of polymeric surfactants are home- or copolymers of vinylpyrrolidone, vinylalcohols, or vinylacetate.

Suitable cationic surfactants are quaternary surfactants, for example quaternary ammonium compounds with one or two hydrophobic groups, or salts of long-chain primary amines. Suitable amphoteric surfactants are alkylbetains and imidazolines. Suitable block polymers are block polymers of the A-B or A-B-A type comprising blocks of polyethylene oxide and polypropylene oxide, or of the A-B-C type comprising alkanol, polyethylene oxide and polypropylene oxide. Suitable polyelectrolytes are polyacids or polybases. Examples of polyacids are alkali salts of polyacrylic acid or polyacid comb polymers. Examples of polybases are polyvinylamines or polyethyleneamines.

Suitable adjuvants are compounds, which have a neglectable or even no pesticidal activity themselves, and which improve the biological performance of the compound I on the target. Examples are surfactants, mineral or vegetable

oils, and other auxilaries. Further examples are listed by Knowles, Adjuvants and additives, Agrow Reports DS256, T&F Informa UK, 2006, chapter 5.

Suitable thickeners are polysaccharides (e.g. xanthan gum, carboxymethylcellulose), anorganic clays (organically modified or unmodified), polycarboxylates, and silicates. Suitable bactericides are bronopol and isothiazolinone derivatives such as alkylisothiazolinones and benzisothiazolinones.

Suitable anti-freezing agents are ethylene glycol, propylene glycol, urea and glycerin. Suitable anti-foaming agents are silicones, long chain alcohols, and salts of fatty acids. Suitable colorants (e.g. in red, blue, or green) are pigments of low water solubility and water-soluble dyes. Examples are inorganic colorants (e.g. iron oxide, titan oxide, iron hexacyanoferrate) and organic colorants (e.g. alizarin-, azo- and phthalocyanine colorants). Suitable tackifiers or binders are polyvinylpyrrolidons, polyvinylacetates, polyvinyl alcohols, polyacrylates, biological or synthetic waxes, and cellulose ethers.

Examples for composition types and their preparation are (wherein active substances denote at least one compound I and one pesticide II):

i) Water-soluble concentrates (SL, LS)

10-60 wt% active substances and 5-15 wt% wetting agent (e.g. alcohol alkoxylates) are dissolved in water and/or in a water-soluble solvent (e.g. alcohols) ad 100 wt%. The active substance dissolves upon dilution with water.

ii) Dispersible concentrates (DC)

5-25 wt% active substances and 1-10 wt% dispersant (e. g. polyvinylpyrrolidone) are dissolved in organic solvent (e.g. cyclohexanone) ad 100 wt%. Dilution with water gives a dispersion.

iii) Emulsifiable concentrates (EC)

15-70 wt% active substances and 5-10 wt% emulsifiers (e.g. calcium dodecylbenzenesulfonate and castor oil ethoxylate) are dissolved in water-insoluble organic solvent (e.g. aromatic hydrocarbon) ad 100 wt%. Dilution with water gives an emulsion.

iv) Emulsions (EW, EO, ES)

5-40 wt% active substances and 1-10 wt% emulsifiers (e.g. calcium dodecylbenzenesulfonate and castor oil ethoxylate) are dissolved in 20-40 wt% water-insoluble organic solvent (e.g. aromatic hydrocarbon). This mixture is introduced into water ad 100 wt% by means of an emulsifying machine and made into a homogeneous emulsion. Dilution with water gives an emulsion.

v) Suspensions (SC, OD, FS)

In an agitated ball mill, 20-60 wt% active substances are comminuted with addition of 2-10 wt% dispersants and wetting agents (e.g. sodium lignosulfonate and alcohol ethoxylate), 0.1-2 wt% thickener (e.g. xanthan gum) and ad water ad 100 wt% to give a fine active substance suspension. Dilution with water gives a stable suspension of the active substance. For FS type composition up to 40 wt% binder (e.g. polyvinylalcohol) is added.

vi) Water-dispersible granules and water-soluble granules (WG, SG)

50-80 wt% active substances are ground finely with addition of dispersants and wetting agents (e.g. sodium lignosulfonate and alcohol ethoxylate) ad 100 wt% and prepared as water-dispersible or water-soluble granules by means of technical appliances (e. g. extrusion, spray tower, fluidized bed). Dilution with water gives a stable dispersion or solution of the active substance.

vii) Water-dispersible powders and water-soluble powders (WP, SP, WS)

50-80 wt% active substances are ground in a rotor-stator mill with addition of 1-5 wt% dispersants (e.g. sodium lignosulfonate), 1-3 wt% wetting agents (e.g. alcohol ethoxylate) and solid carrier (e.g. silica gel) ad 100 wt%. Dilution with water gives a stable dispersion or solution of the active substance.

viii) Gel (GW, GF)

In an agitated ball mill, 5-25 wt% active substances are comminuted with addition of 3-10 wt% dispersants (e.g. sodium lignosulfonate), 1-5 wt% thickener (e.g. carboxymethylcellulose) and water ad 100 wt% to give a fine suspension of the active substance. Dilution with water gives a stable suspension of the active substance.

iv) Microemulsion (ME)

5-20 wt% active substances are added to 5-30 wt% organic solvent blend (e.g. fatty acid dimethylamide and cyclohexanone), 10-25 wt% surfactant blend (e.g. alcohol ethoxylate and arylphenol ethoxylate), and water ad 100 wt%. This mixture is stirred for 1 h to produce spontaneously a thermodynamically stable microemulsion.

iv) Microcapsules (CS)

An oil phase comprising 5-50 wt% active substances, 0-40 wt% water insoluble organic solvent (e.g. aromatic hydrocarbon), 2-15 wt% acrylic monomers (e.g. methylmethacrylate, methacrylic acid and a di- or triacrylate) are dispersed into an aqueous solution of a protective colloid (e.g. polyvinyl alcohol). Radical polymerization initiated by a radical initiator results in the formation of poly(meth)acrylate microcapsules. Alternatively, an oil phase comprising 5-50 wt% of a compound I according to the invention, 0-40 wt% water insoluble organic solvent (e.g. aromatic hydrocarbon), and an isocyanate monomer (e.g. diphenylmethene-4,4'-diisocyanatae) are dispersed into an aqueous solution of a protective colloid (e.g. polyvinyl alcohol). The addition of a polyamine (e.g. hexamethylenediamine) results in the formation of polyurea microcapsules. The monomers amount to 1-10 wt%. The wt% relate to the total CS composition.

ix) Dustable powders (DP, DS)

1-10 wt% active substances are ground finely and mixed intimately with solid carrier (e.g. finely divided kaolin) ad 100 wt%.

x) Granules (GR, FG)

0.5-30 wt% active substances are ground finely and associated with solid carrier (e.g. silicate) ad 100 wt%. Granulation is achieved by extrusion, spray-drying or fluidized bed.

xi) Ultra-low volume liquids (UL)

1-50 wt% active substances are dissolved in organic solvent (e.g. aromatic hydrocarbon) ad 100 wt%.

The compositions types i) to xi) may optionally comprise further auxiliaries, such as 0.1-1 wt% bactericides, 5-15 wt% anti-freezing agents, 0.1-1 wt% anti-foaming agents, and 0.1-1 wt% colorants.

The agrochemical compositions generally comprise between 0.01 and 95%, preferably between 0.1 and 90%, and in particular between 0.5 and 75%, by weight of active substances. The active substances are employed in a purity of from 90% to 100%, preferably from 95% to 100% (according to NMR spectrum).

Solutions for seed treatmenr (LS), Suspoemulsions (SE), flowable concentrates (FS), powders for dry treatment (DS), water-dispersible powders for slurry treatment (WS), water-soluble powders (SS), emulsions (ES), emulsifiable concentrates (EC) and gels (GF) are usually employed for the purposes of treatment of plant propagation materials, particularly seeds. The compositions in question give, after two-to-tenfold dilution, active substance concentrations of from 0.01 to 60% by weight, preferably from 0.1 to 40%, in the ready-to-use preparations. Application can be carried out before or during sowing. Methods for applying or treating compound I and pesticide II and compositions thereof, respectively, on to plant propagation material, especially seeds include dressing, coating, pelleting, dusting, soaking and in-furrow application methods of the propagation material. Preferably, compound I and pesticide II or the compositions thereof, respectively, are applied on to the plant propagation material by a method such that germination is not induced, e. g. by seed dressing, pelleting, coating and dusting.

In treatment of plant propagation materials such as seeds, e. g. by dusting, coating or drenching seed, amounts of active substance of from 0.1 to 1000 g, preferably from 1 to 1000 g, more preferably from 1 to 100 g and most preferably from 5 to 100 g, per 100 kilogram of plant propagation material (preferably seed) are generally required. When used in the protection of materials or stored products, the amount of active substance applied depends on the kind of application area and on the desired effect. Amounts customarily applied in the protection of materials are 0.001 g to 2 kg, preferably 0.005 g to 1 kg, of active substance per cubic meter of treated material.

Various types of oils, wetters, adjuvants, fertilizer, or micronutrients, and further pesticides (e.g. herbicides,

insecticides, fungicides, growth regulators, safeners) may be added to the active substances or the compositions comprising them as premix or, if appropriate not until immediately prior to use (tank mix). These agents can be admixed with the compositions according to the invention in a weight ratio of 1:100 to 100:1, preferably 1:10 to 10:1.

The user applies the composition according to the invention usually from a predosage device, a knapsack sprayer, a spray tank, a spray plane, or an irrigation system. Usually, the agrochemical composition is made up with water, buffer, and/or further auxiliaries to the desired application concentration and the ready-to-use spray liquor or the agrochemical composition according to the invention is thus obtained. Usually, 20 to 2000 liters, preferably 50 to 400 liters, of the ready-to-use spray liquor are applied per hectare of agricultural useful area.

In the mixtures and compositions according to the invention, the compound ratios (e. g. compound I/pesticide II/pesticide III ratio) are advantageously chosen so as to produce a synergistic effect.

The term "synergstic effect" is understood to refer in particular to that defined by Colby's formula (Colby, S. R., "Calculating synergistic and antagonistic responses of herbicide combinations", Weeds, 15, pp. 20-22, 1967).

The term "synergistic effect" is also understood to refer to that defined by application of the Tammes method, (Tammes, P. M. L., "Isoboles, a graphic representation of synergism in pesticides", Netherl. J. Plant Pathol. 70, 1964).

In the two-component mixtures and compositions according to the invention, the weight ratio of component 1) and component 2) generally depends on the properties of the active substances used, usually it is in the range of from 1:100 to 100:1, regularly in the range of from 1:50 to 50:1, preferably in the range of from 1:20 to 20:1, more preferably in the range of from 1:10 to 10:1, even more preferably in the range of from 1:4 to 4:1 and in particular in the range of from 1:2 to 2:1.

According to further embodiments of the two-component mixtures and compositions according to the invention, the weight ratio of component 1) versus component 2) usually is in the range of from 1000:1 to 1:1, often in the range of from 100:1 to 1:1, regularly in the range of from 50:1 to 1:1, preferably in the range of from 20:1 to 1:1, more preferably in the range of from 10:1 to 1:1, even more preferably in the range of from 4:1 to 1:1 and in particular in the range of from 2:1 to 1:1.

According to further embodiments of the two-component mixtures and compositions according to the invention, the weight ratio of component 1) versus component 2) usually is in the range of from 1:1 to 1:1000, often in the range of from 1:1 to 1:100, regularly in the range of from 1:1 to 1:50, preferably in the range of from 1:1 to 1:20, more preferably in the range of from 1:1 to 1:10, even more preferably in the range of from 1:1 to 1:4 and in particular in the range of from 1:1 to 1:2.

In the three-component mixtures, i.e. mixtures according to the invention comprising a component 1), a component 2) and a component 3), the weight ratio of component 1) and component 2) depends on the properties of the active substances used, usually it is in the range of from 1:100 to 100:1, regularly in the range of from 1:50 to 50:1, preferably in the range of from 1:20 to 20:1, more preferably in the range of from 1:10 to 10:1 and in particular in the range of from 1:4 to 4:1, and the weight ratio of component 1) and component 3) usually is in the range of from 1:100 to 100:1, regularly in the range of from 1:50 to 50:1, preferably in the range of from 1:20 to 20:1, more preferably in the range of from 1:10 to 10:1 and in particular in the range of from 1:4 to 4:1.

Any further active components are, if desired, added in a ratio of from 20:1 to 1:20 to the compound I.

The fungicidal action of the compositions according to the invention can be shown by the tests described below.

The active compounds, separately or jointly, are prepared as a stock solution comprising 25 mg of active compound which is made up to 10 ml using a mixture of acetone and/or DMSO and the emulsifier Uniperol® EL (wetting agent having an emulsifying and dispersing action based on ethoxylated alkylphenols) in a ratio by volume of solvent/emulsifier of 99:1. The mixture is then made up to 100 ml with water. This stock solution is diluted with the solvent/emulsifier/water mixture described to give the concentration of active compound stated below.

The visually determined percentages of infected leaf areas are converted into efficacies in % of the untreated control.

The efficacy (E) is calculated as follows using Abbot's formula:

$$E = (1 - \alpha/\beta) \cdot 100$$

$\alpha$ corresponds to the fungicidal infection of the treated plants in % and

$\beta$ corresponds to the fungicidal infection of the untreated (control) plants in %

An efficacy of 0 means that the infection level of the treated plants corresponds to that of the untreated control plants; an efficacy of 100 means that the treated plants were not infected. The expected efficacies of active compound combinations were determined using Colby's formula (Colby, S.R. "Calculating synergistic and antagonistic responses of herbicide combinations", Weeds, 15, pp. 20-22, 1967) and compared with the observed efficacies.

Colby's formula: $E = x + y - x \cdot y/100$

E expected efficacy, expressed in % of the untreated control, when using the mixture of the active compounds A and B at the concentrations a and b

x efficacy, expressed in % of the untreated control, when using the active compound A at the concentration a

y efficacy, expressed in % of the untreated control, when using the active compound B at the concentration b.

## Claims

**1.** A mixture comprising as active components

1) at least one compound of formula I

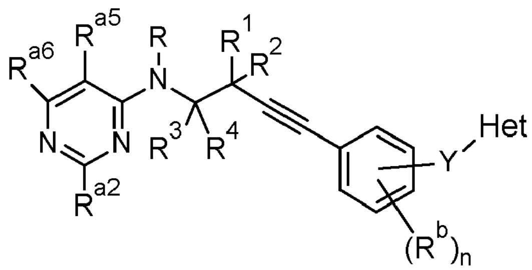

I

wherein:

$R^{a2}$, $R^{a5}$, $R^{a6}$ independently of each other are hydrogen, halogen, CN, $NO_2$, OH, SH, $C_1$-$C_4$-alkyl, $C_1$-$C_4$-haloalkyl, $C_1$-$C_4$-alkoxy, $C_1$-$C_4$-haloalkoxy, $C_1$-$C_4$-alkylthio, $C_1$-$C_4$-haloalkylthio, $C_1$-$C_4$-alkylsulfinyl, $C_1$-$C_4$-haloalkylsulfinyl, $C_1$-$C_4$-alkylsulfonyl, $C_1$-$C_4$-haloalkylsulfonyl, $C_1$-$C_4$-alkoxy-$C_1$-$C_4$-alkyl, $C_1$-$C_4$-alkoxy-$C_1$-$C_4$-alkoxy, $C_2$-$C_4$-alkenyl, $C_2$-$C_4$-alkynyl, $C_2$-$C_4$-haloalkenyl, $C_2$-$C_4$-haloalkynyl, $C_3$-$C_8$-cycloalkyl, $C_3$-$C_8$-cycloalkyloxy, $C_3$-$C_8$-cycloalkyl-$C_1$-$C_4$-alkyl, $NR^AR^B$, C(=O)R', C(=NOR")R'" or -C(=NH)-O-R"'; wherein

$R^A$, $R^B$ independently of one another are hydrogen, $C_1$-$C_4$-alkyl, $C_2$-$C_4$-alkenyl, $C_2$-$C_4$-alkynyl, phenyl, benzyl, $C_3$-$C_8$-cycloalkyl, $C_3$-$C_8$-cycloalkenyl or-(C=O)-R';

R' is hydrogen, OH, $NH_2$, $C_1$-$C_4$-alkyl, $C_1$-$C_4$-haloalkyl, $C_2$-$C_4$-alkenyl, $C_2$-$C_4$-alkynyl, $C_1$-$C_4$-alkoxy, $C_1$-$C_4$-haloalkoxy, $C_1$-$C_4$-alkylamino or di($C_1$-$C_4$-alkyl)amino;

R" is hydrogen, $C_1$-$C_4$-alkyl, $C_1$-$C_4$-haloalkyl, $C_2$-$C_4$-alkenyl, $C_2$-$C_4$-alkynyl or $C_1$-$C_4$-alkoxy-$C_1$-$C_4$-alkyl;

R'" is hydrogen or $C_1$-$C_4$-alkyl; or

$R^{a5}$, $R^{a6}$ together with two ring member carbon atoms to which they are attached, form a fused 5-, 6- or 7-membered saturated, partially unsaturated or aromatic carbocycle or heterocycle, wherein the ring member atoms of the fused heterocycle include besides carbon atoms 1, 2, 3 or 4 heteroatoms selected from N, O and S, and wherein the fused carbocycle or heterocycle is unsubstituted or carries 1, 2, 3 or 4 identical or different radicals selected from halogen, CN,

$C_1$-$C_4$-alkyl, $C_1$-$C_4$-alkoxy, $C_1$-$C_4$-haloalkyl and $C_1$-$C_4$-haloalkoxy;

R is hydrogen, $C_1$-$C_4$-alkyl, $C_1$-$C_4$-haloalkyl, $C_1$-$C_4$-alkoxy, $C_1$-$C_4$-haloalkoxy, $C_1$-$C_4$-alkoxy-$C_1$-$C_4$-alkyl, $C_1$-$C_4$-haloalkoxy-$C_1$-$C_4$-alkyl, $C_2$-$C_4$-alkenyl, $C_2$-$C_4$-haloalkenyl, $C_2$-$C_4$-alkynyl, $C_2$-$C_4$-haloalkynyl, CN, $CH_2CN$, $NR^AR^B$ or $CH_2$-O-C(=O)R';

$R^1$, $R^2$ independently of each other are hydrogen, halogen, CN, OH, $C_1$-$C_4$-alkyl, $C_1$-$C_4$-haloalkyl, $C_1$-$C_4$-alkoxy, $C_1$-$C_4$-haloalkoxy, $C_1$-$C_4$-alkoxy-$C_1$-$C_4$-alkyl, $C_1$-$C_4$-haloalkoxy-$C_1$-$C_4$-alkyl, $C_2$-$C_4$-alkenyl, $C_2$-$C_4$-haloalkenyl, $C_2$-$C_4$-alkynyl, $C_2$-$C_4$-haloalkynyl, $C_3$-$C_8$-cycloalkyl, $C_3$-$C_8$-cycloalkyl-$C_1$-$C_4$-alkyl, $C_3$-$C_8$-cycloalkyl-oxy, $NR^AR^B$, C(=O)R', C(=NOR")R"', -C(=NH)-O-R"' or benzyl wherein the phenyl moiety of benzyl is unsubstituted or carries 1, 2 , 3, 4, or 5 substituents selected from CN, halogen, $C_1$-$C_4$-alkyl, $C_1$-$C_4$-haloalkyl, $C_1$-$C_4$-alkoxy, $C_1$-$C_4$-haloalkoxy, ($C_1$-$C_4$-alkoxy)carbonyl and di($C_1$-$C_4$-alkyl)aminocarbonyl;

or two radicals $R^1$ and $R^2$ that are bound to the same carbon atom form together with said carbon atom a saturated or partially unsaturated 3-, 4-, 5-, 6-, or 7-membered carbocycle or a saturated or partially unsaturated 3-, 4-, 5-, 6-, or 7-membered heterocycle, wherein the ring member atoms of the abovementioned heterocycle include beside carbon atoms 1, 2, 3 or 4 heteroatoms selected from N, O and S, and wherein the abovementioned cycle is unsubstituted or carries 1, 2, 3 or 4 substituents selected from halogen, CN, OH, SH, $C_1$-$C_4$-alkyl, $C_1$-$C_4$-alkoxy and $C_1$-$C_4$-alkylthio; and one or two $CH_2$ groups of the abovementioned cycles may respectively be replaced by one or two C(=O) or C(=S) groups;

Y is a direct bond or a divalent group selected from -O-, -S-, -S(=O)-, $-S(=O)_2-$, - $CR^{Y1}R^{Y2}$-, -N($R^{YN}$)-, wherein $R^{YN}$ is hydrogen, halogen, CN, nitro, OH, $C_1$-$C_4$-alkyl, $C_1$-$C_4$-halogenalkyl, $C_1$-$C_4$-alkoxy and $C_1$-$C_4$-halogenalkoxy;

$R^{Y1}$, $R^{Y2}$ are independently selected from hydrogen, halogen, CN, nitro, OH, $C_1$-$C_4$-alkyl, $C_1$-$C_4$-halogenalkyl, $C_1$-$C_4$-alkoxy and $C_1$-$C_4$-halogenalkoxy;

$R^3$, $R^4$ independently of each other are hydrogen, CN, $C_1$-$C_4$-hydroxyalkyl, $C_1$-$C_4$-alkyl, $C_1$-$C_4$-haloalkyl, $C_1$-$C_4$-alkoxy, $C_1$-$C_4$-haloalkoxy, $C_1$-$C_4$-alkoxy-$C_1$-$C_4$-alkyl, $C_1$-$C_4$-haloalkoxy-$C_1$-$C_4$-alkyl, $C_2$-$C_4$-alkenyl, $C_2$-$C_4$-haloalkenyl, $C_2$-$C_4$-alkynyl, $C_2$-$C_4$-haloalkynyl, $C_3$-$C_8$-cycloalkyl, $C_3$-$C_8$-cycloalkyl-$C_1$-$C_4$-alkyl, $C_3$-$C_8$-cycloalkyl-oxy, $NR^AR^B$, C(=O)R', C(=NOR")R'",-C(=NH)-O-R"' or benzyl wherein the phenyl moiety of benzyl is unsubstituted or carries 1, 2 , 3, 4, or 5 substituents selected from CN, halogen, $C_1$-$C_4$-alkyl, $C_1$-$C_4$-haloalkyl, $C_1$-$C_4$-alkoxy, $C_1$-$C_4$-haloalkoxy, ($C_1$-$C_4$-alkoxy)carbonyl and di($C_1$-$C_4$-alkyl)aminocarbonyl, or

two radicals $R^3$ and $R^4$ that are bound to the same carbon atom form together with said carbon atom a saturated or partially unsaturated 3-, 4-, 5-, 6-, or 7-membered carbocycle or a saturated or partially unsaturated 3-, 4-, 5-, 6-, or 7-membered heterocycle, wherein the ring member atoms of the abovementioned heterocycle include beside carbon atoms 1, 2, 3 or 4 heteroatoms selected from N, O and S, and wherein the abovementioned cycle is unsubstituted or carries 1, 2, 3 or 4 substituents selected from halogen, CN, OH, SH, $C_1$-$C_4$-alkyl, $C_1$-$C_4$-alkoxy and $C_1$-$C_4$-alkylthio; and one or two $CH_2$ groups of the abovementioned cycles may be respectively replaced by one or two C(=O) or C(=S) groups;

n is 0, 1, 2, 3 or 4;

$R^b$ is halogen, CN, $NO_2$, $C_1$-$C_4$-alkyl, $C_1$-$C_4$-haloalkyl, $C_1$-$C_4$-alkoxy, $C_1$-$C_4$-halo-alkoxy, $C_2$-$C_4$-alkenyl, $C_2$-$C_4$-haloalkenyl, $C_2$-$C_4$-alkynyl, $C_2$-$C_4$-haloalkynyl, $NR^AR^B$, C(=O)R', C(=NOR")R'" or -C(=NH)-O-R"', it being possible for n = 2, 3 or 4 that $R^b$ are identical or different;

Het is a 5- or 6-membered heteroaryl, wherein the ring member atoms of the heteroaryl include besides carbon atoms 1, 2, 3 or 4 heteroatoms selected from N, O and S, and wherein the heteroaryl is unsubstituted or carries 1, 2, 3 or 4 identical or different groups $R^c$:

$R^c$ is halogen, CN, $NO_2$, $NH_2$, $C_1$-$C_6$-alkyl, $C_1$-$C_6$-haloalkyl, $C_1$-$C_6$-alkoxy, $C_1$-$C_6$-haloalkoxy, $C_1$-$C_6$-alkylamino, di($C_1$-$C_6$-alkyl)amino, $C_1$-$C_6$-alkylthio, $C_1$-$C_6$-haloalkylthio, $C_1$-$C_6$-alkylsulfinyl, $C_1$-$C_6$-haloalkylsulfinyl, $C_1$-$C_6$-alkylsulfonyl, $C_1$-$C_6$-haloalkylsulfonyl, $C_1$-$C_6$-alkoxy-$C_1$-$C_4$-alkyl, $C_1$-$C_6$-haloalkoxy-$C_1$-$C_4$-alkyl, $C_2$-$C_6$-alkenyl, $C_2$-$C_6$-alkynyl, C(=O)R', C(=NOR")R"', $C_3$-$C_8$-cycloalkyl, $C_3$-$C_8$-cycloalkyl-$C_1$-$C_4$-alkyl, phenyl, phenoxy, phenoxy-$C_1$-$C_4$-alkyl or a 5- or 6-membered heteroaryl, wherein the ring member atoms of the heteroaryl include besides carbon atoms 1, 2, 3 or 4 heteroatoms selected from N, O and S, and wherein the aforementioned cyclic radicals are unsubstituted or carry 1, 2, 3 or 4 identical or different substituents $R^d$:

$R^d$ is halogen, CN, $C_1$-$C_4$-alkyl, $C_1$-$C_4$-haloalkyl, $C_1$-$C_4$-alkoxy or $C_1$-$C_4$-haloalkoxy;

or two radicals $R^c$ that are bound to adjacent ring member atoms of the Het group form together with said ring member atoms a fused 5-, 6- or 7-membered saturated, partially unsaturated or aromatic carbocycle or heterocycle, wherein the ring member atoms of the fused heterocycle include besides carbon atoms 1, 2, 3 or 4 heteroatoms selected from N, O and S, and wherein the fused carbocycle or heterocycle is unsubstituted or carries 1, 2, 3 or 4 identical or different radicals groups Re:

$R^e$ is halogen, CN, $C_1$-$C_4$-alkyl, $C_1$-$C_4$-haloalkyl, $C_1$-$C_4$-alkoxy or $C_1$-$C_4$-haloalkoxy;

and the N-oxides and the agriculturally acceptable salts of the compounds of formula I; and
2) at least one pesticide II selected from the groups A) to F):

A) Inhibitors of complex III at $Q_o$ site (e.g. strobilurins): mandestrobin, (Z,2E)-5-[1-(4-chlorophenyl)pyrazol-3-yl]oxy-2-methoxyimino-N,3-dimethyl-pent-3-enamide, (Z,2E)-5-[1-(2,4-difluorophenyl)pyrazol-3-yl]oxy-2-methoxyimino-N,3-dimethyl-pent-3-enamide, (Z,2E)-5-[1-(2,4-dichlorophenyl)pyrazol-3-yl]oxy-2-methoxyimino-N,3-dimethyl-pent-3-enamide, (Z,2E)-5-[1-(2-chloro-4-methyl-phenyl)pyrazol-3-yl]oxy-2-methoxyimino-N,3-dimethyl-pent-3-enamide, (Z,2E)-2-methoxyimino-N,3-dimethyl-5-[1-(p-tolyl)pyrazol-3-yl]oxy-pent-3-enamide, (Z,2E)-5-[1-(2-methyl-4-fluoro-phenyl)pyrazol-3-yl]oxy-2-methoxyimino-N,3-dimethyl-pent-3-enamide, (Z,2E)-2-methoxyimino-N,3-dimethyl-5-[1-[4-(trifluoromethyl)-phenyl]pyrazol-3-yl]oxy-pent-3-enamide, (Z,2E)-5-[1-(3,4-dichlorophenyl)pyrazol-3-yl]oxy-2-methoxyimino-N,3-dimethyl-pent-3-enamide, (Z,2E)-5-[1-(3,4-dimeth-ylphenyl)pyrazol-3-yl]oxy-2-methoxyimino-N,3-dimethyl-pent-3-enamide, (Z,2E)-5-[1-(4-fluoro-3-methyl-phenyl)pyrazol-3-yl]oxy-2-methoxyimino-N,3-dimethyl-pent-3-enamide, (Z,2E)-5-[1-(3-chloro-4-fluoro-phenyl)pyrazol-3-yl]oxy-2-methoxyimino-N,3-dimethyl-pent-3-enamide, (Z,2E)-5-[1-(3-fluoro-4-chloro-phenyl)pyrazol-3-yl]-oxy-2-methoxyimino-N,3-dimethyl-pent-3-enamide, (Z,2E)-5-[1-(4-chloro-2-fluoro-phenyl)pyrazol-3-yl]oxy-2-methoxyimino-N,3-dimethyl-pent-3-enamide, (Z,2E)-5-[1-[4-(difluoromethoxy)phenyl]pyrazol-3-yl]oxy-2-methoxyimino-N,3-dimethyl-pent-3-enamide, (Z,2E)-5-[1-(3-cyclopropylphenyl)pyrazol-3-yl]oxy-2-methoxyimino-N,3-dimethyl-pent-3-enamide, (Z,2E)-5-[1-[4-chloro-3-(trifluoromethyl)phenyl]pyrazol-3-yl]oxy-2-methoxyimino-N,3-dimethyl-pent-3-enamide, (Z,2E)-2-methoxyimino-N,3-dimethyl-5-[1-(3,4,5-trifluorophenyl)pyrazol-3-yl]oxy-pent-3-enamide and (Z,2E)-2-methoxyimino-N,3-dimethyl-5-[1-[4-(trifluoromethylsulfanyl)phenyl]pyrazol-3-yl]oxy-pent-3-enamide;

inhibitors of complex III at $Q_i$ site: inhibitors of complex II (e. g. carboxamides): isofetamid, N-(7-fluoro-1,1,3-trimethyl-indan-4-yl)-1,3-dimethyl-pyrazole-4-carboxamide, N-[2-(2,4-dichlorophenyl)-2-methoxy-1-methyl-ethyl]-3-(difluoromethyl)-1-methyl-pyrazole-4-carboxamide;

B) C14 demethylase inhibitors (DMI fungicides): triazoles: 2-[2-chloro-4-(4-chlorophenoxy)phenyl]-1-(1,2,4-triazol-1-yl)pent-3-yn-2-ol, 1-[2-chloro-4-(4-chlorophenoxy)phenyl]-1-cyclopropyl-2-(1,2,4-triazol-1-yl)ethanol, 2-[4-(4-chlorophenoxy)-2-(trifluoromethyl)phenyl]-1-(1,2,4-triazol-1-yl)propan-2-ol, 1-[4-(4-chlorophenoxy)-2-(trifluoromethyl)phenyl]-1-cyclopropyl-2-(1,2,4-triazol-1-yl)ethanol, 2-[4-(4-chlorophenoxy)-2-(trifluoromethyl)phenyl]-3-methyl-1-(1,2,4-triazol-1-yl)butan-2-ol, 1-[2-[2-chloro-4-(4-chlorophenoxy)phenyl]-2-methoxy-pent-3-ynyl]-1,2,4-triazole, 2-[4-(4-chlorophenoxy)-2-(trifluoromethyl)phenyl]-1-(1,2,4-triazol-1-yl)butan-2-ol, 1 - [2-[2-chloro-4-(4-chlorophenoxy)phenyl]-2-cyclopropyl-2-methoxy-ethyl]-1,2,4-triazole, 1-[2-[4-(4-chlorophenoxy)-2-(trifluoromethyl)phenyl]-2-methoxy-propyl]-1,2,4-triazole, 2-[2-chloro-4-(4-chlorophenoxy)phenyl]-3,3-dimethyl-1-(1,2,4-triazol-1-yl)butan-2-ol, 1-[2-[4-(4-chlorophenoxy)-2-(trifluoromethyl)phenyl]-2-cyclopropyl-2-methoxy-ethyl]-1,2,4-triazole, 1-[2-[2-chloro-4-(4-chlorophenoxy)phenyl]-2-methoxy-3,3-dimethyl-butyl]-1,2,4-triazole, 1-[2-[4-(4-chlorophenoxy)-2-(trifluoromethyl)phenyl]-2-methoxy-butyl]1,2,4-triazole, 2-[4-(4-chlorophenoxy)-2-(trifluoromethyl) phenyl]-1-(1,2,4-triazol-1-yl)pent-3-yn-2-ol, 1-[2-[4-(4-chlorophenoxy)-2-(trifluoromethyl)phenyl]-2-methoxy-pent-3-ynyl]-1,2,4-triazole, 2-[4-(4-chlorophenoxy)-2-(trifluoromethyl)phenyl]-1-(1,2,4-triazol-1-yl)but-3-yn-2-ol, 2-[2-chloro-4-(4-chlorophenoxy)phenyl]-1-(1,2,4-triazol-1-yl)propan-2-ol, 2-[2-chloro-4-(4-fluorophenoxy)phenyl]-1-(1,2,4-triazol-1-yl)propan-2-ol, 2-[2-chloro-4-(4-chlorophenoxy)phenyl]-3-methyl-1-(1,2,4-triazol-1-yl)butan-2-ol, 1-[2-[2-chloro-4-(4-chlorophenoxy)phenyl]-2-methoxy-propyl]-1,2,4-triazole, 1-[2-[2-chloro-4-(4-chlorophenoxy)phenyl]-2-methoxy-butyl]-1,2,4-riazole, 1-[2-[2-chloro-4-(4-chlorophenoxy)phenyl]-2-methoxy-pentyl]-1,2,4-triazole, 2-[2-chloro-4-(4-chlorophenoxy)phenyl]-1,1,1-trifluoro-3-(1,2,4-triazol-1-yl)propan-2-ol, 2-[2-chloro-4-(4-chlorophenoxy)phenyl]-3-fluoro-1-(1,2,4-triazol-1-yl)butan-2-ol hydrochloride, 2-[2-chloro-4-(4-chlorophenoxy)phenyl]-1-(1,2,4-triazol-1-yl)pent-4-yn-2ol, 2-[2-chloro-4-(4-chlorophenoxy)phenyl]-1-methoxy-3-(1,2,4-triazol-1-yl)propan-2-ol, 2-[2-chloro-4-(4-fluorophenoxy)phenyl]-1-methoxy-3-(1,2,4-triazol-1-yl)propan-2-ol, 2-[4-(4-chlorophenoxy)-2-(trifluoromethyl)phenyl]-1-(1,2,4-triazol-1-yl)pentan-2-ol, and2-[4-(4-fluorophenoxy)-2-(trifluoromethyl)phenyl]-1-(1,2,4-triazol-1-yl)propan-2-ol, 2-[2-chloro-4-(4-chlorophenoxy)phenyl]-1-(1,2,4-triazol-1-yl)butan-2-ol, 2-[2-chloro-4-(4-chlorophenoxy)phenyl]-1-(1,2,4-triazol-1-yl)pentan-2-ol;

E) Plant defence inducers: potassium bicarbonate or sodium bicarbonate;

F) Unknown mode of action: ethyl (Z)-3-amino-2-cyano-3-phenyl-prop-2-enoate, tert-butyl N-[6-[[(Z)-[(1-methyltetrazol-5-yl)-phenyl-methylene]amino]oxymethyl]-2-pyridyl]carbamate, pentyl N-[6-[[(Z)-[(1-methyltetrazol-5-yl)-phenyl-methylene]amino]oxymethyl]-2-pyridyl]carbamate, 2-[2-[(7,8-difluoro-2-methyl-3-quinolyl)oxy]-6-fluoro-phenyl]propan-2-ol, 2-[2-fluoro-6-[(8-fluoro-2-methyl-3-quinolyl)oxy]phen-yl]propan-2-ol, 3-(5-fluoro-3,3,4,4-tetramethyl-3,4-dihydroisoquinolin-1-yl)quinoline, 3-(4,4-difluoro-3,3-dimethyl-3,4-dihydroisoquinolin-1-yl)quinoline, 3-(4,4,5-trifluoro-3,3-dimethyl-3,4-dihydroisoquinolin-1-yl)quinoline;

**2.** The mixture according to claim 1, comprising a compound I and a pesticide II in a synergistically effective amount.

**3.** The mixture according to claim 1 or 2, comprising a compound I and a pesticide II in a weight ratio of from 100:1 to 1:100.

**4.** The mixture according to any one of the claims 1 to 3, wherein $R^{a2}$, $R^{a5}$ and $R^{a6}$ in compounds I independently of each other are halogen, CN, $C_1$-$C_4$-alkyl, $C_1$-$C_4$-haloalkyl, $C_1$-$C_4$-alkoxy, $C_1$-$C_4$-haloalkoxy, $C_1$-$C_4$-alkoxy-$C_1$-$C_4$-alkyl, $C_1$-$C_4$-alkoxy-$C_1$-$C_4$-alkoxy or ($C_1$-$C_4$-alkoxy)carbonyl; and it being possible that one or two of $R^{a2}$, $R^{a5}$ or $R^{a6}$ can in addition be hydrogen.

5. The mixture according to any one of the claims 1 to 4, wherein Y in compounds I is -O-.

6. The mixture according to any one of the claims 1 to 5, comprising in addition as component 3) at least one further active pesticide III selected from the groups A') to O').

7. The mixture according to claim 6, comprising a component 1) and a component 2) in a weight ratio of from 100:1 to 1:100, and a component 1) and component 3) in a weight ratio of from 100:1 to 1:100.

8. An agrochemical composition, comprising a solvent or solid carrier and a mixture according to any one of the claims 1 to 7.

9. The composition according to claim 8 further comprising seed in an amount of from 1 g to 1000 g active components per 100 kg of seed.

10. Plant propagation material, coated with the mixture as defined in any of the claims 1 to 7 or with the composition as defined in claim 8.

11. Use of the mixture as defined in any one of the claims 1 to 7 or of the composition as defined in claim 8 or 9 for controlling phytopathogenic harmful fungi.

12. A method for controlling phytopathogenic harmful fungi, comprising treating the fungi, their habitat or the seed, the soil or the plants to be protected against fungal attack with an effective amount of a mixture as defined in any one of claims 1 to 7 or of the composition as defined in claim 8 or 9.

Europäisches Patentamt
European Patent Office
Office européen des brevets

# EUROPEAN SEARCH REPORT

Application Number
EP 14 17 8699

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CA 2 824 573 A1 (SDS BIOTECH CORP [JP]) 19 July 2012 (2012-07-19) * claim 1 * * table 1 * ----- | 1-12 | INV. A01N43/54 A01P3/00 A01N43/16 |
| A | EP 2 455 371 A1 (SDS BIOTECH CORP [JP]) 23 May 2012 (2012-05-23) * the whole document * ----- | 1-12 | |
| A | EP 0 264 217 A2 (UBE INDUSTRIES [JP]; INST PHYSICAL & CHEM RES [JP]) 20 April 1988 (1988-04-20) * the whole document * ----- | 1-12 | |

TECHNICAL FIELDS SEARCHED (IPC)
A01N

The present search report has been drawn up for all claims

1

| Place of search | Date of completion of the search | Examiner |
|---|---|---|
| Munich | 10 October 2014 | Davies, Maxwell |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 14 17 8699

This annex lists the patent family members relating to the patent documents cited in the above-mentioned European search report. The members are as contained in the European Patent Office EDP file on
The European Patent Office is in no way liable for these particulars which are merely given for the purpose of information.

10-10-2014

| Patent document cited in search report | | Publication date | Patent family member(s) | | | Publication date |
|---|---|---|---|---|---|---|
| CA 2824573 | A1 | 19-07-2012 | AU | 2011354895 | A1 | 15-08-2013 |
| | | | CA | 2824573 | A1 | 19-07-2012 |
| | | | EP | 2664238 | A1 | 20-11-2013 |
| | | | TW | 201247630 | A | 01-12-2012 |
| | | | US | 2013296271 | A1 | 07-11-2013 |
| | | | WO | 2012096129 | A1 | 19-07-2012 |
| EP 2455371 | A1 | 23-05-2012 | AU | 2010271805 | A1 | 19-01-2012 |
| | | | CA | 2765661 | A1 | 20-01-2011 |
| | | | EP | 2455371 | A1 | 23-05-2012 |
| | | | ES | 2443154 | T3 | 18-02-2014 |
| | | | JP | 5325297 | B2 | 23-10-2013 |
| | | | NZ | 597198 | A | 31-05-2013 |
| | | | PT | 2455371 | E | 20-01-2014 |
| | | | TW | 201114748 | A | 01-05-2011 |
| | | | US | 2012136150 | A1 | 31-05-2012 |
| | | | WO | 2011007839 | A1 | 20-01-2011 |
| EP 0264217 | A2 | 20-04-1988 | DE | 3786390 | D1 | 05-08-1993 |
| | | | DE | 3786390 | T2 | 17-02-1994 |
| | | | EP | 0264217 | A2 | 20-04-1988 |
| | | | US | 4895849 | A | 23-01-1990 |
| | | | US | 4985426 | A | 15-01-1991 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2013054966 W
- DE 2903612
- GB 1500581 A
- GB 2058059 A
- DE 1198125
- DE 2752096
- EP 281842 A
- DE 1164152
- DD 151404 A
- EP 224339 A
- EP 310550 A
- DE 2324020
- US 4664696 A
- GB 2098607 A
- EP 196038 A
- EP 15756 A
- EP 267778 A
- GB 857383 A
- BE 835579
- US 3991071 A
- WO 9616048 A
- EP 40345 A
- EP 234242 A
- BE 793867
- DE 2324010
- JP 54119462 A
- FR 2641277
- GB 1312536 A
- US 3903090 A
- DE 2207576 A
- US 1972961 A
- US 2317765 A
- US 2504404 A
- GB 996264 A
- US 2791605 A
- US 3248400 A
- BE 611960
- DE 642532
- US 2457674 A
- US 2720480 A
- US 3631176 A
- EP 545099 A
- US 3657443 A
- US 3249499 A
- US 3399214 A
- GB 1218623 A
- DE 1209799
- JP 1104514 A
- US 3937840 A
- WO 9942447 A
- WO 9748684 A
- EP 49854 A
- GB 13943373 A
- US 5240940 A
- US 3017415 A
- DE 1930540 A
- DE 1901421
- US 2526660 A
- JP 9323984 A
- US 3290353 A
- WO 9619442 A
- US 3957847 A
- US 4052395 A
- EP 78663 A
- DE 1493736
- EP 639574 A
- US 3499086 A
- EP 262393 A
- FR 2254276
- EP 472996 A
- US 5945567 A
- DE 2732257
- JP 10130268 B
- DE 1567169
- DE 1643347
- GB 1467561 A
- DE 682048
- EP 382375 A
- EP 477631 A
- EP 936213 A
- WO 9727189 A
- EP 253213 A
- EP 398692 A
- WO 9715552 A
- EP 278595 A
- WO 9601256 A
- EP 460575 A
- US 2553770 A
- DE 1193498
- EP 120321 A
- EP 860438 A
- CN 1939128
- EP 141317 A
- EP 152031 A
- EP 226917 A
- EP 243970 A
- EP 256503 A
- EP 428941 A

- EP 532022 A
- EP 1028125 A
- EP 1035122 A
- EP 1201648 A
- EP 1122244 A
- JP 2002316902 B
- DE 19650197
- DE 10021412
- DE 102005009458
- US 3296272 A
- US 3325503 A
- WO 9846608 A
- WO 9914187 A
- WO 9924413 A
- WO 9927783 A
- WO 0029404 A
- WO 0046148 A
- WO 0065913 A
- WO 0154501 A
- WO 0156358 A
- WO 0222583 A
- WO 0240431 A
- WO 0310149 A
- WO 0311853 A
- WO 0314103 A
- WO 0316286 A
- WO 0353145 A
- WO 0361388 A
- WO 0366609 A
- WO 0374491 A
- WO 0449804 A
- WO 0483193 A
- WO 05120234 A
- WO 05123689 A
- WO 05123690 A
- WO 0563721 A
- WO 0587772 A
- WO 0587773 A
- WO 0615866 A
- WO 0687325 A
- WO 0687343 A
- WO 0782098 A
- WO 0790624 A
- WO 11028657 A
- WO 2012168188 A
- WO 2007006670 A
- WO 201177514 A
- WO 13047749 A
- WO 10069882 A
- WO 13047441 A
- WO 0316303 A
- WO 0990181 A
- WO 13007767 A
- WO 13010862 A
- EP 2012065650 W
- EP 2012065651 W
- US 6222100 B
- WO 0182685 A
- WO 0026390 A
- WO 9741218 A
- WO 9802526 A
- WO 9802527 A
- WO 04106529 A
- WO 0520673 A
- WO 0314357 A
- WO 0313225 A
- WO 0314356 A
- WO 0416073 A
- WO 00026390 A
- WO 98002526 A
- WO 03014357 A
- WO 9200377 A
- EP 242236 A
- EP 242246 A
- US 5559024 A
- WO 02015701 A
- EP 374753 A
- WO 93007278 A
- WO 9534656 A
- EP 427529 A
- EP 451878 A
- WO 0318810 A
- WO 0352073 A
- WO 03018810 A
- EP 392225 A

**Non-patent literature cited in the description**

- *Plant Dis. Rep.,* 1957, vol. 41, 1029
- *Congr. Plant Pathol.,* 1968, vol. 1, 27
- *J. Am. Chem. Soc.,* 1947, vol. 69, 1234
- *Proc. Br. Crop. Prot. Conf. 1990 - Pests Dis,* 1990, vol. 1, 459
- *Noyaku Kagaku,* 1983, vol. 8, 575
- *Fruits,* 1973, vol. 28, 545
- *Proc. Br. Crop Prot. Conf. 1988-Pests Dis.,* 1988, vol. 1, 33
- *Proc. Br. Crop Prot. Conf.-Pests Dis.,* 1992, vol. 5-3, 411
- *Proc. Br. Crop Prot. Conf.-Pests Dis.,* 1984, vol. 1, 413
- Pesticide Manual. 2000, 712
- *Bull. Soc. Chim. Fr.,* vol. 15, 891
- *Proc. Insectic. Fungic. Conf. 8.,* 1975, vol. 2, 715
- *Agric. Biol. Chem.,* 1973, vol. 37, 737
- *Proc. Br. Insectic. Fungic. Conf. 7.,* 1973, vol. 2, 673
- *Proc. 1988 Br. Crop Prot. Conf. - Pests Dis.,* 1988, vol. 1, 65

- The Pesticide Manual. The British Crop Protection Council, 1995, 482
- *Proc. Br. Crop Prot. Conf. - Pests Dis.,* 1998, vol. 2, 327
- The Pesticide Manual. The British Crop Protection Council, 1995, 474
- *C. R. Seances Acad. Agric. Fr.,* 1945, vol. 31, 24
- *Phytopathology,* 1962, vol. 52, 754
- *AGROW,* 1995, 22
- *Can. J. Plant Sci.,* 1968, vol. 48 (6), 587-94
- Catalogue of pesticide formulation types and international coding system. Technical Monograph No. 2. CropLife International, 2008
- **MOLLET ; GRUBEMANN.** Formulation technology. Wiley VCH, 2001
- New developments in crop protection product formulation. **KNOWLES.** Agrow Reports DS243. T&F Informa, 2005
- McCutcheon's, Vol.1: Emulsifiers & Detergents. McCutcheon's Directories, 2008
- Adjuvants and additives. **KNOWLES.** Agrow Reports DS256. T&F Informa, 2006
- **COLBY, S. R.** Calculating synergistic and antagonistic responses of herbicide combinations. *Weeds,* 1967, vol. 15, 20-22
- **TAMMES, P. M. L.** Isoboles, a graphic representation of synergism in pesticides. *Netherl. J. Plant Pathol.,* 1964, 70
- **COLBY, S.R.** Calculating synergistic and antagonistic responses of herbicide combinations. *Weeds,* 1967, vol. 15, 20-22